(19) **Europäisches Patentamt**

**European Patent Office**

**Office européen des brevets**

(11) **EP 1 395 078 A2**

(12) **EUROPEAN PATENT APPLICATION**

(43) Date of publication:
03.03.2004 Bulletin 2004/10

(51) Int Cl.⁷: **H04Q 7/38**

(21) Application number: 03022773.0

(22) Date of filing: 20.09.1996

(84) Designated Contracting States:
**AT BE CH DE DK ES FI FR GB GR IE IT LI LU MC NL PT SE**

(30) Priority: **22.09.1995 US 532466**
**04.03.1996 US 610193**

(62) Document number(s) of the earlier application(s) in accordance with Art. 76 EPC:
**96933857.3 / 0 873 641**

(71) Applicant: **XIRCOM WIRELESS, Inc.**
**Colorado Springs, Colorado 80907 (US)**

(72) Inventors:
• **Anderson, Gary B.**
**Camelian Bay, CA 95771 (US)**
• **Gavette, Sherman**
**Colorado Springs, CO 80919 (US)**

• **Hetherington, William D.**
**Colorado Springs, CO 80920 (US)**
• **Lindsay, Charles L.**
**Monument, CO 80132 (US)**
• **Jensen, Ryan N.**
**Colorado Springs, CO 80917 (US)**

(74) Representative: **Leeming, John Gerard**
**J.A. Kemp & Co.,**
**14 South Square,**
**Gray's Inn**
**London WC1R 5JJ (GB)**

Remarks:
This application was filed on 10 - 10 - 2003 as a divisional application to the application mentioned under INID code 62.

(54) **Mobile communication system and method with fast and slow control traffic**

(57)     A mobile communication system (101) having a layered architecture (401) communicates user and signalling data (1105) among components of the communication system in the form of information elements which are encapsulated within packets (1005) which may be passed across one or more system interfaces (1401). The mobile communication system comprises mobile user stations (102), base stations (104), and base station controllers (105) and operates as a transparent data pipeline between application end users, such as a telephone service (126), connected at base station controllers (105) and mobile user stations (102). In a particular embodiment, the interface between the base station (104) and the user stations (102) is a TDMA interface, and signalling traffic between the base station (104) and each of the user stations (102) is conducted in either a fast control traffic mode or a slow control traffic mode. In the fast control traffic mode, signalling messages are exchanged between the base station (104) and a user station (102) in a plurality of time slots (302) within a timespan of a single time frame (301 ); in the slow control traffic mode, signalling messages are exchanged between the base station (104) and a user station (102) in no more than a single time slot (302) within a timespan of a single time frame (301).

Fig. 1A

115 SYSTEM CONSOLE

114

COAX CABLE

x.25

CATV HEAD END | FIBER NODE

118        118        BS

BSC        BS —104

108        BS

126        109

105        BS

TO PCSC
OR PSTN

PRI OR TI LINES    FRACTIONAL T1
BUNDLED BRIs      ISDN BRIs
CATV             CATV
FIBER            FIBER
MICROWAVE        PRIVATE FACILITIES
                 DIGITAL RADIO        BS

108        105        109        BS —104

BSC        BS

IBS        BS

107

*Fig.1B*

131

132        130

$F_1$ $C_1$    $F_2$ $C_3$    $F_3$ $C_3$    $F_1$ $C_5$

$F_2$ $C_1$    $F_3$ $C_1$    $F_1$ $C_3$    $F_2$ $C_5$    $F_3$ $C_5$

$F_1$ $C_2$    $F_2$ $C_4$    $F_3$ $C_4$    $F_1$ $C_6$

$F_2$ $C_2$    $F_3$ $C_2$    $F_1$ $C_4$    $F_2$ $C_6$    $F_3$ $C_6$

*Fig.1C*

**Description**

<u>Related Application Data</u>

This application is a continuation-in-part application of copending U.S. Application Serial No. 08/532,466 filed on September 22, 1995 and hereby incorporated by reference as if fully set forth herein, which is a continuation-in-part application of copending U.S. Application Serial No. 08/284,053 filed on August 1, 1994, which is a continuation-in-part of U.S. Application Serial No. 08/215,306 filed on March 21, 1994, now abandoned, which is a continuation-in-part of U.S. Application Serial No. 08/146,496 filed on November 1, 1993, now abandoned.

<u>BACKGROUND OF THE INVENTION</u>

1) <u>Field of the Invention</u>

The field of this invention pertains to communications and, more particularly, to means for transferring information within a mobile communication system.

2) <u>Description of the Related Art</u>

Digital communication systems have become increasingly popular for many applications. One advantage of a digital communication system is the flexibility to carry many different types of information over a single system. A single digital communication system may be used, for example, to transmit digitized sound, text, computer data, digital video, or other information existing in digital form.

To achieve flexibility, a communication system may be designed to transfer digital information from one end user to another in a transparent fashion. The communication system then operates as a transparent data pipeline for one or more other systems which are called application end users. Each application end user connected to the communication system generally has the responsibility for ensuring that the data ultimately delivered is in a form which is properly recognized by the user.

To better achieve such flexibility, it has been suggested that a communication system be designed with a layered architecture. One example of a general layered architecture for digital communication systems is the International Organization for Standardization (ISO) Reference Model for Open Systems Interconnection ("OSI Reference Model"). The OSI Reference Model has been adopted as an international standard by the ISO and by the International Telephone and Telegraph Consultative Committee (CCITT).

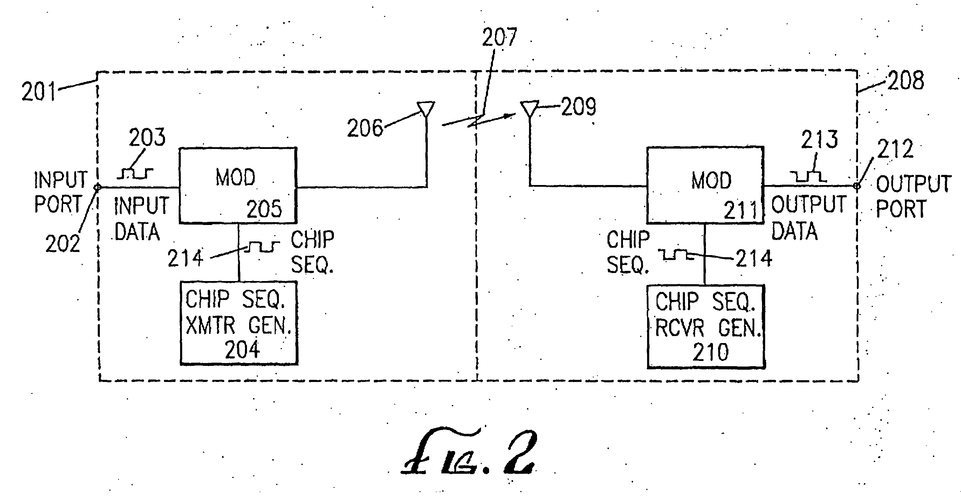

Figure 4A is a diagram showing the OSI Reference Model 401. The OSI Reference Model 401 comprises a communication system having seven layers which form a communication path between a first end user 405 and a second end user 410. The seven layers may be divided into two sets--a set of upper layers 415 and a set of lower layers 420. The upper four layers 415 normally reside in the application end users desiring to communicate. A communication system may in some cases be defined by the lower three layers 420, individually known as the network layer 422, the data link layer 424 and the physical layer 426.

In the OSI Reference Model, each layer is responsible for specific, defined operations in the communication process between application end users 405, 410. In furtherance of these operations, each layer may communicate information with the layers above and below it through defined interfaces (although there is not always a definitive separation between layers). Thus, for example, the transport layer may operate independently of the specific operational details of the network layer 422, the data link layer 424, and the physical layer 426 below it. The set of lower layers 420 thus operates as a transparent data pipeline to an application end user connected to the system at the transport layer interface.

Figure 4B illustrates a flow of data between layers such as may occur during communication between two application end users. As shown in Fig. 4B, information may be passed between like layers (e.g., the transport layer in the Fig. 4B example) of each end user through a path ultimately connected at the physical layer 426. The rules that govern how data is passed between like layers at each end user are collectively referred to as a "peer-to-peer protocol." A variety of different application end users operating with different peer-to-peer protocols may communicate over a communication system so long as each application end user presents the proper upper layer interface to the communication system. Conversely, an application end user may connect with any communication system having a compatible lower layer interface.

Additional details regarding the OSI Reference Model may be found in "Telecommunication Networks" by Mischa Schwartz (Addison-Wesley Publishing Co., 1987).

One class of digital communication systems provides wireless data communication connections to stationary or mobile user stations (e.g., handsets). Examples of such wireless mobile communication systems include public safety radio systems, cellular telephone systems, and personal communication systems (PCS). A wireless communication system may include a number of base stations for completing communication paths with the user stations. The base stations may be connected to a network, either directly of via a switch.

In many mobile communication systems it is desired that user stations have the ability to initiate and receive telephone calls. By connecting a communication system to a public switched telephone network (PSTN), a user station may generally communicate with any telephone connected to the telephone network. Alternatively, a communication system may access the telephone system through an intermediate communication system such as the Global System for Mobile Communications (GSM).

In operation, it is often necessary to pass signaling information among various components of a communication system. Signaling information may, for example, comprise control messages relating to the operation of the communication system. An example of signaling information is a message from a user station to a base station indicating a malfunction. One difficulty with the user of signaling information is that it must be distinguished within the system from data communication (i.e., information intended solely for the application end user), and must be extracted by the system component needing the signaling information to perform its tasks.

The transfer of necessary control and data information can be difficult within certain types of wireless systems. For example, in a time division multiple access (TDMA) system, wherein a base station communicates with a plurality of user stations (typically mobile) in a different time slots, the amount of information that can be transferred between the base station and the user station in a given time slot is necessarily limited. In contrast, a network to which a call is connected often transfers information in large data blocks (e.g., 64 kilobyte segments). The base station should have the capability of supporting data transfers and control functions required by the network, while at the same time supporting the transfer of information and control messages to the user station over a TDMA channel.

It would be advantageous to provide a mobile communication system with an improved method of communicating both user and signaling data among system components. It would be further advantageous to provide a mobile communication system having the characteristics of a layered architecture so as to provide a transparent data pipeline to application end users.

## SUMMARY OF THE INVENTION

The present invention comprises in one aspect a system and method of transferring information (including user data and signaling information) within a mobile communication system.

In one aspect of the invention, internal components of a mobile communication system communicate system signaling data across internal interfaces implemented according to a layered architecture. System interfaces effectively function as communication channels between the system components. The system components appear as application end users to the internal communication channels defined by the system interfaces.

In another aspect of the invention, a mobile communication system transfers signaling data and end user data over a common set of interfaces, without using separate or dedicated internal communication channels for signaling data.

In a preferred embodiment, the communication system includes a base station capable of communicating with a plurality of user stations. The base station is connected with a base station controller (which may also be connected to other base stations). The base station controller may be connected to a network. In a preferred embodiment, the base station comprises two separate processors, an over-the-air (OTA) processor and a base station controller (BSC) interface processor (also called a line card processor). The OTA processor controls a base station transceiver which carries out communication with user stations over communication links. In a preferred embodiment, the interface between the OTA processor and the line card processor comprises a dual-port RAM which is used as a shared resource across the interface. Prioritized queues may be used to facilitate response to relatively higher priority signaling and control messages.

In another aspect of the invention, an over-the-air interface provides for the transfer of signaling information or data information, or both. The over-the-air interface comprises a plurality of time division multiple access (TDMA) channels. An information packet sent over a TDMA channel includes a relatively long bearer field (B-field) and a relatively short byte-serial field (also called a D-field). Low priority signaling messages may be segmented and transmitted over a plurality of time slots in the D-field. Higher priority signaling messages may be sent in the B-field, pre-empting normal bearer traffic. A field or flag in a header of an OTA information packet indicates to the receiving entity the usage of the B-field and the D-field for a given packet.

In a particular embodiment of the invention where the interface between the base station and the user stations is a TDMA interface, signaling traffic between the base station and each of the user stations is conducted in either a fast control traffic mode or a slow control traffic mode. In the fast control traffic mode, signaling messages are exchanged between the base station and a user station in a plurality of time slots within a timespan of a single time frame; in the slow control traffic mode, signaling messages are exchanged between the base station and a user station in no more than a single time slot within a timespan of a single time frame.

The above aspects of the invention are described with respect to preferred sets of messages, wherein each set of messages is associated with a different interface between system components.

BRIEF DESCRIPTION OF THE DRAWINGS

The various objects, features and advantages of the present invention may be better understood by examining the Detailed Description of the Preferred Embodiments found below, together with the appended figures, wherein:

Fig. 1A is a diagram of a pattern of cells in a wireless communication system.

Fig. 1B is a block diagram of a communication system.

Fig. 1C is a diagram of an arrangement of cells in a wireless communication system showing an exemplary code and frequency reuse pattern.

Fig. 2 is a block diagram of a transmitter and a receiver in a spread spectrum communication system.

Fig. 3 is a diagram of a time frame divided into a plurality of time slots.

Fig. 4A is a diagram of a multi-layer communication system architecture according to the OSI Reference Model.

Fig. 4B is a diagram illustrating peer-to-peer communication in the layered communication system architecture of Fig. 4A.

Fig. 5A is a diagram of a preferred slot structure, and Figs. 5B and 5C are diagrams of a base station traffic message structure and a user station traffic message structure, respectively.

Fig. 6 is an abstract diagram illustrating the transfer of information (including internal signaling messages) among system components in a preferred wireless communication system.

Fig. 7 is an abstract diagram illustrating the transfer of information to and from a particular network in accordance with the system components and interfaces of Fig. 6.

Fig. 8 is a diagram of an embodiment of the Fig. 6 system architecture focusing on the base station interfaces.

Fig. 9 is a diagram illustrating a breakdown of software functionality within a base station.

Fig. 10 is a diagram of an information packet in accordance with one embodiment of the present invention.

Fig. 11 is a diagram of an exemplary data frame for transmitting messages to and from a base station controller.

Fig. 12 is a diagram of an exemplary address field in the data packet of Fig. 11.

Fig. 13 is a diagram of a process for communicating signaling data among system components in a preferred mobile communication system.

Fig. 14 is a diagram of a particular I-interface architecture utilizing a shared memory element (i.e., dual-port RAM), and Fig. 15 is a table of an exemplary dual-port RAM map.

Figs. 16A and 16B are a block diagrams of a base station showing separate controllers and interface components.

Figs. 17A and 17B are exemplary dual-port RAM maps.

DESCRIPTION OF THE PREFERRED EMBODIMENTS

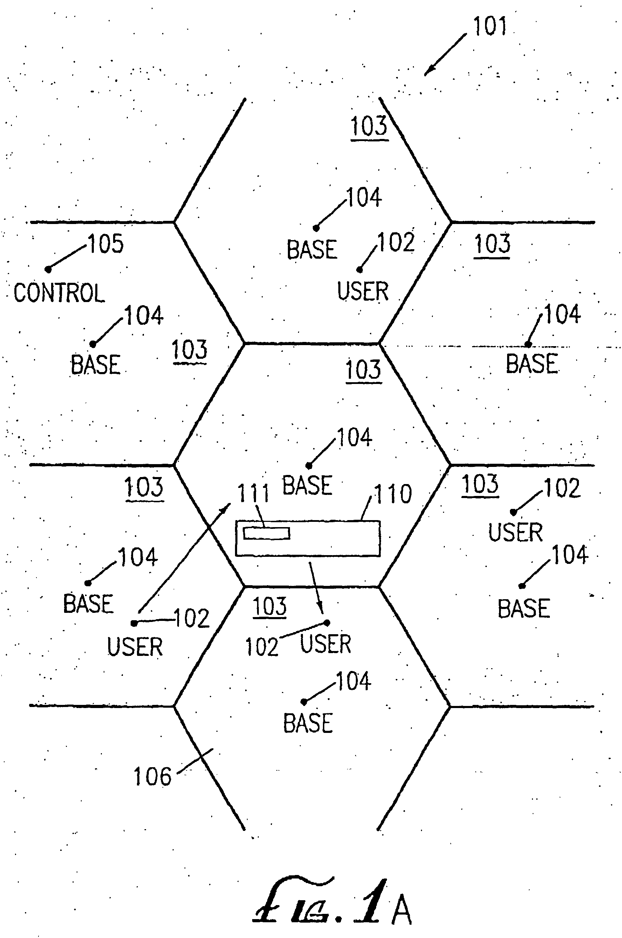

Figure 1A is a diagram of a pattern of cells in a wireless communication system 101 for communication among a plurality of user stations 102. The wireless communication system 101 of Fig. 1A includes a plurality of cells 103, each with a base station 104, typically located at the center of the cell 103. Each station (both the base stations 104 and the user stations 102) generally comprises a receiver and a transmitter.

In a preferred embodiment, a control station 105 (also comprising a receiver and a transmitter) manages the resources of the system 101. The control station 105 (sometimes referred herein as a "base station controller") may assign the base station 104 transmitters and user station 102 transmitters in each cell 103 a spread-spectrum code for modulating radio signal communication in that cell 103. The resulting signal is generally spread across a bandwidth exceeding the bandwidth necessary to transmit the data, hence the term "spread spectrum". Accordingly, radio signals used in that cell 103 are spread across a bandwidth sufficiently wide that both base station 104 receivers and user station 102 receivers in an adjacent cell 103 may distinguish communication which originates in the first cell 103 from communication which originates in the adjacent cell 106.

Figure 1B is a block diagram of a communication system architecture utilized in a preferred embodiment of the present invention. The Fig. 1B communication system comprises a plurality of base stations 104 for communicating with a plurality of user stations 102. The base stations 104 and user stations 102 may operate in a personal communications system (PCS), such as may be authorized under rules prescribed by the Federal Communications Commission (FCC).

Each base station 104 may be coupled to a base station controller 105 by any of a variety of communication paths 109. The communication paths 109 may each comprise one or more communication links 118. Each communication link 118 may include a coaxial cable, a fiber optic cable, a digital radio link, or a telephone line.

Each base station controller 105 may also be connected to one or more communication networks 126, such as a public switched telephone network (PSTN) or personal communication system switching center (PCSC). Each base station controller 105 is connected to a communication network 126 by means of one or more communication paths 108, each of which may include a coaxial cable, a fiber optic cable, a digital radio link, or a telephone line.

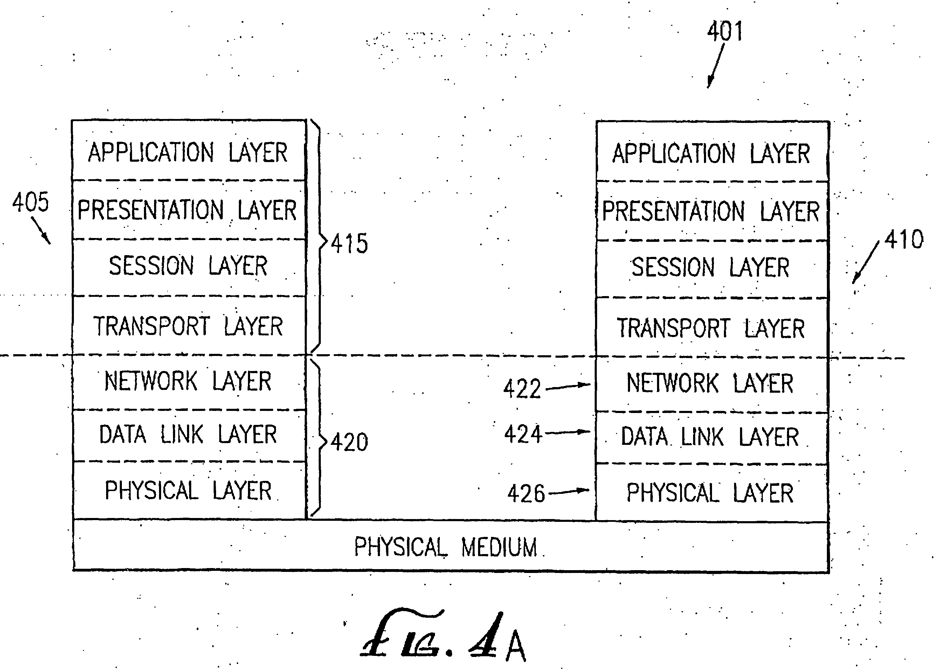

The Fig. 1B communication system also may include one or more "intelligent" base stations 107 which connect directly to a communication network 126 without interfacing through a base station controller 105. The intelligent base stations 107 may therefore bypass the base station controllers 105 for local handoffs and switching of user stations 102, and instead perform these functions directly over the network 126. In terms of the interfaces described hereinafter (see Fig. 6), an intelligent base station 107 does not require an N-Interface, and the functions of the base station controller 105 for transmitting to the network 126 are incorporated within the intelligent base station 107.

In operation each base stations 104 formats and sends digital information to its respective base station controller 105 (or directly to the network 126 in the case of an intelligent base station 107). The base station controllers 105 receive inputs from multiple base stations 104, assist handoffs between base stations 104, and convert and format channel information and signaling information for delivery to the network 126. The base station controllers 105 may also manage a local cache VLR database, and may support basic operation, administration and management functions such as billing, monitoring and testing. Each base station controller 105, under control of the network 126, may manage local registration and verification of its associated base station 104 and may provide updates to the network 126 regarding the status of the base stations 104.

The network 126 connects to the base station controllers 105 for call delivery and outgoing calls. Intelligent base stations 107 may use ISDN messaging for registration, call delivery and handoff over a public telephone switch. The intelligent base station 107 may have all the general capabilities of a base station 104 but further incorporate a BRI card, additional intelligence and local vocoding.

If the network 126 is a GSM network, then base stations 104 may connect to the network 126 through a defined "A" interface. The "A" interface may be incorporated in base station controllers 105 and in intelligent base stations 107. Features and functionality of GSM may be passed to and from the base stations 104 over the "A" interface in a manner that is transparent to the end user.

The system may also interconnect to cable television distribution networks. The base stations 104 may be miniaturized so that they can be installed inside standard cable TV amplifier boxes. Interfacing may be carried out using analog remote antenna systems and digital transport mechanisms. For example, TI and FT1 digital multiplexer outputs from the cable TV network may be used for interfacing, and basic rate (BRI) ISDN links may be used to transport digital channels.

Figure 1C is a diagram of a particular cellular environment in which the invention may operate. In Fig. 1C, a geographical region 132 is divided into a plurality of cells 130. Associated with each cell 130 is an assigned frequency from among frequencies F1, F2 and F3, and an assigned spread spectrum code (or code group) from among the codes (or code groups) C1, C2, C3, C4, C5 and C6. The three different frequencies F1, F2 and F3 are preferably assigned in such a manner that no two adjacent cells 130 have the same assigned frequency F1, F2 or F3, thereby resulting in minimization of interference between adjacent cells 130. The spread spectrum codes C1 through C6 are preferably orthogonal and may be assigned in adjacent clusters 131 such as shown in Fig. 1C. Although six spread spectrum codes C1 through C6 are depicted in Fig. 1C, other numbers of spread spectrum codes may be used depending upon the particular application.

Further details regarding an exemplary cellular pattern are described in, e.g., U.S. Patent No. 5,402,413, entitled "Three Cell Wireless Communication System," which application is assigned to the assignee of the present invention, and is hereby incorporated by reference as if fully set forth herein.

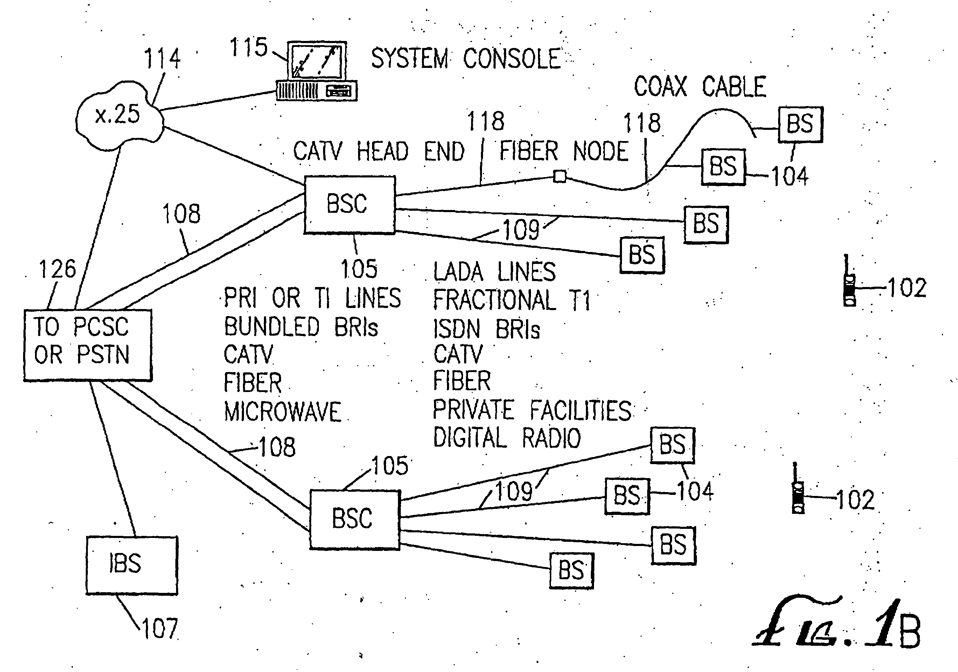

Figure 2 is a block diagram of an exemplary transmitter and receiver in a spread spectrum communication system as may be employed for spreading and despreading signals in the communication system of Fig. 1A. In Fig. 2, a spread-spectrum transmitter 201 comprises an input port 202 for input data 203, a chip sequence transmitter generator 204, a modulator 205, and a transmitting antenna 206 for transmitting a spread-spectrum signal 207. A'spread-spectrum receiver 208 comprises a receiver antenna 209, a chip sequence receiver generator 210, a demodulator 211, and an output port 212 for output data 213. In operation, a single chip sequence 214 is identically generated by both the transmitter generator 204 and the receiver generator 210, and appears essentially random to others not knowing the spreading code upon which it is based. The spread-spectrum signal 207 is despread with demodulator 211 by correlating the received signal with a locally generated version of the chip sequence 214. Exemplary correlators are described in, e.g., U.S. Patent Nos. 5,022,047 and 5,016,255, each of which are assigned to the assignee of the present invention, and each of which are incorporated by reference as if fully set forth herein. A preferred method of correlation is described in U.S. Patent Application Serial No. 08/481,613 entitled "Multi-Bit Correlation of Continuous Phase Modulated Signals," filed June 7, 1995, hereby incorporated by reference as if set forth fully herein.

Spread spectrum communication techniques are further described in, e.g., Robert C. Dixon, Spread Spectrum Systems with Commercial Applications (John Wiley & Sons, 3d ed. 1994).

Data may be transmitted between the base station 104 and user stations 102 using an M-ary spread spectrum technique. Suitable M-ary spread spectrum transmission and reception techniques are described in, e.g., U.S. Patent No. 5,022,047 and in U.S. Patent Application Serial No. 08/484,007 entitled "Method and Apparatus for Decoding a Phase Encoded Signal," filed June 7, both of which are incorporated by reference as if set forth fully herein. In a preferred embodiment, the base station 104 and user stations 102 each transmit an M-ary direct sequence spread spectrum signal, with M=6, using spread spectrum codes (called "symbol codes") of 32 chips. Thirty-two different symbol codes are used to represent up to thirty-two different data symbols, each comprising five bits of data; phase encoding may also be used to allow transmission of a 6th bit of data for each symbol code. Techniques of phase encoding for transmission of an additional bit of information per symbol code are described in, e.g., U.S. Patent Application Serial No. 08/484,007, referenced above.

User stations 102 in one embodiment may comprise mobile handsets capable of multi-band and/or multi-mode .operation. The user stations 102 may be multi-mode in that they may be capable of both spread spectrum (i. e., wideband) communication and also narrowband communication. The user stations 102 may be multi-band in the sense that they may be set to operate on a plurality of different frequencies, such as frequencies in either the licensed or unlicensed PCS bands. The user stations 102 may operate in one mode (e.g., wideband) over a first frequency band, and another mode (e.g., narrowband) over a second frequency band.

As an example, a user station 102 may be set to operate on a plurality of frequencies between 1850 and 1990 MHZ, with the frequencies separated in 625 kHz steps. Each user station 102 may be equipped with a frequency synthesizer that may be programmed to allow reception and/or transmission on any one of the plurality of frequencies. Further information regarding dual-mode and/or dual-band communication is set forth in U.S. Patent Application Serial No. 08/483,514 (attorney docket 214/071) entitled "Dual-Mode Wireless Unit with Two Spread Spectrum Frequency Bands," filed on June 7, 1995 in the name of inventors Robert C. Dixon et al.

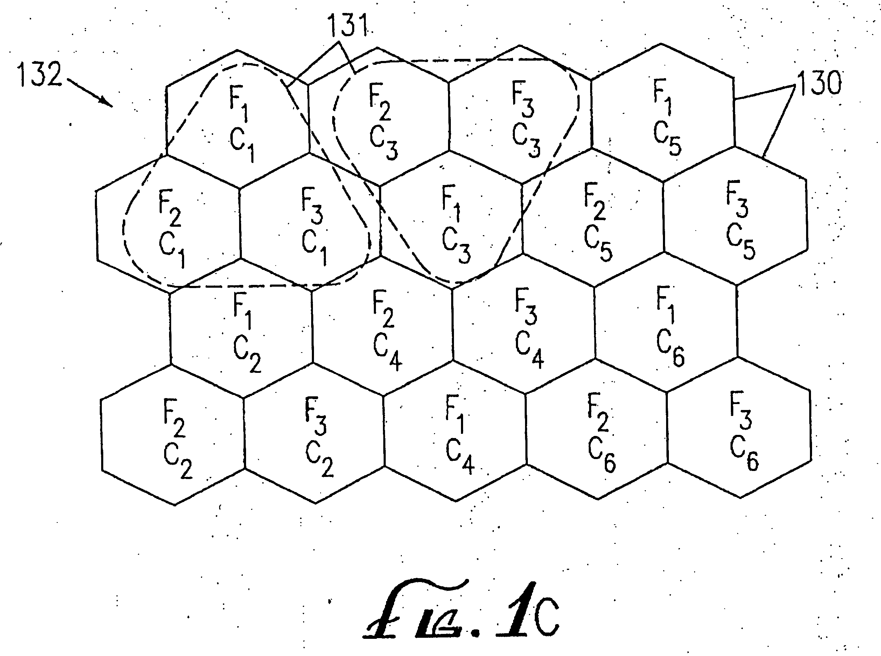

Figure 3 is a diagram showing a timing structure for a particular TDMA system. According to the timing structure of Fig. 3, communication over time is broken into a continuous series of time frames 301. A single complete time frame 301 is shown along a timeline 310 in Fig. 3; similar time frames are assumed to precede and follow time frame 301 in a continuous pattern along the timeline 310.

Time frame 301 is divided into a plurality of time slots 302 numbered consecutively TS1, TS2...TSN, each of which may support duplex communication with a user station 102. Time frame 301 may be thought of as a "polling loop" or a time loop, as depicted in Fig. 3, whereby user stations 102 are communicated with sequentially over the time frame 301 in a manner analogous to polling, each user station 102 transmitting and receiving messages in its designated time slot 302. In the Fig. 3 embodiment, each time slot 302 comprises a user portion 305, wherein a user station 102 transmits a user-to-base message to the base station 104, and a base portion 306, wherein the base station 104 transmits a base-to-user message to the user station 102.

Time slots 302 define a set of transmission channels. Each transmission channel may further defined by a distinct frequency channel, a distinct spread spectrum code, a distinct spatial direction, or some combination thereof.

In an exemplary TDMA communication system, time frames 301 are each 20 milliseconds in duration, and each time frame 301 comprises sixteen time slots 302 or, alternatively, eight time slots 302 to support extended range through increased guard times. In a preferred embodiment, each time slot 302 is 1.25 milliseconds long. Each time slot 302 in such an embodiment comprises a total of 3125 chip periods, and base station transmissions sent during base portions 306 of the time slot 302 and user station transmissions sent during user portions 305 of the time slot 302 each have a chipping rate of 2.5 Megachips/second.

In some embodiments, a user station 102 may communicate in more than one time slot 302 in each time frame 301, so as to support an increased data rate. Similarly, in some embodiments, a user station 102 may periodically skip time frames 301 and communicate in some subset of all time frames 301 (e.g., every other time frame 301, or every fourth time frame 301), so as to support a reduced data rate where a full speed communication link is not necessary. Further information about an exemplary TDMA system supporting variable data rates may be found in copending U.S. Patent Application Serial No. 08/284,053 filed August 1, 1994, which is hereby incorporated by reference as if fully set forth herein. An alternative over-the-air protocol is also described therein.

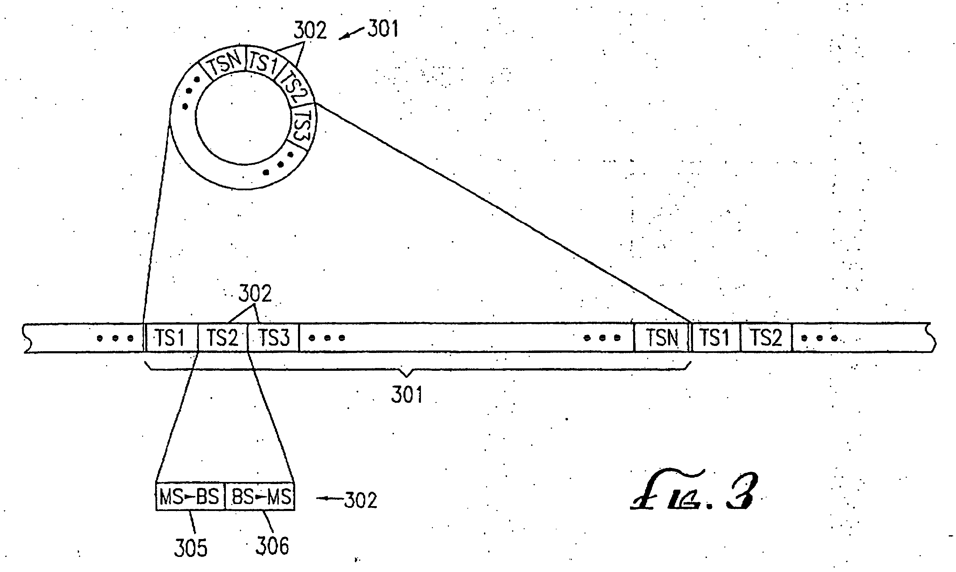

Figure 5A is a diagram of a preferred slot structure, and Figs. 5B and 5C are diagrams of a base station traffic message structure and a user station traffic message structure, respectively. In Fig. 5A, a time slot 510 comprises a variable radio delay gap 505, a user station transmit frame 515, a base processor gap 525, a guard time 535, a base station transmit frame 545, and a radar gap 555. Each user station transmit frame 515 comprises a user preamble 516, a user preamble sounding gap 519, and a user station data frame 521. Similarly, each base station transmit frame 545 comprises a base preamble 547, a base preamble sounding gap 549, and a base transmit data frame 551.

Figure 5B illustrates a preferred message structure for the base transmit data frame 551. The message structure of Fig. 5B comprises a base header field 553, a base D-channel field 557, a base data field 559, and a base cyclical redundancy check (CRC) field 561. In a preferred embodiment, the base header field 553 is 23 bits, the base D-channel field 557 is 8 bits, the base data field 559 is 192 bits, and the base CRC field 561 is 16 bits.

Figure 5C illustrates a preferred message structure for the user station transmit data frame 521. The message structure of Fig. 5C comprises a user header field 523, a user D-channel field 527, a user data field 529, and a user CRC field 531. In a preferred embodiment, the user header field 523 is 17 bits, the user D-channel field 527 is 8 bits, the user data field 529 is 192 bits, and the user CRC field 531 is 16 bits.

Signaling messages (i.e., messages used for control traffic) may be used to assist in acquisition and maintenance of a channel from the network. A message may include a message type data element located in a message type field. The message type data element defines the format of the rest of the message, and acts as an operation code to the destination unit (either user station 102 or base station 104). Exemplary message types (and their abbreviations) appear in Table 1 below.

Table 1

| Message Type | Message |
| --- | --- |
| ACK | Acknowledge |
| AUT | Authentication Request |
| AUR | Authentication Response |
| BAI | Base Assist Information |
| BAR | Base Assist Request |
| CIP | Set Cipher Mode |
| CNC | Call Connected |
| CNL | Connect Link |
| CSC | Circuit Switch Complete |
| DRG | De-registration Request |
| HLD | Hold |
| HOF | Handover Failed |
| MAI | User Station Assist Information |
| MAR | User Station Assist Request |
| OHC | Originating Handover Complete |
| ORH | Originating Handover Request |
| ORG | Originate Call |
| RCP | Registration Complete |
| REL | Release Link |
| RRQ | Registration Request |
| SPR | Specific Response |
| STL | Set Link |
| SYN | Synchronize |
| THC | Terminating Handover Complete |
| THR | Target handover Request |
| TRA | Transport Message with TCID |

The message type data element may be, e.g., 8 bits in length.

Figure 6 is a diagram of various system components within a preferred wireless communication system showing interfaces between the components. Four distinct interfaces are defined in the Fig. 6 system, labeled "M", "O", "I", and "N", and are referred to herein as the M-Interface 605, O-Interface 610, I-Interface 615, and N-Interface 620, respectively.

The M-Interface 605 may be internal to a user station 102 and generally defines a boundary between an application end user 602 and a mobile communication transceiver 603 in the user station 102. The O-Interface 610 generally comprises communication channel (typically an over-the-air communication channel) between the mobile communication transceiver 603 in the user station 102 and a base station transceiver 604. The I-Interface 615 may be thought of as "internal" to a base station 104 and generally defines a boundary between the base station transceiver 604 and a base station line card processor 606. Finally, the N-Interface 620 comprises an information channel 607 between the line card processor 606 and a base station controller 609 (such as, e.g., base station controller 105 shown in Fig. 1B).

Within the communication system 101, information is communicated across each interface 605, 610, 615, and 620 according to a particular protocol governing exchange of information across that interface. Thus, a total of four protocols are defined, one for each interface 605, 610, 615, 620. A fifth protocol may be defined for an adaptation layer interface (e.g., the GSM "A" interface) at the base station controller 105.

In a preferred embodiment, the communication system 101 communicates both user data and signaling data across one or more of the system component interfaces under the same or similar protocols. User data (also referred to as bearer data) comprises, in general, data which originates at the application end user and is passed to the communication system across an adaptation layer interface. User data may include voice, error-controlled data, or non-error controlled (raw) data. Signaling data (also called control data), on the other hand, generally comprises information exchanged within the communication system, or between the communication system and application end users, for the purpose of service connection (i.e., connection establishment and maintenance).

The mobile communication system 101 transfers information across one or more system interfaces through a series of packetized messages referred to as "Notes". Each Note may contain data intended for receipt by an application end user (user data) or data to be used for link establishment and maintenance (signaling data), or both. Each interface 605, 610, 615, 620 communicates with Notes formatted according to a particular protocol specific to the interface.

The mobile communication system 101 transfers information comprising signaling data and user data between a base station 104 (i.e., the base station transceiver 604) and a user station 102 (i.e., the mobile station transceiver 603) across the O-Interface 610. In a preferred embodiment, the O-Interface 610 operates according to an over-the-air protocol with time division duplexing (TDD) and time division multiple access (TDMA) techniques. A preferred protocol for the O-Interface 610 is shown in and described with respect to Fig. 3.

Signaling data is passed across the O-Interface 610 in the form of messages referred to as "O-Notes". In a preferred embodiment, the O-Notes are contained either within the base data field 559 (see Fig. 5B) or the user data field 529 (see Fig. 5C), depending upon the origin of the message. Alternatively, an O-Note may be segmented into, e.g., 8-bit segments and transmitted over a plurality of time slots 302 in the D-field 557 of the base message (see Fig. 5B) or the D-field 527 of the user message (see Fig. 5C). Generally, lower priority O-Note messages may be segmented and transmitted in the D-fields 557 or 527, while higher priority O-Note messages may be transmitted in the B-fields 579 or 529. Also, O-Notes may be transmitted in the B-field 579 or 529 when it is not otherwise being used (e.g., when the link is first being established and voice data is not being transferred yet).

A field or flag in the header of a base message or user message can be used to indicate whether an O-Note is contained in the B-field 579 or 529, or in the D-field 557 or 527. In some circumstances, an extended O-Note may be sent in a message covering both the D-field and the B-field.

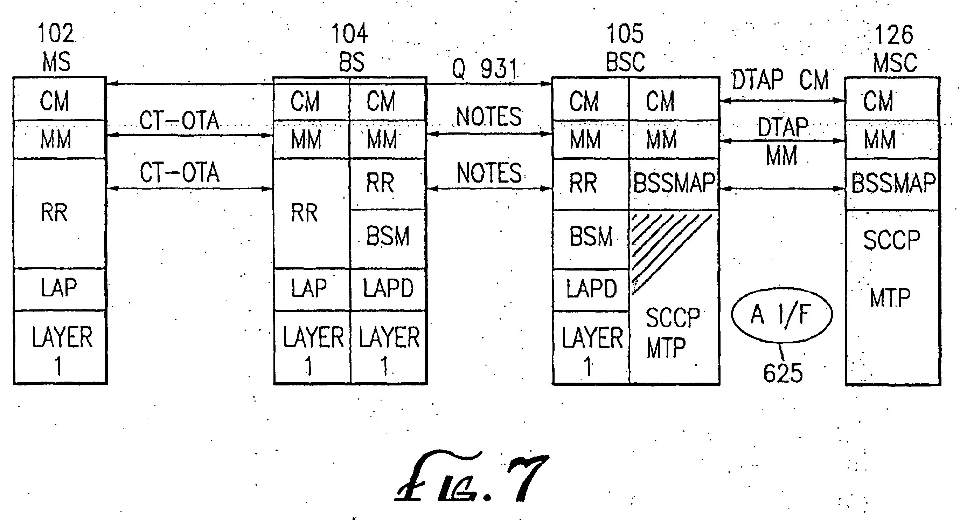

Figure 10 is a diagram of an information packet 1005 (e.g., the base message of Fig. 5B or the user message of Fig. 5C) which may be passed across the O-Interface 610. An O-Note 1010 is encapsulated within the packet 1005, and resides in the data field 529, 559 ordinarily reserved for bearer traffic. Each information packet 1005 generally also comprises a header 1015 of, e.g., 24 bits, a D-field of, e.g., 8 bits, and a frame check word 1020 of, e.g., 16 bits, for a total of 240 bits.

In a preferred embodiment, each O-Note 1010 has a length of no more than 160 bits, thereby taking up less space than the entire B-field 529 or 569 The latter 32 bits of the O-Note 1010 (appended to the first 160 bits) may be used for forward error correction.

Table 2-1 through Table 2-33 illustrate exemplary O-Notes 1010 which may be transferred across the O-Interface 610 in a preferred embodiment of the communication system 101. In Table 2-1 through Table 2-33, a mobile communication transceiver 603 may be denoted "MS-OTA" and a base station transceiver 604 may be denoted "BS-OTA."

## Table 2-1

### CT-ACK (Acknowledge) [MS-OTA <=> BS-OTA]

| Information Element | Length in Bits |
|---|---|
| Command Type | 8 |
| ACK Response | 8 |
| ACK'ed Command | 8 |
| Cause | 8 |
| Reserved | 128 |

*<Total Bits In MSG>*      160

Acknowledge messages can be transmitted by either the BS-OTA or the mobile communication.transceiver 603. They are usually the last element of a larger signaling exchange.

Table 2-2

| CT-ASI (Assist Information) [MS-OTA <=> BS-OTA] | |
|---|---|
| Information Element | Length in Bits |
| Message Type | 8 |
| Assist Type | 8 |
| Assist Data | 144 |
| <Total Bits in MSG> 160 | |

This message is sent either from the BS-OTA to the mobile communication transceiver 603 or from the mobile communication transceiver 603 to the BS-OTA. It provides a mechanism to impart various items of information to assist the recipient in making well formed decisions. It may be sent in response to a CT-ASR message or it may be unsolicited.

## Table 2-3

### CT-ASR (Assist Request) [MS-OTA <=> BS-OTA]

| Information Element | Length in Bits |
|---|---|
| Message Type | 8 |
| Assist Type | 8 |
| Assist Request Info | 144 |

*<Total Bits In MSG>*      160

This message is sent either from the BS-OTA to the mobile communication transceiver 603 or from the mobile communication transceiver 603 to the BS-OTA to request information. It provides a mechanism for the sender to request various items of information to assist it making well informed decisions.

### Table 2-4

### CT-AUR (Authentication Reject) [MS-OTA <=> BS-OTA]

| Information Element | Length in Bits |
|---|---|
| Message Type | 8 |
| TCID | 8 |
| Cause | 8 |
| Reserved | 136 |

<Total Bits In MSG>        160

This message shall be sent to the mobile communication transceiver 603 from the BS-OTA to inform the mobile communication transceiver 603 that the Network Application has rejected its Authentication Response.

### Table 2-5

### CT-AUR (Authentication Response) [MS-OTA <=> BS-OTA]

| Information Element | Length in Bits |
|---|---|
| Message Type | 8 |
| TCID | 8 |
| Authentication Test Response | 128 |
| Reserved | 16 |

<Total Bits In MSG>        160

The authentication response message shall be the mobile communication transceiver 603 response to an authentication challenge. It shall contain the results of encrypting the test number supplied by the authenticate message using the secret unique mobile user station traffic key.

## Table 2-6

## CT-AUT (Authentication Challenge) [MS-OTA <= BS-OTA]

| Information Element | Length in Bits |
|---|---|
| Message Type | 8 |
| TCID | 8 |
| Cipher Type | 8 |
| Cipher Key Sequence # | 8 |
| Authentication Test Number | 128 |

<Total Bits In MSG>     160

This message shall be sent to the mobile communication transceiver 603 from the BS-OTA whenever the BS starts an authentication sequence. This message shall supply a 128 bit challenge number to be used by the mobile user station 102 using the unique secret mobile user station traffic key to generate the authentication response message.

## Table 2-7

## CT-AUG (Authentication Rejection) [MS-OTA <= BS-OTA]

| Information Element | Length in Bits |
|---|---|
| Message Type | 8 |
| TCID | 8 |
| Cause | 8 |
| Reserved | 136 |

<Total Bits In MSG>     160

This message shall be sent to the mobile communication transceiver 603 from the BS-OTA whenever the communication system 101 rejects an Authentication Response from the mobile communication transceiver 603.

## Table 2-8
## CT-CIP (Set Cipher Mode) [MS-OTA <= BS-OTA]

| Information Element | Length in Bits |
|---|---|
| Message Type | 8 |
| Cipher Algorithm ID | 8 |
| Frame Number | 24 |
| Frame Offset | 8 |
| Cause | 8 |
| Request PID Type | 8 |
| Reserved | 88 |

*<Total Bits In MSG>*     152

This message is sent to the mobile communication transceiver 603 from the BS-OTA whenever the base station 104 wishes the mobile communication transceiver 603 to switch to cipher mode. When the mobile communication transceiver 603 receives this message the mobile communication transceiver 603 uses the cipher mode parameters to set its ciphering equipment and then switches into or out of cipher mode. All traffic after this point will be ciphered.

## Table 2-9 CT-CNC
## (Connection Complete) [MS-OTA <= BS-OTA]

| Information Element | Length in Bits |
|---|---|
| Message Type | 8 |
| TCID | 8 |
| Connection Number | 24 |
| OTA Map Type | 8 |
| OTA Map | 32 |
| Cipher Algorithm ID | 8 |
| Frame Number | 24 |
| Frame Offset | 8 |
| Reserved | 40 |

*<Total Bits In MSG>*     160

The CT-CNC message is set from the terminating base station 104 to the mobile communication transceiver 603 when a handover is completed.

**Table 2-10**

**CT-CSC (Circuit Switch Complete) [MS-OTA <= BS-OTA]**

| Information Element | Length in Bits |
|---|---|
| Message Type | 8 |
| (New) Zone | 40 |
| (New) Base ID | 32 |
| HRef | 48 |
| Reserved | 32 |

<Total Bits In MSG>           160

This message is set from the source base station 104 to the mobile communication transceiver 603 to signal that the communication system connection is available at the target base station 104.

**Table 2-11**

**CT-DRG (De-registration) [MS-OTA => BS-OTA]**

| Information Element | Length in Bits |
|---|---|
| Message Type | 8 |
| Cause | 8 |
| Reserved | 144 |

<Total Bits In MSG>           160

The mobile communication transceiver 603 shall send a de-registration message to the BS-OTA when the mobile communication transceiver 603 de-registers itself from the base station 104. If the mobile communication transceiver 603 does not send this message, de-registration shall automatically occur a fixed time-out period (e.g., 30 seconds) from the last time the mobile communication transceiver 603 sent a registration request to the base station 104.

## Table 2-12

### CT-HLD (Hold) [MS-OTA <=> BS-OTA]

| Information Element | Length in Bits |
|---|---|
| Message Type | 8 |
| OTA Map Type | 8 |
| OTA Map | 32 |
| Reserved | 112 |

*<Total Bits In MSG>*      160

## Table 2-13

### CT-GPO (General Poll) [MS <==> BS]

The BS broadcasts a CT-GPO when it has channels available. The CT-GPO is a general invitation to any MS to attempt to seize a TDD channel (time slot). This poll indicates a free channel (time slot).

| Information Element | Length in Bits |
|---|---|
| Message Type | 8 |
| Zone | 40 |
| BSC ID | 16 |
| Base ID | 32 |
| BS Capabilities | 32 |
| System Type | 8 |
| Service Provider | 16 |
| Slot Quality | 8 |

*<Total Bits In MSG>*      160

## Table 2-14

## CT-GPR (General Poll Response) [MS <==> BS]

The MS shall send a CT-GPR message to the BS in response to a CT-GPO when the MS wishes to acquire a link to the BS

| Information Element | Length in Bits |
|---|---|
| Message Type | 8 |
| Transaction Hint | 8 |
| Transaction Hint Qualifier | 8 |
| PID | 72 |
| Service Provider | 16 |
| Class | 16 |
| MS Capabilities | 16 |
| Reserved | 16 |

*<Total Bits In MSG>*     160

Hold packets can be transmitted by either the BS-OTA or the mobile communication transceiver 603. They are always part of a larger signaling traffic exchange and are used to maintain the communication link across the O-Interface 610 while waiting for an external event.

## Table 2-15

## CT-HOF (Handover Failure) [MS <==> BS]

This message is sent to the MS by either the Originating BS or the Terminating BS to indicate to the MS that the requested handover (OHR or THR) has failed.

| Information Element | Length in Bits |
|---|---|
| Message Type | 8 |
| Cause | 8 |
| Reserved | 144 |

*<Total Bits In MSG>*     160·

## Table 2-16
## CT-IRP (Identity Reply) [MS-OTA => BS-OTA]

| Information Element | Length in Bits |
|---|---|
| Message Type | 8 |
| Identity Type | 8 |
| Identity Data | 72 |
| Message Sequence Number | 8 |
| Reserved | 64 |

<Total Bits In MSG>      160

The mobile communication transceiver 603 sends a CT-IRP message to the BS-OTA in response to a CT-IRQ message.

## Table 2-17
## CT-IRQ (Identity Request) [MS-OTA <= BS-OTA]

| Information Element | Length in Bits |
|---|---|
| Message Type | 8 |
| Identity Type | 8 |
| Reserved | 144 |

<Total Bits In MSG>      160

The BS-OTA sends a CT-IRQ message to the mobile communication transceiver 603 when it receives an Identity Request Note from an application end user connected to a base station controller 105. This allows the application end user to obtain one of the mobile user station's Identifiers that is not normally included in the protocol.

## Table 2-18

### CT-OHC (Originating Handover Complete)

### [MS-OTA => Target BS-OTA]

| Information Element | Length in Bits |
|---|---|
| Message Type | 8 |
| HRef | 8 |
| PID | 72 |
| Registration Type | 8 |
| Registration Status | 8 |
| Reserved | 16 |

<Total Bits In MSG>          160

The Originating Handover Complete message is sent from the mobile communication transceiver 603 to the target (new) base station to complete the Originating Handover procedure.

## Table 2-19

### CT-OHR (Originating Handover Request)

### [MS-OTA => Originating BS-OTA]

| Information Element | Length in Bits |
|---|---|
| Message Type | 8 |
| (New) Zone | 40 |
| (New) BSC ID | 16 |
| (New) Base ID | 8 |
| Remaining Base Count | 8 |
| Reserved | 56 |

<Total Bits In MSG>          160

Originating Handovers will be attempted in cases when supporting a system such as DCS1900, where a terminating handover is not possible because there is no way the new base station controller 105 can notify the old base station controller 105 that the handover is required. The Originating Handover Request message is sent from the mobile communication transceiver 603 to the source BS-OTA to initiate the originating handover procedure.

## Table 2-20

### CT-PPR (Paging Poll Response) [MS-OTA <==> BS-OTA]

The MS send the CT-PPR message to the BS in response to a CT-PPRO from the BS.

| Information Element | Length in Bits |
|---|---|
| Message Type | 8 |
| PID | 72 |
| Service Provider | 16 |
| Class | 16 |
| MS Capabilities | 16 |
| Cipher Key Sequence # | 8 |
| Reserved | 24 |

*<Total Bits In MSG>*     160

## Table 2-21

### CT-RCP (Registration Complete) [MS-OTA <==> BS-OTA]

Upon initial or periodic registration completion, the BS responds to the MS with a registration complete message.

| Information Element | Length in Bits |
|---|---|
| Message Type | 8 |
| Registration Status | 8 |
| Registration Timers | 8 |
| Cause | 8 |
| Registration Result Code | 8 |
| SBT | 120 |

*<Total Bits In MSG>*     160

Table 2-22

| CT-REL (Release Link) [MS-OTA <=> BS-OTA] | |
|---|---|
| Information Element | Length in Bits |
| Message Type | 8 |
| Cause | 8 |
| Reserved | 144 |

This message is sent by either the mobile communication transceiver 603 or the BS-OTA when the sending side released the connection in progress or during link setup.

## Table 2-23
## CT-RRQ (Registration Request) [MS-OTA => BS-OTA]

| Information Element | Length in Bits |
|---|---|
| Message Type | 8 |
| Cipher Key Sequence # | 8 |
| Registration Type | 24 |
| Registration Status | 8 |
| Registration Info | 128 |

*<Total Bits In MSG>*     160

A registration request shall be sent from a mobile communication transceiver 603 to a BS-OTA on an initial and a periodic basis. Upon the initial request, the base station 104 shall enter the registration process. If the base station does not receive a periodic (30 seconds or as determined by the service provider) registration request from a mobile communication transceiver 603 which is currently registered with the base station, then the base station will initiate a de-registration procedure.

## Table 2-24
## CT-SPO (Specific Poll) [MS-OTA <==> BS-OTA]

The CT-SPO is an invitation for only the MS identified by the PID Information Element to seize the indicated TDD channel (time slot). It is generated by the BS in response to the Mobile Station's request to establish a link.

| Information Element | Length in Bits |
|---|---|
| Message Type | 8 |
| Poll Type | 8 |
| PID | 72 |
| OTA Map Type | 8 |
| OTA Map | 32 |
| Reserved | 24 |
| Slot Quality | 8 |

<Total Bits In MSG>     160

The mobile communication transceiver 603 sends the CT-SPR message to the BS-OTA in response to an unsolicited Specific Poll (i.e.; one that is not part of link acquisition). This occurs when the base station 104 wishes to initiate a transaction (e.g., incoming call or special operation).

## Table 2-25

## CT-SRQ (Service Response) [MS-OTA => BS-OTA]

| Information Element | Length in Bits |
|---|---|
| Message Type | 8 |
| TCID | 8 |
| Resource Request Data | 16 |
| Network Service Reserved Data | 128 |

<Total Bits In MSG>     160

The mobile communication transceiver 603 sends the service request message to the BS-OTA to request call management access to the communication system 101.

## Table 2-26

### CT-SRS (Service Response) [MS-OTA <==> BS-OTA]

The BS sends the CT-SRS message to the MS to inform the MS of the network's response to a Service Request.

| Information Element | Length in Bits |
|---|---|
| Message Type | 8 |
| TCID | 8 |
| Network Service Response | 24 |
| Cause | 8 |
| Reserved | 112 |

*<Total Bits In MSG>*      160

## Table 2-27.1

### CT-STL (Set Link) [BS-OTA => MS-OTA]

| Information Element | Length in Bits |
|---|---|
| Message Type | 8 |
| Resource Request Data | 16 |
| OTA Map Type | 8 |
| OTA Map | 32 |
| Cause | 8 |
| TCID | 8 |
| Connection Number | 8 |
| Transport Method | 32 |
| Reserved | 24 |

*<Total Bits In MSG>*      160

The BS-OTA sends the STL message to the mobile communication transceiver 603 when the BS-OTA wishes to change the characteristics of the over the air service across the O-Interface 610.

**Table 2-27.2**

**CT-STL (Set Link) [MS-OTA => BS-OTA]**

| Information Element | Length in Bits |
|---|---|
| Message Type | 8 |
| Resource Request Data | 32 |
| OTA Map Type | 8 |
| OTA Map | 32 |
| TCID | 8 |
| Reserved | 72 |

<Total Bits In MSG>           160

The mobile communication transceiver 603 sends the CT-STL message to the BS-OTA when the mobile user station wishes to change the characteristics of the over the air service across the O-Interface 610.

**Table 2-28**

**CT-SYN (Synchronize) [MS-OTA <=> BS-OTA]**

| Information Element | Length in Bits |
|---|---|
| Message Type | 8 |
| Cipher Algorithm ID | 8 |
| Cipher Key Sequence # | 8 |
| Frame Number | 24 |
| Frame Offset | 8 |
| Cause | 8 |
| Reserved | 96 |

<Total Bits In MSG>           160

Synchronize messages can be transmitted by either the BS-OTA or the mobile communication transceiver 603. They are always part of recovery from an error in a signaling transaction. They are initiated by whichever side discovered the error.

## Table 2-29

## CT-THC (Terminating Handover Complete)

## [MS-OTA => Target BS-OTA]

| Information Element | Length in Bits |
|---|---|
| Message Type | 8 |
| Registration Type | 8 |
| Registration Status | 8 |
| Reserved | 136 |

*\<Total Bits In MSG\>*　　160

The terminating Handover Complete message is sent from the mobile communication transceiver 603 to the target (new) base station to complete the Terminating Handover procedure.

## Table 2-30

## CT-THR (Terminating Handover Request)

## [MS-OTA => Target BS-OTA]

| Information Element | Length in Bits |
|---|---|
| Message Type | 8 |
| Resource Request | 16 |
| (Old) Zone | 40 |
| (Old) BSC ID | 16 |
| (Old) BS ID | 32 |
| (Old) Connection Number | 24 |
| Reserved | 24 |

*\<Total Bits In MSG\>*　　160

Handovers can, with certain limitations, be initiated either from the old base station 104 (an originating handover) or the new base station 104 (a terminating handover). The mobile communication transceiver 603 will attempt a terminating handover whenever possible because they are faster and more robust. The Terminating Handover Request message is sent from the mobile communication transceiver 603 to the target BS-OTA to initiate the terminating handover procedure.

## Table 2-31

### CT-TRA (Transport Message) [MS-OTA <=> BS-OTA]

| Information Element | Length in Bits |
|---|---|
| Message Type | 8 |
| Transport Data | 152 |

<Total Bits In MSG>        160

The Transport Data includes the New Personal ID, Message Sequence number, and reserved bits, as below.

| Information Element | Length in Bits |
|---|---|
| Message Type | 8 |
| New Personal ID | 72 |
| Message Sequence Number | 8 |
| Reserved | 72 |

<Total Bits In MSG>        160

The Transport message transports bearer or user data between the BS-OTA and mobile communication transceiver 603 on the circuit specified by TCID (part.of the Message Type for CT-TRA Notes).

Table 2-32

| CT-TSI (Time Slot Interchange) [MS-OTA => BS-OTA] | |
|---|---|
| Information Element | Length in Bits |
| Message Type | 8 |
| Reserved | 152 |

A Time Slot Interchange request shall be sent from a mobile communication transceiver 603 to a BS-OTA when the mobile communication transceiver 603 determines that its signal quality might improve if it were communicating with the BS-OTA on different time slot(s). The BS-OTA will respond with a CT-STL message, giving the mobile communication transceiver 603 a different time slot map, if it can accommodate the TSI request. If the BS-OTA cannot accommodate the TSI request it will respond with a CT-HOF message.

## Table 2-33
### CT-UID (Update ID) [MS-OTA <= BS-OTA]

| Information Element | Length in Bits |
|---|---|
| Message Type | 8 |
| New Personal ID | 72 |
| Zone | 40 |
| Reserved | 40 |

*<Total Bits In MSG>*      160

Upon receipt of an Update ID N-Note from a base station controller 105, the base station 104 sends the mobile user station 102 a CT-UID message.

The mobile communication system 101 transfers information in the form of signaling data and user data between a base station 104 and a base station controller 105 across an N-Interface 620. In a preferred embodiment, the N-Interface 620 comprises one or more 64 kbps DS0 lines between the base station 104 and base station controller 105. In a presently preferred embodiment, a base station 104 and base station controller 105 communicate signaling data across a single dedicated 64 kbps DS0 line, while user data is communicated across one or more separate 64 kbps DS0 lines. Each DS0 line operates according to the same protocol for the N-Interface 620.

Signaling data is communicated across the N-Interface 620 according to a protocol described in CCITT Recommendation Q.920/Q.921 called "Link Access Procedures on the D-channel ("LAPD"). LAPD is a subset of the ISO standard protocol High-level Data Link Control ("HDLC"). Further information regarding the LAPD protocol may be found in the CCITT IX Plenary Assembly Recommendations ("CCITT Blue Book"), Vol. VI, pp. 19-60, which is incorporated by reference as if set forth fully herein.

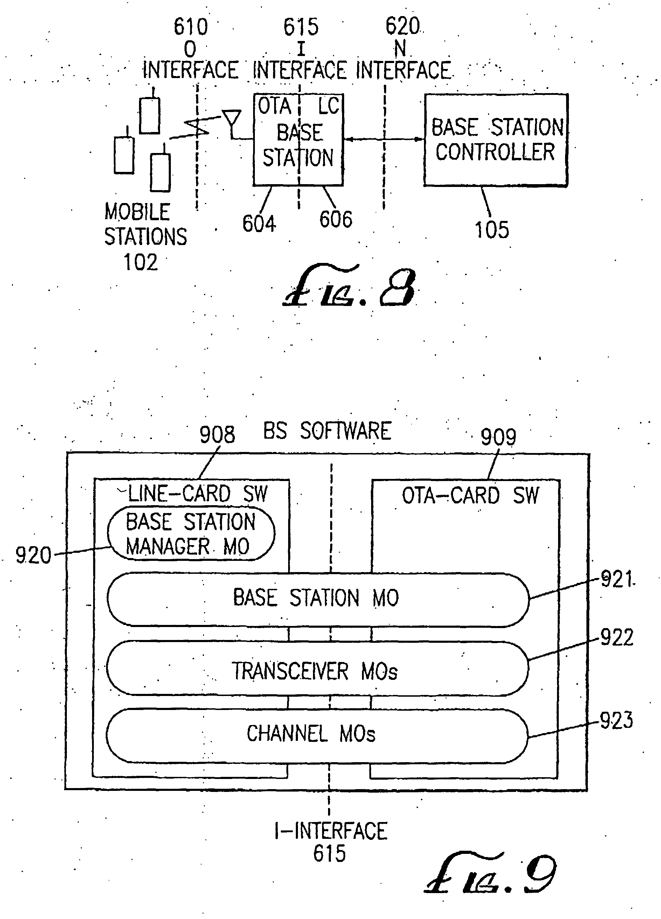

Signaling data information is transferred over the N-Interface 620 in the form of N-Notes. Figure 11 is a diagram of a preferred format for a data frame 1105 which may be passed across the N-Interface 620 in the communication system 101. Each N-Note 1110 is encapsulated within a data frame 1105.

Each data frame 1105 generally begins with an opening flag 1115 and ends with a closing flag 1120. The opening flag 1115 and closing flag 1120 each comprise a predefined bit sequence (e.g., "01111110") which signals the beginning and end of a data frame 1105. A system component sending data across the N-Interface 620 examines the frame content between the opening flag 1115 and closing flag 1120, and inserts a 0-bit after all sequences of five consecutive 1-bits. A system component receiving data across the N-Interface 620 discards any 0-bit which directly follows five consecutive 1-bits.

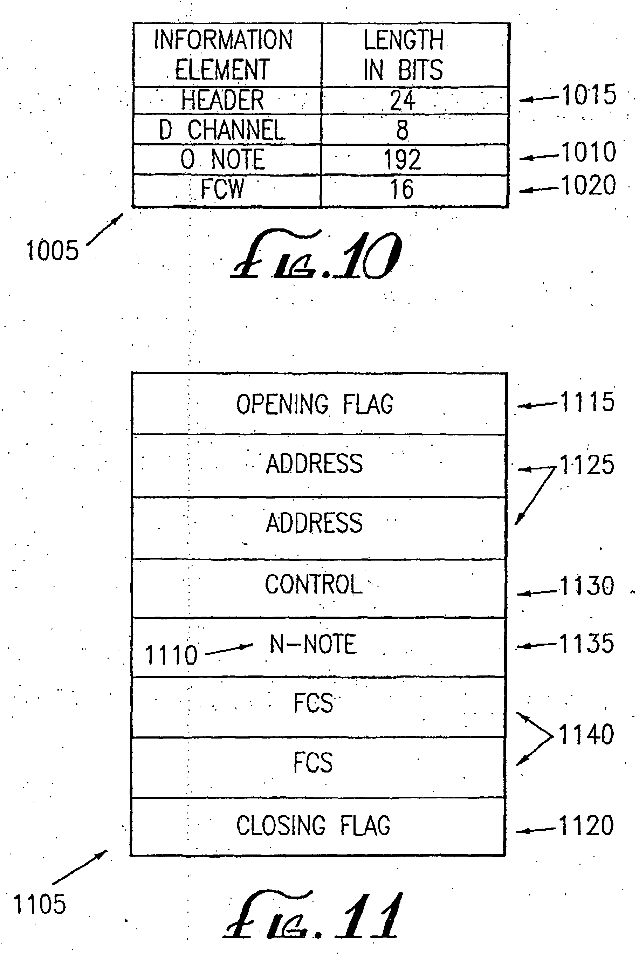

The opening flag 1115 is immediately followed by an address field 1125 comprising, e.g., 16 bits. Figure 12 is a diagram of a preferred address field 1125 format. In the Fig. 12 embodiment, the address field 1125 comprises a Service Access Point Identifier (SAPI) subfield 1210 comprising, e.g., 6 bits; a command/response (C/R) bit 1215, and a terminal endpoint identifier (TEI) subfield 1220 comprising, e.g., 7 bits. The address field 1125 also has two extension address (EA) bits 1225, one in the first address field octet having a value of 0, and the second in the second address field octet having a value of 1.

The SAPI subfield 1210 identifies a protocol under which the current data frame 1105 operates. In one aspect, the SAPI subfield 1210 specifies an upper layer software entity for which the data carried by the current data frame 1105 is formatted. In a preferred embodiment, the N-Interface protocol may be specified by a SAPI subfield 1210 having a predefined value.

The TEI subfield 1220 identifies a specific terminal endpoint which is the destination for the current data frame 1105. Since the Q.921 link across the N-Interface 620 is actually a simple point-to-point connection between a base station 104 and a base station controller 105, only one TEI needs to be assigned to each physical interface in the mobile communication system 101. In a preferred embodiment, a unique TEI value is stored in each base station 104 and used during system initialization.

The address field 1125 is followed by a control field 1130 which identifies the type of frame as a command or response frame. The control field may be either a numbered information transfer (I), an unnumbered information transfer (U), or a supervisory frame (S).

The control field 1130 is followed by an information field 1135 which contains an N-Note 1110. The information field 1135 is followed by a frame check sequence 1140 comprising two eight-bit bytes.

Table 3-1 through Table 3-39 describe exemplary N-Notes which may be communicated across the N-Interface 620 in a preferred embodiment of the communication system 101. In Table 3-1 through Table 3-39, a base station 104 is denoted "BS" and a base station controller 105 is denoted "BSC."

Table 3-1

| Assist Information [BS <=> BSC] | |
|---|---|
| Information Element | Length in Octets |
| Protocol | 1 |
| System Type | 1 |
| Message Type | 1 |
| Assist Type | 1 |
| Assist Data | 18 |

This message is sent either from the base station 104 to the base station controller 105 or from the base station controller 105 to the base station 104. It provides a mechanism to impart various items of information to assist the recipient in making well informed decisions.

Table 3-2

| Assist Request [BS <=> BSC] | |
|---|---|
| Information Element | Length in Octets |
| Protocol | 1 |
| System Type | 1 |
| Message Type | 1 |
| Channel Preference | 1 |
| Assist Type | 1 |
| Assist Request Info | 18 |

This message is sent either from the base station 104 to the base station controller 105 or from the base station controller 105 to the base station 104 to request information. It provides a mechanism for the sender to request various items of information to assist in making well informed decisions.

Table 3-3

| Authenticate [BS <= BSC] | |
|---|---|
| Information Element | Length in Octets |
| Protocol | 1 |
| System Type | 1 |
| Message Type | 1 |
| PID | 9 |
| TCID | 1 |
| Cipher Key Sequence # | 1 |
| Authentication Test Number | 16 |

The Authenticate N-Note is sent to the base station 104 from the network 126 to request that the base station 104 send to the mobile user station 102 in an Authenticate O-Note. The mobile user station 102 will then encrypt the "random" number using the authentication key provisioned into the mobile station 102 and send this encrypted number back to the base station 104 in an Authentication Response Message (CT-AUR) reply. The base station 104 then sends this result to the network 126 in an Authentication Reply N-Note.

Table 3-4

| Authenticate Reply [BS => BSC] | |
| --- | --- |
| Information Element | Length in Octets |
| Protocol | 1 |
| System Type | 1 |
| Message Type | 1 |
| PID | 9 |
| Authentication Test Response | 16 |

The Authenticate Reply N-Note from the base station 104 to the network 126 is triggered by an Authentication Response O-Note (CT-AUR) from the mobile user station 102. The Authenticate Reply N-Note communicates a sixteen octet encrypted response from the mobile user station 102 to the network 126 for confirmation. The network 126 will perform encryption on the original random number and compare the results for authentication. The Authenticate Reply should be the response to an earlier Authenticate N-Note issued for the given PID by the network 126. If the return value is incorrect, the proper response of the network 126 is to deny access by the mobile user station 102.

Table 3-5

| Authentication Reject [BS <= BSC] | |
| --- | --- |
| Information Element | Length in Octets |
| Protocol | 1 |
| System Type | 1 |
| Message Type | 1 |
| PID | 9 |
| TCID | 1 |
| Cause | 1 |

The Authentication Reject N-Note is sent to the base station 104 from the network 126 to inform the mobile user station 102 that the network 126 has rejected its Authenticate Reply.

Table 3-6

| Base Status Request [BS <= BSC] | |
| --- | --- |
| Information Element | Length in Octets |
| Protocol | 1 |
| System Type | 1 |
| Message Type | 1 |
| PID | 9 |
| CI | 1 |
| Base ID | 4 |
| Base Status | 32 |

The Base Status Request N-Note is sent to the base station 104 by the network 126 to initiate a Base Status Response N-Note from the base station 104.

Table 3-7

| Base Status Response [BS => BSC] | |
| --- | --- |
| Information Element | Length in Octets |
| Protocol | 1 |
| System Type | 1 |
| Message Type | 1 |
| PID | 9 |
| Base ID | 32 |

The Base Status Response N-Note is sent to the network 126 by the base station 104 after receiving a Base Status Request N-Note from the network 126.

Table 3-8

| Cipher Response [BS => BSC] | |
| --- | --- |
| Information Element | Length in Octets |
| Protocol | 1 |
| System Type | 1 |
| Message Type | 1 |
| PID | 9 |
| Cause | 2 |

The Cipher Response N-Note is sent to the network 126 to inform it that the base station 104 and mobile user station 102 have configured and keyed their encryption equipment and have enabled the equipment.

Table 3-9

| Circuit Switch Complete [BS <= BSC] | |
| --- | --- |
| Information Element | Length in Octets |
| Protocol | 1 |
| System Type | 1 |
| Message Type | 1 |
| PID | 9 |
| (New) Zone | 5 |
| (New) Base ID | 4 |
| HRef | 6 |

The Circuit Switch Complete N-Note is sent to the originating base station 104 from the network 126 when a handover circuit switch operation has completed. This message informs the originating base station 104 that the bearer channel has been switched from the originating base station 104 to the terminating base station 104 and that the originating base station 104 may release all the resources associated with the mobile user station 102.

Table 3-10

| Circuit Switch Refused [BS => BSC] | |
| --- | --- |
| Information Element | Length in Octets |
| Protocol | 1 |
| System Type | 1 |

Table 3-10   (continued)

| Circuit Switch Refused [BS => BSC] | |
|---|---|
| Information Element | Length in Octets |
| Message Type | 1 |
| PID | 9 |
| (New) Zone | 5 |
| (New) Base ID | 4 |
| HRef | 6 |

The Circuit Switch Refused N-Note is sent to the network 126 from the originating base station 104 when the mobile user station 102 has rejected the circuit switch.

Table 3-11

| Connect Link [BS => BSC] | |
|---|---|
| Information Element | Length in Octets |
| Protocol | 1 |
| System Type | 1 |
| Message Type | 1 |
| PID | 9 |
| TCID | 1 |

The Connect Link N-Note is sent from the base station 104 to the network 126 as the result of a CT-CNL message received from an mobile user station 102 while the base station 104 and mobile user station 102 are in a HOLD sequence initiated during an incoming call. The CT-ACK control traffic will be returned from the mobile user station 102. This message informs the network 126 that it may complete the connection with the calling station.

Table 3-12

| Connect Link [BS <= BSC] | |
|---|---|
| Information Element | Length in Octets |
| Protocol | 1 |
| System Type | 1 |
| Message Type | 1 |
| PID | 9 |
| TCID | 1 |
| Connection Number | 3 |
| Cause | 1 |

The Connect Link N-Note is sent to the base station 104 from the network 126 when a connection has been made to another station via the network 126. This message associates the PID of an mobile user station 102 with a Connection Number.

Table 3-13

| Connection Complete [BS <= BSC] | |
|---|---|
| Information Element | Length in Octets |
| Protocol | 1 |

Table 3-13   (continued)

| Connection Complete [BS <= BSC] | |
|---|---|
| Information Element | Length in Octets |
| System Type | 1 |
| Message Type | 1 |
| PID | 9 |
| TCID | 1 |
| Cipher Algorithm ID | 1 |
| Cipher Key | 8 |
| Connection Number | 3 |

The Connection Complete N-Note is sent to the termination base station 104 from the network 126 when a handover circuit switch operation has completed. This message informs the terminating base station 104 that the bearer channel has been switched from the originating base station 104 to the terminating base station 104.

Table 3-14

| Deregister [BS => BSC] | |
|---|---|
| Information Element | Length in Octets |
| Protocol | 1 |
| System Type | 1 |
| Message Type | 1 |
| PID | 9 |
| Class | 2 |
| Cause | 1 |

The Deregister N-Note is issued from the base station 104 to the network 126 as the result of either a DRG control traffic response message or a base station time-out, which indicates that the identified mobile user station 102 is no longer in the response range of the base station 104. The proper response of the network 126 is to release all resources which may have been preallocated to the mobile user station 102.

Table 3-15

| Handover Failure [BS <= BSC] | |
|---|---|
| Information Element | Length in Octets |
| Protocol | 1 |
| System Type | 1 |
| Message Type | 1 |
| PID | 9 |
| Cause | 1 |

The Handover Failed N-Note is sent to both the source and target base stations 104 from the network 126 when the higher order network infrastructure has rejected the terminating or originating handover request from the mobile user station 102. Each base station must send a CT-HOF O-Note to the mobile user station 102 if/when it communicates with the mobile user station 102. The source base station 104 will maintain the existing connection to the mobile user station 102; the target base station 104 will release the connection with the mobile user station 102 after sending the CT-HOF.

Table 3-16

| Handover Request [BS <= BSC] | |
|---|---|
| Information Element | Length in Octets |
| Protocol | 1 |
| System Type | 1 |
| Message Type | 1 |
| PID (HRef) | 9 |
| CI | 1 |
| TCID | 4 |
| Connection Number | 3 |
| Cipher Algorithm ID | 1 |
| Cipher Key | 8 |
| Resource Request Data | 2 |
| Transport Method | 4 |

The Handover Request N-Note is sent to the target base stations from the base station controller when the higher order network infrastructure is attempting to perform an originating handover request from the mobile user station 102. The target base station 104 will reserve the requisite resources for the circuit being handed over, if available, and will respond to the base station controller 105 with a Handover Request ACK message.

Table 3-17

| Handover Request Reply [BS => BSC] | |
|---|---|
| Information Element | Length in Octets |
| Protocol | 1 |
| System Type | 1 |
| Message Type | 1 |
| PID (HRef) | 9 |
| CI | 1 |
| Backhaul Map Type | 1 |
| Backhaul Map | 4 |
| Cause | 1 |

The Handover Request Reply N-Note is sent to the base station controller 105 in response to the Handover Request message.

Table 3-18

| ID Updated [BS <=> BSC] | |
|---|---|
| Information Element | Length in Octets |
| Protocol | 1 |
| System Type | 1 |
| Message Type | 1 |
| PID | 9 |
| Cause | 1 |

The ID Updated N-Note is sent by the base station 104 to the network 126 to indicate the successful updating of an mobile user station PID.

Table 3-19

| Identity Reply [BS => BSC] | |
|---|---|
| Information Element | Length in Octets |
| Protocol | 1 |
| System Type | 1 |
| Message Type | 1 |
| PID | 9 |
| CI | 1 |
| Identity Type | 1 |
| Identity Data | 9 |
| Message Sequence Number | 1 |

The Identity Reply N-Note is sent by the base station 104 to the network 126 to provide the mobile user station's requested identity.

Table 3-20

| Identity Request [BS <= BSC] | |
|---|---|
| Information Element | Length in Octets |
| Protocol | 1 |
| System Type | 1 |
| Message Type | 1 |
| PID | 9 |
| CI | 1 |
| Identity Type | 1 |

The ID Updated N-Note is sent by the network 126 to the base station 104 to request a mobile user station identifier that has not been provided as part of the mobile user station's normal communications with the network 126.

Table 3-21

| Originating Handover [BS => BSC] | |
|---|---|
| Information Element | Length in Octets |
| Protocol | 1 |
| System Type | 1 |
| Message Type | 1 |
| PID | 9 |
| CI | 1 |
| Remaining Base Count | 1 |
| (New) Zone | 5 |
| (New) BSC ID | 2 |
| (New) Base ID | 4 |

The Originating Handover N-Note is sent from the base station 104 to the network 126 after an mobile user station 102 has returned to the originating base station 104 and has completed the originating handover control traffic sequence. This message contains the PID of the mobile user station 102, the base station ID and Zone of the terminating base station 104. This information is to be used by the network 126 to establish a bearer connection to the terminating base station 104. The network 126 should respond to the originating base station 104 with a Circuit Switch Complete N-Note signifying that the terminating base station 104 is now connected to the proper bearer channel.

Provision is made for this message to provide a list of base stations 104 the mobile user station 102 is willing to handover to. This allows the potential ability for the mobile user station 102 to signal the base station 104, as part of the CT-OTH message, that there are several acceptable alternatives and to send each of them to the originating base station 104 as sequential CT-OTH messages. The base station 104 may accumulate the acceptable base station list and send it to the base station controller 105 in a single message. The Count Base field lists the number of base stations 104 in the list.

Table 3-22

| Originating Handover Complete [BS => BSC] | |
| --- | --- |
| Information Element | Length in Octets |
| Protocol | 1 |
| System Type | 1 |
| Message Type | 1 |
| PID (HRef) | 9 |
| CI | 1 |
| PID (Real) | 9 |

The Originating Handover Complete N-Note is issued from the terminating base station 104 to the terminating application end user (e.g., network 126) connected to the base station controller 105 when a mobile user station 102 has completed its transfer of its bearer traffic from the originating base station 104 to the terminating base station 104. This happens when the mobile user station 102 issues a Originating Handover Complete control traffic message to the terminating base station 104.

Table 3-23

| Page [BS <= BSC] | |
| --- | --- |
| Information Element | Length in Octets |
| Protocol | 1 |
| System Type | 1 |
| Message Type | 1 |
| PID | 9 |
| CI | 1 |
| TCID | 1 |

The Page N-Note is sent to the base station 104 from the network 126 to notify the base station 104 of an incoming call. The base station 104 should initiate a Specific Poll sequence for the mobile user station 102 named by the PID. When the mobile user station 102 responds to the Specific Poll, the base station 104 should send an Altering N-Note back to the network 126.

Table 3-24

| Page Response [BS => BSC] | |
| --- | --- |
| Information Element | Length in Octets |
| Protocol | 1 |
| System Type | 1 |

Table 3-24   (continued)

| Page Response [BS => BSC] | |
|---|---|
| Information Element | Length in Octets |
| Message Type | 1 |
| PID | 9 |
| CI | 1 |
| TCID | 1 |
| Cipher Key Sequence # | 1 |
| Class | 2 |

The Page Response N-Note is sent from the base station 104 to the network 126 as soon as a specific poll response, which is the result of an Setup N-Note initiated specific poll, is received from the mobile user station 102 named by the PID. This notification can be used by the network 126 to indicate a successful attempt to find a specific mobile user station 102. If the network 126 does not receive Page Response from the base station 104 sometime after the network 126 has sent a Setup N-Note to the base station 104, the network 126 may infer that the given mobile user station 102 is not currently reachable through this base station 104. Being unavailable should trigger a Deregistration sequence.

Table 3-25

| Register [BS <= BSC] | |
|---|---|
| Information Element | Length in Octets |
| Protocol | 1 |
| System Type | 1 |
| Message Type | 1 |
| PID | 9 |
| Registration Type | 1 |
| Registration Info | 18 |
| Cipher Key Sequence # | 1 |
| Class | 2 |

The Register N-Note is sent to the network 126 from the base station 104 as a result of the completion of an acquire and registration poll and control traffic sequence between the mobile user station 102 and the base station 104. This message requests that resources needed to access application end user be allocated in the network 126 for this mobile user station 102. If these resources have already been allocated, then the network 126 should not allocate new resources. In any event, the network 126 should reply with a Registration Result N-Note.

Table 3-26

| Registration Result [BS <= BSC] | |
|---|---|
| Information Element | Length in Octets |
| Protocol | 1 |
| System Type | 1 |
| Message Type | 1 |
| PID | 9 |
| CI | 1 |
| Follow On Proceed | 1 |

Table 3-26   (continued)

| Registration Result [BS <= BSC] | |
|---|---|
| Information Element | Length in Octets |
| Registration Result Code | 1 |
| Cause | 1 |

The Registration Result N-Note is sent to the base station 104 from the network 126 when the higher order network infrastructure responds to the mobile user station's Register request.

Table 3-27

| Release Link [BS <= BSC] | |
|---|---|
| Information Element | Length in Octets |
| Protocol | 1 |
| System Type | 1 |
| Message Type | 1 |
| PID | 9 |
| CI | 1 |
| TCID | 1 |
| Causes | 1 |

The N-Note Release Link is sent by either the base station 104 or the network 126 to indicate that the sender wishes to release the link. If the TCID is non-zero, the Release Link is for a virtual circuit and the request is ignored. If the TCID is zero, a Release Link Complete message is always sent (even if recipient does not recognize the PID).

Table 3-28

| Release Link Complete [BS <= BSC] | |
|---|---|
| Information Element | Length in Octets |
| Protocol | 1 |
| System Type | 1 |
| Message Type | 1 |
| PID | 9 |
| CI | 1 |
| TCID | 1 |

The Release Link Complete N-Note is sent by either the base station 104 or the network 126 to indicate that the sender has released the channel and the TCID.

Table 3-29

| Service Information [BS <= BSC] | |
|---|---|
| Information Element | Length in Octets |
| Protocol | 1 |
| System Type | 1 |
| Message Type | 1 |
| PID | 9 |
| CI | 1 |

Table 3-29   (continued)

| Service Information [BS <= BSC] | |
|---|---|
| Information Element | Length in Octets |
| Backhaul Map Type | 1 |
| Backhaul Map | 4 |
| (OTA) Channel Rate | 1 |
| Cause | 1 |

The Service Information N-Note is sent from the base station 104 to the network 126. This message informs the network 126 of the bearer channels that have been assigned by the base station 104 for this call.

Table 3-30

| Cipher Mode [BS <= BSC] | |
|---|---|
| Information Element | Length in Octets |
| Protocol | 1 |
| System Type | 1 |
| Message Type | 1 |
| PID | 9 |
| CI | 1 |
| Cipher Algorithm ID | 1 |
| Cipher Key | 8 |
| Request PID Type | 1 |

The Set Cipher Mode N-Note is sent from the network 126 to the base station 104. It requests the base station 104 to set the mode key and key sequence of its encryption equipment. The base station 104 does not enable its encryption equipment at this time.

Table 3-31

| Service Request [BS => BSC] | |
|---|---|
| Information Element | Length in Octets |
| Protocol | 1 |
| System Type | 1 |
| Message Type | 1 |
| PID | 9 |
| CI | 1 |
| TCID | 1 |
| Resource Request Data | 2 |
| Network Service Request Data | 16 |

The Service Request N-Note is sent to the network 126 the base station 104 upon the completion of CT-SRQ control traffic exchange. Failure to respond will result in dropping the connection between the base station 104 and mobile user station 102.

Table 3-32

| Service Response [BS <= BSC] | |
|---|---|
| Information Element | Length in Octets |
| Protocol | 1 |
| System Type | 1 |
| Message Type | 1 |
| PID | 9 |
| CI | 1 |
| TCID | 1 |
| Network Service Response | 3 |
| Cause | 1 |

The Service Response N-Note is sent to the base station 104 by the network 126 to notify the base station 104 of the results of the base station's Service Request message.

Table 3-33

| Set Link [BS <= BSC] | |
|---|---|
| Information Element | Length in Octets |
| Protocol | 1 |
| System Type | 1 |
| Message Type | 1 |
| PID | 9 |
| CI | 1 |
| TCID | 1 |
| Resource Request Data | 2 |
| Connection Number | 3 |
| Transport Method | 4 |

The Set Link N-Note is sent to the base station 104 from the network 126 to notify the base station 104 of a SETUP message from the network 126.

Table 3-34

| Terminating Handover [BS => BSC] | |
|---|---|
| Information Element | Length in Octets |
| Protocol | 1 |
| System Type | 1 |
| Message Type | 1 |
| PID | 9 |
| CI | 1 |
| (Old) Zone | 5 |
| (Old) BSC ID | 2 |
| Connection Number | 3 |

Table 3-34   (continued)

| Terminating Handover [BS => BSC] ||
| Information Element | Length in Octets |
| --- | --- |
| (New) Backhaul Map Type | 1 |
| (New) Backhaul Map | 4 |

The Terminating Handover N-Note is sent from the base station 104 to the network 126 after an mobile user station 102 has acquired a base station channel (i.e., time slot) on the terminating base station 104 and has completed the Terminating Handover Request Control Traffic sequence. This message contains the PID and Universal Phone number of the mobile user station 102, as well as the Connection Number, Zone and base station controller ID of the base station controller which had been.previously carrying the connection. This information is used by the network 126 to establish a bearer connection to the previous connection and to inform the old base station 104 to release its connection and the resources allocated to this mobile user station 102. Within a reasonable amount of time, the network 126 should respond to the base station 104 with a Circuit Switch Complete N-Note signifying that this base station 104 is now connected to the proper bearer channel.

Table 3-35

| Terminating Handover Complete [BS => BSC] ||
| Information Element | Length in Octets |
| --- | --- |
| Protocol | 1 |
| System Type | 1 |
| Message Type | 1 |
| PID | 9 |

The Terminating Handover Complete N-Note is issued from the terminating base station 104 to the terminating application end user connected to the base station controller 105 when a mobile user station 102 has completed its transfer of its bearer traffic from the originating base station 104 to the terminating base station 104. This happens when the mobile user station 102 issues a Terminating Handover Complete O-Note to the terminating base station 104.

Table 3-36

| Transfer Complete [BS => BSC] ||
| Information Element | Length in Octets |
| --- | --- |
| Protocol | 1 |
| System Type | 1 |
| Message Type | 1 |
| PID | 9 |
| CI | 1 |

The Transfer Complete N-Note is issued from the base station 104 to the network 126 when a mobile user station 102 transfers its bearer traffic from the originating base station 104 to the terminating base station 104. This is assumed to occur when the originating base station 104 sends a Circuit .Switch Complete (CSC) O-Note to the mobile user station 102.

Table 3-37

| Transport [BS <=> BSC] ||
| Information Element | Length in Octets |
| --- | --- |
| Protocol | 1 |

Table 3-37   (continued)

| Transport [BS <=> BSC] | |
|---|---|
| Information Element | Length in Octets |
| System Type | 1 |
| Message Type | 1 |
| PID | 9 |
| CI | 1 |
| TCID | 1 |
| Channel Preference | 1 |
| TC Data Length | 2 |
| TC Data | <variable> |

The Transport N-Note is sent from the base station 104 to the network 126 to send signaling or bearer data to the network 126.

Table 3-38

| Transport Delivered [BS <== BSC] | |
|---|---|
| The Transport Delivered Note is sent from the BS to the Network Application to signal the Network Application that all segments of the Transport Note have been delivered send signaling data to the Network Application.<br><br>The Transport Delivered Note is triggered by an ACK (successful ARQ) of the final segment (CT-TRA) of the Transport Note over the O-Interface. It does not imply delivery of the Transport Note to the ultimate receiver, it simply confirms that the entire Transport Note has been delivered over the O-Interface.<br><br>The Transport Delivered Note provides the BSC with confirmation that the Transport Note has actually been delivered over the radio link. If it doesn't receive this confirmation (e.g., because of the handover) it will re-send the message. This mitigates the problem of only getting part of a Transport Note over the air before a handover occurs. Note that while the BSC can not send another Transport Note for a given TCID during the interval while it is waiting for the Transport Delivered on the last Transport Note to that TCID, it may send another N_Notes or a Transport Note to a different TCID. | |
| Information Element | Length in Octets |
| Protocol | 1 |
| System Type | 1 |
| Message Type | 1 |
| PID | 9 |
| CI | 1 |
| TCID | 1 |
| Cause | 1 |

Table 3-39

| Update ID [BS <= BSC] | |
|---|---|
| Information Element | Length in Octets |
| Protocol | 1 |
| System Type | 1 |
| Message Type | 1 |
| PID | 9 |

Table 3-39   (continued)

| Update ID [BS <= BSC] | |
| --- | --- |
| Information Element | Length in Octets |
| CI | 1 |
| (New) PID | 9 |
| Zone | 5 |

The Update ID N-Note is sent to the base station 104 from the application end user connected to the base station controller 105 to notify the base station 104 to update the identity of the mobile user station 102 described by the PID information element. The New PID information element may represent a temporary identification for the mobile user station 102 as provided for in the definition of the New PID.

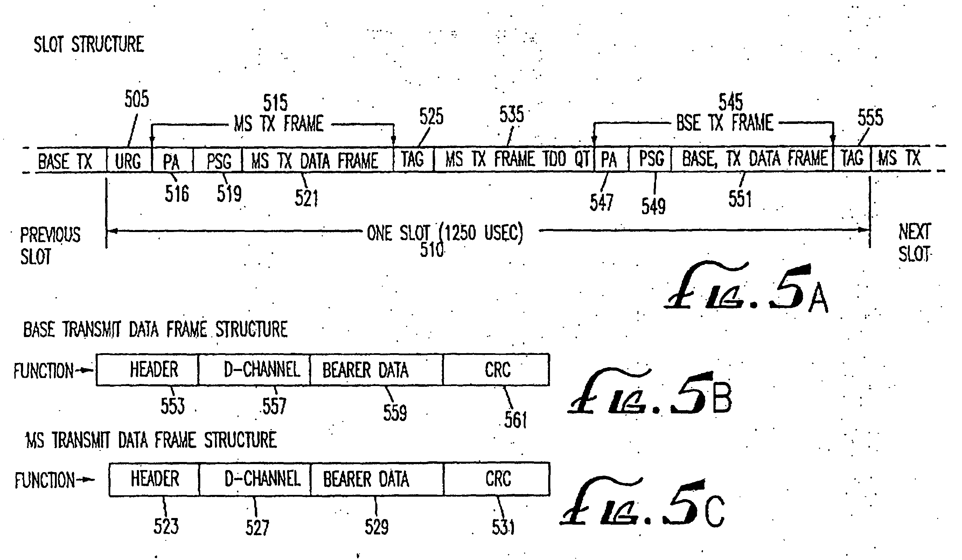

The mobile communication system 101 transfers information in the form of signaling data within the base station 104 between the base station transceiver 604 and the base station line card processor 606 across the I-Interface 615 in the form of I-Notes. Figure 8 is a diagram of the Fig. 6 system architecture focusing on the base station interfaces, showing the separation between the base station transceiver 604 and the line card processor 606. The base station transceiver 604 and the line card processor 606 preferably each has its own local microprocessor or controller, and its own resident software.

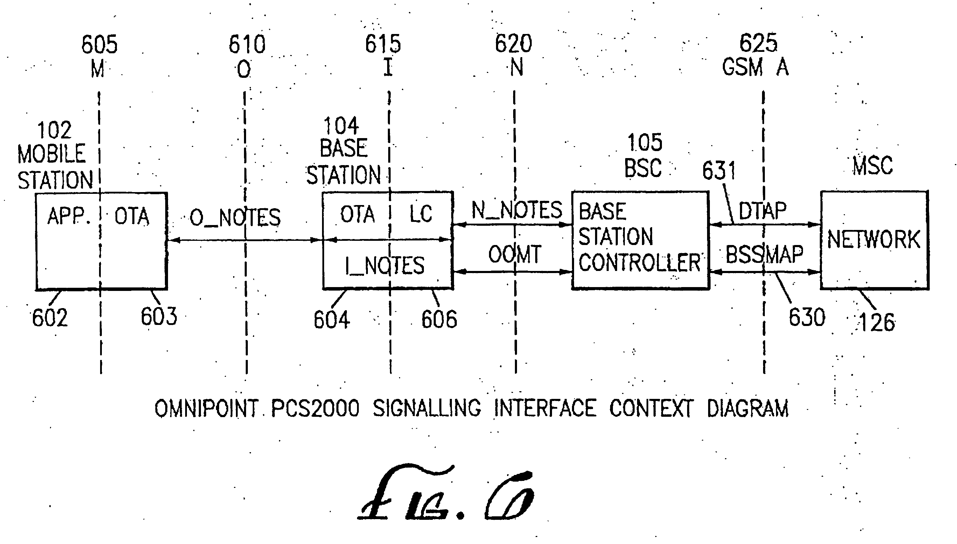

Figure 9 is a diagram illustrating a breakdown of software functionality for operations, administration, maintenance and provisioning (OAM&P) within a base station 104. In Fig. 9 is shown a functional division between base station transceiver software 909 and the line card processor software 908. The base station transceiver software 909 and line card processor software 908 are directed to the control of managed objects. The line card processor software 908 is responsible by itself for the control of a base station manager managed object 920, and shares responsibility with the base station transceiver software 909 for control of a base station managed object 921, transceiver managed objects 922, and channel managed objects 923.

The base station manager managed object 920 is responsible for communication of high layer information between the base station 104 and the base station controller 105, and for the management of all functionality related to the line-card processor 606. The base station managed object 921 provides the OAM&P control functions common to one or more transceivers, and is responsible for all OAM&P base station functionality other than the line card processor 606. The transceiver managed objects 922 are responsible for the management of the base station equipment that provides the time slot structure shown in Fig. 3, including modulation and transmission of information data as well as reception and demodulation. The channel managed objects 923 are responsible for the management of individual physical channels (i.e., separate time slots 302).

Control of the OAM&P functions are carried out across the OOMT interface between the base station controller 105 and the base station 104 shown in Fig. 6.

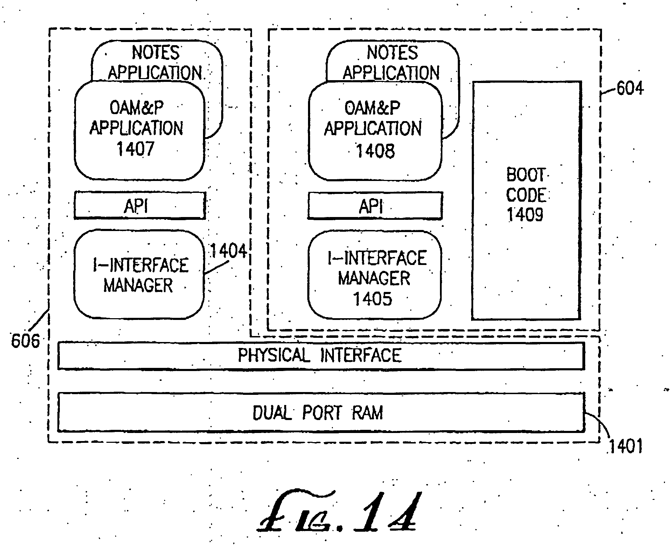

In a preferred embodiment, the I-Interface 615 includes a dual port random access memory (RAM). Figure 14 is a high-level diagram of a base station 104 including a dual-port RAM 1401 for implementing the I-interface 615. Application information 1407, 1408 is communicated across the I-interface using the dual-port RAM 1401. The base station transceiver 604 and line card processor 606 each comprise an 1-interface manager 1405 and 1404, which may be implemented as software subroutines. The I-interface managers 1404, 1405 facilitate transfer of information across the I-interface 615.

The physical interface to the dual-port RAM 1401 is preferably identical for both the base station transceiver 604 and the line card processor 606. The base station transceiver 604 comprises boot code 1409 (in addition to operational code); thus, two modes of use are provided: (1) a non-operational mode, wherein the dual-port RAM 1401 may be used for initialization of the base station transceiver 604 (including software download from a base station controller 105, if desired), and (2) an operational mode, wherein the dual-port RAM 1401 is used for transfer of information to and from an application end user 602 using the I-interface 615.

The dual port RAM 1401 comprises a common memory which may be accessed by both the line card processor 606 and the base station transceiver 604 in the base station 104. The line card processor 606 and the base station transceiver 604 transfer information across the I-Interface 615 by reading and writing I-Notes to the common dual port RAM 1401. The dual port RAM 1401 is also used for transfer of bearer information for each of the time slot channels, and thus comprises adequate storage to transfer data blocks to and from mobile user stations 102. Alternatively, the bearer data could be provided in a direct link to the line card processor 606 from the base station transceiver 604.

System requirements may specify that certain events or messages have a greater priority over other events occurring in the system. For example, handoff events or emergency events may have a relatively high priority. Call control events may also have a relatively high priority, but less than that of handoff events or emergency events.

Application messages may be given a lower priority than signaling messages.

The I-interface may be configured so as to facilitate prioritization of various events and system messages. A plurality of distinct priority groups may be defined. In a particular embodiment, three priority groups are defined, a high priority group including, e.g., handoff events and emergency events, a medium priority group including, e.g., communication management events and call control messages, and a low priority group including other types of less urgent messages.

A plurality of prioritized queues may be provided, each prioritized queue associated with one of the three priority groups. Each prioritized queue comprises a plurality of message buffers (preferably fixed length message buffers). Messages from the high priority group are placed in a first queue; messages from the medium priority group are placed in a second queue; and messages from the low priority group are placed in a third queue. The I-interface managers 1404, 1405 keep track of the prioritized queues and handle message transfers to and from the queues.

The queues may each operate on a "first-in first-out" (FIFO) basis. Where several messages are to be aggregated for delivery or reception over a particular channel (e.g., time slot), each channel may be provided with its own individual FIFO. Both "send" and "receive" queues are provided for bidirectional transfer of information.

The I-interface managers 1404, 1405 each implement at least three software functions with respect to the prioritized queues. A first software function returns a pointer to the next available send NOTE buffer in the designated queue. A NULL return pointer indicates that the queue is full. A second software function activates any semaphore and updates pointers for a queue acting on the current send NOTE buffer. A zero return value indicates success. A third software function returns a pointer to the next available NOTE buffer in the designated queue. A NULL return pointer indicates that the queue is full.

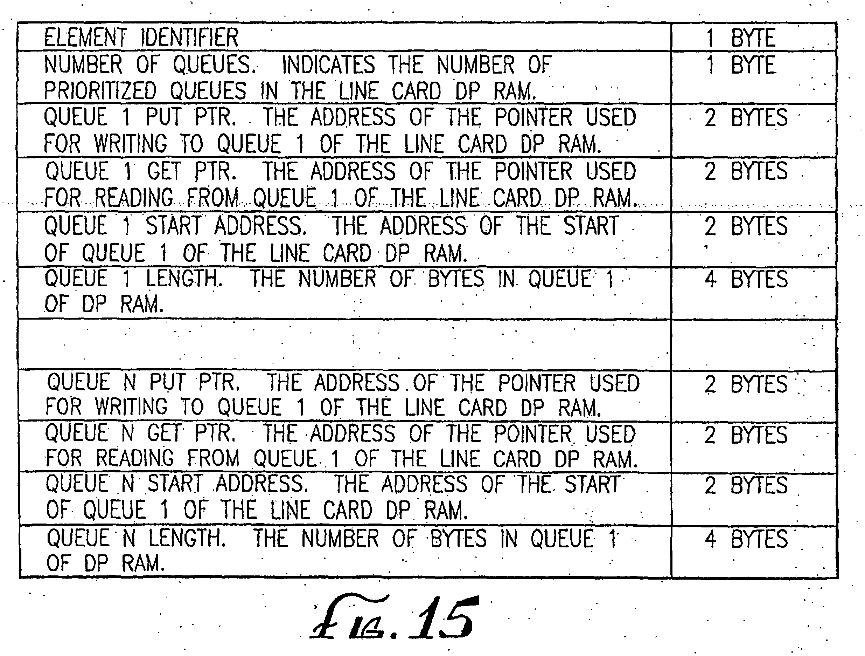

Figure 15 is a table of an exemplary partial map for a dual-port RAM 1401. The dual port RAM map includes the total number of prioritized queues and, for each queue, the address of a read ("get") pointer, the address of a write ("put") pointer, the start address of the queue, and the queue length.

The dual-port RAM 1401 is used for both bearer data message transfer and prioritization of certain signaling messages. Bearer data messages are stored in predefined locations in the dual-port RAM 1401, and can be accessed by either the line card processor 606 or the base station transceiver 604. The dual-port RAM 1401 may preferably hold at least 2,304 bearer-bytes of information (for a base station 104 supporting up to 32 user stations 102), and has an additional 32 kilobytes for the prioritized queues.

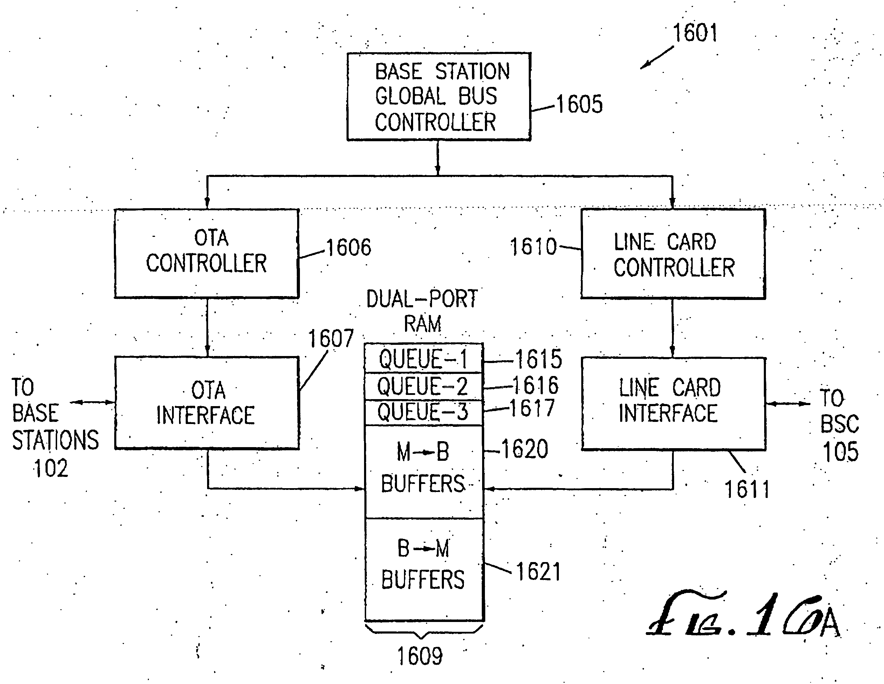

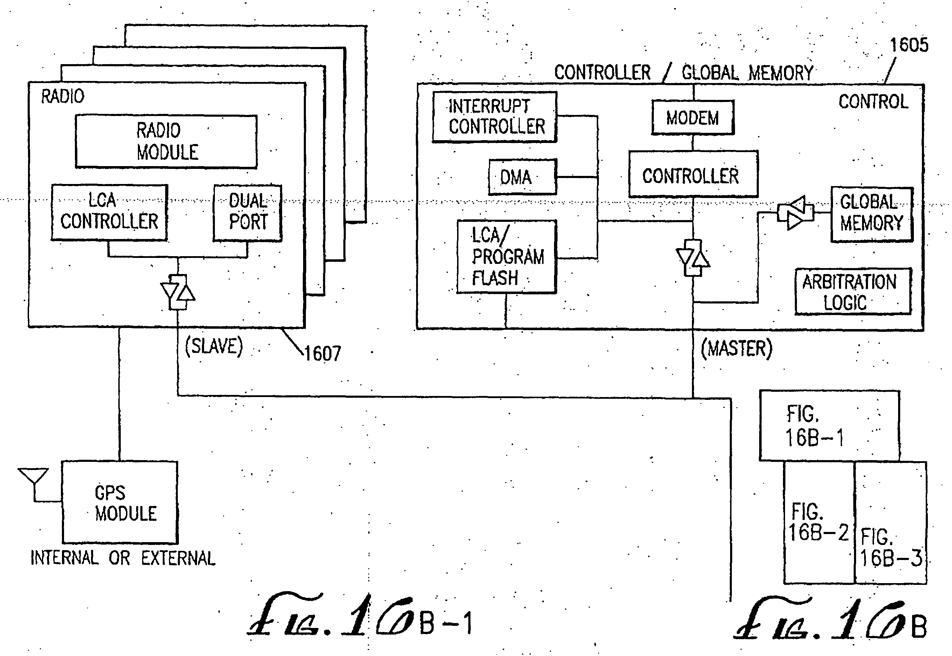

Figure 16A is a block diagram of a base station 1601 in accordance with one embodiment of the present invention. In Fig. 16, a dual-port RAM 1609 (e.g., dual-port RAM 1401 of Fig. 14) comprises a plurality of queues 1615, 1616, and 1617, and buffers 1620, 1621 for storing messages originating from and destined for user stations 102. An over-the-air (OTA) interface 1607, under control of an OTA controller 1606, transmits and receives messages from user stations 102. A line card interface 1611, under control of a line card controller 1610, transmits and receives messages from a base station controller.105 (see Fig. 1B). A base station global bus controller 1605 controls mode selection of the OTA controller 1606 and line card controller 1610, handles interrupts, and responds to commands from the system regarding operation of the base station 1601 as a whole (e.g., whether the base station 104 should be on-line or off-line, etc.).

Figure 16B is a more detailed diagram of internal components of the base station 1601, showing the internal components and connections of the components shown in Fig. 16A. The Fig. 16B diagram shows a global bus 1630 connected to several of the internal components, as well as backhaul lines 1650 from the line card interface 1611 which ultimately connect to the base station controller 105.

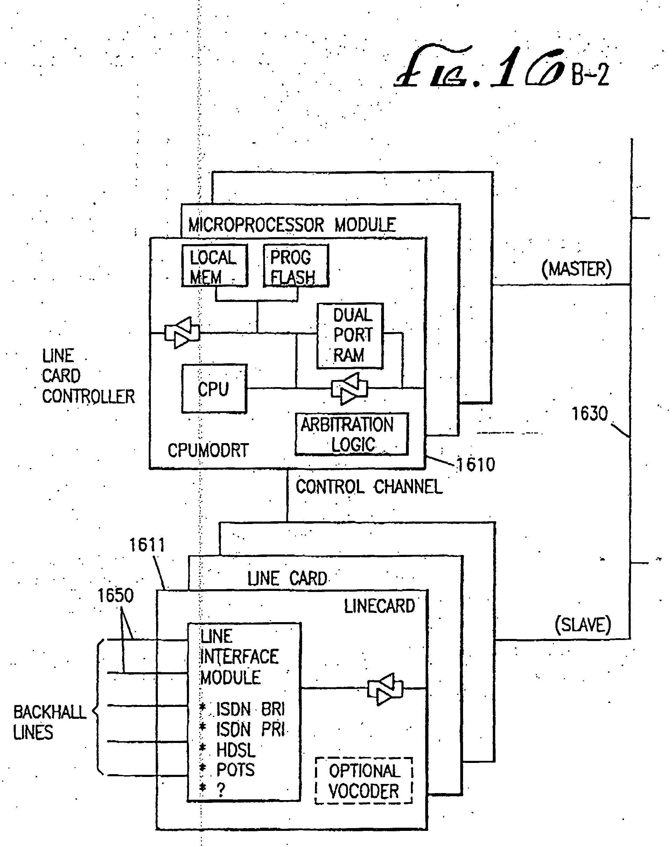

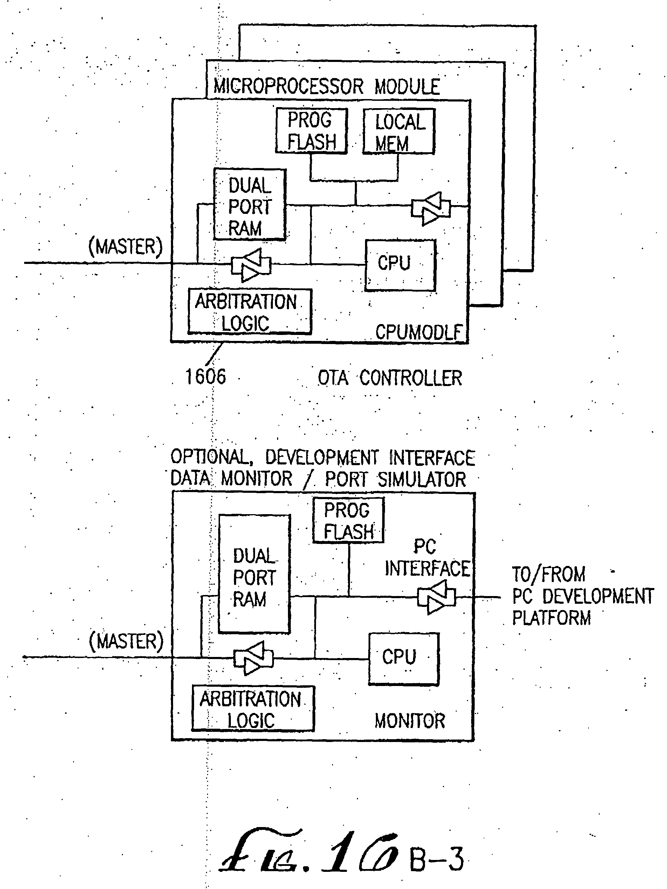

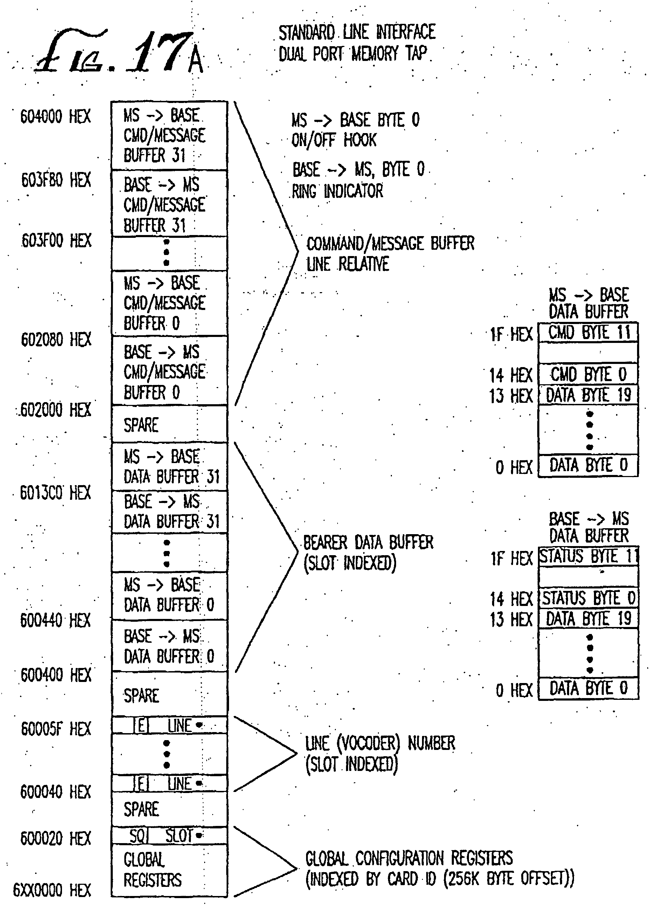

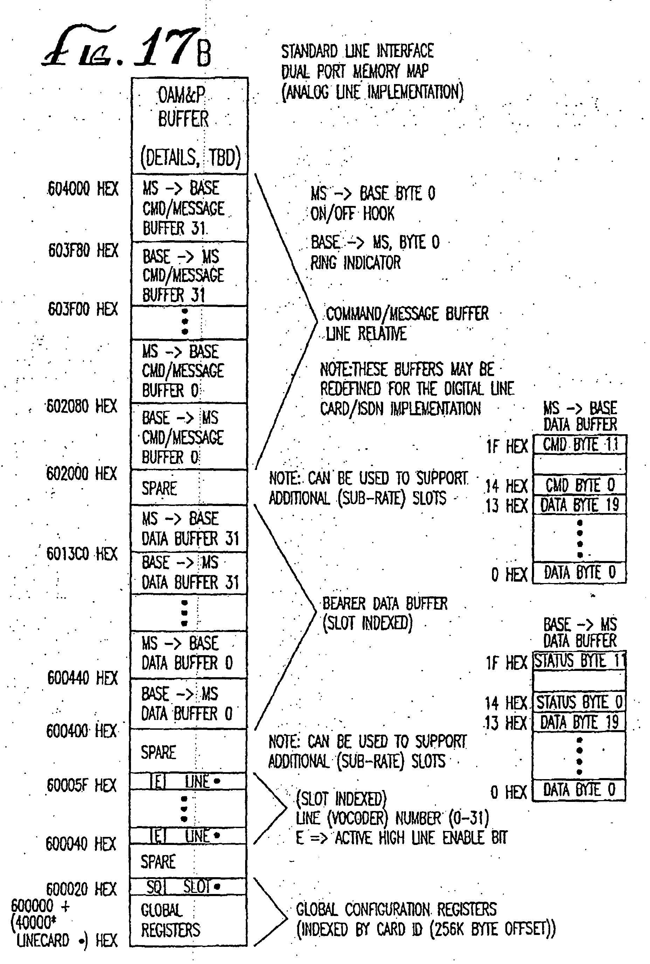

Figure 17A is a diagram of an exemplary memory map for the dual-port RAM 1401, not considering the map portion for the prioritized queues shown in Fig. 15. Figure 17B is an alternative memory map for the dual-port RAM 1401, and is configured for analog backhaul lines from the base station 104 to the base station controller 105.

In a preferred embodiment, the communication system 101 uses I-Notes having the same format as the N-Notes as shown in Fig. 11. Examples of I-Notes which may be communicated across the I-Interface are given in Table 3-1 through Table 3-39.

Because messages to and from the user stations 102 are generally not in the form of I-Notes, the base station transceiver 604 translates relevant portions of the over-the-air messages into an I-Note format, and either uses or sends I-Notes received from the line card processor 606 across the I-interface 605. If an O-Note is contained in a B-field 529 of a user message (as indicated by a flag in the header 523), then the base station transceiver 604 extracts the O-Note and places it in one of the three queues 1615, 1616 or 1617. If an O-Note is contained in segments within D-fields 527 sent over several messages, then the base station transceiver 604 may store the O-Note in a buffer associated with the user station 102 on the particular channel until the entire O-Note is received, and then place the entire O-Note in the appropriate one of the three queues 1615, 1616 or 1617. In some cases, the base station transceiver 604 performs a translation (or removes or adds fields or other information) before storing the message (now an I-Note) in the appropriate queue 1615, 1616 or 1617.

Similarly, when the base station transceiver 604 reads an I-Note from the dual-port RAM 1609, it may perform a translation of the I-Note (or remove or add fields as necessary) and insert the message (now an O-Note) in the B-field 559 of a base message, and indicate the presence of an O-Note by setting the appropriate flag in the base message header 553. If the O-Note does not represent a relatively urgent signaling message, and voice data or other user data is being sent in the B-field 559, the base station transceiver 604 may send the O-Note in segments over a plurality of base messages, utilizing the D-field 557.

In a preferred embodiment, the communication system 101 operates with Notes which contain common Information Elements which may be passed across several system interfaces. Table 4-1 through Table 4-65 describe Information Elements which may be included in Notes which are communicated across system interfaces in a preferred embodiment of the communication system 101. Information Elements may comprise signaling data which is used by components within the communication system 101 to perform functions in support of one or more application end users. A specific Information Element, referred to as Transport Data, comprises application level data and is described in Table 4-62.

## Table 4-1

### ACK'ed Command [O,M]

The ACK'ed Command information element contains the Type of the specific command being acknowledged. The values are the same as the Message Type on the given interface.

| | | Bits | | | | | | Octets |
|---|---|---|---|---|---|---|---|---|
| 8 | 7 | 6 | 5 | 4 | 3 | 2 | 1 | |
| ACK'ed Command | | | | | | | | 1 |

## Table 4-2

### ACK Response [O,M]

The ACK Response information element contains the acknowledgment response.

| | | Bits | | | | | | Octets |
|---|---|---|---|---|---|---|---|---|
| 8 | 7 | 6 | 5 | 4 | 3 | 2 | 1 | |
| ACK'ed Response | | | | | | | | 1 |

ACK Response

| | |
|---|---|
| 0 | Successful acknowledge |
| 1 | Unsuccessful acknowledge (NAK) |
| 2-255 | Reserved |

## Table 4-3

### Assist Data [O, M, N, I]

The Assist Data element is a 144 bit field that is used by the sender to pass information to the receiver. This information may or may not have been solicited by an Assist Request. The format and meaning of the Assist Information is dependent upon the Assist Type.

| | Bits | | | | | | | Octets |
|---|---|---|---|---|---|---|---|---|
| 8 | 7 | 6 | 5 | 4 | 3 | 2 | 1 | |
| | | 144 bit Assist Data | | | | | | 1 |
| | | | | | | | | 2 |
| | | | | | | | | 3 |
| | | | | | | | | 4 |
| | | | | | | | | . |
| | | | | | | | | . |
| | | | | | | | | . |
| | | | | | | | | 18 |

## Table 4-4

### Assist Request Info

The Assist Request Info element is a 144 bit field that is used by the sender of an Assist Request to provide additional information identifying the request. The most likely use of this element will be to provide a PID when requesting information about a specific user station 102. This information element also contains the identity of the requester so that the requester can be named as the recipient of the Assist Information message which results from this request. The format and meaning of the Assist Request Info is dependent upon the Assist Type.

| Bits | | | | | | | | Octets |
|---|---|---|---|---|---|---|---|---|
| 8 | 7 | 6 | 5 | 4 | 3 | 2 | 1 | |
| Assist Requester | | | 141 bits Assist Request Info | | | | | 1 |
| | | | | | | | | 2 |
| | | | | | | | | 3 |
| | | | | | | | | 4 |
| | | | | | | | | . |
| | | | | | | | | . |
| | | | | | | | | . |
| | | | | | | | | 18 |

Same values and meanings as the Assist Msg Recipient subfield of the Assist Type information element.

## Table 4-5

### Assist Type [O, M, N, I]

The Assist Type is divided into two subfields,

| Bits | | | | | | | | Octets |
|---|---|---|---|---|---|---|---|---|
| 8 | 7 | 6 | 5 | 4 | 3 | 2 | 1 | |
| Assist Msg Recipient | | Assist Item | | | | | | 1 |

Table 4-5.1

| Assist Item | | |
|---|---|---|
| Identifies the Information being Requested. | | |
| Assist Type | Information Source | Item |
| 0 | ____ ____ | Reserved |
| 1 | BS-OTA | Surrounding Base Table |
| 2 | BS-OTA | Surrounding Base Table (Continuation) |
| 3 | BS-OTA | Recommend Time Slot Interchange |
| 4 | BS-OTA | Recommend Handover |
| 5 | BS-OTA | Date & Time |
| 6 | BS-OTA | OTA Map |
| 7 | BS-OTA | Backhaul Map |
| 8 | BS-OTA | Distance from BS to BS |
| 9 | BSC | Date & Time |
| 10 | BSC | Code-Frequency Redefinition |
| 11-31 | ____ ____ | Reserved |

Table 4-5.2

| Assist Msg Recipient | |
|---|---|
| Identifies the recipient of the assist message. If the message is an Assist Request message, then the recipient is the Information Source (i.e., the process which provides the information). If the message is an Assist Information message, then the recipient is the Information Destination (i.e., the process which may use the information). If the Assist Information message was requested, the Assist Message Recipient will be the Assist Requester subfield of the Assist Request Info information element of the Assist Request message is unsolicited, the sender will be able to supply the Assist Message Recipient independently. The following recipients are defined: | |
| 0 | MS-APP |
| 1 | MS-OTA |
| 2 | BS-OTA |
| 3 | BS-Line Card |
| 4 | BSC |
| 5-7 | Reserved |

**Table 4-6**

**Authentication Test Number [O, M, N, I]**

The Authentication Test Number information element contains a 16 byte (128 bit) value to be used in authenticating an.user station 102.

## Table 4-6.1

### Key Type is DCS1900:

If the Protocol of an Authenticate message is DCS1900, then the authentication parameter is a 128 bit pseudo random number which is sent to the user station 102 for the authentication process.

| Bits | Octets |
|------|--------|

| 8 | 7 | 6 | 5 | 4 | 3 | 2 | 1 | |
|---|---|---|---|---|---|---|---|---|
| 128 bit Pseudo Random Number | | | | | | | | 1 |
| | | | | | | | | 2 |
| | | | | | | | | 3 |
| | | | | | | | | 4 |
| | | | | | | | | 5 |
| | | | | | | | | 6 |
| | | | | | | | | 7 |
| | | | | | | | | 8 |
| | | | | | | | | 9 |
| | | | | | | | | 10 |
| | | | | | | | | 11 |
| | | | | | | | | 12 |
| | | | | | | | | 13 |
| | | | | | | | | 14 |
| | | | | | | | | 15 |
| | | | | | | | | 16 |

## Table 4-6.2

### Protocol is Bellcore "C"

If the Protocol is Bellcore "C", then the authentication parameter is RAND (a random number), 64 bits of which are to be used by the base station 104 in the authentication process.

| Bits | | | | | | | | Octets |
|---|---|---|---|---|---|---|---|---|
| 8 | 7 | 6 | 5 | 4 | 3 | 2 | 1 | |
| 64 bit RAND | | | | | | | | 1 |
| | | | | | | | | 2 |
| | | | | | | | | 3 |
| | | | | | | | | 4 |
| | | | | | | | | 5 |
| | | | | | | | | 6 |
| | | | | | | | | 7 |
| | | | | | | | | 8 |
| Reserved | | | | | | | | 9 |
| | | | | | | | | 10 |
| | | | | | | | | 11 |
| | | | | | | | | 12 |
| | | | | | | | | 13 |
| | | | | | | | | 14 |
| | | | | | | | | 15 |
| Reserved | | | | | | | | 16 |

Table 4-7

**Authentication Test Response [O, M, N, I]**

The contents of the Authentication Test Response information element depends upon the infrastructure of the system. If the Authenticate N_Notes RMT message that stimulated the response was of type DCS1900, then the contents is the 32 bit result of applying the authentication algorithm to the pseudo-random number supplied. If the Authentication N_Notes RMT message was of Bellcore "C" type, then a single bit of the result signifies either successful

authentication or failure.

## Table 4-7.1

### DCS1900 Response

| | Bits | | | | | | | Octets |
|---|---|---|---|---|---|---|---|---|
| 8 | 7 | 6 | 5 | 4 | 3 | 2 | 1 | |
| Response Data | | | | | | | | 1 |
| Response Data | | | | | | | | 2 |
| Response Data | | | | | | | | 3 |
| Response Data | | | | | | | | 4 |
| Reserved | | | | | | | | 5 |
| . . . | | | | | | | | |
| Reserved | | | | | | | | 16 |

## Table 4-7.2

## IS-54 Response

| | | | | Bits | | | | | Octets |
|---|---|---|---|---|---|---|---|---|---|
| 8 | 7 | 6 | 5 | 4 | 3 | 2 | 1 | | |
| | | | | Result | | | | | 1 |
| | | | | Reserved | | | | | 2 |
| | | | | | | | | | 3 |
| | | | | | | | | | 4 |
| | | | | | | | | | 5 |
| | | | | . | | | | | |
| | | | | . | | | | | |
| | | | | . | | | | | |
| | | | | Reserved | | | | | 16 |

Result

| 0 | Authentication Success |
|---|---|
| 1 | Authentication Failure |
| 2-255 | Reserved |

Table 4-8

Auth Type [0]

The Authentication Type information element defines the type of infrastructure that is providing the authentication procedure.

```
                    Bits                    Octets

      8     7     6     5     4     3     2     1

     ┌─────────────────────────────────────────┐
     │                Auth  Type                │   1
     └─────────────────────────────────────────┘
```

Auth Type

| 0 | DCS1900 Authentication |
|---|---|
| 1 | Bellcore Generic C Authentication |
| 2-255 | Reserved |

Table 4-9

**High Bandwidth Bearer data**

```
                    Bits                         Octets

   8     7     6     5     4     3     2     1

  ┌─────────────────────────────────────────┐
  │        <TBD> bits of bearer data         │     1
  ├─────────────────────────────────────────┤
  │                                          │     2
  ├─────────────────────────────────────────┤
  │                  .                       │
  │            .     .     .                 │
  │                  .                       │
  ├─────────────────────────────────────────┤
  │                                          │   <TBD>
  └─────────────────────────────────────────┘
```

Table 4-9.1

Low Bandwidth Bearer Data

The Low Bandwidth Bearer Data Element consists of fewer bits of user data than the High Bandwidth Bearer Data Element. Data transmitted via this mode may suffer temporal distortion but will be correctly delivered with no undetected lost or duplicated packets to the limits of the FCW algorithm.

| | | | Bits | | | | | Octets |
|---|---|---|---|---|---|---|---|---|
| 8 | 7 | 6 | 5 | 4 | 3 | 2 | 1 | |
| <TBD> bits of bearer data | | | | | | | | 1 |
| | | | | | | | | 2 |
| | | | . | | | | | |
| | | | . | | | | | |
| | | | . | | | | | |
| | | | | | | | | <TBD> |

Table 4-9.2

Symmetric Bandwidth Bearer Data

The Symmetric Bandwidth Bearer Data Element consists of 192 bits of user data. The low order bit of the 192 bit number resides in Bit 1 Octet 1 while the high order bit of the 192 bit number resides in Bit 8 of Octet 24. Data transmitted via this mode may suffer temporal distortion but will be correctly delivered with no undetected lost or duplicated packets to the limits of the FCW algorithm.

Bits                                    Octets

```
    8   7   6   5   4   3   2   1
  ┌─────────────────────────────────┐
  │      192 bits of bearer data     │    1
  ├─────────────────────────────────┤
  │                                  │    2
  │                                  │
  │                .                 │
  │                .                 │
  │                .                 │
  │                                  │
  ├─────────────────────────────────┤
  │                                  │   24
  └─────────────────────────────────┘
```

Table 4-10

Backhaul Map [N, I]

The Backhaul Map information element details the allocation of backhaul channels on the backhaul link between the base station 104 and the base station controller 105. There are two types of Backhaul Maps. The first is the Superframe Backhaul Map, which consists of a bit map showing the specific backhaul channels assigned to the MS represented by the Personal ID associated with the N_Notes RMT message in which the Backhaul Map appears. The second type is the Subframe Backhaul Map, which identifies a single backhaul channel and the submultiplexing rate to be applied to the channel.

When the Backhaul Map Type is Superframe:

Bits                                    Octets

```
   8+   7   6   5   4   3   2   1
  ┌──────────────────────────────────────────────┐
  │ 32 bits of backhaul channel absolute position │   1
  ├──────────────────────────────────────────────┤
  │                      .                        │   2
  ├──────────────────────────────────────────────┤
  │                      .                        │   3
  ├──────────────────────────────────────────────┤
  │                      .                        │   4
  └──────────────────────────────────────────────┘
```

When the Backhaul Map Type is Subframe:

Bits              Octets

| 8 | 7 | 6 | 5 | 4 | 3 | 2 | 1 | |
|---|---|---|---|---|---|---|---|---|
| 8 bits Backhaul channel # | | | | | | | | 1 |
| Multiplex rate | | | | | | | | 2 |
| Multiplex rate offset | | | | | | | | 3 |
| Reserved | | | | | | | | 4 |

Reserved (transmitted) bits are always set to zero and received reserved bits are also ignored.

The multiplex rate defines the number of channels to be allocated. Multiplex Rates Offset specifies the relative frame position to the next channel to be used. One indicates transmission in the next channel.

## Table 4-11

## Backhaul Map Type [N, I]

The Map Type information element is used to define the type of Backhaul Map that follows. There are two types of Backhaul Maps: Superframe and Subframe. Superframe maps detail the assignment of one or more complete 9.6 kbps backhaul channels in the base station 104 to base station controller 105 backhaul link to a single call. Subframe maps describe the submultiplexing characteristics of a less than 9.6 kbps rate onto a single 9.6 kbps backhaul channel.

Bits              Octets

| 8 | 7 | 6 | 5 | 4 | 3 | 2 | 1 | |
|---|---|---|---|---|---|---|---|---|
| 8 bit Map Type | | | | | | | | 1 |

Map Type

| | |
|---|---|
| 0 | No Map |
| 1 | Superframe |
| 2 | Subframe |
| 3-255 | Reserved |

If Backhaul Map Type indicates No Map, then the Backhaul Map should be zero.

Table 4-12

**Base ID [O, M, N, I]**

The Base Identifier, in conjunction with the PLMN, uniquely identifies the specific base station 104. The low order bit of the 32 bit number is located in Bit 1 Octet 1. The high order bit of the 32 bit number is located in Bit 8 of Octet 4.

| Bits | | | | | | | | Octets |
|---|---|---|---|---|---|---|---|---|
| 8 | 7 | 6 | 5 | 4 | 3 | 2 | 1 | |
| 32 bits of unique Base Identification | | | | | | | | 1 |
| (2 octets) | | | | | | | | 2 |
| Cell Size ID | | | | | | | | 3 |
| Cell Size ID/Pole Position/TRX Unit | | | | | | | | 4 |

Table 4-13

**Base Status [N, I]**

The Base Status information element is comprised of 32 octets.

| Bits | | | | | | | | Octets |
|---|---|---|---|---|---|---|---|---|
| 8 | 7 | 6 | 5 | 4 | 3 | 2 | 1 | |
| 32 Octets of Base Status | | | | | | | | 1 |
| | | | | | | | | 2 |
| . | | | | | | | | |
| . | | | | | | | | |
| . | | | | | | | | |
| | | | | | | | | 32 |

### Table 4-14
### Base ID:  Cell Site ID

The Cell Site ID Field consists of 10 bits which are used to identify a particular *physical* cell site within the Zone. (e.g., a particular "light pole".)

| Value | Meaning |
|---|---|
| 0 | Cell Site ID |
| 1 | Cell Site ID |
| ... | ... |
| 1023 | Cell Site ID |

### Base ID:  Pole Position

The Pole Position Field consists of 4 bits which are used to identify a particular Base Station with the Cell.  It is used to distinguish between different Base Stations at the same Cell Site (e.g., "on the pole").

| Value | Meaning |
|---|---|
| 0 | Pole Position ID |
| 1 | ... |
| ... | ... |
| 15 | ... |

### Base ID:  TRX Unit

The TRX Unit Field consists of 2 bits which are used to identify a particular TRX Unit within the Base Station.

| Value | Meaning |
|---|---|
| 0 | Reserved (for 'Either TRX Unit') |
| 1 | TRX Unit 1 |
| 1 | TRX Unit 2 |
| 3 | Reserved (for 'both TRX Units') |

For DCS 1900, only values 2 and 2 are meaningful. Values 0 and 3 are unused.

## Table 4-15
## Base Status [N,I]

The Base Status information element shall be comprised of 32 octets.

| 18 | 7 | 6 | 5 | 4 | 3 | 2 | 1 | Octets |
|----|---|---|---|---|---|---|---|--------|
| 32 octets of Base Status ||||||||  1 |
| |||||||| 2 |
| ● ● ● ||||||||  |
| |||||||| 32 |

## Table 4-16

### Broadcast ID [O]

The Broadcast ID information element is used to identify specific broadcast data streams. The ID is assigned to the specific broadcast stream on a connection basis. It is the responsibility of the broadcast Network Application to provide periodic application broadcast heading information. The Broadcast ID is assigned at the start of a connection and released to the Broadcast ID pool at the termination of the connection.

| 8 | 7 | 6 | 5 | 4 | 3 | 2 | 1 | Octets |
|---|---|---|---|---|---|---|---|--------|
| 8 bits of Broadcast ID |||||||| 1 |

Table 4-17

BS Capabilities [O,M]

The BS Capabilities information element describes the services being offered by the BS. The internal format of this element is shown below.

| 8 | 7 | 6 | 5 | 4 | 3 | 2 | 1 | Octets |
|---|---|---|---|---|---|---|---|---|
| Base Features | | | | | | | | 1 |
| Base Features | | | | | | | | 2 |
| Base Features | | | | Access Class | | | | 3 |
| Leveling Bits | | | | | | | | 4 |

1BS Capabilities: Base Features

The Base Features subfield is 20 bits in length. These bits are used to provide the MS information about the base and correspond to various base capabilities or features. Features such as ethernet access, aggregate data capability, enhanced voice, etc. are selected here. The particular features depend upon the networks which the BS supports.

BS Capabilities: Base Features for DCS1900 Systems

| 8 | 7 | 6 | 5 | 4 | 3 | 2 | 1 | Octets |
|---|---|---|---|---|---|---|---|---|
| Base Features | | | | | | | | 1 |
| Base Features | | | | | | | | 2 |
| Base Features | | | | | | | | 3 |

1 Bit: This bit, if set to 1, indicates that the BSC which services this BS is capable of Inter-BSC Terminating Handovers.
1 Bit: More Slots (OTA) than Channels (Backhaul) All bits not explicitly defined are reserved.

**BS Capabilities:  Access Class**

Integral value from 0 through 15 which designates the lowest class allowed access to the base.  That is, if the MS were provisioned with an access class of 3, it would be allowed to register with base stations that broadcast an access class of 3 or lower.  This subfield is active only if the CU field in the Header specifies that Class Control is in effect.

| Value | Access Allowed to |
|---|---|
| 15 | Test Mobiles only |
| 14 | 911 calls only |
| 13 | Reserved |
| 12 | Reserved |
| 11 | Reserved |
| 10 | Mobiles with Access Class 10 |
| 9 | Mobiles with Access Class 9 or 10 |
|  |  |
|  |  |
|  |  |
| 1 | Mobiles with Access Class 1, 2, ... 10 |
| 0 | All Mobiles |

**BS Capabilities: Leveling Bits**

8 bits, set by the base station to level out the number of mobile stations registering or using a base. A mobile station would be allowed to access a base station if the leveling bit of the mobile station was set in this field. The leveling bit number will be selected by taking the modulo 8 of the MS's Permanent PID. If the corresponding bit in the base station leveling field were set then the MS would be allowed access, otherwise, the MS would have to access another BS. This subfield is active only if the CU field in the Header specifies that Class Control is in effect.

## Table 4-18

## BS Information [M]

The BS Information Element is a collection of Information Elements which give details associated with a BS.  It exists for notational convenience because of its frequent occurrence in lists.

| Bits | | | | | | | | Octets |
|---|---|---|---|---|---|---|---|---|
| 8 | 7 | 6 | 5 | 4 | 3 | 2 | 1 | |
| Zone [5 Octets] | | | | | | | | 1 |
| | | | | | | | | 2 |
| | | | | | | | | 3 |
| | | | | | | | | 4 |
| | | | | | | | | 5 |
| BSC ID [2 Octets] | | | | | | | | 6 |
| | | | | | | | | 7 |
| Base ID [4 Octets] | | | | | | | | 8 |
| | | | | | | | | 9 |
| | | | | | | | | 10 |
| | | | | | | | | 11 |
| BS Capabilities [4 Octets] | | | | | | | | 12 |
| | | | | | | | | 13 |
| | | | | | | | | 14 |
| | | | | | | | | 15 |

### Table 4-19

### BSC ID [O, M]

The base station controller identifier, in conjunction with the PLMN, uniquely identifies the specific base station controller 105. The low order bit of the 16 bit number is located in Bit 1 Octet. The high order bit of the 16 bit number is located in Bit 8 of Octet 2.

| Bits | | | | | | | | Octets |
|---|---|---|---|---|---|---|---|---|
| 8 | 7 | 6 | 5 | 4 | 3 | 2 | 1 | |
| 16 bits of unique BSC identification | | | | | | | | 1 |
| | | | | | | | | 2 |

### Table 4-20

### Cause [O, M, N, I]

The Cause information element consists of 8 bits identifying the cause for, or the result of, a specific action. The particular meanings of Cause values are determined by the message in which the Cause information element appears.

| Bits | | | | | | | | Octets |
|---|---|---|---|---|---|---|---|---|
| 8 | 7 | 6 | 5 | 4 | 3 | 2 | 1 | |
| 8 bits of Cause information | | | | | | | | 1 |

## Table 4-21.1

Cause: Authentication Reject [N, J]
        CT-RCP [O]
        Registration Result [M, N, J]
        Service Response [M, N, I]

| Value | Meaning |
|---|---|
| 0 | Success |
| 1 | IMSI Unknown in HLR |
| 2 | Illegal MS |
| 3 | Illegal ME |
| 4 | PLMN Not Allowed (i.e., don't try any cells with same MCC, MNC) |
| 5 | LAI Not Allowed (i.e., don't try any cells with the same LAI) |
| 6 | National Roaming Not Allowed in the LAI |
| 7 | Protocol Error |
| 8 | Network Failure |
| 9-255 | Reserved |

## Table 4-21.2

Cause:  Cipher Response [N, I]

| Value | Meaning |
|---|---|
| 0 | No Result |
| 1 | Success, Cipher |
| 2 | Success, Clear Mask |
| 3 | BS Reject |
| 4 | MS Reject |
| 5-255 | Reserved |

## Table 4-21.3 Cause: Connect Link [N, I]
### Setup Link [N, I]

| Value | Meaning |
|-------|---------|
| 0 | Link Successful |
| 1 | Link Failure |
| 2-255 | Reserved |

**Table 4-21.4 Cause: CT-ACK [O]**

Unless specified otherwise below, the Cause Information Element in CT-ACK messages always has a value of zero.

## Table 4-21.4.1

### Cause: CT-ACK in response to CT-CSC

| Value | Meaning |
|-------|---------|
| 0 | Acknowledged |
| 1 | Circuit Switch Refused |
| 2-255 | Reserved |

## Table 4-21.5 Cause:  CT-CIP [O]

| Value | Meaning |
|-------|---------|
| 0 | Set or Change Cipher |
| 1 | Synchronize Cipher |
| 2-255 | Reserved |

## Table 4-21.6 Cause:  CT-CNC [O]

| Value | Meaning |
|-------|---------|
| 0 | The requested connection has been connected |
| 1 | Unable to complete the requested connection |
| 2-255 | Reserved |

**Table 4-21.7 Cause: CT-DRG [O]**

**Deregister [M, N, I]**

| Value | Meaning |
|-------|---------|
| 0 | Release by MS |
| 1-255 | Reserved |

**Table 4-21.8 Cause: CT-HOF [O]**

**Handover Failed [N, I]**

| Value | Meaning |
|-------|---------|
| 0 | Reserved |
| 1 | Refused by Originating BS |
| 2 | Refused by Terminating BS |
| 3 | Refused by Originating BSC |
| 4 | Refused by Terminating BSC |
| 5 | THR Failed, OHR Suggested |
| 6 | Invalid HRef |
| 7-255 | Reserved |

**Table 4-21.9 Cause: CT-REL [O]**

Release Link [M, N, I]

| Value | Meaning |
|-------|---------|
| 0 | Release by Network |
| 1 | Release by MS |
| 2 | Release by BS (Link Lost) |
| 3 | Release by BS During Handover (e.g., Circuit Switch Complete) |
| 4-255 | Reserved |

## Table 4-21.10 Cause:  CT-SET [O]

| Value | Meaning |
|---|---|
| 0 | Link Successful |
| 1 | Link Failed |
| 2-255 | Reserved |

See Cause: CT-DRG [O]
See Cause: CT-HOF [O]

## Table 4-21.11 Cause:  Handover Request ACK [N, I]

| Value | Meaning |
|---|---|
| 0 | No Result |
| 1 | Success, Cipher |
| 2 | Success, Clear Mask |
| 3 | Fail, No Resources |
| 4 | Fail, Cipher Algorithm Not Supported |
| 5-255 | Reserved |

See Cause: CT-RCP [O]
See Cause: CT-REL [O]

## Table 4-21.12 Cause:  Service Info [O]

This Cause is unique in that it is divided into two subfield to carry results for both the MS and the BS.

EP 1 395 078 A2

```
        Bits                        Octets

  8    7    6    5    4    3    2    1
┌────────────────────┬────────────────────┐
│      MS Cause      │      BS Cause      │  1
└────────────────────┴────────────────────┘
```

The meanings of each subfield are:

| Value | Meaning |
|-------|---------|
| 0 | Success |
| 1 | Failure |
| 2-15 | Reserved |

See Cause:  CT-RCP [O]

See Cause:  Connect Link [N, I]

### Table 4-21.13 Cause:  Specific Poll Result [O]

| Value | Meaning |
|-------|---------|
| 0 | No Result |
| 1 | Specific poll for PID |
| 2 | General poll response from PID is rejected |
| 3 | Page to MS |
| 4-256 | Reserved |

### Cause:  DCS1900 Systems

For DCS1900, the mapping of GSM Causes to Omnipoint Causes is given in the following tables. This translation is for CT-RCP, CT-SRS, Register_Cnf, Registration Result, Service Response.

| Omnipoint Value | GSM Value | Meaning |
|-----------------|-----------|---------|
| 0 | 0 | Success |
| 2 | 2 | IMSI unknown in HLR |
| 2 | 3 8/27/1996 | Illegal MS |
| 2 | 4 | IMSI unknown in VLR |
| 2 | 5 | IMEI not accepted |
| 2 | 6 | Illegal ME |
| 3 | 11 | PLMN not allowed |
| 4 | | LAI not allowed |

(continued)

| Omnipoint Value | GSM Value | Meaning |
|---|---|---|
| 4 | 13 | National Roaming not allowed In this LAI |
| 5 | 17 | Network Failure |
| 5 | 22 | Congestion |
| 6 | 32 | Service option not supported |
| 6 | 33 | Requested service option not subscribed |
| 6 | 34 | Service option temporarily out of order |
| 6 | 38 | Call cannot be identified |
|  | 95 | Semantically incorrect message |
| 6 | 96 | Invalid mandatory information |
| 6 | 97 | Message type non-existent not implemented |
| 6 | 98 | Message not compatible with orotocol state |
| 6 | 99 | Information element non-existent or not implemented |
| 6 | 100 | Conditional IE error |
| 6 | 101 | Message not compatible with protocol state |
| 6 | 111 | Protocol error, unspecified |

**Table 4-22**

**Channel Preference [M.N.I]**

The Channel Preference information element indicates the sender's preference for which channel--B or D--is used over the O Interface to transport the data contained in the message.

```
 8⁻  7   6   5   4   3   2   1          Octets
```

| 8 bit Channel Preference | 1 |
| --- | --- |

| Value | Meaning |
| --- | --- |
| 0 | B Channel Preempt: Use existing circuit; do not attempt to acquire Separate Signaling Slot. |
| 1 | B Channel Required: Importance relatively high: use Separate Signaling Slot if available, otherwise preempt B Channel. |
| 2 | B Channel Preferred: Moderate Importance: use Separate Signaling Slot if available, otherwise use D Channel |
| 3 | D Channel Preferred: Importance relatively low; use D Channel if B Channel is not available. |
| 4-255 | Reserved |

There is no purpose to having a D Channel Required value -- it would only be useful in the case where the B Channel was available and the application wanted the OTA to use the D Channel anyway. Such a request would be ignored byte OTA to conserve bandwidth (pushing a Transport Note through the D Channel at a rate of one byte per frame while wasting the 19 bytes available in the B channel -- it could take up to 5 seconds to get the Transport Note through this way -- is just too wasteful of resources).

**Channel Preference: DCS1900 Systems**

For DCS1900 Systems, the following mapping will suffice--a more sophisticated mapping would probably select some messages with TCID 0 which could be assigned a preference of D Channel Preferred. E.g., Start/Stop DTMF, Advice of Charge, etc. :

| TCID | Channel Preference | Comments |
| --- | --- | --- |
| 0 | 1 | B Channel required for CC, MM and SS Transport |
| 3 | 3 | D Channel preferred for SMS Transport |

## Table 4-23
### Channel Rate

The Channel Rate information element appears both as a 4-bit field in the Resource Request Data information element and as a 1-octet information element in other messages. Only values 0-15 are legal, all higher values are illegal since they will not fit in 4 bits. Only values 0-6 have been defined; the remaining 8 values will be defined when needed from the remaining 14 candidate Channel Rates.

| 8 | 7 | 6 | 5 | 4 | 3 | 2 | 1 | Octets |
|---|---|---|---|---|---|---|---|--------|
| Reserved | | | 4 bit Channel Rate | | | | | 1 |

| Value | Channel Rate in Slots/Frame | Equivalent Raw Data Rate (bits/second) |
|-------|------------------------------|-----------------------------------------|
| 0 | 1/32 | 300 |
| 1 | 1/16 | 600 |
| 2 | 1/8 | 1,200 |
| 3 | 1/4 | 2,400 |
| 4 | ½ | 4,800 |
| 5 | 1/1 | 9,600 |
| 6 | 2/1 | 19,200 |
| 7-15 | Reserved | |
| Candidate | 3/1 | 28,800 |
| Candidate | 4/1 | 38,400 |
| Candidate | 5/1 | 48,000 |
| Candidate | 6/1 | 57,600 |

| Candidate | 7/1 | 67,200 |
|-----------|-----|--------|
| Candidate | 8/1 | 76,800 |
| Candidate | 9/1 | 86,400 |
| Candidate | 10/1 | 96,000 |
| Candidate | 11/1 | 105,600 |
| Candidate | 12/1 | 115.200 |
| Candidate | 13/1 | 124,800 |
| Candidate | 14/1 | 134,400 |
| Candidate | 15/1 | 144,000 |
| Candidate | 16/1 | 153,600 |
| Candidate | Illegal | Not Applicable |

**Channel Rate: DCS1900 Systems**

For DCS1900 Initial Deployment, only value 5 (1 slot/frame) is supported. In the future, when aggregated data is supported, the other values will be supported as well.

### Table 4-24

### Cl (Correlative ID) [O,N,I]

The Cl (Correlative ID) is a single octet which serves as a short-hand identifier (nickname) for an active MS.  Cls are managed by the BS and are (currently) guaranteed to uniquely identify an active MS during a session.  AN MS will be assigned a new (probably different) Cl at the beginning of each session.

```
8   7   6   5   4   3   2   1   Octets
+-----------------------------------+
|      8 bits of correlative ID     |   1
+-----------------------------------+
```

Notes passed over the N and I interfaces generally contain a PID which the BS OTA must use to associate the Note with the particular OTA link. Since the PID is nine bytes in length, this can potentially be a compute intensive process. To simplify the BS's task of mapping a Note to a particular slot, the Cl shall be included in each RMT Note which contains a PID in both directions over the O and I interfaces. Notes which do not contain a PID do not include a Cl.

The Cl occupies the D Channel on all O_Notes except CT-GPO (General Poll) and possibly CT-GPR (General Poll Response). It is used by the MS to identify O_Notes meant for it. This allows the MS to recover from an error during Fast Control Traffic. The management of Cls will be according to the following rules:

- The BS will assign a unique Cl to each mobile during slot acquisition. The BS will use a FIFO queue to manage Cls to spread Cl usage over the entire legal range and insure a maximal delay between reuse of a given Cl. Legal Cl values are 1 to 255.
- The BS will include the Cl in each Notes_RMT message to the BSC (in those messages which contain a PID).
- The BSC will retain the Cl and return it to the BS in all messages containing the same PID (i.e., the PID received with the Cl from the BS). The BSC must always save and use the most recent value of the Cl received from the BS.

In future, there is a possibility that the CI may change in middle of session (upon entry/exit from Slow Control Traffic). This will only occur if at some future date there is a requirement to simultaneously support a total of more than 255 active mobiles. In theory it is possible to have 15 slots all fully occupied with mobiles communicating once every 25 frames. This is the worst case and will probably never happen, but is provides a theoretical maximum of 15 * 25 = 375 active Mobiles at any one time. Since this exceeds the 255 maximum CI limit, we must make provision for separate numbering of mobiles in slow control traffic and would need to deassign/reassign CIs on the entry/exit of Slow Control Traffic mode. The implication that this has on the current design is imply that the CI may not be guaranteed unique over the entire session for a given mobile. In addition to the requirement (above) that the BSC always save and use the most recent value of the CI received from the BS, it imposes the following additional limitations on the use of CIs as handles to information concerning the MS:

- If the BSC uses the CI as a handle -- which it may as an implementation option -- it must verify that the PID in the data record found matches the PID which accompanied the CI in the Note. If the two PIDs do not match, the BSC must ignore the CI and use the PID in the note to identify the appropriate data record. This insulates the BSC programming from having to change if CIs ever cease to be unique.
- If the BS ever manages CIs in a fashion that does not guarantee their uniqueness, the BS also must verify that the PID in the date record found matches the PID which accompanied the CI in the Note. if the two PIDs do not match, the BS must ignore the CI and use the PID in the Note to identify the appropriate data record.
- The MS must also use the most recent CI it receives from the BS in a Specific Poll--CT-SPO--which contains its PID.

## Table 4-25 Cipher Algorithm ID [N, I]

The Cipher Algorithm ID specifies that algorithm to be used for ciphering.

| Bits | | | | | | | | Octets |
|---|---|---|---|---|---|---|---|---|
| 8 | 7 | 6 | 5 | 4 | 3 | 2 | 1 | |
| 8 bits of Algorithm ID | | | | | | | | 1 |

Algorithm ID

| | |
|---|---|
| 0 | Transparent (Clear) |
| 1 | A5/1 Algorithm |
| 2 | A5/2 Algorithm |
| 3 | A5/3 Algorithm |
| 4-255 | Reserved |

## Table 4-26 Cipher Key [N, I]

The Cipher Key information element contains the clear text key to be used to set the key of the BS's encryption equipment.

```
                  Bits                        Octets

      8    7    6    5    4    3    2    1
    ┌─────────────────────────────────────────┐
    │      64 bit Clear Text Cipher Key        │        1
    ├─────────────────────────────────────────┤
    │                                          │        2
    │                     .        .           │
    │                     .                    │
    │                     .                    │
    ├─────────────────────────────────────────┤
    │                                          │        8
    └─────────────────────────────────────────┘
```

## Table 4-27 Cipher Key Sequence # [O, M, N, I]

The Key Sequence # information element is used to select a cipher key in both the BS and MS without having to explicitly pass the key over the air.  The Key Sequence # will be generated as defined in <TBD>.  Not all bits of the key sequence # may be significant.

```
                  Bits                        Octets

      8    7    6    5    4    3    2    1
    ┌─────────────────────────────────────┐
    │         8 bit Key Sequence #         │        1
    └─────────────────────────────────────┘
```

Bits 5-8:  Must be zero
Bits 1-4:  Are Significant
Default is 'OFx' in there is no Cipher Key Sequence #.

## Table 4-28 Class [O, N, I]

The Class information element specifies some of the operational parameters of the particular typ of MS being used.

|  | Bits | | | | | | Octets |
|---|---|---|---|---|---|---|---|
| 8 | 7 | 6 | 5 | 4 | 3 | 2 | 1 |
| Class Type | | | Class Information | | | | 1 |
| Class Information | | | | | | | 2 |

Class Type

| 0 | Reserved |
|---|---|
| 1 | DCS1900 Class Type |
| 2 | IS-41 Class Type |
| 3-7 | Reserved |

## Table 4-28.1 Class Information for DCS1900 Class Type

Bits                                     Octets

| 8 | 7 | 6 | 5 | 4 | 3 | 2 | 1 | |
|---|---|---|---|---|---|---|---|---|
| Not Available | | | Reserved | Revision Level | | A5/1 | A5/2 | 1 |
| A5/3 | SM | SS Screen Ind. | | Reserved | | | | 2 |

Revision Level

| 0 | PCS2000 phase 1 Mobiles |
|---|---|
| 1-3 | Reserved |

A5/1

| 0 | A5/1 encryption algorithm not available |
|---|---|
| 1 | A5/1 encryption algorithm is available |

A5/[2|3]

| 0 | A5/[2|3] encryption algorithm is available |
|---|---|
| 1 | A5/[2|3] encryption algorithm is not available |

SM

| 0 | short message capability not present |
|---|---|
| 1 | short message capability present |

SS Screen
Indicator

| | |
|---|---|
| 0 | GSM phase 1 |
| 1 | capable of handling ellipsis notation and phase 2 error handling |
| 2-3 | reserved |

## Table 4-28.2 Class Information for IS-41 Class Type

| | | Bits | | | | | | Octets |

| 8 | 7 | 6 | 5 | 4 | 3 | 2 | 1 | |
|---|---|---|---|---|---|---|---|---|
| Not Available | | | Reserved | | | | | 1 |
| H | G | F | E | D | C | B | A | 2 |

Power Class (PCP) (octet 1, bits A, B and E)

| Bits | H | G | F | E | D | C | B | A | Value | Meaning |
|------|---|---|---|---|---|---|---|---|-------|---------|
| | | | | 0 | | | 0 | 0 | - | Class I |
| | | | | 0 | | | 0 | 1 | - | Class II |
| | | | | 0 | | | 1 | 0 | - | Class III |
| | | | | 0 | | | 1 | 1 | - | Class IV |
| | | | | 1 | | | 0 | 0 | - | Class V |
| | | | | 1 | | | 0 | 1 | - | Class VI |
| | | | | 1 | | | 1 | 0 | - | Class VII |
| | | | | 1 | | | 1 | 1 | - | Class VIII |

Transmission (TX) (octet 1, bit C)

| Bits | H | G | F | E | D | C | B | A | Value | Meaning |
|------|---|---|---|---|---|---|---|---|-------|---------|
| | | | | | | 0 | | | - | Continuous |
| | | | | | | 1 | | | - | Discontinuous |

Bandwidth (BW) (octet 1, bit D)

| Bits | H | G | F | E | D | C | B | A | Value | Meaning |
|------|---|---|---|---|---|---|---|---|-------|---------|
| | | | | | 0 | | | | - | 20 MHZ |
| | | | | | 1 | | | | - | 25 MHZ |

Table 4-28.2.1

| Mobile Station Nominal Power Levels | | | | | | | | | | |
|---|---|---|---|---|---|---|---|---|---|---|
| Mobile Station Power Level (PL) | Mobile Attenuation Code (MAC) | Nominal ERP (dBW) for Mobile Station Power Class | | | | | | | | |
| | | I | I I | I I I | I V | V | V I | V I I | V I I I | |
| 0 | 0000 | 6 | 2 | -2 | -2 | * | * | * | * | |
| 1 | 0001 | 2 | 2 | -2 | -2 | * | * | * | * | |
| 2 | 0010 | -2 | -2 | -2 | -2 | * | * | * | * | |
| 3 | 0011 | -6 | -6 | -6 | -6 | * | * | * | * | |
| 4 | 0100 | -10 | -10 | -10 | -10 | * | * | * | * | |
| 5 | 0101 | -14 | -14 | -14 | -14 | * | * | * | * | |
| 6 | 0110 | -18 | -18 | -18 | -18 | * | * | * | * | |
| 7 | 0111 | -22 | -22 | -22 | -22 | * | * | * | * | |
| Dual Mode Only | | | | | | | | | | |
| 8 | 1000 | -22 | -22 | -22 | -26 +/3 dB | * | * | * | * | |
| 9 | 1001 | -22 | -22 | -22 | -30 +/6 dB | * | * | * | * | |

Table 4-28.2.1   (continued)

| Mobile Station Nominal Power Levels | | | | | | | | | |
|---|---|---|---|---|---|---|---|---|---|
| Mobile Station Power Level (PL) | Mobile Attenuation Code (MAC) | Nominal ERP (dBW) for Mobile Station Power Class | | | | | | | |
| Dual Mode Only | | | | | | | | | |
| 10 | 1010 | -22 | -22 | -22 | -34 +/ 9 dB | * | * | * | * |

The three lease significant bits of MAC are used in the CMAC/VMAC field. All four bits of MAC are used in the DMAC field.

### Table 4-29 Connection Number [O, M, N, I]

The Connection Number information element specifies the specific network connection which was allocated to carrying the bearer channel of this user station 102 from the base station 104 to the network.  All octets of this information element may not be significant.  Unused nibbles and octets must be filled with "F" hex.

The Connection Number in conjunction with the Zone and the base station controller ID uniquely identify every possible connection in the world.

```
                    Bits                    Octets

     8    7    6    5    4    3    2    1
   ┌──────────────────────────────────────┐
   │        24 bis of Connection Number   │    1
   ├──────────────────────────────────────┤
   │                                      │    2
   ├──────────────────────────────────────┤
   │                                      │    3
   └──────────────────────────────────────┘
```

## Table 4-30

### Connection Result [M]

**D Channel [O]**

The D Channel information element transmits the out of band application channel in a byte serial manner. It is available for this use only when bearer data is being transmitted (i.e., when the Packet Type field in the O_Note Header has a value of O (Normal Traffic). During signaling (all other Packet Types) it is used for the Cl (or other special purposes).

**ESN [O,M,N,I]**

The equipment serial number uniquely identifies the MS.

| 8 | 7 | 6 | 5 | 4 | 3 | 2 | 1 | Octets |
|---|---|---|---|---|---|---|---|---|
| 64 bits of ESN | | | | | | | | 1 |
| | | | | | | | | 2 |
| • | | | | | | | | |
| • | | | | | | | | |
| • | | | | | | | | |
| | | | | | | | | 8 |

**FCW [O]**

The Frame Check Word, which checks the content of a packet information element, shall be a 16 bit sequence. It shall be the ones complement of the sum (modulo 2) of:

a) The remainder of

$$x^k(x^{15}+x^{14}+x^{13}+x^{12}+x^{11}+x^{10}+x^9+x^8+x^7+x^6+x^5+x^4+x^3+x^2+x^1+1)$$

divided (modulo 2) by the generator polynomial $x^{16}+x^{12}+x^5+1$, where k is the number of bits in the packet not including the FCW.

b) The remainder of the division (modulo 2) by the generator polynomial $x^{16}+x^{12}+x^5+1$ of the product of $x^{16}$ by the content of the packet existing from and including the first bit of the packet to but not including the first bit of the FCW.

```
                          Bits
           8    7    6    5    4    3    2    1    Octets
         ┌─────────────────────────────────────┐
         │           16 bits of FCW             │    1
         ├─────────────────────────────────────┤
         │                                     │    2
         └─────────────────────────────────────┘
```

## Table 4-31 Correlative ID [O]

The Correlative information element is used to temporarily identify a group of frames as being destined to a specific user station 102. The ID is assigned for the duration of the connection and is released for reuse by another user station 102 at the termination of a connection. The specific value of "OFFx" is reserved for broadcast use. The correlative ID for a specific user station 102 will not be changed during a connection.

```
                     Bits                         Octets
           8    7    6    5    4    3    2    1
         ┌─────────────────────────────────────┐
         │        8 bits of correlative ID      │    1
         └─────────────────────────────────────┘
```

## Table 4-32 Count Base [N, I]

The Count Base information element is used to specify the number of sets of base information which follow in the Notes RMT Originating Handover message. Each set of base information consists of three information elements: Zone, base station controller (BSC) ID and Base ID.

```
                     Bits                         Octets
           8    7    6    5    4    3    2    1
         ┌─────────────────────────────────────┐
         │         8 bits of Count Base         │    1
         └─────────────────────────────────────┘
```

## Table 4-33 D Channel [O]

The D Channel information element transmits the out of band application channel in a byte serial manner.

The data is transmitted with the low order bit of the D channel information in Bit 1 of the Octet.

**Table 4-34 ESN [O, M, N, I]**

The equipment serial number uniquely identifies the user station 102.

Bits                                    Octets

| 8 | 7 | 6 | 5 | 4 | 3 | 2 | 1 | |
|---|---|---|---|---|---|---|---|---|
| 64 bits of ESN | | | | | | | | 1 |
| | | | | | | | | 2 |
| . | | | | | | | | |
| . | | | | | | | | |
| . | | | | | | | | |
| | | | | | | | | 8 |

**Table 4-35 Facility [O, M]**

The Facility information element describes the services being offered by the base station 104. The internal format of this element is shown below.

Bits                                    Octets

| 8 | 7 | 6 | 5 | 4 | 3 | 2 | 1 | |
|---|---|---|---|---|---|---|---|---|
| Base Features | | | | | | | | 1 |
| Base Features | | | | | | | | 2 |
| Base Features | | | | Access Class | | | | 3 |
| Leveling Bits | | | | | | | | 4 |

The Base Features subfield is 20 bits in length. These bits are used to provide the user station 102 information about the base station 104 and correspond to various base station capabilities or features. Features such as ethernet access, aggregate data capability, enhanced voice, etc. are selected here. The particular features depend upon the networks which the base station 104 supports.

## Table 4-35.1 Base Features for DCS1900 Systems

Bits                                        Octets

| 8 | 7 | 6 | 5 | 4 | 3 | 2 | 1 | |
|---|---|---|---|---|---|---|---|---|
| Base Features | | | | | | | | 1 |
| Base Features | | | | | | | | 2 |
| Base Features | | | | | | | | 3 |

1 Bit: This bit, if set to 1, indicates that this base station 104 is capable of Inter-BSC Terminating Handovers. All bits not explicitly defined are reserved.

## Table 4-35.2 Facilities:  Access Class

Integral value from 0 through 15 which designates the lowest class allowed access to the base station 104.  That is, if the user station 1021 were provisioned with an access class

of 3, it would be allowed to register with base stations 104 that broadcast an access class of 3 or lower. This subfield is active only if the CU field in the Header specifies that Class Control is in effect.

| Value | Access Allowed to |
|-------|-------------------|
| 15 | Test Mobiles only |
| 14 | 911 calls only |
| 13 | Reserved |
| 12 | Reserved |
| 11 | Reserved |
| 10 | Mobiles with Access Class 10 |
| 9 | Mobiles with Access Class 9 or 10 |
| . | |
| . | |
| . | |
| 1 | Mobiles with Access Class 1, 2, ... 10 |
| 0 | All Mobiles |

8 bits, set by the base station to level out the number of user stations 102 registering or using a base station 104. A user station 102 would be allowed to access a base station 104 if the leveling bit of the user station 102 was set in this field. The leveling bit number will be selected by taking the modulo 15 of the user station PID. If the corresponding bit in the base station 104 leveling field were set then the user station 102 would be allowed access, otherwise, the user station 102 would have to access another base station 104. This subfield is active only if the CU field in the Header specifies that Class Control is in effect.

### Table 4-36 FCW [0]

The Frame Check Word, which checks the content of a packet information element, is be a 16 bit sequence. It comprises the ones complement of the sum (modulo 2) of:

a) The remainder of

$$_xk_{(x}15_{+x}14_{+x}13_{+x}12_{+x}11_{+x}10_{+x}9_{+x}8_{+x}7_{+x}6_{+x}5_{+x}4_{+x}3_{+x}2_{+x}1_{+1)}$$

divided (modulo 2) by the generator polynomial $x^{16}+x^{12}+x^5+1$, where k is the number of bits in the packet not including the FCW.

b) The remainder of the division (modulo 2) by the generator polynomial $x^{16}+x^{12}+x^5+1$ of the product of $x^{16}$ by the content of the packet existing from and including the first bit of the packet to but not including the first bit of the FCW.

Bits                                    Octets

| 8 | 7 | 6 | 5 | 4 | 3 | 2 | 1 | |
|---|---|---|---|---|---|---|---|---|
| 16 bits of FCW | | | | | | | | 1 |
| | | | | | | | | 2 |

### Table 4-37 Frame Number [O]

The Frame Number information element is used in ciphering algorithms. Each base station 104 keeps its frame number as a count of the number of frames it has traversed since power up.

Bits                                    Octets

| 8 | 7 | 6 | 5 | 4 | 3 | 2 | 1 | |
|---|---|---|---|---|---|---|---|---|
| | | 22 bits of Frame Number | | | | | | 1 |
| | | | | | | | | 2 |
| | | | | | | | | 3 |

### Table 4-38 Follow On Proceed [O,M,N,I]

The Follow On Proceed information element contains a single bit of information: either another Network Level Service Request is allowed or it is not.

This information element also appears as a 1 bit field in the Registration Result information element.

| Bits | | | | | | | | Octets |
|---|---|---|---|---|---|---|---|---|
| 8 | 7 | 6 | 5 | 4 | 3 | 2 | 1 | |

| 8 bits of Follow On Proceed Information | 1 |
|---|---|

**Follow On Proceed: DCS1900 Systems**

For DCS1900, the values are:

| Value | Meaning |
|---|---|
| 0 | Follow On Proceed Not Allowed |
| 1 | Follow On Proceed |
| 2-255 | Illegal |

**Table 4-39 Frame Offset [O]**

The Frame Offset information element is the number of slots between the current slot and the beginning of the next frame. This tells the MS when the next frame begins, so it may increment the Frame Number synchronously with the BS while encrypting. This is required to support aggregated data and timeslot interchange in cipher mode.

The Frame Offset always reflects the correct value for the slot in which the CT message containing the Frame Offset information element is transmitted and received without error. This means that the sender must recompute the Frame Offset whenever it needs to re-send the CT message.

| Bits | | | | | | | | Octets |
|---|---|---|---|---|---|---|---|---|
| 8 | 7 | 6 | 5 | 4 | 3 | 2 | 1 | |

| | 8 bits of Frame Offset | 1 |
|---|---|---|

## Table 4-40 HRef (Handover Reference)

The HRef (Handover Reference) information element is used to identify a specific handover process that has already been initiated by an Originating Handover Request sequence.

Not all bits are significant.

| | | Bits | | | | | | | Octets |
|---|---|---|---|---|---|---|---|---|---|
| 8 | 7 | 6 | 5 | 4 | 3 | 2 | 1 | | |
| 48 bits of HRef (Handover Reference) | | | | | | | | | 1 |
| . | | | | | | | | | 2 |
| . | | | | | | | | | 3 |
| . | | | | | | | | | 4 |
| . | | | | | | | | | 5 |
| . | | | | | | | | | 6 |

## Table 4-40.1 HRef for DCS1900 Systems

In a DCS1900 infrastructure system, the HRef is assigned by the terminating Base Station Controller. Only one octet is significant.

| | | Bits | | | | | | | Octets |
|---|---|---|---|---|---|---|---|---|---|
| 8 | 7 | 6 | 5 | 4 | 3 | 2 | 1 | | |
| 8 bits of HRef (Handover Reference) | | | | | | | | | 1 |
| Reserved | | | | | | | | | 2 |
| . | | | | | | | | | 3 |
| . | | | | | | | | | 4 |
| . | | | | | | | | | 5 |
| . | | | | | | | | | 6 |

## Table 4-41 Identity Data [O, N, I]

The Identity Data information element contains one of the identifiers of the MS as specified by the associated Identity Type. The precise length and format of the Identity Data information element will be determined by the Identity Type. If the length is less than the maximum 9 octets provided for the Identity Data information element, unused space will be at the end of the Identity Data information element (Octets 9, 8, ...) and all unused bits will be set to zero.

| Bits | | | | | | | | Octets |
|---|---|---|---|---|---|---|---|---|
| 8 | 7 | 6 | 5 | 4 | 3 | 2 | 1 | |
| 72 bits of Identity Element | | | | | | | | 1 |
| | | | | | | | | 2 |
| | | | | | | | | 3 |
| | | | | | | | | 4 |
| | | | | | | | | 5 |
| | | | | | | | | 6 |
| | | | | | | | | 7 |
| | | | | | | | | 8 |
| | | | | | | | | 9 |

### Table 4-42 Identity Type [O, N, I]

The Identity Type information element specifies which identity is being requested or supplied.

Bits              Octets

| 8 | 7 | 6 | 5 | 4 | 3 | 2 | 1 | |
|---|---|---|---|---|---|---|---|---|
| 8 bits of Identity Type | | | | | | | | 1 |

| value | Identity Type |
|---|---|
| 0 | IMSI |
| 1 | TMSI |
| 2 | ESN |
| 3 | UPT# |
| 4-255 | Reserved |

**Table 4-34 LAC (Location Area Code)**

See Zone.

**Table 4-35 LAI (Location Area Identifier)**

See Zone.

### Table 4-43 Location [N, I]

The Location information element provides the identification of a specific element in the given table. The actual element identifiers are table dependent.

Bits              Octets

| 8 | 7 | 6 | 5 | 4 | 3 | 2 | 1 | |
|---|---|---|---|---|---|---|---|---|
| 16 bits of Location Identifier | | | | | | | | 1 |
| | | | | | | | | 2 |

## Table 4-44 MCC

### MCC (Mobile Country Code)

The MCC (Mobile Country Code) identifies the County in which the network exists. In combination with the MNC it forms the PLMN and uniquely identifies a given network operator. It never appears as an independent information element in any Note.

| Bits | | | | | | | | Octets |
|---|---|---|---|---|---|---|---|---|
| 8 | 7 | 6 | 5 | 4 | 3 | 2 | 1 | |
| 16 bits of Mobility Country Code | | | | | | | | 1 |
| | | | | | | | | 2 |

## Table 4-45 Message Length [M, N, I]

The Message Length field is to be filled in with the size of the message including the size field itself. The length of the message is measured in octets.

| Bits | | | | | | | | Octets |
|---|---|---|---|---|---|---|---|---|
| 8 | 7 | 6 | 5 | 4 | 3 | 2 | 1 | |
| 8 bits of Message Length | | | | | | | | 1 |

## Table 4-46 Message Type [O, M, N, I]

The Message Type information element defines the format of the rest of the message. The interpretation of the Message Type depends upon which particular Notes protocol is being discussed. Currently, the messages are sorted in alphabetical order by name. An effort is made, where possible, to maintain the same Message Type across all interfaces for common messages (e.g., Set Link).

| Bits | | | | | | | | Octets |
|---|---|---|---|---|---|---|---|---|
| 8 | 7 | 6 | 5 | 4 | 3 | 2 | 1 | |
| 8 bits of Message Type | | | | | | | | 1 |

### Table 4-47.1 O Notes Message Type [O]

| Bits 1-8 (Hex) | Type |
| --- | --- |
| 00 | Reserved |
| 01 | ACK-Acknowledge |
| 02 | AUR-Authentication Response |
| 03 | AUT-Authentication Request |
| 04 | BAI-Base Assist Information |
| 05 | BAR-Base Assist Request |
| 06 | CIP-Set Cipher Mode |
| 07 | CNC-Call Connected |
| 08 | CNL-Connect Link |
| 09 | CSC-Circuit Switch Complete |
| 0A | DRG-De-registration Request |
| 0B | HLD-Hold |
| 0C | HOF-Handover Failed |
| 0D | MAI-MS Assist Information |
| 0E | MAR-MS Assist Request |
| 0F | OHC-Originating Handover Complete |
| 10 | OHR-Originating Handover Request |
| 11 | ORG-Originate Call |
| 12 | RCP-Registration Complete |
| 13 | REL-Release Link |
| 14 | RRQ-Registration Request |
| 15 | SPR-Specific Response |
| 16 | STL-Set Link |
| 17 | SYN-Synchronize |
| 18 | THC-Terminating Handover Complete |
| 19 | THR-Target Handover Request |
| 1A-7F | Reserved |
| 80-FF | TRA-Transport Message w. TCID |

If the most significant bit of the Message Type is set to 1, the message is a Transport Message. The seven least significant bits are used to specify the Transport Channel ID with which the data is associated.

```
           Bits                          Octets

     8    7    6    5    4    3    2    1
   ┌────┬──────────────────────────────────┐
   │ 1  │            TCID                   │   1
   └────┴──────────────────────────────────┘
```

Table 4-47.2

| M Notes Message Type [M] | |
| --- | --- |
| The Message Type information element defines the format for the remainder of the M Notes message. | |
| Value (Hex) | Description |
| 01 | Diagnostic |
| 02 | Initialize OTA |
| 03 | Register |
| 04 | Deregister |
| 05 | Setup Link |
| 06 | Release Link |
| 07 | Connect Link |
| 08 | Acknowledge |
| 09 | Provision OTA |
| 0A | Radio Status |
| 0B | Link Status |
| 0C | Data Message |
| 0D | Power Off |
| 0E | Circuit Switch Complete |
| 0F | Begin Traffic |
| 10 | Acknowledge |
| 11 | Authenticate |
| 12 | Authenticate Reply |

Table 4-47.3

| N Notes Message Type [N, I] | |
| --- | --- |
| This Message Type information element defines the use of O-Notes and I-Notes. It defines the action of the message as well as the format of the message. | |
| Type (Hex) | Meaning |
| 00 | Reserved |
| 01 | Acknowledge |
| 02 | Authenticate |
| 03 | Authenticate Reply |
| 04 | Base Status Request |
| 05 | Base Status Response |

Table 4-47.3   (continued)

| Type (Hex) | Meaning |
|---|---|
| **N Notes Message Type [N, I]** ||
| 06 | Cipher ACK |
| 07 | Circuit Switch Complete |
| 08 | Connect Link |
| 09 | Deregister |
| 0A | DTMF Start |
| 0B | DTMF Stop |
| 0C | Originating Handover |
| 0D | Page |
| 0E | Page Response |
| 0F | Register |
| 10 | Registration Reject |
| 11 | Service Information |
| 12 | Set Cipher Mode |
| 13 | Set Link |
| 14 | Terminating Handover |
| 15 | Terminating Handover Complete |
| 16 | Transport |
| 17 | Update ID |
| 18-7F | Reserved for Notes RMT |
| 80 | Diagnostic |
| 81 | Diagnostic Result |
| 82 | Download |
| 83 | Provision Table |
| 84 | Read Table |
| 85 | Reject |
| 86 | Reset |
| 87 | Reset ACK |
| 88 | Table Data |
| 89-FF | Reserved for Notes_OAM |

**Transport Message Types**

If the most significant bit of the Message Type is set to 1, the message is a Transport Message. The 7 least significant bits are used to specify the Transport Channel ID with which the data is associated.

```
    8   7   6   5   4   3   2   1   Octets

  ┌───────────────┬───────────────────┐
  │       1       │       TCID        │    1
  └───────────────┴───────────────────┘
```

**MNC (Mobile Network Code)**

The MCC (Mobile Network Code) identifies the network within the country in which the network exists. In combination with the MCC if forms the PLMN and uniquely identifies a given network operator. It never appears as an independent information element in any Note. Test

```
   8    7    6    5    4    3    2    1    Octets

 ┌─────────────────────────────────────────┐
 │        8 bits of Mobile Network Code     │     1
 └─────────────────────────────────────────┘
```

**Table 4-48 MS Capabilities [O]**

The MS Capabilities information element defines the capabilities (features) present in the user station 102 (e.g., whether the user station 102 can receive a FAX or a data connection, whether the user station 102 is capable of ciphering, etc.).

```
              Bits                        Octets

   8    7    6    5    4    3    2    1
 ┌─────────────────────────────────────────┐
 │         16 bits of MS Capabilities       │     1
 ├─────────────────────────────────────────┤
 │                                          │     2
 └─────────────────────────────────────────┘
```

**Network Periodic Control [M]**

The Network Periodic Control information element specifies whether the MS OTA should perform automatic periodic network registration.

|  | 8 | 7 | 6 | 5 | 4 | 3 | 2 | · 1 | Octets |
|---|---|---|---|---|---|---|---|---|---|
| 8 bits of Network Periodic Control | | | | | | | | | 1 |

| Value (Hex) | Description |
|---|---|
| 00 | OTA should NOT perform network periodic registration |
| 01 | OTA should perform network periodic registration |
| 02-FF | Reserved |

**Network Service Request Data [O,M,N,I]**

|  | 8 | 7 | 6 | 5 | 4 | 3 | 2 | 1 | Octets |
|---|---|---|---|---|---|---|---|---|---|
| 16 octets of Network Specific Service Request Data | | | | | | | | | 1 |
|  | | | | | | | | | 2 |
|  | | | | | | | | | ... |
|  | | | | | | | | | 24 |

**Network Service Request Data for DCS1900 Systems**

For DCS1900, this is the CM Service Request.

**Network Service Response [O,M,N,I]**

Bits

|  | 8 | 7 | 6 | 5 | 4 | 3 | 2 | 1. | Octets |
|---|---|---|---|---|---|---|---|---|---|
| 3 octets of Network Specific Service Response Data | | | | | | | | | 1 |
|  | | | | | | | | | 2 |
|  | | | | | | | | | 3 |

**Network Service Response for DCS1900 Systems**

For DCS1900, this is the CM Service Accept (octets in first two octets of the element) or the CM Service Reject (3 octets).

**Table 4-49 OTA Map [O]**

The OTA Map information element describes the mapping of the OTA time slots to a particular user station 102. The format of this element is dependent upon the OTA Map Type information element in the same packet.

## Table 4-50.1 Superframe Map:

```
                         Bits                    Octets

       8     7   6     5    4    3    2    1
    ┌──────────────────────────────────────┬─────┐
    │ 16 bits of slot mapping description   │  1  │
    ├──────────────────────────────────────┤─────┤
    │                                       │  2  │
    ├──────────────────────────────────────┤─────┤
    │        16 bits reserved               │  3  │
    ├──────────────────────────────────────┤─────┤
    │                                       │  4  │
    └──────────────────────────────────────┴─────┘
```

Each bit in the superframe map indicates a time slot relative to the current time slot.

| Octet | Bit | Time slot |
|-------|-----|-----------|
| 1 | 1 | Same time slot, next frame |
| 1 | 2 | This frame, one time slot later |
| 1 | 3 | This frame, two time slots later |
| 2 | 8 | This frame, 15 time slots later |

## Table 4-50.2 Subframe Map:

| | Bits | | Octets |
|---|---|---|---|

| 8 7 6 | 5 4 3 2 1 | |
|---|---|---|
| Reserved | Submultiplex | 1 |
| Reserved | Frame Phase | 2 |
| Reserved | Time lot Phase | ·3 |
| Reserved | | 4 |

| | |
|---|---|
| Submultiplex Rate (Subrate) | The number of frames skipped between transmissions, plus one. |
| Frame Phase | The number of frames skipped before the first transmission. |
| Time slot Phase | The number of time slots skipped before the first transmission. |

As an example, where the subrate is four, the frame phase is three, and the time slot phase is two, the user station 102 will wait three time frames 301 and two time slots 302 before the first transmission. Subsequent transmissions will occur in the same time slot 302 every fourth time frame 301.

## Table 4-51 OTA Map Type [O]

The OTA Map Type information element identifies the type of OTA Map to follow.

| | Bits | Octets |
|---|---|---|

| 8 7 6 5 4 3 2 1 | |
|---|---|
| 8 bits of OTA Map type | 1 |

| OTA Map Type | Meaning |
|---|---|
| 0 | Unused |
| 1 | Superframe |
| 2 | Subframe |
| 3-256 | Reserved |

**Page Group Activity [O]**

The Page Group Activity information element indicates, in each paging roll, which of the 8 Page Groups - one corresponding to each bit in the information element -- are currently active, i.e., have an active page for at least one member MS of the page group. The BS and MS determine which Page Group a particular MS belongs to using the same algorithm used for the Leveling Bits field in the BS Capabilities Information element.

```
              Bits                    Octets

   8    7   6   5   4   3   2   1
 ┌──────────────────────────────────┐
 │      Page Group Activity Bits     │       4
 └──────────────────────────────────┘
```

**Paging/Broadcast Countdown [O]**

The Paging/Broadcast Countdown information element will appear in the D Channel of all CT-GPO (General Poll) messages. It will indicate the time, in frames, until the next Frame in which a Paging Cycle or a Broadcast Cycle will start. The high order bit might be used to distinguish between a Paging Countdown and a Broadcast Countdown if such distinction proves desirable. Since this feature has not yet been implemented, this field will always contain 0-which is basically the same as "now."

```
              Bits                    Octets

   8    7   6   5   4   3   2   1
 ┌──────────────────────────────────┐
 │      Paging/Broadcast  Countdown  │       4
 └──────────────────────────────────┘
```

**PID [O,M,N,I]**

## Table 4-52 PID [O, M, N, I]

This information element is the personal identification number assigned to this user station 102. The low order byte defines the PID Type. The identifier is represented by the following 64 bits. The low order bit of the 64 bit number resides in Bit 1 of Octet 2 while the high order bit of the 64 bit number resides in Bit 8 of Octet 9.

If the PID Type is absolute, the PID absolutely and uniquely identifies the user station 102. The number is 72 bits long.

```
              Bits                         .    Octets

        8    7    6    5    4    3    2    1
      ┌──────────────────────────────────────┬─────┐
      │                PID Type               │  1  │
      ├──────────────────────────────────────┼─────┤
      │   64 bits of MS identification number │  2  │
      ├──────────────────────────────────────┤     │
      │                                       │     │
      │                   .                   │     │
      │                   .                   │     │
      │                   .                   │     │
      ├──────────────────────────────────────┼─────┤
      │                                       │  9  │
      └──────────────────────────────────────┴─────┘
```

## Table 4-53.1 PID Type

| PID Type | Meaning |
|----------|---------|
| 0 | None |
| 1 | Permanent PID |
| 2 | Temporary PID |
| 3 | ESN |
| 4 | UPT# |
| 5 | HRef |
| 6-255 | Reserved |

In DCS1900 Systems, the Permanent PID associated with a user station 102 is the IMSI.

In DCS1900 Systems, the Temporary PID associated with a user station 102 MS is its TMSI.

In DCS1900 Systems, the ESN associated with an user station 102 is its IMEI.

A PID of Type=HRef occurs in only limited cases:

1. In a Specific Poll for the user station 102 from the (New) base station 104 during an Originating Handover.

2. In a Release Link (in either direction) during an Originating Handover (if the Originating Handover fails).

A number which uniquely -- within the PID Type -- identifies the user station 102.

## Table 4-54 PLMN (Public Land Mobile Network)

### PLMN (Public Land Mobile Network

The PLMN (Public Land Mobile Network) uniquely identifies the operator of the network.  It consists of the MCC and MNC.  The PLMN occupies the first three Octets of the Zone Information Element; it never appears as a distinct information element in any Note.

|  | Bits | | | | | | | Octets |
|---|---|---|---|---|---|---|---|---|
| 8 | 7 | 6 | 5 | 4 | 3 | 2 | 1 | |
| 16 bits of unique MCC | | | | | | | | 1 |
| | | | | | | | | 2 |
| 8 bits of unique MNC | | | | | | | | 3 |

**Poll Type [O, M]**

The Poll Type information element identifies the reason that the Poll was issued.

| Value | Meaning |
|---|---|
| 0 | Specific poll during Link Establishment |
| 1 | Specific Poll during Handover |
| 2 | Specific Poll during Lost Link Recovery |
| 3 | Transaction Acknowledged |
| 4 | Page Pending |
| 5 | C1 Reassignment |
| 6-255 | Reserved |

Transaction Acknowledged is a special case of a Specific Poll during Link Establishment. It tells the MS that the transaction requested by the Transaction Hint in the CT-GPR is complete and that there is no need for further communication.
Page Pending is the only Poll Type allowed for a CT-PRO. It can also appear in a CT-SPO if there is a Page Pending when one of the other Poll Types would normally have been sent.

## Table 4-55 Protocol [N, I]

The protocol information element identifies the signaling protocol.

| | Bits | | | | | | | Octets |
|---|---|---|---|---|---|---|---|---|
| 8 | 7 | 6 | 5 | 4 | 3 | 2 | 1 | |
| Protocol Identifier | | | | | | | | 1 |

| Protocol Type | Protocol |
|---|---|
| 1 | Notes RMT signaling protocol |
| 2 | Notes OAM signaling protocol |
| 3-255 | Reserved |

## Table 4-56 Registration Info [O]

Registration Info contains information that is required by the System for registration. The precise format of the Registration Info depends upon the value of System Type.

| Bits | | | | | | | | Octets |
|---|---|---|---|---|---|---|---|---|
| 8 | 7 | 6 | 5 | 4 | 3 | 2 | 1 | |
| 128 bits of Registration Info | | | | | | | | 1 |
| . | | | | | | | | 2 |
| . | | | | | | | | 3 |
| . | | | | | | | | 4 |
| . | | | | | | | | 5 |
| . | | | | | | | | 6 |
| . | | | | | | | | 7 |
| . | | | | | | | | 8 |
| . | | | | | | | | 9 |
| . | | | | | | | | 10 |
| . | | | | | | | | 11 |
| . | | | | | | | | 12 |
| . | | | | | | | | 13 |
| . | | | | | | | | 14 |
| . | | | | | | | | 15 |
| . | | | | | | | | 16 |
| . | | | | | | | | 17 |

## Table 4-56.1 DCS1900 Systems

For DCS1900 Systems, the Zone of the base station 104 on which the user station 102 was previously registered must be provided so the network 126 can locate the appropriate VLR for TMSI validation.

Bits                                    Octets

| 8 | 7 | 6 | 5 | 4 | 3 | 2 | 1 | |
|---|---|---|---|---|---|---|---|---|
| 40 bits (Old) Zone | | | | | | | | 1 |
| . | | | | | | | | 2 |
| . | | | | | | | | 3 |
| . | | | | | | | | 4 |
| . | | | | | | | | 5 |
| 88 bits Reserved | | | | | | | | 6 |
| . | | | | | | | | 7 |
| . | | | | | | | | 8 |
| . | | | | | | | | 9 |
| . | | | | | | | | 10 |
| . | | | | | | | | 11 |
| . | | | | | | | | 12 |
| . | | | | | | | | 13 |
| . | | | | | | | | 14 |
| . | | | | | | | | 15 |
| . | | | | | | | | 16 |
| . | | | | | | | | 17 |

## Table 4-56.2 Bellcore Generic C Systems

For Bellcore Generic C Systems, the required registration information consists of the user station's UPT# and ESN.

Bits                                    Octets

| 8 | 7 | 6 | 5 | 4 | 3 | 2 | 1 | |
|---|---|---|---|---|---|---|---|---|
| 64 bits of ESN | | | | | | | | 1 |
| . | | | | | | | | 2 |
| . | | | | | | | | 3 |
| . | | | | | | | | 4 |
| . | | | | | | | | 5 |
| . | | | | | | | | 6 |
| . | | | | | | | | 7 |
| . | | | | | | | | 8 |

| 64 bits reserved | 9 |
|---|---|
| . | 10 |
| . | 11 |
| . | 12 |
| . | 13 |
| . | 14 |
| . | 15 |
| . | 16 |
| . | 17 |

## Table 4-57 Registration Status [O, M]

The Registration Status identifies the user station's current registration status.

|  | Bits | | | | | | | Octets |
|---|---|---|---|---|---|---|---|---|
| 8 | 7 | 6 | 5 | 4 | 3 | 2 | 1 | |
| Page Pend | | Registration Status | | | | | | 1 |

Page Pend:

| value | meaning |
|---|---|
| 0 | There is no page pending |
| 1 | There is a page pending (only valid in CT-RCP) |

Registration Status:

| value | status |
|---|---|
| 0 | Not Registered |
| 1 | Accepted |
| 2 | Pending |
| 3-127 | <TBD> |

## Table 4-58 Registration Timer [O]

The Registration Timer information element sets the intervals between periodic re-registrations.

|  | Bits | | | | | | | Octets |
|---|---|---|---|---|---|---|---|---|
| 8 | 7 | 6 | 5 | 4 | 3 | 2 | 1 | |
| Network Interval | | | | Base Interval | | | | 1 |

Table 4-58.1

| Registration Timer: Base Interval | |
| --- | --- |
| Value | Interval |
| 0 | |
| 1 | |
| 2 | |
| 3 | |
| 4 | |
| 5 | |
| 6 | |
| 7 | |
| 8 | |
| 9 | |
| A | |
| B | |
| C | |
| D | |
| E | |
| F | |
| 0 | |
| 1 | |
| 2 | |
| 3 | |
| 4 | |
| 5 | |
| 6 | |
| 7 | |
| 8 | |
| 9 | |
| A | |
| B | |
| C | |
| D | |
| E | |
| F | |

## Table 4-59 Registration Type [O, N, I]

The Registration Type identifies the type of registration. Registration is the result of either a position change (geographic) or the expiration of the registration timer (periodic).

Bits                 Octets

| 8 | 7 | 6 | 5 | 4 | 3 | 2 | 1 | |
|---|---|---|---|---|---|---|---|---|
| Registration Type | | | | | | | | 1 |

Registration Type:

| value | type |
|-------|------|
| 0 | Base Geographic Registration |
| 1 | Network Geographic Registration |
| 2 | Base Periodic Reregistration |
| 3 | Network Periodic Reregistration |
| 4 | Power Up |
| 5 | Request SBT |
| 6-255 | Reserved |

## Table 4-60 Remaining Base Count [O]

The Remaining Base Count specifies the number of base stations 104 in addition to the current one (the one specified in the CT-OHR message containing the Information Element) for which the user station 102 intends to request an Originating Handover at this time.

Bits                 Octets

| 8 | 7 | 6 | 5 | 4 | 3 | 2 | 1 | |
|---|---|---|---|---|---|---|---|---|
| Remaining Base Count | | | | | | | | 1 |

**Table 4-61 Reserved [O, M, N, I]**

The Reserved information element represents unused space. A unused space is reserved for future use. All Reserved bits shall be set to zero by the transmitting station. All Reserved bits shall be ignored by the receiving station unless specifically defined otherwise.

Some Information Elements contain Reserved subfields. The same comments about reserved bits apply.

**Table 4-62 Resource Request Data [O, M, N, I]**

This 32 bit information element specifies the type of service being requested by the user station 102.

Bits Octets

| 8 | 7 | 6 | 5 | 4 | 3 | 2 | 1 | |
|---|---|---|---|---|---|---|---|---|
| DVS | | CRC-ARQ | | Symmetry | | Reserved | | 1 |
| Bandwidth | | | | | | | | 2 |
| DVP | Transport Protocol | | | | | | | 3 |
| Reserved | | | | | | | | 4 |

DCS1900 ignores this information element in the N Notes RMT Service Request message.

**Table 4-62.1 Bandwidth**

| value | meaning |
|-------|---------|
| 0-255 | <TBD> |

**Table 4-62.2 CRC-ARQ**

| value | meaning |
|-------|---------|
| 00 | Neither CRC nor ARQ in effect |
| 01 | Reserved |
| 10 | CRC in effect |
| 11 | CRC and ARQ in effect |

**Table 4-52.3 DVS**

| value | meaning |
|-------|---------|
| 00 | Reserved |
| 01 | Voice service requested |
| 10 | Data service requested |
| 11 | Signaling service requested |

107

Table 4-62.4 Symmetry

| value | meaning |
|-------|---------|
| 00 | Symmetric Bandwidth |
| 01 | Maximum MS bandwidth minimum BS bandwidth |
| 10 | Maximum BS bandwidth minimum MS bandwidth |
| 11 | Variable symmetry |

Table 4-62.5 Transport Protocol

| value | meaning |
|-------|---------|
| 0 | 8 bit transparency mode. |
| 1-255 | Reserved for future use |

Table 4-63 Service Provider [O, M]

This 16 bit information element, when present in a base-to-user signaling message, identifies the PCS service provider that operates the base station 105. When present in a user-to-base signaling message, it specifies the identification of the PCS service provider that the user station 102 wishes to use. The low order bit of this 16 bit element resides in Bit 1 of Octet 1 while the high order bit of this 16 bit element resides in Bit 8 of Octet 2.

|  | Bits |  |  |  |  |  |  | Octets |
|---|---|---|---|---|---|---|---|---|
| 8 | 7 | 6 | 5 | 4 | 3 | 2 | 1 | |
| 16 bits of unique Service Provider Identification number | | | | | | | | 1 |
| | | | | | | | | 2 |

Table 4-64 Service Type

The Service Type information element indicates the type of service being requested.

| value | meaning |
|---|---|
| 0000 | Null Service. Indicates that service resources are not yet being requested. |
| 0001 | Normal call |
| 0010 | Emergency (911) call |
| 0100 | Short Message Service |
| 1000 | Supplementary Service Activation |

When this information appears in a N Notes RMT Handover Request message, the only legal values are Normal Call and Emergency Call. Furthermore, DCS1900 may not be able to provide this element, in which case it will default to Normal Call.

**Set/Query [M]**

The field will have a value of 0 to indicate that query operation is to take place and a value of 1 to indicate that a set operation is to take place.

## Table 4-65 Slot Quality [O]

The Slot Quality information element identifies the radio frequency quality of the channel (time slot) in which the information element was received. To allow for flexibility, the meaning of the values is implementation specific.

|  | Bits |  |  |  |  |  |  | Octets |
|---|---|---|---|---|---|---|---|---|
| 8 | 7 | 6 | 5 | 4 | 3 | 2 | 1 | |
| 8 bits Slot Quality | | | | | | | | 1 |

| value | Slot Quality |
|---|---|
| 0 | <TBD> |
| 255 | |

## Table 4-68 Surrounding Base Table (SBT) [O]

| Bits | | Octets |

| 8 | 7 | 6 | 5 | 4 | 3 | 2 | 1 | |
|---|---|---|---|---|---|---|---|---|
| SBT Sequence # | | | | SBT Length | | | | 1 |
| Base 1 Info | | | | Base 1 Code Index | | | | |
| Base 1 Frequency Index | | | | | | | | 2 |
| Base 2 Info | | | | Base 2 Code Index | | | | |
| Base 2 Frequency Index | | | | | | | | 3 |
| . . . | | | | | | | | . . . |
| Base <SBT Length> Info | | | | Base <SBT Length> Code Index | | | | |
| Base <SBT Length> Frequency Index | | | | | | | | |

Note that the table is of variable length. When it occurs in the CT-RCP message, it can store a maximum of 10 base index pairs, when it occurs in the CT-BAI message, it can store a maximum of 11 base index pairs.

Includes the frequency index and the code index for the <ith> surrounding base station 104.

Table 4-68.1

| SBT: Base <i> Info | | | | |
|---|---|---|---|---|
| Information about Base <i> to help the user station 102 rank the base station 104. | | | | |
| Bits | | | | |
| 8 | 7 | 6 | 5 | Meaning if Bit is Set |
| 0 | 0 | 0 | 1 | This base station represents a Micro Cell |
| 0 | 0 | 1 | 0 | This base station is concentric with current base station |
| 0 | 1 | 0 | 0 | Reserved |
| 1 | 0 | 0 | 0 | Reserved |

Defines the number of base stations 104 which are contained in this SBT segment.

If the number of surrounding base stations 104 exceeds the maximum that can be held in the message (10 in the case of the CT-RCP), this number will indicate the number of following messages (CT-ASIs) required to transmit the rest of the data. The number will thus serve as:

An indication of the existence of more surrounding bases than will fit in the table.

A unique identifier of which subset of base stations 104 are contained in this SBT. E.g., a value of zero means this is the only (or last) set of SBT entries. A value of 2 means that there will be two additional SBT segments following the current one.

**Search Type [M]**

The Search Type information element specifies the type of search being requested.

|  | Bits |  |  |  |  |  |  | Octets |
|---|---|---|---|---|---|---|---|---|
| 8 | 7 | 6 | 5 | 4 | 3 | 2 | 1 | |
| 8 bits of Search Type | | | | | | | | 1 |

| Value | Description |
|---|---|
| 0 | Specific PLMN |
| 1 | Specific PLMN; if not found give PLMN List |
| 2 | PLMN List |
| 3 | Specific Zone |
| 4 | Specific Zone; if not found give Zone List |
| 5 | Zone List |
| 6 - 255 | Zone List |

**Search Time [M]**

The Search Time Information element specifies the amount of time in milliseconds associated with a search request.

|  | Bits |  |  |  |  |  |  | Octets |
|---|---|---|---|---|---|---|---|---|
| 8 | 7 | 6 | 5 | 4 | 3 | 2 | 1 | |
| 32 bits of Search Time | | | | | | | | 1 |
| | | | | | | | | 2 |
| | | | | | | | | 3 |
| | | | | | | | | 4 |

**Search Time: Search Request**

The Search Time information element specifies the maximum amount of time to perform the requested search.

**Search Time: Search Confirmation**

The Search Time information element specifies the actual amount of time spent performing the requested search.

**Service Provider [O, M]**

## Table 4-69 System Type [O]

The System Type information element identifies the code set of the supporting infrastructure.

Bits                                    Octets

| 8 | 7 | 6 | 5 | 4 | 3 | 2 | 1 | |
|---|---|---|---|---|---|---|---|---|
| System Type ||||||||  1 |

| value | System Type |
|-------|-------------|
| 0 | DCS1900 |
| 1 | Bellcore Generic C |
| 2-255 | Reserved |

## Table 4-70 TCID [O, M, N, I]

The TCID (Transport Channel ID) information element specifies the Transport Channel to which data in the message belongs.

Bits                                    Octets

| 8 | 7 | 6 | 5 | 4 | 3 | 2 | 1 | |
|---|---|---|---|---|---|---|---|---|
| Reserved || 6 bits of TCID |||||| 1 |

When Transport Data is embedded in an O Notes_RMT_CT-TRA message, the TCID is embedded in the Message Type. In this case:

. bit 8 of the Message Type is set to 1.
. bit 7 is used for segmentation: it is set to 1 for the last segment of a Transport Message and to 0 for all other segments.

| TCID | Meaning |
|------|---------|
| 0 | DCS1900 (SAPI 0) |
| 1 | Reserved |
| 2 | Reserved |
| 3 | DCS1900 (SAPI 3) |
| 4-63 | Reserved |

Defaults: When the Protocol in use is DCS1900, the TCID must be zero in all cases except when SMS traffic

is being sent.

**Table 4-71 Transport Data [O, M, N, I]**

The Transport Data information element contains 19 bytes (152 bits) of application level data transferred between the user station 102 and the base station controller 105. The low order bit of the data resides in bit 1 of octet 1 and the high order bit resides in bit 8 of octet 19. The Transport Data information element may be larger (e.g., up to 260 bytes using LAPD) for interfaces other than the O-interface, which is restricted in size due to the length of the over-the-air information packet.

| Bits | | | | | | | | Octets |
|---|---|---|---|---|---|---|---|---|
| 8 | 7 | 6 | 5 | 4 | 3 | 2 | 1 | |
| 152 bits of Transport Data | | | | | | | | 1 |
| | | | | | | | | 2 |
| . | | | | | | | | |
| . | | | | | | | | |
| . | | | | | | | | |
| | | | | | | | | 19 |

**TC Data [M, N, I]**

The TC Data Information element contains upper layer Transport Channel data. If there are more than 19 octets of TC Data, the TC Data information element will be segmented into 19 octet Transport Data [O] segments for transfer over the O interface.

| Bits | | | | | | | | Octets |
|---|---|---|---|---|---|---|---|---|
| 8 | 7 | 6 | 5 | 4 | 3 | 2 | 1 | |
| <DC Data Length> octets of CTC Data | | | | | | | | 1 |
| | | | | | | | | 2 |
| . . . | | | | | | | | 3 |
| | | | | | | | | 4 |
| | | | | | | | | variable |

**Data Length [M, N, I]**

The TC Data Length information element specifies the number of octets of TC Data to follow.

```
                                                                Octets
                              Bits
     8       7      6      5      3      2      1
   ┌─────────────────────────────────────────────┐
   │            16 bits of TC Data Length         │        1
   └─────────────────────────────────────────────┘
```

**Table 4-66 TCID   [O, M, N, I]**

The TCID (Transport Channel ID) information element specifies the Transport Channel to which data in the message belongs.

| Bits | | | | | | | | Octets |
|---|---|---|---|---|---|---|---|---|
| 8 | 7 | 6 | 5 | 4 | 3 | 2 | 1 | |
| Network Type | | | | | Application Instance | | | 1 |

When Transport Data is embedded in an O-Notes_RMT_CT-TRA message, the TCID is embedded in the Message Type. In this case:

- bit 8 of the Message Type is set to 1 (in all other cases it is set to O).
- bits 1 -7 identify the Transport Channel for the message data.

**TCID: Network Type**

The Network Type Field consists of 3 bits which are used to identify a particular external network to which the CCT system is connected.

| Value | Meaning |
|---|---|
| 0 | DCS1900 |
| 1 | Reserved |
| ... | ... |
| 6 | Reserved |
| 7 | OAM |

**TCID: Application Instance**

The Application Instance Field consists of 4 bits which are used to identify a particular Application Instance within the specified Network.
For DCIS1900, the values are:

| Value | Meaning |
|---|---|
| 0 | CC/SS/MM |
| 1 | Reserved |
| 2 | Reserved |
| 3 | SMS |

(continued)

| Value | Meaning |
|-------|---------|
| 4-15 | Reserved |

For OAM, the values are:

| Value | Meaning |
|-------|---------|
| 0-15 | |

## Table 4-67 Traffic Type [M]

The Traffic Type information element specifies a type of B Channel traffic. (The values for Traffic Type are the same as those for the DVS field in the Resource Request Data Information Element.)

| Bits | | | | | | | | Octets |
|---|---|---|---|---|---|---|---|---|
| 8 | 7 | 6 | 5 | 4 | 3 | 2 | 1 | |
| 8 bits of Traffic Type | | | | | | | | 1 |

| Value (hex) | Description |
|-------------|-------------|
| 00 | Reserved |
| 01 | Voice |
| 02 | Data |
| 03 | Signaling |

**Transport Data [O]**

. The Transport Data information element contains 17 bytes (152 bit) of application level data transferred between the MS and BS. It will either contain the same data as the TC Data [M, N, I] information element or will contain a 19 byte segment of that data. Segmentation is performed in the MS-OTA and BS-OTA

| Bits | | | | | | | | Octets |
|---|---|---|---|---|---|---|---|---|
| 8 | 7 | 6 | 5 | 4 | 3 | 2 | 1 | |
| 152 bits of Transport Data | | | | | | | | 1 |
| | | | | | | | | 2 |
| | | | | ● | | | | |
| | | | | ● | | | | |
| | | | | ● | | | | |
| | | | | | | | | 10 |

**Transport Retry Count [M]**

The Transport Retry Count information element specifies the number of times to retry transmitting the data contained in the Transport_Req.

```
                     Bits                              Octets

    8      7      6      5      4      3      2      1

  ┌─────────────────────────────────────────────────┐
  │         8 bits of Transport Retry Count          │         1
  └─────────────────────────────────────────────────┘
```

**Transaction Hint [O]**

The MS provides the Message Type of the first CT message it plans to send after it has acquired the link.

**Transaction Hint Qualifier [O]**

The MS provides additional information (not implicit in the Message Type) concerning the transaction it plans to perform.

**Transaction Hint: RRQ (Registration Request) Qualifier**

The MS will provide the Registration Type to allow the BS to know what kind of registration the MS will be requesting.
If the MS is requesting a Network Level Registration, the BS can use the MAP Information Elements in the CT-SPO message to put the MS directly into Slow Control Traffic.
If the MS is requesting a BS Level Periodic Registration, the BS can use the CI and Cause Elements in the CT-SPO message to tell the MS that it is registered (the Cause IE) and that the BS does not expect to hear from it again for this transaction (C1 Il set to zero).

**Transaction Hint: SRWQ (Service Request) Qualifier**

The MS will provide the Resource Request Data Information Element to allow the BS to know whether this is a 911 call or a normal call and the minimum and maximum acceptable Channel Rates for the call.
If the MS is requesting a 911 call and there is no channel available to put the call through, the BS can either:

1. use the Map Information Elements in the CT-SPO to put the MS directly into Slow Control Traffic -- tc wait for a channel to become available -- or
2. Use the CI and Cause Elements in the specific poll to tell the MS that it is queued and will be paged as soon as there is a channel available (the Cause IE) and that the BS does not expect to hear from it again until it is paged (CI IE set to zero).

**Transaction Hint: THR (Terminating Handover Request) Qualifier**

The MS will provide the Resource Request Data Information Element to allow the BS to know whether this is a 911 call or a normal call and the minimum and maximum acceptable Channel Rates for the call.

**Transport Method [O, M, N, I]**

The Transport Method information element contains data to specify bandwidth, protocol and other control information for TRAUs. Its format differs based on the value of the DVS field in the Resource Request Data information element. If the DVS field indicates voice, then the format of Transport Method is:

Bits                                                     Octets

| 8 | 7 | 6 | 5 | 4 | 3 | 2 | 1 | |
|---|---|---|---|---|---|---|---|---|
| Speech Algorithm | | | | Reserved | | | | 1 |
| Reserved | | | | | | | | 2 |
| Reserved | | | | | | | | 3 |
| Reserved | | | | | | | | 4 |

If the DVS field indicates data, then the format of Transport method is:

Bits                                                     Octets

| 8 | 7 | 6 | 5 | 4 | 3 | 2 | 1 | |
|---|---|---|---|---|---|---|---|---|
| Network Rate Adaptation | | | | | | | | 1 |
| Reserved | | | | | | | | 2 |
| Reserved | | | | | | | | 3 |
| Reserved | | | | | | | | 4 |

| Transport Method: Speech Algorithm | |
|---|---|
| Value | Meaning |
| 0 | |
| 1 | |
| 2 | |
| 3 | |

| Transport Method: Network Rate Adaptation | |
|---|---|
| Value | Meaning |
| 0 | GSM Transparent 9.6 kbps |
| 1 | GSM Transparent 4.8 kbps |
| 2 | GSM Transparent 2.4 kbps |
| 3 | GSM Transparent 1.2 kbps |
| 4 | GSM Transparent 600 bps |
| 5 | GSM Transparent 1200/75 bps |
| 6 | GSM Non-Transparent 12 kbps |
| 7 | GSM Non-Transparent 6 kbps |

## Table 4-72 UPT [O, M, N, I]

This 80 bit information element is the Universal Personal Telecommunications number that has been ranted to the subscriber operating the user station 102, and consists of 20 four-bit characters.

| | | | Bits | | | | | Octets |
|---|---|---|---|---|---|---|---|---|
| 8 | 7 | 6 | 5 | 4 | 3 | 2 | 1 | |
| 80 bits of Universal Personal Telecommunications Number | | | | | | | | 1 |
| | | | | | | | | 2 |
| | | | . | | | | | |
| | | | . | | | | | |
| | | | . | | | | | |
| | | | | | | | | 10 |

**Table 4-73 Value [M]**

The Value field contents are variable depending upon the item in the OTA which is being queried or modified.

## Table 4-74 Zone [O, M, N, I]

The Zone and the Base ID combine to uniquely identify each base station 104 in the world. The precise format of the Zone depends upon the value of the System Type.

| | | | Bits | | | | | Octets |
|---|---|---|---|---|---|---|---|---|
| 8 | 7 | 6 | 5 | 4 | 3 | 2 | 1 | |
| 40 bits of unique Zone | | | | | | | | 1 |
| | | | . | | | | | 2 |
| | | | . | | | | | 3 |
| | | | | | | | | 4 |
| | | | | | | | | 5 |

A subset of the Zone, uniquely identifies the operator of the network. This portion is called the PLMN (Public Land Mobile Network) and, in the case of DCS1900 Systems, consists of the MCC and MNC.

## Table 4-74.1 Zone: DCS1900 Systems

For DCS1900 Systems, the Zone is the Location Area Identifier (LAI); it consists of a 16 bit Mobility Country Code (MCC), an 8 bit Mobility Network Code (MNC) and a 16 bit Location Area Code (LAC).

| | Bits | | | | | | | Octets |
|---|---|---|---|---|---|---|---|---|
| 8 | 7 | 6 | 5 | 4 | 3 | 2 | 1 | |
| 16 bits of unique MCC | | | | | | | | 1 |
| | | | | | | | | 2 |
| 8 bits of unique MNC | | | | | | | | 3 |
| 16 bits of unique LAC | | | | | | | | 4 |
| | | | | | | | | 5. |

## Table 4-74.1.1 LAC

The LAC is an Location Area Code. The combination of the Base ID, MCC, MNC and LAC uniquely identify a given base station 104.

| | Bits | | | | | | | Octets |
|---|---|---|---|---|---|---|---|---|
| 8 | 7 | 6 | 5 | 4 | 3 | 2 | 1 | |
| 16 bits of Location Area Code | | | | | | | | 1 |
| | | | | | | | | 2 |

## Table 4-74.1.2 MCC

The MCC is a Mobility Country Code. The combination of the Base ID, MCC, MNC and LAC uniquely identify a given base station 104.

|  | Bits |  |  |  |  |  |  | Octets |
|---|---|---|---|---|---|---|---|---|
| 8 | 7 | 6 | 5 | 4 | 3 | 2 | 1 | |
| 16 bits of Mobility Country Code | | | | | | | | 1 |
| | | | | | | | | 2 |

## Table 4-74.1.3 MNC

The MNC is a Mobility Network Code. The combination of the Base ID, MCC, MNC and LAC uniquely identify a given base station 104.

|  | Bits |  |  |  |  |  |  | Octets |
|---|---|---|---|---|---|---|---|---|
| 8 | 7 | 6 | 5 | 4 | 3 | 2 | 1 | |
| 8 bits of Mobility Network Code | | | | | | | | 1 |

The operation of Notes to communicate Information Elements comprising user and signaling data within the communication system 101 can be explained by way of example with respect to the "Base ID" Information Element shown in Table 4-13. The Base ID is a 32-bit Information Element uniquely identifying within a particular message or Note a specific base station 104. The Base ID Information Element may be communicated within the communication system in O-Notes, M-Notes, N-Notes and I-Notes. For example, the Base ID Information Element is contained within the "Circuit Switch Complete" N-Note shown in Table 3-9, the "Circuit Switch Complete" M-Note shown in Table 1-7, and the "CT-CSC (Circuit Switch Complete)" O-Note shown in Table 2-10.

The operation of Notes to execute internal operations within the communication system 101 may be explained with respect to a process for switching communication paths for a mobile user station 102 within the communication system 101. Such a switch might occur, for example, when a user station 102 begins to leave a cell 106 for a first base station 104 with which it is communicating, and begins to enter a second cell 106 for a second base station 104. In that case, it may be desired to handoff communication with the user station 102 from the first base station 104 to the second base station 104.

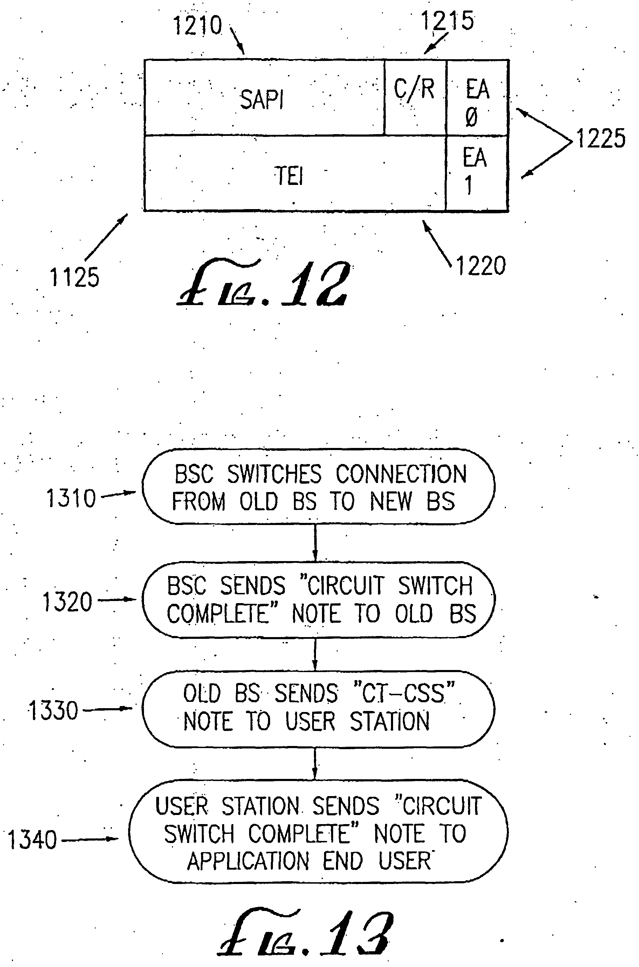

Figure 13 is a flowchart setting forth a procedure for communicating the completion of a handoff of a mobile user station 102 between a first base station 104 and a second base station 104 in the communication system 101, wherein the two base stations 104 are connected to the same base station controller 105.

In a first step 1310, the base station controller 105 initiates a process to switch the call connection from the first base station 104 to the second base station 104. In a next step 1320, the base station controller 105 communicates a Circuit Switch Complete N-Note across the N-Interface 620 between the base station controller 105 and the first base station 104. The format for the Circuit Switch Complete N-Note is given in Table 3-9 and includes an Information Element containing the Base ID of the second base station 104.

In a next step 1330, the base station 104 communicates a CT-CSC (Circuit Switch Complete) O-Note across an O-Interface 610 between the first base station 104 and the user station 102. The format for the CT-CSC (Circuit Switch Complete) O-Note is given in Table 2-10. As shown in Table 2-10, the CT-CSC (Circuit Switch Complete) O-Note passes along the Information Element for the Base ID of the second base station 104.

The CT-CSC (Circuit Switch Complete) O-Note passes some common Information Elements from the Circuit Switch Complete N-Note, such as the New Base ID and HRef (Handover Reference Number), to the mobile user station 102. By contrast, the base station 104 does not pass the PID (personal ID) Information Element to the mobile user station 102 in the O-Note, as the mobile user station 102 already knows its own PID. The PID which is contained in the N-Note is used by the base station 104 so that it can identify the particular-user station 102 for which the base station controller 105 has completed a circuit switch. With the PID, the base station 104 can determine the proper slot within its polling loop for transmitting the O-Note containing a CT-CSC (Circuit Switch Complete) message.

Similarly, for each N-Note received from the base station controller 104 across the N-Interface, the base station 104 uses some Information Elements for its own internal operations, and passes other Information Elements along to the mobile user station 102.

In a next step 1340, the mobile user station 102 communicates a Circuit Switch Complete M-Note across an M-Interface 605 between the mobile communication transceiver in the user station 102 and an application end user hosted in the user station 102. The Circuit Switch Complete M-Note contains the Base ID Information Element. The Circuit Switch Complete M-Note also contains other Information Elements (e.g., BSC ID, Facility) added by the mobile communication transceiver 603 in the mobile user station 102. By contrast, the Circuit Switch Complete M-Note does not contain the HRef Information Element which is used by the mobile communication transceiver 603 to identify the particular handover request.

**Layer Two O-Interface Definition**

This section presents data link layer 424, Fig. 4A, the RF link protocol architecture of the O-Interface 610, Fig. 6. TDMA frame structures are defined and the underlying slot structure for TDD connection is presented. For example, a transmission, either from the base station or from the mobile user station, includes frame types and headers that are required to identify the specific purpose of that transmission. Additional information is provided to the receiving device that allows it to determine information bandwidth symmetry, whether error correction is applied and if the received transmission is part of an aggregated bandwidth connection. These processes are described in the following text.

**Frame Format**

**Frame Format Normal**

Each normal frame is composed of sixteen TDMA time slots where duplexing is accomplished by providing TDD within each TDMA frame. A channel composed of one time slot per frame provides one 9.6 kbps full duplex radio path for raw data. The time slots are not numbered. The numbers are shown in Table 5.1 for reference only. There is no frame mark transmitted over the air. Proper slot synchronization shall be performed by timing.

**Frame Format Extended Range**

An extended range frame shall be composed of 8 TDMA time slots where duplexing is accomplished by providing TDD within each TDMA slot. The slots are not numbered. The use of this is deployment specific and is used in applications where range is extended (the excess time in each expanded time slot is used for Guard Time to allow larger propagation delays for extended range). The numbers are shown in table 5.1 for reference only. There is no index associated with the frame. Proper slot synchronization is performed solely by timing. Both frame format normal and frame format extended range have the identical frame time (20 ms).

| Information Element |
|---|
| Slot 1 |
| Slot 2 |
| Slot 3 |
| Slot 4 |
| Slot 5 |
| Slot 6 |
| Slot 7 |
| Slot 8 |
| Slot 9 |
| Slot 10 |
| Slot 11 |
| Slot 12 |
| Slot 13 |
| Slot 14 |
| Slot 15 |
| Slot 16 |

| Information Element |
|---|
| Slot 1 |
| Slot 2 |
| Slot 3 |
| Slot 4 |
| Slot 5 |
| Slot 6 |
| Slot 7 |
| Slot 8 |

**Table 5.1**

**Normal and Extended Range Frame Formats**

**Channel Acquisition**

A mobile user station attempting to communicate with a base station shall seize at least one channel on that base station. This is accomplished by responding to a Base General.Poll with a mobile user station General Response. The General Response for this mobile user station, the base station shall respond with a Specific Poll which contains the PID of this mobile user station. On reception of such a Specific Poll, the mobile user station may transition into the Traffic mode.

Until the mobile user station receives a Specific Poll containing its PID, the mobile user station shall not seize the channel and must wait a pseudo random time based upon the PID and then try again in a manner similar to the backoff procedure of ANSI/IEEE 802.3. When the base station is ready to assign a channel to the mobile user station and initiate communications with the mobile user station, the base station shall issue a Specific Poll packet containing the PID of the mobile user station.

**Multiple Associated Signaling Time Slots per Frame**

Normal time slot synchronization shall be accomplished by timing. Both the base station and mobile user station shall know which time slots have been assigned for communication. The mobile user station shall send its signaling information to the mobile user station in the first half of the TDD time slot; the base station shall send its signaling information in the second half of the TDD time slot. The mobile user station shall synchronize and shall maintain timing synchronization on the base station transmissions. The mobile user station shall maintain timing synchronization with the base station for up to one second in the absence of received base station transmissions.

If available, multiple time slots per frame shall be used for polling and signaling traffic. To accommodate this, the base station shall assign a temporary address known as the Correlative ID C1, to the mobile user station on the first Specific Poll. This Correlative ID shall then be carried in further signaling traffic from the base station to the mobile user station. The mobile user station shall search for this ID in all traffic. The mobile user station can then respond to any signaling traffic time slot containing this Correlative ID. Unused Correlative IDs shall be maintained in a pool by the base station. When communication has ended between the base station and mobile user station, the Correlative ID shall be returned for reuse.

Any available time slot may be used by the base station to continue signaling communications with the mobile user station. The last time slot used by the base station for signaling traffic will become the first time slot for bearer traffic use unless otherwise specified by slot mapping information given to the mobile user station by the base station. If the base station returns to signaling traffic at a later time on the current channel, the Correlative ID will still be effective, and the base station may use any available time slot for further control traffic.

**Asymmetric Channels**

Traffic flow between the base station and mobile user station may be either symmetric or asymmetric. The total number of bits per TDD time slot shall remain constant in either case. The flow shall be controlled by the base station acting upon the Bandwidth Request bit in the mobile user station to base station traffic header. The normal flow is symmetric with an equal number of bits (except for the header bits) assigned in each direction. The Bandwidth Grant bits in the header of the base station to mobile user station traffic channel shall establish the actual number of bits to be used in the next time slot of the channel.

The base station shall assign TDD time slot bandwidth (number of bits) using the following algorithm:

1. If only the base station (BS) requires additional bandwidth, then the base station shall be granted the additional bandwidth for the next time slot assigned to that mobile user station.
2. If only the mobile user station (MS) requires additional bandwidth, then the mobile user station shall be granted the additional bandwidth for the next time slot assigned to that mobile user station.
3. In all other cases, symmetric bandwidth shall be granted for the next available time slot assigned to that mobile user station.

**Broadcast Channels**

The asymmetry of the channel may be taken to its logical extreme by granting the entire bandwidth of each time slot to the base station to produce a broadcast channel. The nature of this channel shall be indicated by the Bandwidth Grant bits in the base station time slot header (they apply to the next time slot in the channel). Multiple simultaneous Broadcast Channels shall be supported. During broadcast, the bits normally used for the D-Channel shall be used as a broadcast identifier. Since this occurs in the same position as the Correlative Identifier, the difference in usage is signaled by the Bandwidth Grant bits.

**Super Channel**

The ability to assign multiple time slots in the frame may be negotiated for and assigned to an individual mobile user station. The negotiation may take place at any time via signaling traffic. The assigned TDD time slot, if available, shall be communicated by the base station to the mobile user station via the OTA Map Type and OTA Map information elements. Channel synchronization shall be maintained by the mobile user station based on frame timing.

The handover procedure shall account for the multiplicity of time slots per channel assigned to the transferring mobile user station. A base station shall have the appropriate number of time slots available to become a candidate as a terminating base station for handover. The time slots need not be available in the same positions in the frame as those in the originating base station.

**Logical Sub Channel**

A mobile user station need not be granted a time slot in every frame. Time slots may be granted in frames separated by an integral number of intervening frames. The maximum limit on the separation of frames allocated to a single mobile user station is one time slot every 25 frames or every 0.5 seconds. This would yield a channel with a raw full duplex rate of 384 bps.

**Multiple Mode Traffic**

A single mobile user station may have multiple connections established through the Base Station to the network via multiple channels. One channel may, for example, be assigned to audio traffic while other channels are devoted to data traffic.

**O_Notes_RMT Protocol: Packet Formats**

There are two basic types of OTA Packets:

> 1. Signaling Packets, which are used to transfer control information between the base station and the mobile user station, and
> 2. Bearer Packets, which are used to transfer Voice and Data Traffic between the base station and the mobile user station.

Two packets are transmitted during each TDD time slot, one from the mobile user station to the base station and one from the base station to the mobile user station. Each packet is formatted to be entirely self-contained within its portion of the slot. Error correction and detection is achieved by use of the Frame Check Word (FCW) which appears in all packets. Error recovery of individual packets is left to the higher Protocol handlers of network layer 422, although the ARQ mechanism may be optionally employed.

The only difference between the Packets sent by the Base Station and those sent by the Mobile Station is the size (and format) of the Header: 23 bits in Packets originating from the base station and 17 bits in Packets originating from the mobile user station.

Data is not transmitted over-the-air in octets (multiples of 8 bits). The lengths of the information elements shown in the following formats and packets are the lengths seen by the controlling software.

**Signaling Packet Format**

Signaling Packets are always symmetric, thus there are no High or Low Bandwidth Packet Formats. (It is possible that asymmetric signaling packets will be defined in the future.)

| Information Element | Length in Bits |
|---|---|
| Header (17 or 23 bits) | 24 |
| D Channel | 8 |
| B Channel | 160 |
| Reserved for FEC | 32 |
| FCW | 16 |

<Total Bits in mobile user station>     240

**Bearer Packet Format**

Bearer Packets are used to transmit Voice or Data traffic end-to-end through the CCT system. There are three varieties of Bearer Packets: high bandwidth, low bandwidth and symmetric bandwidth. (From the base station, there is also a broadcast variety of Bearer Packet.)

When the OTA link is symmetric, both the base station and the mobile user station will transmit a symmetric bandwidth packet. When the OTA link is asymmetric, one side will transmit a high bandwidth packet and the other side will transmit a low bandwidth packet. Which side transmits which size packet will be determined by the Symmetry Bits in the base station Header transmitted during the *previous* time slot in which the base station and mobile user station exchanged packets.

**High Bandwidth Packets**

High Bandwidth Packets are used to transport large amounts of bearer traffic or signaling traffic between the base station and the mobile user station.

| Information Element | Length in Bits |
|---|---|
| Header (17 or 23 bits) | 24 |
| D Channel | 8 |
| B Channel | |
| FCW | 16 |

**Layer 3 Air Interface Description**

**O_Notes_RMT Protocol: Control Traffic Packets**

This section supplies the message formats that are intrinsic to network layer 422, Fig. 4A, Layer 3 Air Interface protocol architecture of O-Interface 610, Fig. 6. These formats are described in detail to include the definition of the message, the required number of bits or field size and application of the message. This section describes the functions that are one level above the frame and slot structure but include the critical components that provide differentiation between types of traffic. Call flow diagrams are dependent on the message set described in this section.
Level 3, network layer 422 signaling information shall be contained in data packets. The details of these packets are given in the following section. Each signaling message shall be contained in one data packet.
Note that the data portion of all Control Traffic Packets is limited in length to 160 bits (20 octets). The remaining 32 bits.(4 octets) are specifically reserved for future use by a FEC (Forward Error Correction) mechanism if such a mechanism proves necessary.

**Special Interpretation of D Channel Information**

Since the CT-GPO is to all listening Mobile Stations, the D Channel does not contain a CI as it does for other signaling messages. Rather, it will be used for the Paging/Broadcast Countdown Information Element.

**Special Interpretation of D Channel Information**

As with all CT messages, the D Channel in the CT-GRP messages is used for the CI (Correlative ID). For an MS acquiring a link for the first time (i.e., no currently active link), the value of this field will be zero. This includes both MSs without any active link plus those MSs (in the future) which are acquiring an additional active link. For an MS which currently has an active session, and which is acquiring a link as part of lost link recovery or to perform signaling without interrupting its bearer traffic, this field will contain the current CI.

**Special Interpretation of D Channel Information**

The D Channel in the CT-SPO message is used for the CI (Correlative ID). Normally, this is how the MS learns the CI's value for the first time. There are cases where the BS has learned all it needs to know from the Transaction Hint given by the MS in its CT-GPR message. In these cases, the BS will respond to the MS with a CT-SPO message whose Cause information element (IE) provides the requisite information to the MS to complete the transaction. The CI of this IE will be zero, which the MS interprets as meaning that the BS does not expect to hear from it again.
The BS will use the Correlative ID IE in the CT-SPO message to either assign a new CI to the MS, or to tell it (with a value of zero) that it does not want the MS to respond again (except for a CT-ACK). The most likely reasons for a CI of zero is that the BS has all the information it needs for a BS Periodic Registration or for 911 queuing, but there may be other reasons (which will be identified in the Cause information element).

**O_Notes_RMT Protocol: Using The D-Channel**

The D-Channel is a one-byte element of the OTA Packets which is used as a Secondary Signaling Channel for slow (or very short) signaling.

**D-Channel Data Rate**

| Channel Rate in Slots/ Frame | Equivalent Raw B-Channel Data Rate (bits/second) | D-Channel Data Rate (octets/ second | D-Channel Data Rate (bits/ second) |
|---|---|---|---|
| 1/32 | 300 | 1.88 | 12.5 |
| 1/16 | 600 | 3.13 | 25 |
| 1/8 | 1200 | 6.25 | 50 |
| 1/4 | 2400 | 12.5 | 100 |
| ½ | 4800 | 25 | 200 |
| 1/1 | 9600 | 50 | 400 |
| 2/1 | 19,200 | 100 | 800 |
| 3/1 | 28,800 | 150 | 1,200 |
| 4/1 | 38,400 | 200 | 1,600 |
| 5/1 | 48,000 | 250 | 2,000 |
| 6/1 | 57,600 | 300 | 2,400 |
| 7/1 | 67,200 | 350 | 2,800 |
| 8/1 | 76,800 | 400 | 3,200 |
| 9/1 | 86,400 | 450 | 3,600 |
| 10/1 | 96,000 | 500 | 4,000 |
| 11/1 | 105,600 | 550 | 4,400 |
| 12/1 | 115,200 | 600 | 4,800 |
| 13/1 | 124,800 | | 5,200 |
| 14/1 | 134,400 | 700 | 5,600 |
| 15/1 | 144,000. | 750 | 6,000 |
| 16/1 | 153,600 | 800 | 6,400 |

**D-Channel Usage**

When the main circuit is used for Signaling, the D-Channel is used for:

- Correlative ID: In all Signaling Traffic (CT-messages) except for General Polling Messages. General Polling Messages -- i.e., CT-GPO and future messages -- do not contain a PID (or a CI) because they are addressed to multiple MSs.
- Reserved: The D-Channel in General Polling Messages is reserved for future use. Possible use includes a count down event timer to alert all mobiles to the beginning of an event such as a Paging loop or a broadcast message sequence, and b) a grouping message which identifies a group of MSs for which the General Polling Message is targeted.

When the main circuit is used for Bearer Traffic, the D-Channel is used for:

- Transport Notes whose channel preference includes the D-Channel. These notes generally contain information which is not critical, e.g., SMS messages.
- Very short OTA signaling transactions such as a MS's request for a TSI or a brief ASR/ASI type transaction: e.g., containing the MS's distance from the BS.

**D-Channel Protocol**

When the main circuit is being used for Bearer Traffic, all byte values in the D-Channel are legal as data. There are a few byte values which also have meaning as signaling information.

| Value (hex) | Meaning |
|---|---|
| FF | Filler |
| FE | Escape |
| FD | SOM (Start-of-Message) |
| FC | EOM (End-of-Message) |
| FB | Instant Request: TSI |
| FA | Instant Request: Separate Signaling Channel |

**Filler**

The Filler byte is send in the D-Channel whenever there is nothing else to send. The ARQ MSG# is never bumped for it and it is never re-sent in response to the ARQ NAK unless there is nothing else to send.

**Escape**

The Escape byte is sent in the D-Channel as an immediate prefix to any signaling byte -- including the Escape byte -which appears in the data being sent.

**SOM (Start-of-Message)**

The SOM Byte is sent to signal the beginning of a new Transport Note. It is required because of the ability to switch between the D and B channels for the transmission of the Transport Note. The character immediately after the SOM will be any legal O_Note Message Type; if the Message Type is one of the special signaling bytes, it will be prefixed with the Escape byte.

**EOM (End-of-Message)**

There EOM byte signals the end of a message. It will be followed by one of the following:

- a Filler byte,
- an SOM signaling the beginning of a new message,
- one of the Instant Request signaling bytes.

**Instant Request: TSI**

The IR (Instant Request): TSI byte is a "single-byte message" which is used to request a Time Slot Interchange. Since it is a single byte in length, it does not require either an SOM or an EOM.
The IR:TSI command is used by the MS to ask the BS to perform a TSI; the BS's reception of the IR:TSI command is confirmed by the ARQ bits of the BS's response message. The BS's acceptance of the TSI request is evidenced by the appearance of either a non-zero Next Slot Pointer in the header and an IR:TSI byte in the D-Channel (if the circuit is a single channel) or by the appearance of a CT-STL message and the MS's Cl in the D-Channel (if the circuit is either sub-rate or super-rate).
The BS can initiate a TSI by the same mechanism -- a non-zero Next Slot Pointer in the header and an IR: TSI byte in the D-Channel of the same packet.

**Instant Request: Separate Signaling Channel**

This is a "single-byte message" which is used to request a Separate Signaling Channel. Since it is a single byte in length, it does not require either an SOM or an EOM.
The IR:Separate Signaling Channel command is used by the MS to ask to BS to establish a separate signaling channel so that the MS may perform some higher speed signaling without preempting the existing B-Channel. The BS will grant the request if it can, in which case it will send a non-zero Next Slot Pointer in the header and an IR:Separate Signaling Channel byte in the D-Channel of the next packet.

The BS can also initiate the Separate Signaling Channel by the same mechanism -- a non-zero Next Slot Pointer in the header and an IR:Separate Signaling Channel byte in the D-Channel of the next packet.

### Data

The O_Note Message Type byte will be followed by one or more bytes of data, comprising the information elements of an O_note. Whenever one of the signaling bytes appears as a data bye, the segmenter will prefix the byte with an Escape byte.

All zero bytes at the end of the note -- the Reserved bytes[5]--will be omitted. It will be the responsibility of the D-Channel Segmenter to remove the bytes on transmission and to reinstate them on reception, if appropriate. Note that zero suppression will not occur for CT-TRA messages since there are no Reserved bytes.

### Encryption

If encryption is enabled on the D-Channel, it will occur on the date *(except* the Message Type) before the note is presented on the D-Channel Segmenter. Byte stuffing (i.e., the process of prefixing Escape bytes to ambiguous data bytes) is performed on the encrypted data.

### Delayed or No Response To An IR (Instant Request)

The MS must be prepared for the possibility that an IR will not be immediately responded to for two reasons:

1. The BS does not respond to the request because it does not have the resources to satisfy the request.
2. The BS doesn't have time to process the request before it-must respond. It may still honor the request during the next slot. If it does so, it will have the same effect as if the BS had initiated the request; it will be effective when the MS honors the Next Slot Pointer by responding in that slot. If the MS does not respond, the BS must assume that the MS did not hear it and proceed accordingly.

It is, of course, possible that the last non-Reserved byte(s) in the O_Note will be zero. This will not matter, since they will be recovered during re-segmentation.

If the BS doesn't have time to respond immediately but prepares to do so next slot, and the MS decides to preempt the bearer during the next slot, the BS will interpret the second request as a duplicate request and will ignore it. It will appear to the MS that the BS had responded to its second request immediately.

3. The MS D-Channel Segmenter did not send the request because the D-Channel is in the process of sending an Escape sequence. Specifically, an Escape was sent in the D-Channel last slot and the IR request cannot be sent this time or else it would be treated as a data character and the true data character would be treated as a command or as data when it appeared, unescaped, in the next slot. If an Escape sequence is in progress, the D-Channel Segmenter will notify the MS OTA -- *it will not save the command to send next slot* -- and the MS OTA will either re-send the request next slot or will adopt another strategy (e.g., sending a control message in the B-Channel).
4. If a D-Channel command is required as part of the BS's response and if the BS D-Channel Segmenter is in the process of sending an SOM or escape sequence. If this is so, the D-Channel Segmenter will notify the BS OTA -- *it will not save the command to send next slot* -- and the BS OTA will either re-send the response next slot or will adopt another strategy (e.g., sending a control message in the B-Channel).

### Procedures & Algorithms

This section describes procedures and algorithms which are integral to the OMNI_Notes protocols (common to O,M,N,I,).

### ARQ

The ARQ, Automatic Repeat Request, mechanism provides a first level of protection against over-the-air errors. It relies on three one-bit fields in -the header of each O_Note packet:

1. B-Channel Enable,
2. ACK and
3. MSG#.

The D-Channel is always protected by ARQ. If the B-Channel Enable bit is set, then the B-Channel is also protected by ARQ. Other than determining the Channels protected, the bit has no impact on the ARQ mechanism. The term message designates-for this discussion of the ARQ mechanism -either the D-Channel or both the D- and B-Channels as determined by the B-Channel Enable bit.

If the incoming packet-the entire packet, not just the message-is error free, the receiver will set the ACK bit in its outgoing packet. If the incoming packet contains errors, of if there is no packet received when one is expected, the receiver clears the ACK bit-sets the NAK value-in its outgoing packet.

If the incoming packet is error free, the receiver compares the MSG# of the incoming *message* with the MSG# of the previously received *message;* if they are the same,the receiver ignores the new *message* (with the exception that if the new message is a CT-HLD, its SCT parameters will be checked for OTA mapping information).

If the incoming packet is error free and the ACK bit is set-indicating that the sender received the last message from the receiver without error, the receiver will complement-i.e., increment modulo 2-the MSG# bit and send the new *message* (i.e., the next message it has to send) in its outgoing packet.

If the incoming packet is error free and the ACK bit is cleared-indicating that the sender encountered some sort of error in the last *message* from the receiver-or if the incoming packet is not error free, or if no packet is received, the receiver will resend the same *message* and MSG# that it sent last time in its outgoing packet.

In the context of ARQ processing, the CT-HLD O_Note requires special handling. It is basically a filler and is transparent to ARQ; aside from being used to enter or change *SCT* it does not contain significant information and so it never needs to be retransmitted. The MSG# bit is not complemented when CT-HLD messages are sent. (A CT-HLD message will never be sent when there is another message outstanding; this includes the case where the message is outstanding because it was not successfully ACKed in the ARQ response from the receiver. Thus, the receiver can ignore the CTHLD-after checking if for SCT information.) When the receiver would normally resend the old message and the last message it sent was a CT-HLD, it will transmit a *new* message if one has arrived. It will complement the MSG# bit for the new message; the receiver will see the message as a new message to the last message received before the CT-HLDs were sent.

In general:

• the setting of the ACK bit in the outgoing packet is determined by the error status of the incoming packet;
• the setting of the MSG# and the content of the message in the outgoing packet are determined by the state of the ACK bit in the incoming message;
• whether the incoming message-assuming it was error free-is accepted or ignored is determined by the value of the MSG# bit in the incoming packet (and how it compares with the MSG# bit of the previously received packet).

**Channels and Data Rates**

In a time division multiplexing system, a normal channel is composed of one slot per frame-i.e., the same slot each frame concatenated together over time. A channel supports a 9.6 KBPS circuit; the rate used for normal voice calls. The OMNI_Notes protocols support different circuit rates-both faster and slower-as well.

For certain applications it is desirable to transmit signalling information at faster or slower speeds than those available with one channel per time slot for each mobile station. Faster rates are achieved by combining 2 or more slots --the same slots each frame-- into a circuit. This mechanism is called Aggregated Slot Traffic (AST).

Slower rates are achieved by skipping frames within a channel. These unused slots can be assigned to another MS, allowing the BS to interleave multiple MSs, each broadcasting at a slow rate, into the same channel. This mechanism is referred to as Slow Slot Traffic (SST).

Both AST and SST are controlled by the BS. Circuit rates for Bearer Traffic are negotiated between the MS and Network Applications and then requested of the OMNI pipe; circuit rates for Signaling Traffic are determined solely by the BS, although they may be requested by the MS. Once the rate has been determined, the BS assigns the appropriate OTA and backhaul resources and communicates these assignments to the appropriate entities within the OMNI pipe.

Note that the circuit rates and slot assignments for the Bearer and Signaling portions of a call are independent. For example, even though a call may be assigned a specific set of slots for AST Bearer Traffic, Signaling Traffic for the call may be either carried as SST or it may be carried as AST using a different set of slots.

**Bearer Traffic**

Once the BS has assigned the resources for the Bearer portion of a call, it will communicate the Backhaul Map to the BSC via the Service Information message and the OTA Map to the MS via the CT-STL message.

Since circuit rates other than 9.6 KBPS are normally used for data the descriptions of super- and sub-rate circuits are presented using data call terminology. This is not a protocol requirement, AST or SST circuits may be used for voice at the implementers option, although new vocoder algorithms will be needed on both the MS and the Network side.

**Aggregated Data**

**SubRate Data**

**Signaling Traffic**

Two types of Signaling Traffic are supported: Fast Control Traffic *(FCT)* and Slow Control Traffic *(SCT);* there is no normal rate as there is for Bearer Traffic. The "normal" Control Traffic rate is basically FCT with a Next Slot Pointer of zero (same slot, next frame).

There are no special backhaul resources assigned for Signaling Traffic-Signaling Traffic is transported through the single signaling channel which was set up when the BS and BSC initially established communications, so there is no backhaul assignment to communicate to the BSC.

The OTA resources assigned for Signaling Traffic are communicated to the MS via a mechanism dependent upon the type of signaling. *FCT* is dynamic. That is, there is no constant signaling rate, and the slot assignment for the next exchange is communicated to the MS via the Next Slot Pointer in the BS packet header. For *SCT,* the slot assignment is static (relatively) and is communicated to the MS via the CTSPO message when the circuit is established, or via a CT-HLD message if SCT is established or changed after the circuit is established. The Next Slot Pointer in each message does point to the next slot assigned for *SCT,* but the SCT rate may not be changed via this mechanism.

Both types of Control Traffic depend upon two features of the OMNI_Protocol: The CI information element (which is essential for recovering from a missed packet) and the Next Slot Pointer (which tells the MS when the BS is expecting it to transmit).

ARQ functions normally for both *FCT* and *SCT*.

**Fast Control Traffic**

Fast Control Traffic *(FCT)* is a method of accelerating signaling over the O-Interface CI. It is of maximum value for time-critical operations such as handovers; it is of limited use when the signaling extends beyond the 0 Interface in either direction.

*FCT* relies on several mechanisms: the Next Slot Pointer, the CI and the ARQ. *FCT* differs from Bearer AST in that it is very dynamic rather than being static (occurring in predetermined slots). In each BS transmission, the packet header identifies the next slot in which the MS shall transmit. This is all there is to *FCT* when there are no errors.

**Error Recovery**

**BS loses MS Message**

When the BS detects an error in an *FCT* message from the MS, it uses the standard ARQ procedure to recover.

**MS loses BS Message**

When the MS detects an error in an *FCT* message from the BS, it cannot use the ARQ procedure because it has an additional problem: it does not know which slot to transmit in because it didn't receive a Next Slot Pointer. Instead, it goes into a mode where it scans every packet transmitted by the BS, looking for a packet containing Packet Type = Signaling and the CI which was assigned to the MS at the beginning of the session. When it finds the packet, it knows that the BS did not receive a message from it, since it did not transmit in the first part of the slot. Thus, the BS will, using the ARQ algorithm, have re-sent the message that the MS missed. This also gives the MS a new Next Slot Pointer, so it now knows where to respond.

Since the MS also did not receive the ARQ bits in the lost packet, it does not know whether the as received its last packet or not. (The ARQ bits in the current packet tell the MS that the BS did not receive the packet which the MS already knows it didn't send.) However, the MS has two pieces of information from which it can make some inferences:

1. it knows whether ft sent an ACK or NAK in the last message, and
2. it knows whether the MSG# just received from the as matches the last MSG# received.
3. The following table shows how the MS can determine whether to re-send old message or re-send new message based on these two pieces of information.

| ACK/NAK last | MSG# match? | Did BS receive last message? |
|---|---|---|
| NAK | Different | Not a possible outcome: if it occurs, resend last message and report protocol violation to OAM&P. |
| NAK | Match | Don't know: re-send last message |
| ACK | Different | Last message was received, send new message |
| ACK | Match | Last message not received, resend last message |

Having the new Next Slot Pointer and knowing whether to send a new message or resend the old message, the MS can now recover correctly from the lost message.

**Slow Control Traffic**

Slow Control Traffic (*SCT*) is a method of supporting a low-rate continuous signaling link. This provides the ability to multiplex several MSs involved in non-time-critical signaling sequences onto a single OTA channel to conserve bandwidth. This mechanism is used for registration and may be used for other activities if desired.
*SCT* is a special case of Slow Slot Traffic *(SST).* The BS can assign the MS to a subframe slot where the BS and MS both skip *n (1≤ n.≤ 31)* frames between timeslots. This allows the BS to interleave several MSs which are in *SCT* Mode on the same timeslot.

**BS Procedures**

Timeslot Management is the key to both *FCT* and *SCT.* If the BS does not wish to implement the more complex Timeslot Management algorithm required for *FCT* or *SCT,* it can simply insure that *Frame SubRate = 0, Frame Phase = 0* and *Slot Phase = 0.*
There are a couple of comments concerning *SCT*, below.

• If the Service Type of the Link indicates that a voice or data circuit may be established, it might be advisable to not enter *SCT* mode. Otherwise a call might be lost because there were no longer resources available when it is time to leave *SCT* mode. This would work for a single slot call; it would not solve the problem for an aggregated data call.
• If the BS recognizes a registration, CT-RRQ, it should attempt to enter *SCT* mode.
• If a hold sequence proves lengthy, the BS might enter *SCT* at a fast rate-say every second frame-and then gradually slow the rate as the cumulative number of sequential CT-HLDs increases.

**MS Procedures**

To support *SCT,* the MS must:

• Recognize and record the CI during Slot Acquisition and be capable of using it during error recovery, as it does for *FCT.*
• Handle non-zero values of *Frame SubRate, Frame Phase* and *Slot Phase* and use them for Control Traffic, just as it does for Bearer Traffic.

**Entering SCT Mode**

*SCT* Mode can be activated only by the BS and only by sending an OTA Map specifying the desired rate in a CT-SPO or CT-HLD message. When the BS, by whatever heuristics it uses, decides it will be beneficial to put the MS into *SCT,* it will set the *Frame SubRate* and, optionally, the *Frame Phase* and *Slot* Phase fields in the OTA Map information element to non-zero values. The *Next Slot Pointer* in the header of the CT-SPO or CT-HLD message continues to point to an *FCT* slot. The MS and BS do not enter *SCT* Mode until the MS has signaled its acceptance of the *SCT* parameters by echoing them back to the BS in a CT-HLD message in the next *FCT* signaling slot. (If *Frame Phase = 0* it is legal for *Slot Phase* and *Next* Slot Pointer to point to the same slot, but until the BS receives the acknowledging CT-HLD message from the MS, it does not enter *SCT* mode.) The *SCT* parameters-*Frame SubRate, Frame Phase* and *Slot Phas*e-are relative to the slot in which they are transmitted, even though *SCT* mode does not take effect until the MS has acknowledged.

When the BS receives the acknowledging CT-HLD message, it will respond with a CT-HLD in its portion of the slot and enter *SCT* mode. The MS will interpret the ARQ bits of this message from the BS to determine whether the BS received the MS's acknowledging CT-HLD. If the ARQ bits indicate success, the MS will also enter *SCT* mode. If the ARQ bits do not indicate success, or if the MS does not receive the message without error, it will begin *SCT* Error Recovery.

**Maintaining SCT Mode**

Once *SCT* Mode has been entered, the MS and BS will maintain *SCT* mode by exchanging signaling messages at the rate specified by the *Frame SubRate*. Each CT-HLD message exchanged shall contain the same value of *Frame SubRate* and the *Frame Phase* and *Slot Phase* fields will equal zero. In particular, each CT-HLD message contains the sender's current understanding of the *SCT* rate. If the values are not the same, it means that the transmitting side is requesting a change of *SCT* mode.

At some time while the MS and BS are in *SCT,* one or the other of them will have information (other than CT-HLDS) to transmit. These CT messages can be transmitted in SCT mode, in fact, the possibility exists that there will not be sufficient resources (time slots) available to exit *SCT.*

**Changing SCT Rate**

Once *SCT* mode has been established, the *Frame Phase* and *Slot Phase* fields in subsequent CT-HLD messages will typically be zero and the *Frame SubRate* will typically remain at the same value it had when *SCT* mode was established. It is possible that the BS may decide to either change the rate of the *SCT* while remaining within the same slot, or to shift the MS to another location in its slot map. It will do this by manipulating the values of the *Frame SubRate, Frame* Phase and *Next Slot Pointer* fields. As with initial entry to *SCT* mode, the change will not take place until acknowledged via a CT-HLD reflecting the new rate-by the MS. This has the implication that the BS must maintain both slot maps until it is clear that the MS has accepted the change.

**Exiting SCT Mode**

In order for the BS and MS to exit *SCT* mode, there must be resources available-i.e., there must be an available slot or slots that can be used for normal or *FCT* signaling. The balance of this section assumes that sufficient resources are available, see the discussion of *SCT* Error Recovery for system behavior when there are not sufficient resources to exit *SCT* mode.

If the BS determines that it is time to exit *SCT* mode, it will transmit a CT-HLD map with all of the *SCT* parameters-*Frame SubRate,Frame Phase* and *Slot Phase*-set to zero. When the MS acknowledges-with a CT-HLD message with the *SCT* parameters also set to zero-the BS will transmit whatever signaling message it has to transmit in the same slot as the MS's acknowledgment; the *Next Slot* Pointer in this message will indicate a slot within the next frame and the signaling will revert to *FCT* signaling.

**MS Influences**

Although the BS controls *SCT* Mode, the MS is capable of requesting *SCT* entry, exit or rate change:
If the MS and BS are in *FCT* mode, the MS can request entry of *SCT* mode by transmitting a CT-HLD message with a non-zero value of *Frame SubRate.* The MS will, if possible, honor the MS's request by invoking *SCT* at a rate as close as possible to that requested by the MS.
If the MS and BS are in *SCT* mode, the MS can request a rate change by transmitting a CT-HLD message with the desired *Frame SubRate* (different from the current frame subrate); it may not request a change in *Frame Phase* or *Slot Phase.* The BS will, if possible, honor the MS's request by initiating a change to a new subrate as close as possible to that requested by the MS.
If the MS and BS are in SCT mode, the MS can request exit from SCT mode by transmitting a CT-HLD message with the zero value for *Frame SubRate.* The MS will, if possible, honor the MS's request by exiting *SCT.*

In all cases, the MS will know whether the BS has accepted or rejected the request by the values of the *SCT* parameters received in the next error free CT-HLD message. The requested rate will not become effective until the MS has acknowledged the change by echoing the *SCT* parameters to the BS in its next CT-HLD message.,

**Error Recovery**

Because of the potentially long intervals between message exchanges while in *SCT,* special error recovery procedures are required when an error occurs in *SCT* mode.

**BS loses MS Message**

If the BS loses an MS message while attempting to establish *SCT* mode, it will continue with the attempt to establish *SCT* mode. Repeated lost messages will eventually prompt normal Lost Link Recovery.

If the BS loses an MS message *during SCT* mode, it will 'increment its leaky bucket" and attempt another transmission during the next assigned *SCT* slot. If the leaky bucket overflows, it will implement normal Lost Link Recovery and begin transmitting Specific Polls for the MS in the assigned *SCT* slots until its Lost Link Recovery timer expires. The OTA Map in the CT-SPO message will determine the signaling rate to be used when the link is recovered.

**MS loses BS Message**

If the MS loses a message while attempting to establish *SCT* mode, it will attempt to recover using the same technique defined for *FCT;* it will begin scanning for CT messages containing its CI. If it sees such a message, it can respond in the slot indicated by the *Next Slot Pointer* in the CT message. If it does not see such a message after a reasonable amount of time-the amount shall be provisionable with a default setting of 24 slots (1.5 frames)-it will attempt to re-establish the link by responding to a GPO with a CT-HLD message. The BS will recognize the CI associated with the CT-HLD as belonging to an MS that it thinks it is communicating with in *SCT* mode and will respond accordingly (probably a CT-HLD with the appropriate *SCT* parameters).

If the MS loses a message during *SCT* mode, it will increment its 'leaky bucket' and attempt another transmission during the next assigned *SCT* slot-this is why the BS must preserve the *SCT* map for this MS until it has 1) re-established the link, 2) gotten solid confirmation that the MS is switching to a different *SCT* map, or 3) given up after Lost Link Recovery. If the leaky bucket overflows, it will implement normal Lost Link Recovery, either initiating a handover, if appropriate, or searching for Specific Polls until its Lost Link Recovery timer expires.

**No Slot Capacity to Exit SCT**

If there are no available slots, then clearly the BS and MS cannot exit *SCT* mode. They will stay in *SCT* mode and continue signaling (non CT-HLD messages) until there are slots available. There is the risk that continuing to signal in *SCT* mode may cause timing problems for the higher level processes; if this occurs, the problems will be resolved by the higher level processes..

Operations and Management Of The Base Station

To simplify BS management a degree of abstraction is used when addressing entities within a BS. This is achieved by addressing NM messages using the Managed Object Class and Managed Object Instance. There must be in the BSC an object model with a complete data link layer 424 description for each object instance in the BS. When a message has to be sent to an object instance this mapping is used to find the correct link.

The first connection is established from the BS site using a (semi-) permanently programmed default TEL All OAM&P procedures are sent on this connection. A further connection is established on the same TEI for Notes signaling.

Object instances also have a network layer address. The instance number is used to address the object instance. Network layer address is used by the manager and agent to determine which object instance is being addressed. In this case the agent must have this instance number (semi-) permanently programmed.

For inter-operability, link configuration, default TEI assignment and instance numbering must be known by both manager and agent. This as well as supported functions are considered as Shared Management Knowledge.

SW Download Management Procedures

This section covers the download procedure for software by the Base Station from the Base Station Controller.

Load Data Initiate

This message is sent from the BSC to the BS to initiate the loading of a file. It indicates the number of segments for which a network layer acknowledgment is required (window size). When receiving data the BS sends an ACK after this number of segments, except for the last batch.

Load Data Segment

These multi-segment messages carry the files for the transfer initiated by the Load Data Initiate message. No other file transfer is allowed until the current transfer is finished.
The ACK is for the number of segments specified in the Load Data Initiate message, except that when all the expected blocks have been received the ACK is sent regardless of the window size. If the timer for a time-out for the Layer 3 acknowledgment expires, the BSC sends a Load Data Abort message and the file transfer is aborted.
Meaning of Ack message: A window of Load data segment messages or a complete file has been received.

Load Data Abort

This message is used by either end if the file transfer can no longer be supported. This message will also be used by the BS if the received amount of data exceeds the expected amount.

Load Data End

This message is sent by the BSC to the BS. The BS sends an ACK when the file has been received in the BS.

SW Activate Request

This message is sent by the BS when the resource presented by the object instance (BS manager or BS) has started up. The initialization of mentioned object instance is started with software activation, which may include software download continuing with attribute setting.

Activate SW

This message from the BSC to the BS activates the loaded software, indicating which file (or files) is to be activated. The acknowledgment of the Activate SW indicates if the software can be activated, or if it cannot (by use of a NACK). The activation may include BS internal software distribution.

SW Activated Report

This message from the BS to the BSC is sent from the addressed object on the BS at a successful completion of the software distribution to and activation on all indicated destinations in the BS.

Air Interface Management Procedures

This section covers the Base Station Controller commands for setting O-Interface 510 for the Base Station.

Set BS Attributes

This message is sent to the BS manager object, providing BS attributes related to the air interface and attributes that are common for all TRXs.

Set TRX Attributes

This message is sent for every TRX instance providing all the necessary attributes relating to that TRX. This message also includes any information that is common to all channels of the TRX.

Test Management Procedures

This section covers the testings commands sent by the Base Station Controller to the Base Station.

Perform Test

This message tells the BS to perform a test, if necessary to set a physical configuration for the BSC to carry out a test on the BS, or to perform a test using a particular configuration. Any measurements may be performed as specific tests. Duration for the test can be given, after which the test report may be autonomously sent if so requested.
Two tests are defined.

1. A radio loop test via the transceiver is used to test most of the equipment needed to provide service of one traffic channel. The loop starts and ends in the transceiver baseband parts and loops one traffic channel back inside the transceiver before the antenna. The baseband parts of the transceiver calculate the bit error rate to describe the quality of service that channel provides. This test can be used in conjunction with the previous test to discriminate the location of a possible hardware failure.
2. BS self test is used to activate BS internal self test procedures made to test equipment that provides the services of a logical object.

Test Report

This message is sent by the BS giving the result of a test ordered by the BSC and is sent autonomously as soon as the result is available. The Test Report shall also be sent after a specific request from the BSC, "Send Test Report". The Test Report indicates what was tested, the test type, and the result. No Ack or Nack is returned to the BS.

Send Test Report

This message is sent from the BSC asking for the result/report of a test which is not to be sent autonomously, or which is made continuously, in which case the present result of the test is required. The message includes identification of the test.

Stop Test

This message is used by the BSC to stop a continuously recurring test at the BS, to reset a physical test configuration to the normal configuration, or to stop the test and to restore to the normal physical configuration. The message includes identification of the test being performed.

Performance Management Procedures

This section covers the performance management procedures by the Base Station.

Perform Measurement

This message tells the BS to perform a measurement. It indicates the type of measurement to be performed and the measurement reporting schedule (which corresponds to the measurement result 'granularity'). This procedure may be used for an already running measurement to modify the reporting schedule.

Measurement Report

This message is sent by the BS giving the results of a measurement ordered by the BSC. The reporting may be either scheduled or requested, which is indicated in the message. No Ack or Nack is returned to the BS.

Send Measurement Results

This procedure is used by the BSC to request a copy of the current results for a measurement it previously ordered. This procedure does not affect the measurement collection within the BS, nor does it affect the scheduled reporting of measurement results.

Stop Measurement

This procedure is used by the BSC to stop a measurement in the BS that it previously ordered. Any results not yet reported are lost.

State Management and Event Report Procedures

This section covers the reports and information provided by the Base Station to the Base Station Controller.

Changed State Event Report

An unsolicited report is sent from the BS to the BSC whenever a change of operational state of a managed object (defined in this specification) or of the optional manufacturer dependent state occurs. The message is also sent when any site input changes its state.

A failure, causing change of operational state, shall generate two event reports, Change State Event Report and Failure Event Report. No Ack or Nack is returned to the BS.

Failure Event Report

An unsolicited report is sent from the BS to the BSC whenever failure events occur in the BS. Such failure events are:

- fault report, resulting from passing a threshold, but not constituting a failure.
- failure of a resource. There shall be a report for failure start and another for failure ceased.

A failure causing change of operational state shall generate two event reports, Change State Event Report and Failure Event Report. No Ack or Nack is returned to the BS.

Stop Sending Event Reports

The inhibition of sending of event reports is used by the BSC to prevent a flood of event reports which are of no benefit to the BSC. One example of this occurs at a BS restart following a power failure. The operational capability of the BS hardware is unlikely to be different from what it was before the failure, and a flood of reports, each stating that a piece of hardware is operating, will delay the software download. Another example concerns the case of a frequently occurring transient fault.

Restart Sending Event Reports

When the BS is back in normal operation or if it is of interest to check whether the BTS still generates a flood of Event Reports a Restart Sending Event Reports should be sent.

Change Administrative State

The Change Administrative State message is used by the BSC to change the administrative state for a managed object.

Change Administrative State Request

The request message is sent by the BS when there is a need to change the administrative state of a managed object at the BS site. This message can only be initiated as a result of a local MMI command.

Equipment Management Procedures

This section covers the equipment management commands sent by the Base Station Controller and their response.

Opstart

This message is sent by the BSC to tell the BS to attempt to operate the identified object putting it to an initial normal operational state (i.e., "enabled"). This message does not affect the object's administrative state if there exists a value explicitly assigned by the BSC. If there is yet no administrative state value explicitly set by the BSC (e.g., at an initialization time), the object shall be presumed to be administratively locked by default. No BS function is responsible for testing the operability of the identified resource as a consequence of this message. Prior to this message being issued, all necessary physical and logical preparations (such as repair of equipment, software downloading, parameter setting, etc., as needed) are expected to have been completed. If the object is in fact not ready to be in an enabled state, the object will be in a fault condition as a consequence of this message, and the condition shall be handled by the object's usual fault handling function as the condition is detected.

Reinitialize

This message is sent by the BSC to tell the BS to have specified resource of the indicated object start a reinitialization procedure.

Set Site Outputs

This message is sent by the BSC to tell the BS to set specified site outputs to the specified state.

Miscellaneous Procedures

This section outlines additional procedures requested by the Base Station Controller.

Get Attributes

This message is used by the BSC to tell the BS to send attributes which have previously been set by the BS. It may be used as a check on accuracy and be incorporated into normal procedures, or may be used by the BSC to recover information which it has lost, in the absence of the OMC.

Set Alarm Threshold

This message is used by the BSC to tell the BS some threshold parameters related to fault thresholds.

Message Categories

This section defines the transport format and coding of the two Network. Management message categories sent over the NOTES 0AM&P interface. The various message categories may be sent in either direction. In each message, the message discriminator identifies the category and is transmitted first. In a message the octets are sent in the order shown in the description of.the messages. In an octet bit 1 is transmitted first.

In the following sub-sections M and 0 denote whether information elements are mandatory or optional.

Formatted O&M messages

The message format and coding of these messages is below:

| INFORMATION ELEMENT | M/O | LENGTH | CODING |
|---|---|---|---|
| Message Discriminator | M | 1 | 1 0 0 0 0 0 0 0 |
| Placement Indicator | M | 1 | Note 1 |
| Sequence Number | M | 1 | Note 2 |
| Length Indicator | M | 1 | Binary, Note 3 |
| O&M Data Field | M | V | Note 4 |
| Note 1: The meanings and codings of the Placement Indicator are: <br> Only: This message is contained within one segment: 10000000 <br> First: The first segment of a multi-segment message: 01000000 <br> Middle: A middle segment of a multi-segment message: 00100000 <br> Last: The last segment of a multi-segment message: 00010000 | | | |

(continued)

| INFORMATION ELEMENT | M/O | LENGTH | CODING |
|---|---|---|---|
| Note 2: This is the sequence number of the segment in the message, modulo 256, starting with 00000000. Thus a single segment message is here coded 00000000, but this does not inhibit the use of this code in long multi-segment messages. Note 3: The Length Indicator gives the length of the O&M data field which is less than or equal to 255 octets. This length indicator should not be confused with attribute value length indicator described in Section 6.2. Note 4: Coding for O&M Data field is found in Section and following subsections. | | | |

Manufacturer-Defined O&M messages

Messages of this format are not currently used, and are reserved for future used.

| INFORMATION ELEMENT | M/O | LENGTH | CODING 8                    1 |
|---|---|---|---|
| Message Discriminator | M | 1 | 0 0 0 1 0 0 0 0 |
| Placement Indicator | M | 1 | Note 1 |
| Sequence Number | M | 1 | Note 2 |
| Length Indicator | M | 1 | Binary, Note 3 |
| ManId Length Indicator | M | 1 | Binary, Note 4 |
| Manuf. Identifier | M | V | Note 5 |
| Man-Defendant O&M Data Field | M | V | Proprietary |

Note 1:    The meanings and codings of the Placement Indicator are:

Only:    This message is contained within one segment: 10000000

First:    The first segment of a multi-segment message: 010000000

Middle:    A middle segment of a multi-segment message: 00100000

Last:    The last segment of a multi-segment message: 00010000

Note 2:    This is the sequence number of the segment in the message, modulo 256, starting with 00000000. Thus a single segment message is here coded 00000000, but this does not inhibit the use of this code in long multi-segment messages.

Note 3:    The Length Indicator gives the length of the Manufacturer-defined O&M data field which is less than or equal to 255 octets.

Note 4:    The Length Indicator gives the length of the Manufacturer Identifier field which is less than or equal to 255 octets.

Note 5:    The Manufacturer Identifier is an octet string of maximally 255 octets.

MMI Transfer

The message formats for MMI transfer are defined here for future use, and are not currently used.

| INFORMATION ELEMENT | M/O | LENGTH | CODING |
| | | | 8                    1 |
|---|---|---|---|
| Message Discriminator | M | 1 | 0 1 0 0 0 0 0 0 |
| Placement Indicator | M | 1 | Note 1 of Sec. 5.1.1 |
| Sequence Number | M | 1 | Note 2 of Sec. 5.1.1 |
| Length Indicator | M | 1 | Binary, Note 1 |
| MMI Data Field | M | V | for future use |

Note 1:   The Length Indicator gives the length of the MMI data
field, which is less than or equal to 255 octets.

Structure of Formatted O&M Messages

This section provides details of all the messages. In every case when particular header octets provide no usable information at the receiver, they are coded all I's.

The header fields of formatted O&M messages are always mandatory. The attributes defined for a certain message supported by the BTS implementation are mandatory to be used if not stated otherwise in an explanatory note.

Message types are identified in the first octet of the formatted O&M messages. Some messages are replied by a Response, an ACK or a NACK. These replies are distinguished by different codings of the message type (the first octet of formatted O&M messages).

ACK messages return all the attributes in the original message. NACK messages add two octets (one for an attribute identifier and one for a cause) at the end of the message.

None of the messages concerned requires all of the capacity available in a Layer 2 segment, so the NACK message will not need a second Layer 2 frame.

An ACK to a number of 'Load Data Segment's only consists of the header with the 'Load Data Segment Ack' message type.

All attributes overwrite those defined in an earlier message since start-up or the last restart. Optional attributes provide new information if they have not been defined in an earlier message.

The message type 1 byte, object class 1 byte, and object instance 3 bytes are all included in each message header.

The Object Class information element shall be filled in with the correct information in accordance with this specification.

The Object Instance information element contains two useful fields:

TRX number that identifies the TRX in a multi-TRX BS.

Timeslot number that identifies the Channel within a particular TRX.

The FORMAT field describes the structure of each information element using T (Tag), L (Length) and V (Value) coding. T is the attribute identifier. V is the actual information presented. L is indicated if the information element is of variable length and its prediction is not possible in the context. Length binary-represents in a two octet space the number of octets in the remaining part of information element.

SW Download Management Messages

Load Data Initiate

The load data initiate message includes the header, a description of the software at least 3 bytes long, and a window size 2 bytes long.

Load Data Segment

The load data segment message includes the header and the file data segment that is to be transferred which is at least 3 bytes long.

Load Data Abort

The load data abort message includes the header and the abort message.

Load Data End

The load data end message includes the header and the description of the software which is the same as the description of the software in the load data initiate message.

SW Activate Request

The software activate request message includes the header, the hardware configuration at least 3 bytes and the software configuration which is also at least 3 bytes.

Activate SW

The activate software message includes the header and the software description of at least 3 bytes. Software Descriptions may be repeated for multiple software activation. No software description entry implies all software for the object instance.

SW Activated Report

The software activated report message includes the header and the acknowledgment of activation.

Air Interface Management Messages

Set BS Attributes

The set Base Station attributes message includes the header, BSC ID (3 bytes), BS ID (3 bytes), LAC (3 bytes), MCC (3 bytes), MNC (3 bytes), BS capabilities (5 bytes), system type (2 bytes), service provider 2 bytes, BS TX Power Maximum (2 bytes, power control size (2 bytes), RX mode (2 bytes), TX mode (2 bytes), and HO information (Desired Length).

Set TRX Attributes

The set TRX attributes message includes the header, Radio Channel ID (2 bytes), PN code (2 bytes), MAX bandwidth (2 bytes), and MIN bandwidth (2 bytes).

Test Management Messages

Perform Test

The perform test message includes the header, Test Number (2 bytes), Autonomously Report request (2 bytes), Test Duration (3 bytes), and the physical configuration during testing (at least 2 bytes). Use of Physical Configuration depends on the need on extra information in setting up specific test configurations.

Test Report

The test report message includes the header, the test number performed (2 bytes), and test report information (at least 3 bytes). The test report information may give a numerical result or an indication of the range into which the test report falls.

Send Test Report

The send test report message includes the header and test number (2 bytes).

Stop Test

The stop test message includes the header and the test number to be stopped (2 bytes).

Perform Measurement

The perform measurement message includes the header, measurement type (1 byte), and the reporting schedule (1 byte).

Measurement Report

The measurement report message includes the header, measurement type (1 byte), reporting reason (1 byte), and measurement results (at least 3 bytes).

Send Measurement Results

The send measurement results message includes the header and the measurement type (1 byte).

Stop Measurement

The stop measurement message includes the header and the measurement type to be stopped (1 byte).

State Management and Event Report Messages

Changed State Event Report

The changed state event report message includes the header, operational state (2 bytes), availability status (at least 3 bytes), and the site input (at least 3 bytes).

Failure Event Report

The failure report event message includes the header, event type (2 bytes), perceived severity (2 bytes), probable cause (4 bytes), the hardware description (at least 3 bytes), the software description (at least 2 bytes), and additional information (generally greater then 2 bytes). Depending on the nature of the specific failure and the BS implementation, only the needed/supported attributes shall be sent. These fields shall be included to identify the specific associated equipment or software in case the addressed functional object alone is not sufficient to localize the failure.

Stop Sending Event Reports

The stop sending event reports message includes the header, operational state (2 bytes), availability status (at least 3 bytes), and the probable cause (4 bytes). Stop Sending Event Reports concerning events with any of the parameter values in this attribute list. Depending on the type of event report that shall be stopped, one of the attributes shall be sent.

Restart Sending Event Reports

The restart sending event reports message includes the header, operational state (2 bytes), the availability status (at least 3 bytes), and the probable cause (4 bytes). Restart sending Event Reports concerning events with any of the parameter values in this attribute list. Depending on the type of event report that shall be restarted, one of the attributes shall be sent.

Change Administrative State

The change administrative state message includes the header and the new administrative state (2 bytes).

Change Administrative State Request

The administrative state request message includes the header and the requested administrative state for the object (2 bytes).

Equipment Management Messages

Opstart

The opstart message includes the message header which signifies that operation is to begin.

Reinitialize

The reinitialize message includes the header and the hardware to be reinitialized (at least 3 bytes). HW Descriptions may be repeated for multiple resources. If no HW Description is provided, all resource for the objects is implied. For a software reinitialization, Activate SW message shall be used.

Set Site Outputs

The set site outputs message includes the header and the site outputs (at least 3 bytes).

Get Attributes

The get attributes message includes the header and the list of required attributes (att least 3 bytes).

Set Alarm Threshold

The set alarm threshold message includes the header, probable cause (4 bytes), and additional required information.

Coding

This Section defines the coding of each field in the messages defined in earlier Sections.
The following conventions are assumed. The least significant bit is transmitted first, followed by bits 2, 3, 4, etc. In an element, octets are identified by number.
Octet 1 is transmitted first, then octet 2, etc. Further:

- When a field extends over more than one octet, the order of bit values progressively decreases as the octet number increases. The least significant bit of the field is represented by the lowest numbered bit of the highest numbered octet of the field.
- For unpredictable variable length elements, a length indication coding method shall be used. Always the Tenth information indicates the number of element units (which is octets) following the length indicator.
- All used values are indicated. Other values are reserved.

Message Type

The Message Type is coded with 1 octet.
The message types used are described above.

Object Class

An Object Class is coded with 1 octet. The values of the object class code are as defined below:

| Object Class | hexadecimal code |
| --- | --- |
| Base Station Manager | 00 |
| Base Station | 01 |
| Transceiver | 02 |
| Channel | 03 |
| <reserved for future use> | < 04-FE> |

(continued)

| Object Class | hexadecimal code |
|---|---|
| NULL | FF |

Object Instance

The Object Instance is coded with 3 octets, addressing the specific object of the given object class as illustrated below:

| | |
|---|---|
| NULL | 1 |
| Transceiver number | 2 |
| Timeslot number | 3 |

These three octets are mandatory in the header of every message. The NULL byte is reserved for future use (in case of changes to information model), and is coded NULL.

The Transceiver number distinguishes TRXs at a site under the Base Station. The Timeslot number distinguishes channels under the TRX.

When the object class is BS Manager all the octets are NULL, as there is only one BS manager. When the object class is BS all the octets are NULL, as there is only one BS.

When the object class is TRX, octet 2 is a binary presentation of the number of the addressed TRX Octet 3 is coded NULL. If the TRX number is NULL, it shall be understood to refer to all TRXs under the BS.

When the object class is Channel, octet 3 is a binary presentation of the number of the addressed Timeslot, and octet 2 is the number of the TRX above the addressed Channel. If the Timeslot number is NULL, it shall be understood as referring to all Channels under the TRX.

To avoid unnecessary complexity of BS implementation, it shall not be allowed to assign a NULL value for the TRX number in the case that the Channel object class is addressed (without this constraint, this could be understood as referring to a particular channel of all TRXs). The value for NULL is <FF> in all the cases mentioned above in this Section.

Attributes and Parameters

The Attribute Identifier is coded with 1 octet. The number of parameters within an attribute I at least one. The length of the parameters within an attribute will vary.

The data structures of the attributes and parameters are described in the remaining part of this section in tabular forms with no formal text description of the individual subsections provided because of their self-explanatory nature

Henceforth "Attribute Identifier" in this section means the identifier for an attribute or a parameter.

144

Additional Text

| Attribute Identifier | 1 |
|---|---|
| Length | 2-3 |
| Additional Text | 4 |
| (cont.) | |
| (cont.) | N |

'Additional Text' is ASCII coded diagnostic or debug information that will not be interpreted by the system (or the operator) but may help engineers to more precisely identify failure causes.

Administrative State

| Attribute Identifier | 1 |
|---|---|
| Administrative State | 2 |

Administrative State is coded as follows:

| Locked | 01 |
|---|---|
| Unlocked | 02 |
| Shutting Down | 03 |
| NULL (Adm. State not supported) | FF |

Autonomously Report

| Attribute Identifier | 1 |
|---|---|
| Autonomously Report | 2 |

Autonomously Report

| Autonomously Report | 01 |
|---|---|
| Not Autonomously Report | 00 |

Availability Status

| | |
|---|---|
| Attribute Identifier | 1 |
| Length | 2-3 |
| Availability Status | 4 |
| (cont.) | |
| (cont.) | N |

Availability Status may contain one or more octets. Each octet has a single status value, which is coded as follows:

| | |
|---|---|
| In test | 0 |
| Failed | 1 |
| Power off 2 | |
| Off line | 3 |
| <not used> | 4 |
| Dependency | 5 |
| Degraded | 6 |
| Not installed | 7 |

BS Capabilities

| | |
|---|---|
| Attribute Identifier | 1 |
| Facility | 2 |
| (cont.) | 3 |
| (cont.) | 4 |
| (cont.) | 5 |

'BS capabilities' defines the services being offered by the BS coded as bit-map of 32 bits.

BS Identity

| | |
|---|---|
| Attribute Identifier | 1 |
| Base Station Identity | 2 |
| (cont.) | 3 |
| (cont.) | 4 |
| (cont.) | 5 |

Base Station Identity <32 bits> where the low order bit is bit 1 octet 2 and the high order bit is bit 8 octet 5.

BS maximum TX power

| | |
|---|---|
| Attribute Identifier | 1 |
| BS max TX power | 2 |

BS max TX power at antenna input <dBm or dBw>

BSC Identity

| | |
|---|---|
| Attribute Identifier | 1 |
| BSC Identity | 2 |
| (cont.) | 3 |

BSC identity <16 bits> where the low order bit is bit 1 of octet 2 and the high order bit is bit 8 of octet 3.

Event. Type

| | |
|---|---|
| Attribute Identifier | 1 |
| Event Type | 2 |

Event Type

| communication failure | 00 |
| quality of service failure | 01 |
| processing failure | 02 |
| equipment failure | 03 |
| environment failure | 04 |
| <reserved for future use> | <05-FF> |

File Data

| Attribute Identifier | 1 |
| Length | 2-3 |
| File Data | 4 |
| (cont.) | |
| (cont.) | N |

The coding of 'File data' is not defined in this specification.

File Id

| Attribute Identifier | 1 |
| Length | 2-3 |
| File Id | 4 |
| (cont.) | |
| (cont.) | N |

File Version

| Attribute Identifier | 1 |
|---|---|
| Length | 2-3 |
| File Version | 4 |
| (cont.) | |
| (cont.) | N |

HW Configuration

| Attribute Identifier | 1 |
|---|---|
| Length | 2-3 |
| HW Description 1 | 4 |
| ... | |
| HW Description n | N |

HW Configuration contains a list of HW Descriptions related to a managed object.

HW Description

| | |
|---|---|
| Attribute Identifier | 1 |
| Equipment Id Length | 2-3 |
| Equipment Id | |
| (cont.) | |
| Equipment Type Length | |
| Equipment Type | |
| (cont.) | |
| Equipment Version Length | |
| Equipment Version | |
| (cont.) | |
| Location Length | |
| Location | |
| (cont.) | |

All fields are variable length ASCII character strings. The coding of these fields will not be defined in this specification.

LAC

| | |
|---|---|
| Attribute Identifier | 1 |
| Location Area Code | 2 |

List of Recruired Attributes

| | |
|---|---|
| Attribute Identifier | 1 |
| Length | 2-3 |
| Attribute Id. | 4 |
| (cont.) | |
| (cont.) | N |

Each Attribute Id is one octet.

Maximum Bandwidth

| | |
|---|---|
| Attribute Identifier | 1 |
| Multiple Timeslot Limit | 2 |

'Multiple timeslot Limit' indicates the maximum number of TDMA timeslots (of the same frame) that can be assigned to a bearer channel (coded <1..16>).

Maximum MS power reduction

| | |
|---|---|
| Attribute Identifier | 1 |
| Max MS power reduction | 1 |

MCC

| | |
|---|---|
| Attribute Identifier | 1 |
| Mobile Colour Code | 2 |

Measurement Results

| Attribute Identifier | 1 |
|---|---|
| Length | 2-3 |
| Measurement results | 4 |
| (cont.) | |
| (cont.) | N |

Measurement results <binary coded decimal value with meaning determined by measurement type.

Measurement Type

| Attribute Identifier | 1 |
|---|---|
| Measurement Type | 2 |

MNC

| Attribute Identifier | 1 |
|---|---|
| Mobile Network Code | 2 |

Minimum Bandwidth

| Attribute Identifier | 1 |
|---|---|
| Sub-Multiple Timeslot Limit | 2 |

'Sub-Multiple Timeslot Limit' indicates the maximum separation (between frames) of TDMA timeslots that can be assigned to a bearer channel (coded <1..25>).

Nack Causes

| Attribute Identifier | 1 |
| NACK Cause | 2 |

```
Nack Causes
General Nack Causes:
        Incorrect message structure              01
        Invalid message type value               02
        Invalid Object class value               03
        Object class not supported               04
        Object Instance unknown                  05
        Invalid attribute identifier value       06
        Attribute identifier not supported       07
        Parameter value outside permitted range  08
        Inconsistency in attribute list          09
        Specified implementation not supported OA
        Message cannot be performed              OB
        <reserved>                               <OC-1 F>
Specific Nack Causes:
        Resource not implemented                 20
        Resource not available                   21
```

```
Frequency not available                          22
Test not supported                               23
Capacity restrictions                            24
Physical configuration cannot be performed       25
Test not initiated                               26
Physical configuration cannot be restored        27
No such test                                     28
Test cannot be stopped                           29
Message inconsistent with physical config.       2A
Complete file not received                       2B
File not available at destination                2C
File cannot be activated                         20
Request not granted                              2E
Wait                                             2F
Measurement not supported                        30
Measurement not initiated                        31
No such measurement                              32
Measurement cannot be stopped                    33
<reserved>                                       <34-FE>
NULL                                             FF
```

Conflicting or incomplete data in the attribute list which prevents the BS from performing the message (for 08). This Nack cause applies when the message is valid and is supported by the BS, but cannot be performed correctly for reasons not covered by other general or special Nack causes (09). Data in attribute list is valid, but beyond the capabilities of the particular BS implementation (30).

NOTES Channel

| Attribute Identifier | 1 |
|---|---|
| BS Port Number | 2 |
| Timeslot Number | 3 |
| Subslot Number | 4 |

```
BS Port Number                                   <0-FF>
```

```
Timeslot Number
     Time slot in transmission
     link                                    <0-1F>
Subslot Number
     a (bits 1,2)                            00
     b (bits 3,4)                            01
     c (bits 5,6)                            02
     d (bits 7,8)                            03
     64 kbps signaling FF
```

Operational State

| Attribute Identifier | 1 |
|---|---|
| Operational State | 2 |

```
Operational State
     Disabled                                01
     Enabled                                 02
     These states are in accordance with ISO/CCITT values
(X.721)
     <reserved for future use>               <03-FE>
     NULL (Operate. State not supported)     FF
```

Perceived Severity

| Attribute Identifier | 1 |
|---|---|
| Severity Value | 2 |

```
Severity Value
     failure ceased                          00
     critical failure                01
     major failure                   02
     minor failure                   03
     warning level failure           04
     indeterminate failure                   05
     <reserved>                              <06-3F>
```

PN Code

| Attribute Identifier | 1 |
|---|---|
| PN code (0..7) | 2 |

Power control step size

| Attribute Identifier | 1 |
|---|---|
| Power control step size | 2 |

Probable Cause

| Attribute Identifier | 1 |
|---|---|
| Probable Cause Type | 2 |
| Probable Cause Value | 3 |
| Probable Cause Value (cont.) | 4 |

Probable Cause Type

| ISO/CCITT values (X.721) | 01 |
|---|---|
| GSM specific values | 02 |
| Omnipoint specific values | 03 |
| <reserved for future use> | <04-FF> |

Probable Cause Value

When Probable Cause Type is 01, 02 or 03 the last numeric value of the object identifier value specified in ASN.1 syntax coding is used.

Physical Config

| | |
|---|---|
| Attribute Identifier | 1 |
| Length | 2-3 |
| Required Test Config | 4 |
| (cont.) | |
| (cont.) | N |

Radio channel ID

| | |
|---|---|
| Attribute Identifier | 1 |
| Radio channel ID (hex coded) | 2 |

Reporting Reason

| | |
|---|---|
| Attribute Identifier | 1 |
| Reporting Reason | 2 |

Reporting Reason

| | |
|---|---|
| Scheduled Reporting | 0 |
| Requested reporting | 1 |

Reporting Schedule

| | |
|---|---|
| Attribute Identifier | 1 |
| Reporting Schedule | 2 |

Reporting Schedule <5,15,30,60> minutes

RX Mode

| Attribute Identifier | 1 |
|---|---|
| RX Mode (interference/noise limited) | 2 |

Service Provider

| Attribute Identifier | 1 |
|---|---|
| Service Provider | 2 |
| (cont.) | 3 |

'Service Provider' is coded on 32 bits with Low order bit being 1 octet 2 and high order bit being bit 8 octet 3.

Site Inputs

If Site Inputs are requested from BS Manager with message Get Attributes, all inputs are listed.

| Attribute Identifier | 1 |
|---|---|
| Length | 2-3 |
| Site Input | 4 |
| (cont.) | |
| (cont.) | N |

Each octet from 4 to N controls one Site input. Each of these octets contain the input number and the status of the input and they are coded as follows:

| 8 | 7 | 6 | 5 | 4 | 3 | 2 | 1 |
|---|---|---|---|---|---|---|---|
| State | Input number | | | | | | |

State is a binary presentation of the input state, 0 or 1. Input number is a binary presentation of input number. (the use of Site Inputs is tbd}

Site Outputs

If Site Outputs are requested from BS Manager with message Get Attributes, all outputs are listed. Coding of this information element is the same as in Site Inputs.

| Attribute Identifier | 1 |
|---|---|
| Length | 2-3 |
| Site Output | 4 |
| (cont.) | |
| (cont.) | N |

SW Configuration

| Attribute Identifier | 1 |
|---|---|
| Length | 2-3 |
| SW Description 1 | 4 |
| ... | |
| SW Description n | N |

SW Conf. contains a list of SW Descriptions related to the managed object.

SW Description

| Attribute Identifier | 1 |
|---|---|
| File Id | 2 |
| File Version | N |

System Type

| Attribute Identifier | 1 |
|---|---|
| System Type | 2 |

System type

| 0 | DCS1900 cause codes |
|---|---|
| 1 | Bellcore Generic C Cause Codes |
| 2-255 | Reserved |

TEI

| Attribute Identifier | 1 |
|---|---|
| TEI | 2 |

TEI <0..63>

Test Duration

| Attribute Identifier | 1 |
|---|---|
| Test Duration | 2-3 |

Test Duration <01-FFFF>
Test Duration is a binary presentation of seconds indicating the
time the test should last.

Test No

| Attribute Identifier | 1 |
|---|---|
| Test Number | 2 |

```
Test Number
<not used>                      00
Radio loop test via transceiver  01
BS self test                     02
```

Test Report Info

| Attribute Identifier | 1 |
|---|---|
| Length | 2-3 |
| Test Result Info | 4 |
| (cont.) | |
| (cont.) | N |

TX Mode

| Attribute Identifier | 1 |
|---|---|
| TX Mode (Linear/non-linear) | 2 |

Window Size

| Attribute Identifier | 1 |
|---|---|
| Window Size | 2 |

Window Size is a binary presentation of the number of layer 3 Load Data Segments to be sent before a layer 3 acknowledgment. Value 0 is not used.

PCS2000 Privacy & Authentication Requirements

This section sets forth the general requirements for PCS Privacy and Authentication, (P & A) for the PCS2000 Air Interface system to the DCS-1900 and, alternatively, to the Bellcore Generic C/ISDN based network architectures. The need for privacy and authentication is based on the use of radio transmission for access to communication services. The radio transmission access or air interface is particularly sensitive to the use of PCS services by unauthorized users and eavesdropping on voice and data information which is exchanged over the air interface. Since wireless access intrinsically does not provide for the same level of protection to their service operators and users as the traditional public and private wireline telecommunication networks, additional security features are required to protect access to the PCS services offered by service providers the privacy of the user's voice, data, or other information

Common Requirements

UIM - AC Authentication

The permanent data required for authenticating the user shall be stored in the Authentication Center (AC) and in the User Identity Module (UIM).

Fraud Protection

The authentication process shall protect against attempts to obtain service illegally. This includes interception of call information, take-over attacks and "cloning". Protection shall be upgradeable for the life of the system.

Forward Compatibility

PCS2000 P&A functionality shall be both upgradeable and forward compatible for the life of the system.

Protection of Secret Data

No user or service provider secrets, either permanent or temporary, shall be allowed to pass unencrypted over the radio channel.

Radio Channel Protection From External Manipulation

PCS2000 radio channels shall be protected from external malicious signaling manipulation.

User Simplicity & Transparency

From the user prospective, the PCS2000 P&A processes shall be virtually transparent. The user shall incur a minimum of inconvenience and the wireless calling process shall be no more complicated than the conventional wireline process.

Low Complexity

PCS2000 P&A shall add minimum complexity to the MS and to the network.

Registration & Call Set-up Time Impacts

The PCS2000 P&A process shall add a minimum amount of time to the call set-up time.

Error Tolerance

The PCS2000 P&A processes shall be robust to noise and interference.

Two Way Authentication

In addition to authenticating the user to the provider's network, the service provider's network shall be optionally authenticatable to the MS.

Business-Friendly

The PCS2000 P&A processes shall be amenable to an unregulated competitive business environment. A minimum amount of trust and interworking arrangements are desirable in order to let service providers serve each others roamers with a minimum of concern and perceived monetary risk an a maximum degree of mutual advantage.

GSM Based Privacy and Authentication

Introduction

All security functions must be implemented with minimum assumptions about the cryptological algorithms that are used, and it must be possible to change these algorithms during the system life time. Any change in these algorithms must not change the format of the messages exchanged via the interfaces of the system. The system must be prepared for parallel operation of more than one algorithm during a transitional period.
The security procedures must includes mechanisms to enable recovery in event of signaling failures. These recovery procedures must be designed in such a way that they cannot be used to breach the security of the system.

Security Features

The security features described in the following provide a level of protection at the radiopath that is at least as good as the level of protection provided in the fixed networks.
The following security features are considered:

user identity (IMSI) confidentiality;
user identity (IMSI) authentication;
user data confidentiality on physical connections;
signaling information element confidentiality.

The implementation of these four security features is mandatory on both the fixed infrastructure side and the MS side. This means that all PCS2000 networks and all MSs shall be able to support every security feature. Use of these four security features is at the discretion of the operator for its own subscribers while on the home network. For roaming subscribers, use of these four security features is mandatory unless otherwise agreed by all the affected PCN operators.

<u>User identity confidentiality</u>

The user identity confidentiality feature is the property that the IMSI is not made available or disclosed to unauthorized individuals, entities or processes.

This feature provides for the privacy of the identities of the users who are using PCS resources (e.g. a traffic channel or any signaling means). It allows for the improvement of all other security features (e.g. user data confidentiality) and provides for the protection against tracing the location of a mobile user by listening to the signaling exchanges on the radio path.

This feature necessitates the confidentiality of the user identity (IMSI) when it is transferred in signaling messages together with specific measures to preclude the possibility to derive it indirectly from listening to specific information, such as addresses, at the radiopath.

The means used to identify a mobile user on the radiopath consists in a local number called TMSI (Temporary Mobile Subscriber Identity).

When used, the user identity confidentiality feature shall apply for all signaling sequences on the radiopath. However, in the case of location register failure, or in case the MS has no TMSJ available, open identification is allowed on the radio path.

<u>User identity authentication</u>

International Mobile Subscriber Identity (IMSI) authentication is the corroboration by the land-based part of the system that the user identity (IMSI or TMSI), transferred by the mobile user within the identification procedure at the radiopath, is the one claimed.

The purpose of this security feature is to protect the network against unauthorized use. It also provides for the protection of the PCS users by denying the possibility for intruders to impersonate authorized users.

The authentication of the PCS user identity may be triggered by the network when the user applies for:

- a change of a subscriber-related information element in the VLR or HLR (including some or all of location updating involving change of VLR, registration or erasure of a supplementary service), or
- an access to a service (including some or all of: set-up of mobile originating or terminated calls, activation or deactivation of a supplementary service), or
- first network access after restart of MSC/VLR,
- or in the event of cipher key sequence number mismatch.

Physical security means must be provided to preclude the possibility to obtain sufficient information to impersonate or duplicate a user of PCS, in particular by deriving sensitive information from the mobile station equipment.

when the user identity authentication procedure fails on an access request to the PCS, and this failure is not due to network malfunction, the access to the PCS shall be denied to the requesting party.

Authentication during a malfunction of the network:

- Calls are permitted (including continuation and hand-over) when an MS is registered and has been successfully authenticated, whether active or not active on a call.
- Calls are permitted when an MS has already been registered (and therefore been already authenticated) and can not be successfully reauthenticated due to the network malfunction (e.g. the Home PCS was not able to provide authentication pairs RAND, SRES).
- Calls are not permitted when an MS attempts to register and can not be successfully authenticated due to the network malfunction.
- A new registration needs to be performed when the MS is not registered, or ceases to be registered, and the preceding cases apply.

<u>User data confidentiality on physical connections (voice and non-voice)</u>

The user data confidentiality feature on physical connections is the property that the user information exchanged on traffic channels is not made available or disclosed to unauthorized individuals, entities or processes.

The purpose of this feature is to ensure the privacy of the user information on traffic channels.

Encryption will normally be applied to all voice and non-voice communications. Although a standard algorithm will normally be employed, it is permissible for the mobile station and/or PCS infrastructure to support more than one algorithm. The infrastructure is responsible for deciding which algorithm to use (including the possibility not to use encryption, in which case confidentiality is not supported).

When necessary, the MS shall signal to the network indicating which of up to seven encryption algorithm, plus one transparent algorithm, it supports. (Note: The effect of the "transparent algorithm" being selected is the same as not being encrypted.) The serving network then selects one of these that it can support (based on an order of priority preset in the network), and signals this to the MS. The selected algorithm is then used by the MS and by the network.

Signaling information element confidentiality

The signaling information element confidentiality feature is the property that a given piece of signaling information which is exchanged between mobile stations and base stations is not made available or disclosed to unauthorized individuals, entities or processes.

The purpose of this feature is to ensure the privacy of user related signaling elements.

When used, this feature applies on selected fields of signaling messages which are exchanged between mobile stations and base stations.

The signaling information elements included in the message used to establish the connection (protocol discriminator, connection reference, message type and mobile station identity (IMSI, TMSI or IMEI according to the circumstance)) are not protected.

The following signaling information elements related to the user are protected whenever used after connection establishment:

- International Mobile Equipment Identity (IMEI),
- International Mobile Subscriber Identity (IMSI),
- Calling user directory number (mobile terminating alls) and
- Called user directory number (mobile originated calls).

The IMEI requires physical protection against being removed, replaced or its contents being changed by unauthorized individuals. The IMSI is stored securely within the UIM.

User identity confidentiality

The purpose of this function is to avoid the possibility for an intruder to identify which user is using a given resource on the radio path (e.g. Traffic Channel or signaling resources) by listening to the signaling exchanges on the radio path. This allows both a high level of confidentiality for user data and signaling.

The provision of this function implies that the IMSI (International Mobile Subscriber Identity), or any information allowing a listener to derive the IMSI easily, should normally not be transmitted in clear text in any signaling message on the radio path.

Consequently, to obtain the required level of protection, it is necessary that:

- A protected identifying method is normally used instead of the IMSI on the radio path.
- The IMSI is normally not used as an addressing means on the radio path.
- When the signaling procedures permit it, signaling information elements that convey information about the mobile user identity must be encrypted for transmission on the radio path.

The identifying method is specified in the following.

Identifying method

The means used to identify a mobile user on the radio path consists in a TMSI (Temporary Mobile Subscriber Identity). This TMSI is a local number, having a meaning only in a given location area, the TMSI must be accompanied by the LAI (Location Area Identification) to avoid ambiguities. The maximum length and guidance for defining the format of a TMSI are specified in GSM 03.03.

The network (e.g. a VLR) manages suitable data bases to keep the relation between TMSIs and IMSIs. When a TMSI is received with an LAI that does not correspond to the current VLR, the IMSI of the MS must be requested from the VLR in charge of the indicated location area if its address is known; otherwise the IMSI is requested from the MS.

A new TMSI must be allocated at least in each location updating procedure. The allocation of a new TMSI corresponds implicitly for the MS to the de-allocation of the previous one. In the fixed part of the network, the cancellation of the record for an MS in a VLR implies the de-allocation of the corresponding TMSI.

To cope with some malfunctioning, e.g. arising from a software failure, the fixed part of the network can require the identification of the MS in the clear. This procedure is a breach in the provision of the service, and should be used only when necessary.

When a new TMSI is allocated to an MS, it is transmitted to the MS in an encrypted mode. The MS must store its current TMSI in a non volatile memory, together with the LAI, so that these data are not lost when the MS is switched-off.

Procedures

This section presents the procedures, or elements of procedures, pertaining to the management of TMSIs.

Location updating in the same MSC area

This procedure is part of the location updating procedure which takes place when the original location area and the new location area depend on the same MSC. The part of this procedure relative to TMSI management is reduced to a TMSI reallocation (from TMSIo with "o" for "old" to TMSIn with "n" for "new"). The MS sends TMSIo as an identifying field at the beginning of the location updating procedure.

Signaling Functionalities:

Management of means for new encryption:

The MS and MSC/VLR agree on means for encryption of signaling information elements, in particular to transmit TMSIn.

Location updating in a new MSCs area, within the same VLR area

This procedure is part of the location updating procedure which takes place when the original location area and the new location area depend on different MSCs, on the same VLR. From a security point of view, the order of the procedures is irrelevant.

Signaling functionalities:

Location Updating:

The MSC/VLR indicates that the location of the MS must be updated.

Location updating in a new VLR; old VLR reachable

This procedure is part of the normal location updating procedure, using TMSI and LAI, when the original location area and the new location area depend on different VLRs.

The MS is still registered in VLRo ("o" for old or original) and requests registration in VLRn ("n" for new). LAI and TMSIo are sent by MS as identifying fields during the location updating procedure.

Signaling functionalities:

Security Related Information:

The MSC/VLRn needs some information for authentication and encryption; this information is obtained from MSC/VLRo.

Cancellation:

The HLR indicates to VLRo that the MS is now under control of another VLR. The "old" TMSI is free for allocation.

Location Updating in a new VLR; old VLR not reachable

This variant of the procedure in the previous section arises when the VLR receiving the LAI and TMSIo cannot identify the VLRo. In that case the relation between TMSIo and IMSI is lost, and the identification of the MS in clear is necessary. The MS must receive a new TMSI and reinitialize the process. (See Next Section).

Reallocation of a new TMSI

This function can be initiated by the network whenever a radio connection exists. The procedure can be included in other procedures, e.g. through the means of optional parameters. The execution of this function is left to the network operator.

When a new TMSI is allocated, to an MS, the network must prevent the old TMSI from being allocated again until the MS has acknowledged the allocation of the new TMSI.

If an IMSI record is deleted in the VLR by O&M action, the network must prevent any TMSI associated with the deleted IMSI record from being allocated again until a new TMSI is successfully allocated to that IMSI.

If an IMSI record is deleted in the HLR by O&M action, it is not possible to prevent any TMSI associated with the IMSI record from being allocated again. However, if the MS whose IMSI record was deleted should attempt to access the network using the TMSI after the TMSI has been allocated to a different IMSI, then authentication or encryption of the MS whose IMSI was deleted will almost certainly fail, which will cause the TMSI to be deleted from the MS.

Local TMSI unknown

This procedure happens when a data loss has occurred in a VLR and when an MS uses an unknown TMSI, e.g. for a communication request or for a location updating request in a location area managed by the same VLR.

Location updating in a new VLR in case of a loss of information.

This variant of the procedure arises when the VLR in charge of the MS has suffered a loss of data. In that case the relation between TMSIo and IMST is lost, and the identification of the MS in clear is necessary.

Unsuccessful TMSI allocation

If the MS does not acknowledge the allocation of a new TMSI, the network shall maintain the association between the old TMSI and the IMSI and between the new TMSJ and the IMSI.

For an MS-originated transaction, the network shall allow the MS to identify itself by either the old TMSI or the new TMSI. This will allow the network to determine the TMSI stored in the MS; the association between the other TMSI and the IMSI shall then be deleted, to allow the unused TMST to be allocated to another MS.

For a network-originated transaction, the network shall identify the MS by its IMSI. When radio contact has been established, the network shall instruct the MS to delete any stored TMSI. When the MS has acknowledged this instruction, the network shall delete the association between the IMSI of the MS and any TMSI; this will allow the released TMSIs to be allocated to another MS.

In either of the cases above, the network may initiate the normal TMSI reallocation procedure.

Repeated failure of TMSI reallocation (passing a limit set by the operator) may be reported for O&M action.

User identity authentication

Authentication is performed after the user identity (TMSI/IMSI) is known by the network and before the channel is encrypted.

Two network functions are necessary: the authentication procedure itself, and the key management inside the fixed subsystem.

The authentication procedure

The authentication procedure consists of the following exchange between the fixed sub-system and the MS.

- The fixed sub-system transmits a non-predictable number RAND to the MS.
- The MS computes the signature of RAND, say SRES, using the algorithm A3, and some secret information: the User Authentication Key, denoted Ki in the following.

- The MS transmits the signature SRES to the fixed sub-system.
- The fixed sub-system tests SRES for validity. User authentication key management

The user authentication key Ki is allocated, together with the IMSI, at subscription time.

Ki is stored on the network side in the Home Public Land Mobile Network (HPCN), in an Authentication Center (AuC). A PCN may contain one or more AuC. An AuC can be physically integrated with other functions, e.g. in a Home Location Register (HLR).

General authentication procedure

When needed for an MS, the MSC/VLR requests security related information from the HLR/AuC corresponding to the MS. This includes an array of pairs of corresponding RAND and SRES. These pairs are obtained by applying the algorithm A3 to each RAND and the key Ki. The pairs are stored in the VLR.

When an MSC/VLR performs authentication, including the case of a location updating within the same VLR area, it chooses a RAND value in the array corresponding to the MS. It then tests the answer from the MS by comparing it with the corresponding SRES.

Authentication at location updating in a new VLR, using TMSI

In the case when identification is done using TMSI, pairs for authentication are given by the old VLR. The old VLR shall send to the new VLR only those pairs which have not been used.

Authentication at location updating in a new VLR, using IMSI

When the IMSI is used for identification, or more generally when the old VLR is not reachable, the procedure described in the previous section cannot be used. Instead, pairs of RAN/SRESA are requested directly from the HPCN.

Authentication at location updating in a new VLR, using IMSI, TMSI unknown in 'old' VLR

The case is an abnormal one, when a data loss has occurred in the 'old' VLRo. The procedure is the same as the previous section, except the acts take place after the VLRn is informed by the VLRo that the TMSI is known.

Authentication at location updating in a new VLR,

using IMSI, old VLR not reachable

The case occurs when an old VLR cannot be reached by the new VLR. The procedure for authentication is the same as the prior section, except that no message can be conveyed from VLRo, and therefore the procedure begins with VLRn.

Authentication with IMSI if authentication with TMSI fails

If authentication of an MS which identifies itself with a TMSI is unsuccessful, the network requests the IMSI from the MS, and repeats the authentication using the IMSI. Optionally, if authentication using the TMSI fails, the network may reject the access request or location registration request which triggered the authentication.

Re-use of security related information in failure situations

Security related information consisting of sets of RAND, SRES and Kc is stored in the VLR, and may be stored in the HLR.

When a VLR has used a set of security related information to authenticate an MS, it shall delete the set of security related information or mark it as used. When a VLR needs to use security related information, it shall use a set which is not marked as used in preference to a set which is marked as used; if there are no sets which are not marked as used, then the VLR may use a set which is marked as used. It is an operator option to define how many times a set of security related information may be re-used in the VLR; when a set of security related information has been re-used as many times as is permitted by the operator, it shall be deleted.

If a VLR successfully requests security related information from the HLR or previous VLR, it shall discard any security related information which is marked as used.

If a VLR receives from another VLR a request for security related information, it shall send only the sets which are not marked as used.

If an HLR receives a request for security related information, it shall send any sets which are not marked as used; those sets shall then be deleted or marked as used. If there are no sets which are not marked as used, the HLR may as an operator option send sets which are marked as used. It is an operator option to define how many times a set of security related information may be re-sent by the HLR; when a set of security related information has been sent as many times as is permitted by the operator, it shall be deleted.

Confidentiality Of Signaling Information Elements, Connectionless Data And User Information Elements On Physical Connections

Some signaling information elements are considered sensitive and must be protected.

To ensure the identity confidentiality, the TMSI must be transferred in a protected mode at allocation time and at other times when the signaling procedures permit it.

The confidentiality of user information on physical connections concerns the information transmitted on a traffic channel on the MS-BS interface (e.g. for speech). It is not an end-to-end confidentiality service.

These four needs for a protected mode of transmission are fulfilled with the same mechanism where the confidentiality function is an OSI layer 1 function. The scheme described below assumes that the main part of the signaling information element is transmitted as control traffic.

Four points have to be specified

- The encryption method,
- The key setting,
- The starting of the encryption and decryption processes and
- The synchronization.

The encryption method

The layer 1 data flow (transmitted as control traffic) is encrypted by a bit per bit or stream cipher, i.e. the data flow on the radio path is obtained by the EXCLUSIVE OR'ing (XORing) of the user data flow and an encryption bit stream, generated by the an algorithm such as A5 using a key determined as specified Key Setting section. The key is denoted by Kc, and is called "Encryption Key".

The decryption is performed by exactly the same method.

The algorithm A5 is specified in a later section.

Key setting

Mutual key setting is the procedure that allows the MS and the network to agree on the key Kc to be used in the encryption and decryption algorithm A5.

A key setting is triggered by the authentication procedure. It may be initiated by the network as often as the network operator wishes.

A key setting must occur in control traffic not yet encrypted and as soon as the identity of the mobile user (i. e. TMSI or IMSI) is known by the network.

The transmission of Kc to the MS is indirect and uses the authentication RAND value; Kc is derived from RAND by using the algorithm A8 and the User Authentication key Ki, as defined in cryptographic algorithm section.

As a consequence, the procedures for the management of Kc are the authentication procedures described in the User Identity Authentication section.

The values Kc are computed together with the SRES values. The security related information consists of RAND, SRES and Kc.

The key Kc may be stored by the mobile station until it is updated at the next authentication.

Encryption key sequence number

**[0607]** The encryption key sequence number is a number which is associated with the encryption key Kc and they are stored together in the mobile station and in the network.

However, since it is not directly involved in any security mechanism, it is not addressed in this chapter.

Starting of the encryption and decryption processes

The MS and the BS must coordinate the instants at which the encryption and decryption processes starts.

The transition from clear text mode to encrypted mode proceeds as follows: Decryption starts in the BS which sends to the MS a message containing "Start cipher". Both the encryption and decryption start on the MS side after this message has been correctly received by the MS. Finally, encryption on the BS side starts as soon as acknowledge is received from the MS.

When a channel is allocated for user data transmission, the key used is the one set during the preceding control traffic session. The encryption and decryption processes start immediately.

Synchronization

The encryption stream at one end and the decryption stream at the other end must be synchronized, for the encryption bit stream and the decryption bit streams to coincide. The underlying synchronization scheme is described in the Implementation Indication portion of the Specification of the A5 algorythm.

Hand-over

When a hand-over occurs, the necessary information (e.g. key Kc, initialization data) is transmitted within the system infrastructure to enable the communication to proceed from the old BS to the new BS, and the synchronization procedure is resumed. The key Kc remains unchanged at handover.

Cryptographic Algorithms

This chapter specifies the cryptological algorithms which are needed to provide the various security features and mechanisms defined above.

Three algorithms have been addressed:

- A3: authentication algorithm;
- A5: encryption / decryption algorithm;
- A8: encryption key generator.

The algorithm A5 must be common to all PCSs and all mobile stations (in particular, to allow roaming). However, up to 8 different versions of the algorithm A5 (including no encryption) may be specified.

The algorithms A3 and A8 are at each PCS operator discretion. Only the formats of their inputs and outputs must be specified. It is also desirable that the processing times of these algorithms remain below a maximum value.

Specification of A5

As defined the algorithm A5 realizes the protection of both user data and signaling information elements at the physical layer.

Synchronization of both the encryption and decryption (especially at hand-over) must be guaranteed.

Implementation indications

The algorithm A5 is implemented into both the MS and the BS. On the BS side, it is assumed in the following that one algorithm A5 is implemented for a traffic channel.

The encryption takes place just before modulation and after interleaving; the decryption takes place just after demodulation symmetrically. Both encryption and decryption need the algorithm A5. They start at different times.

Due to the TDMA techniques used in PCS2000, the useful data (i.e. the plain text) is organized in blocks of 160 bits. Each block is incorporated into a normal burst and transmitted during a time slot.

For encryption, produces a sequence of 160 encryption/decryption bits (here called BLOCK) which is combined by a bit wise module 2 addition to the 160 bits plain text block. The useful information bits in a block are numbered eO to el 59. The first encryption/decryption bit Produced by A5 is added to eO, the second to el and so on. As an indication, the resulting 160 bits block is then applied to the burst builder.

For each slot, the decryption is performed on the MS side with the first block (BLOCK1) of 160 bits produced by A5, and the encryption is performed with the second produced block (BLOCK2). As a consequence, on the network side BLOCK1 is used for encryption and BLOCK2 for decryption. Therefore, the algorithm A5 must produce two blocks of 160 bits (i.e. BLOCK1 and BLOCK2).

Synchronization is guaranteed by driving the algorithm A5 by an explicit time variable, COUNT, derived from the IDMA frame number. Therefore, each 160 bit block produced by A5 only depends on the TDMA frame numbering, and of the encryption key Kc.

COUNT is expressed in 22 bits as the direct frame count. It is an input parameter of the algorithm A5.

Bit 22 is the most significant bit (msb) and bit I the least significant bit (1sb) of COUNT.

External specification of A5

The two input parameters (COUNT and Kc) and the output parameters (BLOCK1 and BLOCK2) of the algorithm A5 shall follow the following formats:

| length of Kc | 64 bits; |
|---|---|
| length of COUNT: | 22 bits; |
| length of BLOCK1: | 160 bits; |
| length of BLOCK2: | 160 bits. |

The algorithm A5 shall produce BLOCK1 and BLOCK2 in less than a TDMA frame duration

NOTE: If the actual length of the encryption key is less than 64 bits, then it is assumed that the actual encryption key corresponds to the most significant bits of Kc, and that the remaining and less significant bits are set to zero.

Internal specification of AS

The internal specification of A5 (i.e. any version of A5) is not included in this recommendation.

Negotiation of A5

This recommendation allows more than one A5 algorithm and an unencrypted mode of operation to be used. It provides support for up to seven encryption algorithms to provide the functionality of A5. This is compatible with roaming, it enables the use of different algorithms in different regions, and it will allow old algorithms to be phased out and new ones to be phased in, in case that such measures should be deemed necessary.

Two versions of A5 have been defined for the short term solution: A5/1 and A5/2.

When an MS wishes to establish a connection with a PCS network, the MS shall indicate to the network which (if any) of the version(s) of the A5 algorithm it is prepared to use. The network shall compare its encryption capabilities and preferences, and any special requirements of the subscription of the MS, with those indicated by the MS and shall act according to the following rules: 0 If the MS and the network have no versions of the A5 algorithm in common and the network is not prepared to use an unencrypted connection, then the connection shall be released.

- If the MS and the network have at least one version of the A5 algorithm in common, then the network shall select one of the mutually acceptable versions of the A5 algorithm for use on that connection.
- If the MS and the network have no versions of the A5 algorithm in common and the network is willing to use an unencrypted connection, then an unencrypted connection shall be used.

Specification of A3

The algorithm A3 may be specified by the PCS providers.

The purpose of the algorithm A3 is to provide an authentication of a mobile user's identity.

The algorithm A3 must compute an expected response SRES from a random challenge RAND sent by the network. For this computation, A3 makes use of the secret authentication key Ki.

Implementation and operational requirements

On the MS side, the algorithm A3 is contained in a User Identity Module, as specified in the Security Features section of the Privacy & Authentication portion.

On the network side, it shall be implemented in HLR/AuC.

External specification of A3

The two input parameters (RAND and Ki) and the output parameter (SRES) of the algorithm A3 shall follow the following formats:

| | |
|---|---|
| length of Ki | 128 bits; |
| length of RAND | 128 bits; |
| length of SRES | 32 bits. |

The run-time of the algorithm A3 shall be less than 500 ms.

Specification of A8

The algorithm A8 may be specified by the PCS providers, as the algorithm A3.
As defined the algorithm A8 must compute the encryption key Kc from the random challenge RAND sent during the authentication procedure, using the authentication key Ki.

Implementation and operational requirements

On the MS side, the algorithm A8 is contained in the UIM, as specified in the Security Features section of the Privacy & Authentication portion.
On the network side, the algorithm A8 shall be co-located with the algorithm A3.
An algorithm A38 may perform the combined functions of A3 and A8.

External specification of A8

The two input parameters (RAND and Ki) and the output parameter (Kc) of the algorithm A8 shall follow the following formats:

| | |
|---|---|
| length of Ki | 128 bits; |
| length of RAND | 128 bits; |
| length of Kc | 64 bits. |

Since the max length of the actual encryption key is fixed, the algorithm A8 shall produce this actual encryption key and extend it (if necessary) into a 64 bit word where the non-significant bits are forced to zero. It is assumed that any non-significant bits are the least significant bits and that the actual encryption key is contained in the most significant bits.

IS-54 Based Authentication, Encryption of Signaling Information/User Data and Voice Privacy

Messages received during the authentication procedures that are unrelated to the authentication process shall also be processed.

Authentication

The term "authentication" refers to the process during which information is exchanged between a mobile station and the base station for the purposes of enabling the base station to confirm the identity of the mobile station. In short, a successful. outcome of the authentication process occurs only when it can be demonstrated that the mobile station and base station possess identical sets of Shared Secret Data (SSD).

Shared Secret Data (SSD)

SSD is a 128-bit pattern stored in the mobile station (in semi-permanent memory) and readily available to the base station. SSD is partitioned into two distinct subsets. Each subset is used to support a different process. Specifically,
**[0652]**    SSD-A which is 64 bits is used to support the authentication procedures; and SSD-B also 64d bits is issued to support voice privacy and message confidentiality.

Random Challenge Memory (RAND)

Random Challenge Memory (RAND) is a 32 bit value that is held in the mobile station. It is the concatenation of the last RAND1_A and RAND1_B values received in Random Challenge A and Random Challenge B Global Action Messages appended to the overhead message train. Both RAND1-A and RAND1.B must be received on the same control channel and in the same Overhead Message Train in order for a valid RAND to exist. $RAND_s$ is used in conjunction with SSD-A and other parameters, as appropriate, to authenticate mobile station originations, terminations and registrations.

Call History Parameter ($COUNTS_{S-P}$)

Call History Parameter ($COUNT_{S-P}$) is a modalo-64 count that is held in the mobile station. $COUNT_{S-P}$ is updated at die mobile upon receipt of a Parameter Update Order on the FVC or the Parameter Update Message on the FDTC.

Authentication of Mobile Station Registrations

When the information element AUTH in the System Parameter Overhead Message is set to 1, and the mobile station attempts to register, the following authentication-related procedures shall be performed:

In the mobile station,

- initialize the authentication algorithm (CAVE);
- execute the CAVE procedure;
- set AUTHR equal to the 18 bits of CAVE algorithm output;
- send AUTHR together with RANDC (eight most significant bits of RAND) and COUNTs-p to the base station (Authentication Word C of RECC Autonomous Registration Order Message).

At the base station,

- compare the received values for RANDC, and optionally COUNT, with the internally stored values associated with the received MIN/ESN;
- compute AUTHR as described above, except use the internally stored value of SSD-A; and
- compare the value for AUTHR computed internally with the value of AUTHR received from the mobile station.

If any of the comparisons by the base station fail, the base station may deem the registration attempt unsuccessful, initiate the Unique Challenge-Response procedure, or commence the process of updating the SSD.

Unique Challenge-Response Procedure

The Unique Challenge-Response Procedure is initiated by the base station and can be carried out over any control traffic.
More specifically:

At the base station,

- a 24-bit, random pattern referred to as RANDU is generated and sent to the mobile station via control traffic.
- initialize CAVE;
- execute the CAVE algorithm;
- set AUTHU equal to the 18 bits of the CAVE algorithm output.

At the mobile station,

- compute AUTHU as described above using the received RANDU and its internally stored values for the remaining input parameters;
- send AUTHU to the base station via control traffic.

Upon receipt of the Unique Challenge Order Confirmation from the mobile station, the base station compares the received value for AUTHU to that generated/stored internally. If the comparison fails, the base station may deny further access attempts by the mobile station, drop the call in progress, or initiate the process of updating the SSD.

Authentication of Mobile Station Originations

When the mobile station attempts to originate a call, the following authentication related procedures shall be performed:

In the mobile station,

- initialize CAVE;
- execute the CAVE algorithm;
- set AUTHR equal to the 18 bits of the CAVE algorithm output.
- send AUTHR together with RANDC (eight most significant bits of RAND) and COUNTs-p to the base station via control traffic;

At the base station,

- compare the received values for RANDC, and optionally COUNT, with the internally stored values associated with the received MIN/ESN;
- compute AUTHR as described above, except use the internally stored value of SSDA; and
- compare the value for AUTHR computed internally with the value of AUTHR received from the mobile station.

If the comparisons at the base station are successful, the appropriate channel assignment procedures are commenced.
If any of the comparisons by the base station fail, the base station may deny service, initiate the Unique Challenge-Response procedure , or commence the process of updating the SSD.

Authentication of Mobile Station Terminations

When a "Page Match" occurs, the following authentication-related procedures shall be performed:

- In the mobile station,

  - initialize CAVE;
  - execute the CAVE algorithm;
  - set AUTHR equal to the 18 bits of the CAVE algorithm output.
  - send AUTHR together with RANDC (eight most significant bits of RAND) and $COUNT_{s-p}$ to the base station via control traffic;

- At the base station,

  - compare the received values for RANDC, and optionally COUNT, with the internally stored values associated with the received MIN/ESN;
  - compute AUTHR as described above, except use the internally stored value of SSDA; and
  - compare the value for AUTHR computed internally with the value of AUTHR received from the mobile station.

If the comparisons at the base station are successful, the appropriate channel assignment procedures are commenced.
If any of the comparisons by the base station fail, the base station may deny service, initiate the Unique Challenge procedure, or commence the process of updating the SSD.

Updating the Shared Secret Data (SSD)

Updating the SSD involves the application of CAVE, initialized with mobile station specific information, random data and the mobile station's A-key. The A-key is:

- 64 bits long;

- assigned to the mobile station;
- stored in the mobile station's permanent security and identification memory; and
- is known only to the mobile station and its associated HLR/AC.

An A-key must be entered into the mobile station.

More specifically, updating the SSD in the mobile station proceeds as follows:

At the base station,

- send an Update Command, with the RANDSSD field set to the same 9 bit random number used in the HLR/AC computations, to the mobile station in control traffic.

In the mobile station,

- upon receipt of the Update Command, initialize CAVE;
- execute the CAVE algorithm;
- set SSD-A_NEW equal to the 64 most significant bits of the CAVE algorithm output, and SSD-B_NEW to the 64 least significant bits of the CAVE algorithm output;
- select a 32-bit random number, RANDBS, and send it to the base station in a Base Station Challenge Command in control traffic.
- re-initialize CAVE;
- execute the CAVE algorithm; and
- set AUTHBS equal to the 18 bits of the CAVE algorithm output.

In the base station,

- upon receipt of the Base Station Challenge Command, initialize CAVE, where RANDBS is set to the value received in the Base Station Challenge Command;
- execute the CAVE algorithm;
- set AUTHBS equal to the 18 bits of the CAVE algorithm output; and
- acknowledge receipt of the Base Station Challenge Command by including AUTHBS in the Base Station Challenge Command Confirmation message, which is sent in control traffic.

In the mobile station,

- upon receipt of the Base Station Challenge Command Confirmation, compare the AUTHBS received to that generated internally
- acknowledge receipt of the Update Command as follows:

  - if the comparison at the mobile station is successful, set SSD-A and SSD-B to SSD-A_NEW and SSD-B_NEW, respectively, and:

    - send an order confirmation message to the base station in control traffic.

  - if. the comparison at the mobile station fails, discard SSD-A_NEW and SSD-B-NEW, and:

    - send an order confirmation message to the base station in control traffic.

In the base station, if the SSD Update Confirmation received from the mobile station indicates a success, set SSD-A and SSD-B to the values received from the HLR/AC (see EIA/TIA IS-41).

CAVE Algorithm

The availability of CAVE algorithm information is governed under the U.S. International Traffic and Arms Regulation (ITAR) and the Export Administration Regulations.

Signaling Message Encryption

In an effort to enhance the authentication process, and to protect sensitive subscriber information (e.g., PINs), provisions have been made to allow for the encryption of a select subset of signaling messages. Note that some fields of the messages subject to encryption are always transmitted as plain text. Order/Message Type fields, for example, are never encrypted.

Voice Privacy

The term "voice privacy" refers to the process by which user voice transmitted over a digital traffic channel is afforded a modest degree of cryptographic protection against eavesdropping in the mobile station - base station segment of the connection.

Note that regardless of when voice privacy is activated, the data used to initialize the algorithm is computed based on parameters in effect at the time the AUTHR appended to the origination/page response message was computed.

Voice Privacy Control

Requests to activate/deactivate the voice privacy feature may be made during the call setup process or while the mobile station is in the conversation state. In either case, however, the decision to honor the request lies with the base station. Furthermore, the mobile station must not act under the assumption that the request has been granted until it receives positive verification from the base station.

Voice Privacy Control During Call Establishment Mobile Station Originations

To request activation of voice privacy on mobile station originations, the MS sends the BS a Set Cipher Command with cipher set to 1.

Mobile Station Terminations

To request activation of voice privacy on mobile station terminations, the BS sends the MS a Set Cipher Command with cipher set to 1.

Voice Privacy Control After Initial Channel As

To request a change in the privacy mode the MS sends the BS a Set Cipher Command with cipher set to the appropriate state.

Cipher Placement

Enciphering shall take place after error correction coding and before interleaving. In particular, note that user voice is enciphered while still represented as bits rather than quaternary symbols. Similarly, deciphering occurs after de interleaving.

Voice Privacy Algorithm

The availability of this information is governed under the U.S. International Traffic and Arms Regulation (ITAR) and the Export Administration Regulations.

Air Interface Description

Transmitter Power Output Characteristics

Mobile Station (MS)

Although the FCC permits up to 2 Watts Effective Isotropic Radiated Power (EIRP) for the MS, the peak EIRP of the MS is a nominal 1 Watt. The average power delivered to the antenna is less than 1 0 milliwatts for each 8 kbps time slot, permitting long durations between MS battery recharges. The constant envelope characteristic of the modulation technique permits use of an efficient non-linear output amplifier which further reduces battery drain.

Base Station (BS)

The FCC rules permit up to 1640 Watts peak EIRP per RF channel for PCS Base Stations. Since the BS peak power output to its antenna is 2 Watts, the maximum permissible BS antenna gain (ignoring feed losses) is therefore limited by the FCC rule to 29.15 dB.

Modulation Characteristics

Functional Description of Spread Spectrum Modulator

To produce the direct sequence spread spectrum (DSSS) characteristic of the system RF signal, a form of continuous phase shift quadrature modulation (CPM) called Spectrally Efficient Quadrature Amplitude Modulation (SEQAM) is used. This provides a constant amplitude for the envelope of the modulated carrier. The constant envelope modulation permits efficient non-linear RF power amplification (especially desirable for long hand set battery life), without spectral regrowth of modulation sidelobes. DSSS conveyance of information is accomplished by using multiple DSSS PN chip sequences to encode the baseband data. The PN sequence modulates the carrier to a 5 MHZ bandwidth. By shaping the PN chip waveforms before modulation, all modulation sidelobes at frequencies more than one-half the chip rate away from the center frequency of the DSSS RF signal are greatly attenuated

The functional description covers the basic architecture of the modulation utilized by the system. The waveform generated depends on the relationship between the I and Q states over several chip intervals and the successive values of I and Q. These successive values depend on the spreading codes being sent over I and Q.

The transmitter output power spectrum of the modulation after hard limiting or saturation of the power amplifier shall be measured using a 30 kHz resolution bandwidth with averaging performed over 50% to 90% of each TDMA transmit burst and over 500 or more bursts.

The baseband waveform of the I or Q baseband signal before application to the I/Q modulator shall be defined with each I and Q chip symbol rate at 2.5 MHZ. The I and Q chip symbol streams together shall form the 5 MCPS complex signal.

System Time and Frequency Synchronization Characteristics

Base Station-to-Network and Base Station-to Base Station Synchronization

The Base Station provides the basic TDIVIA loop timing structure for its cell or sector. To maximize PCS system throughput capacity, the TDMA frame times for all Base Stations within the same geographical area should be synchronized. For example, one method of obtaining the required timing is to utilize a GPS receiver at the Base Station Controller (and optionally at the BS) to generate the primary reference timing marker for the TDIVIA frame timing. This marker is captured at the Base Station Controller every second and transmitted down the backhaul lines to the attached Base Stations.

This synchronization of Base Stations within a given multicell PCS deployment allows a Base Station Controller to temporarily turn off any TDIVIA time slot of a given cell which may be interfering with a neighboring cell. It also facilitates Time Slot Interchange (TSI); i.e., switching a MS to a different time slot if a current time slot is being interfered with by an adjacent cell using the same time slot.

Base Station-to-Network Synchronization

The primary data timing standard in a digital network backhaul system, such as T1 or ISDN BRI or PRI, is the PSTN timing standard. To prevent data precession into overrun or under-run, the Base Station Controller and its Base Stations are synchronized to the PSTN tithing standard. The actual data movement clock, generated by the PSTN and rendered to an 8 kHz timing marker, is used by the system to get the data rate throughput.

Sufficient variable length guard times have been provided in the frames and time slots to permit synchronization between diverse timing mechanisms, e.g. if GPS timing is used at the BS or BSC, and PSTN timing is used in the network.

Mobile Station-to-Base Station Synchronization

The Mobile Station can synchronize to a new Base Station within one channel (time slot) and is capable of synchronizing with multiple Base Stations when those Base Stations are synchronized to a common digital network. The system allows noncoherent detection to be used by the BS and MS receivers, and they do not have to be phase-locked. However, the transmit and receive local oscillator frequencies of the BS and MS are automatically controlled to prevent data precession between the BS and MS.

Power Control Method

The technology is based on a TDMA structure. Therefore, it does not require the strict control of transmitter RF power output necessary to resolve the "Near-Far" problem experienced by most CDMA systems. The Base Station transmits a Power Control Command (PCC) at the beginning of its transmit period. The PCC provides a power control signal to adjust the MS power output level to a value just large enough to provide the required signal-to-noise plus interference ratio at the BS, as determined by the quality of the received PCP signal from the MS. This is done:

*    to minimize interference to other cells, which may be operating on the same or adjacent RF channels
*    for each time slot independently of other time slots in a frame
*    for each time slot, and, therefore, has a very low latency in the power adjustment process
*    to reduce Mobile Station battery consumption

Control of Transmitter Power Output

The system utilizes a Power Control Pulse (PCP). The PCP is transmitted by the MS in its assigned TDMA time slot just before the BS transmits to that MS in its associated TDD time slot. This MS PCP provides the BS with a measurement of the MS-BS path transmission loss, which serves as the basis for the BS transmit power level to that MS, as well as a Power Control Command (PCC) transmitted from the BS to the MS. The PCC causes the MS to change its output power in nominal steps of 3 dB (over a maximum 33 dB range), to a value just large enough to provide the required signal-to-noise plus interference ratio at the BS, as determined by the quality of the PCP received by the BS. This power control method works especially well for TDD systems since both forward and reverse channels using the same RF carrier frequency experience identical path losses. BS power is controlled on a channel (time slot) by channel (time slot) basis for each channel (time slot), independently of other channels (time slots).

In the TDD/TDMA frame design, the elapsed time for an entire TDID channel (time slot) shall be less than 500 μs -- less than 2.5% of the frame time. Because of this fast response time, the Power Control algorithm acts faster than the RF channel changes due to small scale multipath fading and shadowing, and helps to mitigate any performance degradation caused by these effects.

Control of Mobile Station Power Output

To permit RF channel reuse in nearby PCS cells, reduce interference with OFS users, and conserve battery power in the handheld units. The technology provides adaptive power control of the Mobile Station transmitters within each PCS cell. In some TDMA systems, the latency of the polling loop frame signals prevent the use of closed loop power control. However, with the TDD/TDMA frame design, the elapsed time for an entire TDD channel (time slot) is less than 500 μs -- less than 2.5% of the frame time. Because of this fast response time, the Power Control algorithm acts faster than the RF channel changes due to small scale multipath fading and shadowing, and helps to mitigate any performance degradation caused by these effects.

System Performance Requirements

RF Channel Plan

The system shall utilize the following channelization plan. There are several sequential hex numbers, currently omitted, that are held in reserve for later use. The system cellular frequency plans in the licensed frequency blocks will normally use channels that are separated by 5 MHZ. However, it is possible to use any frequency between 1850 and 1990 MHZ, in 650 Khz increments, i.e. 1850 MHZ, 1850.625 MHZ, etc. Each frequency is assigned a unique hex number for system use, the frequencies are numbered sequentially.

Channel (Time Slot) Composition

Each channel (time slot) shall be composed of six elements and accommodates the complete transaction between a BS and a MS. The Guard Times include a maximum TDID turn around time of 4.4 microseconds. The following tables show the time durations for each element of both the 32 and 25 channel TDMA frames. Parentheses indicate the times associated with a 25 channel deployment configuration.

| Information Element | Length in Time (microseconds) |
| --- | --- |
| PCP | 12.8 |
| Guard Time 1 | 35.8 (123.3) |
| BS TX | 268.8 |
| Guard Time 2 | 4.4 |
| MS TX | 268.8 |
| Guard Time 3 | 34.4 (121.9) |

Base Station Performance Requirements Transmitter

RF Frequency Agility

The transmitter shall be within +/- 10 PPM of the channel frequency, when switched from any one frequency to any other frequency within the same licensed frequency block, in no more than 500 microseconds.

RF Frequency Accuracy

The Base Station's transmit RF frequency shall be capable of deriving its frequency reference from the digital network frequency reference. Under these conditions the Base Station's transmit frequency shall track the digital network frequency reference up to +/-10 PPM limits from the nominal channel frequency outlined in RF frequency agility section (over all operating conditions). The Base Station's transmitter frequency shall be within +/-1 PPM of the nominal channel frequency listed in RF frequency agility section (over all operating conditions) when the Base Station is not synchronized to the network. The Base Station shall use a common frequency reference to generate the radio frequencies and the data clock.

Base Station Timing and Synchronization

Timing Jitter

The timing Jitter on the first chip in a time slot relative to the first chip in every other time slot shall be less than +/- 200 nanoseconds. The timing jitter between the first chip in a time slot and every other chip in that time slot shall be less than +/- 20 nanoseconds.

Base Station to Base Station Infra Controller Synchronization

Base Station transmissions will be synchronized to one another such that they transmit time slot 1 from the antenna within 3.2 microseconds (maximum) of each other.

Base Station to Base Station Inter Controller Synchronization

Base Station transmissions will be synchronized to one another such that they transmit time slot 1 from the antenna within 3.2 microseconds (maximum) of each other.

Power Output

TDMA Power Waveform vs. Time

The transmitter shall have a controlled on-off switching characteristic to meet the FCC spurious emissions requirements. The transmitter output shall not exceed -108 dbm during any receive time slot.

Peak RF Power Output

The Base Station transmitter shall be capable of 2 Watts (+/- 1.5 dB) peak output in the licensed frequency bands.

RF Power Control

The technology shall utilize a Power Control Pulse (PCP), transmitted by the MS in its assigned TDMA time slot just before the BS transmits to that MS in its associated TDD time slot. The PCP shall be a 64 chip PN sequence. This MS PCP provides' the BS with a measurement of the MS-BS path transmission loss, which serves as the basis for the BS transmit power level to that MS, as well as a Power Control Command (PCC) transmitted from the BS to the MS. The PCC shall cause the MS to change its output power to a value just large enough to provide the required signal-to-noise plus interference ratio at the BS, as determined by the quality of the PCP received by the BS. The PCC is included as a 3 bit field in the packet header. The peak RF power output level shall be capable of power control on a time slot by time slot basis over a nominal control range of 33 dB. Step sizes shall be monatomic with nominal steps of 3 dB.

Spurious RF Emissions

Conducted Emissions

Conducted emissions shall comply with FCC Part 24.238 - Emission Limits for the licensed PCS bands.

Radiated Emissions

Radiated emissions shall comply with FCC Part 15 rules for incidental and intentional radiators. The radiated emissions shall also comply with ANSI C95.1-1991.

Total Spurious Emissions

All spurious emissions and out of band emissions shall comply with FCC Part 24.238 Emission Limits for the licensed PCS bands. All spurious emissions include: modulation spectral sidelobes, transmitter harmonics, transmitter on-off switching transient emissions, power control transients, or multiple co-sited transmitter intermodulation products.

Direct Sequence Spread Spectrum Characteristics

DSSS Chip Rate

The DSSS chip rate shall be 5 megachips per second (Mcps).

Aggregate TDMA Bit Rate

The aggregate TDMA bit rate shall be 781.25 kbps. Aggregate TDMA bit rate is defined to be the total number of bit periods that occur within one second and include PCP, guard times, idle slots, control bits and user bits.

PN Code Characteristics

The PN codes employed to produce the direct sequence spread spectrum characteristics of the RF signal shall provide an inherent frequency diversity for the RF signal which shall mitigate the detrimental effects of multipath-induced Rayleigh fading and delay spread which occur in typical PCS mobile user environments. A frequency diversity gain proportional to the ratio of the DSSS spread bandwidth to the coherence bandwidth of the fading channel shall be provided. Spread spectrum correlation detection of the DSSS signal shall reject multipath components delayed by more than one PN chip time, and thereby mitigate the effects of intersymbol interference caused by multipath delay spread without the need for adaptive equalizers.

The low power density of the DSSS signal shall also mitigate the potential interference with nearby OFS users.

The DSSS PN codes assigned to cells in a multicell PCS deployment shall be quasiorthogonal to the PN codes employed by nearby cells reusing the same RF frequency. By utilizing the Code Division Multiple Access (CDMA) characteristics of quasiorthogonal PN code sets, a Frequency Reuse factor of N = 3 shall be provided by utilizing the processing gain of the DSSS, in conjunction with the propagation loss associated with the two cell physical separation of any two cells using the same frequency, to reject the co-channel interference caused by frequency reuse.

CDMA PN Coded Packets

Each packet shall consist of 1280. PN chips at 5 Mcps, transporting 200 bits. Code selection is application specific, with a selection field of 2 200 sequences designed for code orthogonality of 24 dB over the length of the sequence per packet. Sequences vary for each remote unit, from BS to BS and packet to packet. The packet shall contain a burst preamble with a 64 chip PN sequence.

Receiver

Frequency Agility

The receiver shall be capable of being switched in frequency from any one frequency to any other frequency within the same licensed frequency block, and become fully operational within 500 microseconds after being switched.

Frequency Stability/Synchronization

The same master clock that is used for transmit shall be used for receive.

Sensitivity

The minimum receive sensitivity shall be -102 dBm for a 10-3 BER.

Co-Channel Performance

Signals

The minimum co-channel interference (C/1) performance shall be 6 dB. An "On Channel" PCS 2000 RF signal shall be adjusted to 20 dB above the measured receive sensitivity for a $10^{-3}$ BER. A second "On Channel" signal using another DSSS code set shall be adjusted to within -6 dB of the first RF signal. The BER shall not exceed $10^{-3}$ BER.

Signals

The minimum co-channel interference (C/1) performance shall be 4 dB for CW interferers. An "On Channel" RF signal shall be adjusted to 20 dB above the measured received sensitivity for a $10^{-3}$ BER. A second "On Channel" CW signal shall be adjusted to within -4 dB of the signal. The BER shall not exceed $10^{-3}$ BER.

Multipath Performance

The receiver shall be able to maintain a BER of $10^{-3}$ minimum when receiving a signal with the multipath conditions as shown in the following table:

| Tap | Rel Delay (nSec) | Avg Power (dB) |
|---|---|---|
| 1 | 0 | 0 |
| 2 | 0-6000 | -3.0 |
| Minimum Receiver Performance in Multipath | | |

Test Conditions: No fading, static multipath test
  0 - 6 µs
  00 phase
Radio test performed at Eb/No=20dB

Adjacent Channel Performance

The minimum adjacent channel receiver performance shall be determined by the ratio in dB of two signals; where one signal (center frequency) is on the desired channel, the other signal (center frequency) is on an adjacent channel, and the desired signal is communicating with the receiver at a BER of $10^{-3}$. Minimum performance specifications are listed in the following chart:

| Adj Chan Spacing | Modulation Type | On Chan Signal Power | Min Spec |
|---|---|---|---|
| 5 MHZ | PCS2000 | + 2 dB above sens. | 25 dB |
| 2.5 MHZ | PCS2000 | + 2 dB above sens. | 7 dB |
| 5 MHZ | PCS2000 | +20 dB above sens. | 30 dB |
| 2.5 MHZ | PCS2000 | +20 dB above sens. | 9 dB |
| 5 MHZ | CW | +2 dB above sens. | 70 dB |
| 2.5 MHZ | CW | +2 dB above sens. | 45 dB |
| 5 MHZ | CW | +20 dB above sens. | 70 dB |
| 2.5 MHZ | CW | +20 dB above sens. | 50 dB |
| Minimum Adjacent Channel Performance | | | |

Intermodulation Performance

The minimum receiver intermodulation performance shall be determined by using three signal sources. One signal source shall be an "On Channel PCS2000" signal source, and the other two signal sources shall be CW sources located at 5 MHZ and 10 MHZ above the desired "On Channel" frequency. The test shall be repeated with the two CW signal sources located at 5 MHZ and 10 MHZ below the desired "On Channel" receive frequency. The "On Channel" signal shall be adjusted to 2 dB above the receiver sensitivity of the unit under test. Both CW signals shall be adjusted together at the same power level until the receiver BER is $10^{-3}$. The difference between the "On Channel" signal and the CW signals shall be 60 dB minimum.

Spurious RF Emissions

RF emissions from the Base Station receiver shall meet the FCC Part 15 incidental radiator rules.

Received Signal Strength Indicator (RSSI

Performance

The maximum response time for the RSSI measurement shall be 5 microseconds. The RSSI shall be monotonic in the measurement of received signal strength from the receiver sensitivity limit to at least a - 60 dBm input signal level. The RSSI resolution shall be less than or equal to 1.5 dB.

Typical Antenna Performance Specifications (For reference only)

Base Stations may be configured with either omnidirectional or high gain directional antennas (or a combination) depending on the specific RF coverage needs for each base site. In addition, to permit a Base Station to cover a large sparsely populated area, steerable phased array antennas may be used.

Omnidirectional Antennas

Gain

Omnidirectional antennas shall have a nominal gain of 5 to 10 dBi.

Vertical Beamwidth

Omnidirectional antennas shall have a nominal vertical beamwidth of 8 to 35 degrees.

Polarization

Omnidirectional antennas shall be vertically polarized.

Directional Antennas

Gain

Directional antennas shall have a nominal gain of 10 to 17 dBi.

Vertical Beamwidth

Directional antennas shall have a nominal vertical beamwidth of 7 to 35 degrees.

Azimuthal Beamwidth

Directional antennas shall have a nominal azimuthal beamwidth of 15 to 120 degrees with a minimum front-to-back ratio of 20 dB.

Phased Array (Steered) Antennas

Phased array antennas may be either vertically or circularly polarized.

Gain

Phased array antennas shall have a maximum gain of 29 dBi.

Vertical Beamwidth

Phased array antennas shall have a nominal vertical beamwidth of 8 degrees.

Azimuthal Beamwidth

Phased array antennas shall have a nominal azimuthal beamwidth of 8 degrees with a minimum front-to-back ratio of 20 dB.

Diversity for Mitigation of Multipath Effects

Spatial Diversity

The Base Station shall use spatial antenna diversity with 2, 3, or 4 antennas-depending on the severity of the multipath conditions of each base site.

Antenna Selection Algorithm

Both RSSI and correlation scores shall be employed by the BS to determine the signal quality received for each antenna from each PCP message received at the BS. The results of these measurements shall be used to select the best antenna for transmission within the same TDMA time slot (channel).

Operating Conditions

Temperature Ranges

Base Stations shall be categorized by temperature ranges. Minimum performance requirements shall be met over the temperature range specified for a class of Base Station.

| Class Of Base Station | Temperature Ranges |
| --- | --- |
| Class I | -10 C to +50 C |
| Class II | -30 C to +60 C |
| Class III | -40 C to +70 C |

Mobile Station Performance Requirements

Transmitter

RF Frequency Agility

The transmitter shall be switchable to within +/- 10 PPM of the channel frequency, when switched from any one frequency to any other frequency within the same licensed frequency block, in no more than 500 microseconds.

Peak Power Output (EIRP)

The Mobile Station transmitter shall have a maximum peak power output of 1 Watt (+/- 1.5 dB) EIRP in the licensed PCS bands.

TDMA Power Waveform vs. Time

The transmitter shall have a controlled on-off switching characteristic to meet the spurious requirements of section 3.3.1.5. The transmitter output shall not exceed -106 dBm during any mobile station receive time slot.

Mobile Station Average Power Output

The mobile station average power output shall be determined by the number of channels (time slots) aggregated to deliver the desired data rate. For example, each time slot (channel) delivers an 8 kbps data rate and transmits 9.4 mW (maximum). Since a 32 kbps user consumes 4 time slots, it therefore transmits 4 times the average power output of an 8 kbps user. Power control will further reduce the average power output as directed by the Base Station.

Mobile Station Transmit Power Control by Base

Station

Transmit Power Control shall be directed by the Base Station in 3 dB steps over a total range of 33 dB nominal. The 3 dB steps shall be accurate to within ±1 dB.
Time slot (channel) delivers an 8 kbps data rate and transmits 9.4 mW (maximum). Since a 32 kbps user consumes 4 time slots, it therefore transmits 4 times the average power output of an 8 kbps user. Power control will further reduce the average power output as directed by the Base Station.

Mobile Station Transmit Power Control by Base

Station

Transmit Power Control shall be directed by the Base Station in 3 dB steps over a to range of 33 dB nominal. The 3 dB steps shall be accurate to within ±1 dB.

Spurious RF Emissions

Conducted Emissions

Conducted emissions shall comply with FCC Part 24.238, "Emission Limits for the licensed PCS bands".

Radiated Emissions

Radiated emissions shall comply with FCC Part 15 rules for incidental and intentions radiators. The radiated emissions shall also comply with ANSI C95.1-1991.

Total Spurious Emissions

All spurious emissions and out of band emissions shall comply with FCC Part 24.238 "Emission Limits for the licensed PCS bands".

All spurious emissions include: modulation spectral sidelobes, transmitter harmonics, transmitter on-off switching transient emissions, power control transients, or multiple sited transmitter intermodulation.

Direct Sequence Spread Spectrum Characteristics

DSSS Chip Rate

The DSSS chip rate shall be 5 Megachips per second (Mcps).

Aggregate TDMA Bit Rate

The aggregate TDMA bit rate shall be 781.25 kbps. Aggregate TDMA bit rate is defined to be the total number of bit periods that occur within one second and include PCP guard times, idle slots, control bits and user bits.

PN Code Characteristics

The PN codes employed to produce the direct sequence spread spectrum characteristics of the RF signal shall provide an inherent frequency diversity for the RF signal which shall mitigate the detrimental effects of multipath-induced Rayleigh fading and delay spread which occur in typical PCS mobile user environments. A frequency diversity gain proportional to the ratio of the DSSS spread bandwidth to the coherence bandwidth of the fading channel shall be provided. Spread spectrum correlation detection of the DSSS signal shall reject multipath components delayed by more than one PN chip time, and thereby mitigate the effects of intersymbol interference caused by multipath delay spread without the need for adaptive equalizers.

The low power density of the DSSS signal shall also mitigate the potential interference with nearby OFS users.

The DSSS PN codes assigned to cells in a multicell PCS deployment shall be quasiorthogonal to the PN codes employed by nearby cells reusing the same RF frequency. By utilizing the Code Division Multiple Access (CDMA) characteristics of quasiorthogonal PN code sets, a Frequency Reuse factor of N = 3 shall be provided by utilizing the processing gain of the DSSS, in conjunction with the propagation loss associated with the two cell physical separation of any two cells using the same frequency, to reject the co-channel interference caused by frequency reuse.

CDMA PN Coded Packets

Each packet shall consist of 1280 PN chips at 5 Mcps, transporting 200 bits. Code selection is application specific, with a selection field of 2 200 sequences designed for code orthogonality of 24 dB over the length of the sequence per packet. Sequences vary for each remote unit, from BS to BS and packet to packet. The packet shall contain a burst preamble with a 64 chip PN sequence.

Mobile Station Receiver

Frequency Agility

The transmitter shall be within +/- 1 0 PPM of the channel frequency, when switched from any one frequency to any other frequency within the same licensed frequency block, in no more than 500 microseconds.

Frequency Stability/Synchronization

The same master clock that is used for transmit shall be used for receive.

Sensitivity

The minimum receive sensitivity shall be -100 dBm for a $10^{-3}$ BER. The receiver sensitivity is measured in AWGN.

Co-Channel Performance

Signals

The minimum co-channel interference (C/1) performance shall be 6 dB. An "On Channel" PCS 2000 RF signal shall be adjusted to 20 dB above the measured receive sensitivity for a $10^{-3}$ BER. A second "On Channel" signal using another DSSS code set shall be adjusted to within -6 dB of the first RF signal. The BER shall not exceed $10^{-3}$.

CW Signals

The minimum co-channel interference (C/1) performance shall be 4 dB for CW interferers. An "On Channel" RF signal shall be adjusted to 20 dB above the measured receive sensitivity for a $10^{-3}$ BER. A second "On Channel" CW signal shall be adjusted to within -6 dB of the first RF signal. The BER shall not exceed $10^{-3}$.

Multipath Performance

The receiver shall be able to maintain a maximum BER of $10^{-3}$ when receiving a signal with the multipath conditions as shown in the following table:

| Tap | Rel Delay (nSec) | Avg Power (dB) |
|---|---|---|
| 1 | 0 | 0 |
| 2 | 0-6000 | -3.0 |
| Minimum Receiver Performance in Multipath | | |

Adjacent Channel Performance

The minimum adjacent channel receiver performance shall be determined by the ratio in dB of two signals; where one signal (center frequency) is on the desired channel, the other signal (center frequency) is on an adjacent channel, and the desired signal is communicating with the receiver at a BER of $10^{-3}$. Other test conditions are listed on the following chart:

| Adj Chan Spacing | Modulation Type | On Chan Signal Power | Min Spec |
|---|---|---|---|
| 5 MHZ | PCS2000 | +2 dB above sens. | 50 dB |
| 2.5 MHZ | PCS2000 | +2 dB above sens. | 7 dB |
| 5 MHZ | PCS2000 | +20 dB above sens. | 45 dB |
| 2.5 MHZ | PCS2000 | +20 dB above sens. | 7 dB |
| 5 MHZ | CW | +2 dB above sens. | 50 dB |
| 2.5 MHZ | CW | +2 dB above sens. | 7 dB |
| 5 MHZ | CW | +20 dB above sens. | 55 dB |
| 2.5 MHZ | CW | +20 dB above sens. | 35 dB |
| Adjacent Channel Performance | | | |

Intermodulation Performance

The minimum receiver intermodulation performance shall be determined by using three signal sources. One signal source shall be an "On Channel PCS2000" signal source, and the other two signal sources shall be CW sources located at 5 MHZ and 10 MHZ above the desired "On Channel" frequency. The test shall be repeated with the two CW signal sources located at 5 MHZ and 10 MHZ below the desired "On Channel" receive frequency. The "On Channel" signal shall be adjusted to 2 dB above the receiver sensitivity of the unit under test. (Receiver sensitivity is defined in section 3.2.2.3) Both CW signals shall be adjusted together at the same power level until the receiver BER is $10^{-3}$. The difference between the "On Channel" signal and the CW signals shall be 55 dB minimum.

RSSI Performance (Received Signal Strength Indicator)

The maximum response time for the RSSI measurement shall be 300 microseconds. The RSSI shall be monotonic in the measurement of received signal strength from the receiver sensitivity limit to at least a -60 dBm input signal level. The RSSI resolution shall be less than or equal to 1.5 dB.

Spurious RIF Emissions

RF emissions from the Mobile Station Receiver shall meet the FCC Part 15 Incidental Radiator rules.

Typical Handset Antenna Performance Specifications(For Ref. Only)

Handset Antenna

Gain

The handset antenna shall have a nominal gain of 2 dBi.

Vertical Beamwidth

The handset antenna shall have a nominal vertical beamwidth of 70 degrees, perpendicular to the antenna axis.

Azimuthal Beamwidth

The handset antenna shall be omnidirectional and perpendicular to the antenna axis.

Polarization

The handset antenna shall be polarized along the major axis of the handset.

Typical Mobile Vehicular Antenna (For Reference Only)

Gain

The mobile vehicular antenna shall have a nominal gain of 5 dBi.

Vertical Beamwidth

The mobile vehicular antenna shall have a nominal vertical beamwidth of 35 degrees.

Azimuthal Beamwidth

The mobile vehicular antenna shall be omnidirectional.

Polarization

The mobile vehicular antenna shall be vertically polarized.

Operating Conditions

Temperature Ranges

Mobile Stations shall be categorized by temperature ranges. All minimum performance requirements shall be met over the temperature range specified for a Class of Mobile Station.

| Class Of Mobile Station | Temperature Ranges |
| --- | --- |
| Class I | -10 C to +50 C |
| Class 11 | -30 C to +60 C |
| Class III | -40 C to +70 C |

Functional Descriptions of Base Station System

System Controller

The System Controller is responsible for managing the Radio Link, data movement, global bus arbitration and general system supervision. Data received by each radio is evaluated by the controller and using a DMA, moves voice and/or control traffic between the radio and the Line or OTA Processors respectively. Antenna diversity is also managed by the System Controller based on received signal strength and statistical information. Global bus arbitration is controlled by the System Controller and includes access priority and access restriction. If redundant OTA or Line Processors are used, the System Controller can be used to designate the active modules and restrict global bus access to inactive or faulty modules.

OTA Processor

OTA Processor 1606 is responsible for managing the Over-The-Air Protocol. An interrupt at the beginning of each slot signals OTA Processor 1606 to start processing data from the previous slot. Backhaul communication messages called 'Notes' are generated and received by OTA Processor 1606 using interrupts to signal the receiving processor of a pending message. Dual Port Radio and Line Processor bufferscan be used to maximize global bus and processing efficiency. Global RAM is also available to OTA Processor 1606.

Interface Processor

Line Interface Processor 1610 is responsible for managing the interface between OTA Processor 1606 and the backhaul Line Card. Protocols such as ISDN-BRI or the Omnipoint Proprietary Interface will be supported by the Line Interface Processor. A standard "Notes" interface is used between the OTA and Line Processor(s) to minimize the'impact caused by changing Line Card types, to the rest of the system.

Line Card

Line Cards 1611 connect the Base Station either directly or indirectly to the network. Different Line Card types provide the specific hardware/software capabilities required to connect the Omnipoint Base Station to various interfaces and protocols. Line Cards that interface directly to the network have the speech coder located on the card. These include but are not limited to the standard analog 2500, ISDN-BRI and T1. Line Cards using HDSL, DS I interfaces or high speed modems, connect the base station to Base Station Controllers or concentrators. These Line Cards typically do not have resident speech coders and transfer data/voice in a packed frame format.

Radio Interface

The Radio Interface Circuit Card is responsible for managing the interface between the Radio'and the rest of the base station. The base station is capable of supporting from one to four radios, which provides antenna diversity and redundant/back up operation. The Radio Interface Circuit Card is considered to be a 'Slave" on the Global Bus and can not arbitrate for Global Bus Mastership. The System Controller will designate one radio to provide Master Link Timing using the radio's Global Command Register. The Master Link Timing Radio will provide the Link Clock and associated timing signals necessary to maintain a synchronized radio link.

Data Bus Monitor

The Data Bus Monitor plugs into an expansion slot in the Base Station back plane to provide realtime global bus monitoring capability. Using a PC's parallel print port, the operator can configure the Data Bus Monitor to collect data on the global bus or specific memory locations using interrupts or global bus addresses as triggers. Bus masters can also write status messages to the Data Bus Monitor which can be displayed on a screen or written to the disk for post processing. The Data Bus Monitor can be used to simulate a peripheral or as a protocol analyzer. Memory up and downloads are supported for both global and local memories.

Global System Bus

The Global System Bus connects the Radios, System Controller, OTA Processor(s), Line Processor(s), Line Cards and the Data Bus Monitor. Each module is memory. mapped into the 16M byte address space. Multiple devices can share global resources but function independently within their own local memory space. At any one time, one bus "master' can control the global bus. Each master will have a local bus and access to the global bus using priority bus arbitration. Local bus access does not require bus arbitration which maximizes processing bandwidth for each peripheral and minimizes global bus activity.

Since the global bus is only utilized for data movement, a minimum amount oflocal bus using idle time is required for global bus arbitration, resulting in extremely fast data transfers. A master device can access another master's semaphores allowing remote maintenance and diagnostics.

Signal Description

Address Bus (A23-A0)

The 24 bit address bus signals are outputs from the current bus master which define the address of the byte (or most significant byte) to be transferred during a bus cycle. The address is valid while AS- is asserted. A0 is the least significant bit.

Data Bus (D15-D0)

The 16 bit bidirectional, non-multiplexed data bus contains the data being transferred. Dynamic port sizing for 8 and 16 bit data transfers is supported. The slave device must assert DSACK1- or DSACKO- to size the port and terminate the bus cycle. DO is the least significant bit.

Address Strobe (AS-)

This active low signal generated by the active bus master signals the validity of both the address and many control signals. A pull-up resistor on the Controller is used to place this signal in a high logic level during idle periods on the global bus. Non-active bus masters must tri-state this signal.

Data Strobe (DS-)

This active low signal generated by the active bus master signals a slave device that data should be placed on the data bus during a read cycle or that data on the bus is valid for a write cycle. Non-active bus masters must tri-state this signal.

Read / Write (R/W-)

This signal is generated by the active bus master to indicate the direction of the data transfer on the bus. A logic one indicates that the master is reading from a slave device; a logic zero indicates a write to the slave device.

Data and Size Acknowledge (DSACK1-, DSACK0-)

These two active low signals are asserted by the addressed slave device to terminate asynchronous data transfers and provide dynamic bus sizing. A pull-up resistor on the Controller is used to place these signals in a high logic level when not being asserted by a slave device. Non-addressed slave devices must tri-state these signals. The following table describes these signals.

| DSACK1- | DSACK0- | RESULT |
|---------|---------|--------|
| 1 | 1 | Insert wait states in current cycle |
| 1 | 0 | Cycle Complete: Port Size is 8 bits |
| 0 | 1 | Cycle Complete: Port Size is 16 bits |
| 0 | 0 | Not Valid |

Data Size (SIZE1, SIZE0)

These signals are asserted by the current bus master and indicate the number of operand bytes that remain to be transferred, in the current bus cycle. The following table describes these signals.

| SIZE 1 | SIZE0 | TRANSFER SIZE |
|--------|-------|---------------|
| 0 | 1 | BYTE |
| 1 | 0 | WORD |
| 1 | 1 | THREE BYTE |
| 0 | 0 | LONG WORD |

Read-Modify-Write (RMW-)

This active low signal is generated by the current global bus master and is asserted to indicate to the addressed slave, that a read-modify-write operation is being executed. The slave global interface logic must prohibit the slave device from processing the memory location currently being addressed by the global master.

Data Parity (PAR1, PAR0)

The Data Parity signals are generated by the current global bus master for global memory write operations, and by the slave device during global bus read operations. PAR0 and PAR1 determine the parity of D7-D0 and D15-D8 respectively. Odd parity checking is used to verify data bus integrity. The addressed Slave device upon detecting a fault, will assert the Bus Error (BERR-) signal for the remainder of the current bus cycle. Read cycle parity faults will be determined in the global bus master and will cause exception processing.

Bus Error (BERR-)

This active low signal is generated by a Slave device upon detecting a odd parity error on the global data bus. Upon detecting the assertion of BERR-, the current bus master will retry the operation and report the failure.

End of Slot Interrupt (EOSINT-)

This active low signal is generated by the System Controller to indicate the end of the current slot. The OTA Processor uses this signal to begin processing the newly received slot data (if available). Other peripherals can use this signal to identify slot boundaries.

OTA to Line Note Interrupt (LINEINT-)

This active low signal is generated by the OTA Processor to signal the Line Interface Processor that a "NOTE" has been written into memory and is available for processing.

Line to OTA Note Interrupt (OTAINT-)

This active low signal is generated by the LINE Interface Processor to signal the OTA Processor that a "NOTE" has been written into memory and is available for processing.

Global Bus Request (BRx-)

These active low signals indicate to the System Controller that a peripheral(s) needs to become the bus master. This signal can be asserted at any time, but should be synchronized to the rising edge of GCLK.

Global Bus Grant (Bgx-)

These active low signals are generated by the System Controller in response to a valid Global Bus Request. This signal indicates to a peripheral device requesting access to the global bus that it may assume control of the bus following release of BGACK- by the current bus master.

Global Bus Acknowledge (BGACK-)

This active low signal is generated by the current global bus master and indicates that the global bus is in use. BGACK- must remain asserted until all required bus cycles are complete. A pull-up resistor on the System Controller places BGACK- at a high logic level when the global bus is in the Idle state.

Reset (Reset-)

This active low signal is either generated by the System Controller or the Line Processor to initialize the Base Station. Reset must be asserted for a minimum of 590 GCLK cycles.

Global Clock (GCLK)

The Global (TBD) MHZ Clock is generated on the System Controller. This clock is used to synchronize global bus timing and to provide an external system clock for peripheral devices.

Link Clock (LKCLK)

The 20 MHZ Link Clock is generated by the Master Radio and is used to derive all Link related clocks.

Line Reference Clock (LNREFCLK)

This 8kHz clock is generated by a designated Line Card and is used to varactor tune the Link Oscillator on each radio. This adjustment is required to keep the Digital Line Clock and the Link Clocks rate locked.

Loop Strobe (LPSTRB-)

This active low, 200ns signal is generated by the Master Radio and indicates the end of slot 31. This signal is synchronized to the 5Mhz, internally generated reference clock. The System controller uses this signal to reset the slot counter.

Clock Sync (CLKSYNC-)

This active low, 50ns signal is generated by the Master Radio used to clear counters in the System Controller and slave which provide the 5MHz and 10MHz timing clocks. This insures peripheral's 5MHz and 10MHz clocks are synchronized.

Magnitude Clock Enable (MAGEN-)

This active low signal is generated by the Master Radio and is used to signal the System Controller that PCP Magnitude and RSSI data is to be clocked into the diversity controller.

PCP Magnitude Score (PCPMAGx)

These signals are generated by each radio if the correlated PCP score is equal to, or greater than the PCP Threshold. If the correlated output is less than the threshold, no score is sent. This 6 Bit signal is padded to 8 bits and inverted prior to being sent to being shifted out. The System Controller uses these signals as a prime metric to determine which antenna to transmit back on. PCPMAGx is only valid while MAGEN- is asserted.

Received Signal Strength Difference (RSSEDI[Fx)

These signals are generated by each radio and indicate the difference between the largest and smallest RSSI measurement. This 8 bit signal is inverted prior to being shifted out. The System Controller uses these signals as a metric to determine which antenna to transmit back on. RSSIDIFx is only valid while MAGEN- is asserted.

Transmit Enable (TXFENx-)

One of these active low signals generated by the System Controller is used to select the radio needed to transmit during the next slot. Assertion of this signal will occur at Frame State TBD.

Power Down (PWRDNx-)

These active low signals are generated by the System Controller and are used to force a faulty circuit off the Global Bus. Once a circuit card is determined to be faulty, PWRDNx- is asserted. PWRDNx- is periodically negated by the System Controller the circuit card is asked to perform a Built In Test. This will allow faulty circuit card to be replaced and then automatically brought back into service if required.

Circuit Card Slot ID (ID[0:4])

Each Circuit Card will have a five bit card slot ID number which is generated on the back plane. This unique card slot number will be used by the Circuit Card to determine it's global bus address.

Global Memory Map

The Global Address Bus is capable of addressing up to 16M of memory and/or registers. Each Circuit Card is assigned a portion of this address space. Local bus address space is not restricted to the amount of global space assigned to the Circuit Card and must be managed internally.

Global Bus Arbitration

The global system bus allows multiple devices the flexibility to share resources while operating independently within the device's local memory space. At any one time, one bus master can control the global bus. Each master will have access to the global bus using priority bus arbitration. Activity within the device's local memory space does not require bus arbitration.
Global Bus access must be limited to less than 100u sec per request. Each master's Global Bus Interface Logic (GBIL) is required to provide a Global Bus Timer. If global access exceeds 100u sec, the GBIL will terminate the Global Bus cycle and release the Global Bus. After releasing the Global Bus, the GBIL can again request access to the global bus.

System Controller

The System Controller manages the priority bus arbitration logic. When two or more devices attempt to become the bus master at the same time, the one having the highest priority will become the bus master first. The System Controller can be programmed to prevent any device from accessing the global bus. This feature can be used to prevent faulty devices or shadow redundant circuit cards from accessing the global bus. The following sequence illustrates the global bus arbitration protocol:

1) A device asserts BR- (Bus Request).
2) The System Controller asserts BG- (Bus Grant) to indicate to the device requesting access that it can claim the bus when released by the current bus master.
3) Once a device has received BG-, it monitors BGACK- (Bus Grant Acknowledge) to determine when the current bus master is no longer requiring the global bus. The requesting device then asserts BGACK- to assume bus mastership.

BG- may be asserted at any time during a bus cycle or between bus cycles. BG- is asserted in response to BR-. When a device assumes bus mastership, it asserts BGACK- and maintains BGACK-during the entire bus cycle (or cycles) for which it requires the global bus. The following conditions must be met for a device to assume mastership of the bus through the normal bus arbitration procedure: 1) it must have received BG- through the arbitration process, and 2) BGACK- must be inactive, indicating that no other bus master is claiming ownership of the global bus.

Global to Local Bus Access

Global devices requiring access to a slave device's local bus must use a special arbitration/semaphore technique. The requesting Global device must use the following sequence to gain control of another devices local bus.

1) Requesting Device gains control of Global Bus.
2) Requesting Device writes access request byte to slave circuit card's "Local Access Request Register".
3) Requesting Device releases Global Bus for a minimum of one arbitration cycle. (Verify BGACK- is negated for a minimum of one GCLK cycle) This will allow the slave circuit card to complete a pending Global Bus Access before being forced to relinquish it's local bus.
4) Requesting Device gains control of Global Bus.
5) Requesting Device reads access grant byte from slave circuit card's "Local Access Grant Register".
6) If the slave has granted access to the requesting device, the requesting device may proceed. Upon access completion, the requesting device must clear the "Local Access Request Register".
7) The slave device will clear the Local Access Grant Register following the clearing of the "Local Access Request Register".

Global Data Bus Parity

Odd Parity bits PAR1 and PAR0, are associated with D15-D8 and D7-D0 respectively, and are used to help verify data integrity on the Global Data Bus. These Data Parity signals are generated by the current global bus master for global memory write operations, and by the slave device during global bus read operations.

During global write operations, the global bus master will drive the parity signals, one for each byte. The addressed slave device, will evaluate the parity of the data on the global data bus based on the port size it is capable of supporting and the size of the operand being written to it. For example, if a 16 bit word is written to a slave device that is only capable of supporting 8 bits of data at a time, the slave will only evaluate the parity of D15-D8. If the slave device can support a 16 bit transfer, each byte of data will be tested to determine the validity of the operand. Upon detecting a fault, the slave device will assert the Bus Error (BERR-) signal for the remainder of the current bus cycle. The global bus master will log the data bus error and can retry the operation.

During global bus read operations, the addressed slave device will set the parity bit(s) either according to it's port size (for an 8 bit port), or the size of the operand transfer being requested. For example, if a word transfer is requested by the global bus master, and the' slave device is an 8 bit port, only PAR1 is actively driven based on data byte D15-D8. The master device will verify the integrity of the received operand based on the port size of the addressed slave. If a global bus error is detected, the global bus master will log the bus error and can retry the transfer.

System Controller

The System Controller is responsible for managing the Base Station. This includes moving and qualifying data between the radios and peripheral devices. Antenna diversity is controlled by the System Controller, as well as system fault and configuration management. The System Controller also manages the priority bus arbitration logic. The following paragraphs describe in more detail, System Controller requirements.

Local Bus

The System Controller is capable of addressing up to 4G Bytes of memory. High speed SRAM is used to provide no wait state working storage. Programmable logic firmware contained in FLASH memory is also accessible from the Local Bus.

Global Bus Access

The Global Bus uses 24 address line to address up to 16M Bytes of memory. Since the addressable memory space of the System Controller far exceeds the addressable memory space of the Global Bus, programmable chip selects in the MC68341 will be used to indicate Global access. The Global Bus Interface Logic on the System Controller will monitor chip select(s) TBD to determine if Global Bus access is required. Upon detecting.Global Bus access, the Global Bus Interface Logic will assert BR- and will negate DSACKx- to force wait states to be generated by the MC68341. When Global Bus Mastership is acquired, the Global Bus Interface Logic enables the MC68341 to drive the bus and turns control of the DSACKx- signals over to the addressed slave device. The slave device is now responsible for data bus sizing and cycle termination. Upon completion of the Global Bus access, the Global Bus Interface Logic will release BGACK- and will remove the MC68341 from the bus.

Configuration Registers

The System Controller's Global Interface Logic uses read/write configuration registers to provide a flexible interface to the Global Bus.

Global Configuration Register

The Global Configuration Register is undefined in the System Controller.

Revision Register

This register can be read by a Global Bus Master to determine the current hardware, software, and firmware configuration. Bit definitions are as follows:

| Bit Position | Description |
| --- | --- |
| B[3:0] | Circuit Card Rev. Number |
| B[9:4] | Firmware Rev. Number |
| B[15:101 | Software Rev. Number |

Health Register

The Health Register is used by the System Controller to indicate operational and Built in Test (BIT) status.

Local Access Request Register (LARR)

A Global Device requiring access to the System Controller's local bus, must write the appropriate request byte into the LARR. Upon detecting a request, the Global Interface Logic will force the 68341 to relinquish the local bus. After the requesting device has finished accessing the local bus, it must clear the LARR.

| LARR | Description |
| --- | --- |
| 52 hex | Local Access Request |

Local Access Grant Register (LAGR)

The Access Grant Register is read by a Global device requesting access to the System Controller's Local bus. The Global Bus Interface Logic will update this register in response to a Local Access Request and clear it following a Global device's completed access. A watchdog timer is used to clear the Local Access Grant Register if the requesting Global device does not claim the Local bus within TBD msec.

| LAGR | Description |
| --- | --- |
| 00 hex | Local Access Disable |
| 47 hex | Local Access Grant |

Reset System Configuration

Following a system Reset, the System Controller will determine the current configuration of the base station by polling each circuit card. If the circuit card fails to respond or responds incorrectly, within TBD GCLK cycles, it is not considered a usable resource and is ignored. The System Controller will periodically, re-evaluate the current configuration to allow circuit card replacement during base station operation. Each circuit card defaults to a slave or non-primary configuration until such time as the System Controller commands a change of state. The System Controller will select a radio to supply the Master Link Timing and will designate the primary OTA and Line Processors.

Radio / Link Timing Management

The rest of the base station, including all remaining slave radios, either directly or indirectly receive timing information from the master radio. If a Link timing failure were to occur, the System Controller can select a different master radio to provide Link Timing. Refer to "Radio Interface Circuit Card User Interface Document, Version 2.0" for more detailed information.

The master radio provides a signal called LPSTRB- to indicate the end of the slot 31. The System Controller uses this signal to reset it's slot counter and to initialize Frame State Counter. The Frame State Counter is used by the System Controller to determine system service timing.

During a "Poll Frame" the mobile station does not send a Power Control Pulse (PCP) prior to the base transmission. In this case, the System Controller knows in advance, which radio's transmit buffer is to be loaded. Once a mobile station is operating in "Traffic Mode", the System Controller monitors the quality of the received PCP and determines which radio will be used to transmit the next frame to that mobile station. Data to be transmitted, it loaded into the transmitting radio's transmit buffer prior to Frame State TBD and must be read from the radio's receive buffer following Frame State TBD.

Antenna Diversity

In a multi-radio base station, the System Controller is responsible for dynamically determining which radio will be used to transmit to the mobile station. During Non-Poll frames, the mobile station will transmit a PCP at the beginning of the frame. The base will receive the PCP on up to four radios from the mobile station and will sample the quality and signal level of the PCP to help determine which radio to use. Based on the assumption that transmit and receive paths are symmetric if the frequencies are the same and if there is minimal turn around time, the System Controller determines which radio to transmit on. Received signal strength, historical and statistical information will also be used to help, qualify a radio for transmission. Information such as no valid mobile station responses received to a General Poll when a particular radio transmits could indicate that the radio has a good receiver with a bad transmitter. The System Controller could disqualify the radio with the bad transmitter from diversity transmit consideration. The receiver portion of the faulty radio may be still provide useful information.

Link Data Control

The System Controller is responsible for moving; 1) protocol data between the radios and the OTA Processor (s), and 2) voice/data between the radios and the Line Card(s). Using the Frame State Count to generate System Controller internal interrupts, data is either moved into or out of the radio(s). At the end of the slot, an interrupt is generated by the System Controller to indicate to the OTA Processor and Line Cards, that they may begin processing data from the last slot. This active low signal is known as the End of Slot Interrupt (EOSINT) and is asserted for a minimum of TBD GCLK cycles. This signal can be used by other peripherals to identify slot boundaries if required.

Arbitration Logic

The System Controller is responsible for managing the Global Bus Arbitration Logic. Each circuit card capable of becoming a global bus master has dedicated BR- and BG- signals. Dedicated signals allow the arbitration logic to provide priority bus access and bus access restriction. 100u sec prior to the end each slot, the System Controller restricts access grants to the global bus only to the System Controller. Since each master is limited to 100u sec bus access, the radio link service is guaranteed not to be delayed by another Global Bus Master "tying up the bus". In a redundant configuration, a faulty circuit card could continually assert BR- or BG-. If these signals were shared between circuit cards, this type of failure would totally bring down the base station. Upon determining that a circuit card is faulty, it's arbitration logic can be disabled allowing normal Global Bus activity by the rest of the system to continue.

Global Memory

The System Controller Circuit Card provides two Meg Bytes of Global DRAM and all the required bus interface logic. Peripherals needing access to Global Memory, including the System Controller, must first gain mastership of the Global Bus using the Global Bus arbitration protocol.

OTA Processor

The OTA Processor is responsible for managing the Over-The-Air Protocol. At the end of each slot, the OTA Processor is interrupted by the System Controller using the EOSINT signal. The OTA Processor will read the OPCOMP Register in Local Dual-Port memory to determine which slot to process. There are two frames of data per slot, one for transmit and the other for receive. Frames are mapped in Dual-Port memory using the slot number and frame type. The base station can support up to two OTA Processors which can. be-configured to provide task sharing, shadow redundancy, or stand alone operation. Each OTA Processor is identical and will use the Circuit Card Slot ID to determine Global Bus memory map location decoding.

Local Bus

The OTA Processor is able to directly address I Meg Byte of memory and/or registers.

Global Bus Access

The Global Address Bus uses 24 address lines to directly access up to 16M Bytes. The OTA Processor(s) is only capable of directly addressing 1M Bytes of combined Local and Global memory. Global chip selects, GCS1 and GCS2 generated by the 80186, are used to define Global Bus Memory blocks. GCS1 is used to select "Notes" Dual-Port space and GCS2 points to Global DRAM. The Global Interface Logic on the OTA Processor, monitor's GCS1 and GCS2 to determine if the memory being addressed is global. Assertion of either signal will cause the Global Bus Interface Logic to suspend the current 80186 bus cycle and begin Global Bus Arbitration. When the OTA Processor becomes the Global Bus Master, Page Registers in the Global Interface Logic will Map the most significant address bits onto the Global Bus and the 80186 is allowed to complete the current bus cycle. These Page Registers are initialized at power-up and can be modified at any time by the.80186 to point to different address blocks corresponding to either GCS1 or GCS2. The Global Bus Interface Logic limits continuous Global Bus access to 100u sec. Block transfers greater than 100us rearbitrate for the Global Bus.

Configuration Registers

The OTA Processor's Global Interface Logic uses read/write configuration registers to provide a flexible interface to the Global Bus. Table 3.0 defines these registers, and their location in the OTA Processor's local memory map. Refer to "Version 2.0 OTA Processor User Interface Document" for more information.

Global Configuration Register

The Global Configuration Register is configured by the System Controller and is used to control the operational mode of the OTA Processor. Following a system Reset, the Global Interface Logic defaults to the Idle mode. The System Controller will determine which, if multiple OTA Processors are available, OTA Processor is to be configured as Active. In the Active mode, the OTA Processor will manage the Over-The-Air protocol.

While in the Shadow mode, the OTA processor's Global Bus access is restricted. The OTA Processor can function as though it was actually servicing incoming interrupts, but is not permitted access the Global Bus or to generate OTA to Line Note Interrupts. These restrictions are controlled by the Global Interface Logic on the circuit card and are transparent to the 80186.

| MODE | PATTERN | DESCRIPTION |
|---|---|---|
| IDLE | 00 hex | Suspend Operation |
| ACTIVE | 42 hex | Run |
| SHADOW | 53 hex | Run in Back Up Mode |
| BIT | 95 hex | Self Test |

Revision Register

This register can be read by a Global Bus Master to determine the current hardware, software, and firmware configuration. Bit definitions are as follows:

| Bit Position | Description |
|---|---|
| B[3:0] | Circuit Card Rev. Number |
| B[9:4] | Firmware Rev. Number |
| B[15:10] | Software Rev. Number |

Health Register

The Health Register is used by the OTA Processor to indicate operational and Built in Test (BIT) status. The System Controller will poll this register periodically to determine the current status of the OTA Processor.

Local Access Request Register (LARR)

A Global Device requiring access to the OTA Processor's local bus, must write the appropriate request byte into the LARR. Upon detecting a request, the Global Interface Logic will force the 80186 to relinquish the local bus. After the requesting device has finished accessing the local bus, it must clear the LARR.

| LARR | Description |
|---|---|
| 52 hex | Local Access Request |

Local Access Grant Register (LAGR)

The Access Grant Register is read by a Global device requesting access to the OTA Processor's Local bus. The Global Bus Interface Logic will update this register in response to a Local Access Request and clear it following a Global device's completed access. A watchdog timer is used to clear the Local Access Grant Register if the requesting Global device does not claim the Local bus within TBD msec.

| LAGR | Description |
|---|---|
| 00 hex | Local Access Disable |
| 47 hex | Local Access Grant |

"Notes" Dual Port Page Register

This 9 bit read/write register is initialized by the System Controller and is used as a base page address register. The contents of this Register in conjunction with the lower order 15 address bits from the 80186, point to the active Line Interface Processor's "Notes" Dual Port. The maximum page size is 16k bytes.

Soft Reset Register (SRR)

This 8 bit write only register is used to force a circuit card reinitialized. Any Global Bus Master can write to this register.

| SRR | Description |
|---|---|
| 69 hex | Soft Reset |

Dual Port Memory Map

The high speed Dual Port Memory is used to buffer Over-The-Air and status/control data. The System Controller will write data received by the radios into Dual Port Memory. The OTA Processor will evaluate the received data and will write the response into the Dual Port's transmit buffer for that slot. The OPCOMP Register within the Dual Port indicates to the OTA Processor which air slot buffer is to be processed.

Power Down Signal (PWRDNx-)

The Power Down signal is generated by the System Controller to remove a faulty circuit card from service. This active low signal will force the faulty circuit card off the Global Bus and prevent it from generating arbitration requests, clocks or interrupts.

Line Interface Processor

The Line Interface Processor is responsible for managing the signaling interface between the OTA Processor and the backhaul Line Card(s). "Notes" messages will be interpreted by the Line Interface Processor and either passed toward the network or acted upon directly. The action required depends upon the type of Line Card(s) installed in the base and if the Line Card(s) is connected directly to the network. The Line Interface Processor and the Line Card(s) support the standard "Notes" interface within the base station which provides Line Card "Transparency" to the rest of the system. Backhaul protocols such as ISDN-BRI or the Omnipoint Proprietary Interface will by supported by the Line Interface Processor. Future integration could combine the Line Interface Processor and the Line Card(s).

Local Bus

The Line Interface Processor is based on the Motorola MC68360, Quad Integrated Communications Controller and is capable of addressing up to 4G Bytes of memory. Within the Line Interface Processor's Local bus, 32 bit data transfers are supported.

Global Bus Access

The Global Bus uses 24 address line to address upto 16M Bytes of memory. Since the addressable memory space of the Line Interface Processor far exceeds the addressable memory space of the Global Bus, programmable chip selects in the MC68360 will be used to indicate Global access. The Global Bus Interface Logic on the Line Interface Processor will monitor chip select(s) TBD to determine if Global Bus access is required. Upon detecting Global Bus access, the Global Bus Interface Logic will assert BR- and will negate DSACKx- which forces wait states to be generated by the MC68360. When Global Bus Mastership is acquired, the Global Bus Interface Logic enables the MC68360 to drive the bus and turns control of the DSACKx- signals over to the addressed slave device. The slave device is now responsible for data bus sizing and cycle termination. Upon completion of the Global Bus access, the Global Bus Interface Logic will release BGACK- and will remove the MC68360 from the bus. The Global Bus Interface Logic limits continuous, Global Bus access to 100u sec. Block transfers greater than 100us re-arbitrate for the Global Bus.

Configuration Registers

The Line Interface Processor's Global Interface Logic uses - read/write configuration registers to provide direct control/status information to-the Global Bus.

Global Configuration Register

The Global Configuration Register is configured by the System Controller and is used to control the operational mode of the Line Interface Processor. Following a system Reset, the Global Interface Logic defaults to the Idle mode. The System Controller will determine which Line Interface Processor is to be configured as Active. Multiple active Line Interface Processor circuit cards can be supported. In the Active mode, the Line Interface Processor will manage the "Notes" interface and backhaul protocol.

While in the shadow mode, the Line Interface Processor's Global Bus access is restricted. The Line Interface Processor can function as though it was actually servicing incoming interrupts, but is not permitted access the Global Bus or to generate Line to OTA Note Interrupts. These restrictions are controlled by the Global Interface Logic on the circuit card and are transparent to the MC68360.

| MODE | PATTERN | DESCRIPTION |
|---|---|---|
| IDLE | 00 hex | Suspend Operation |
| ACTIVE | 41 hex | Run |
| SHADOW | 53 hex | Run in Back Up Mode |

(continued)

| MODE | PATTERN | DESCRIPTION |
|------|---------|-------------|
| BIT | 95 hex | Self Test |

Revision Register

This register can be read by a Global Bus Master to determine the current hardware, software, and firmware configuration. Bit definitions are as follows:

| Bit Position | Description |
|--------------|-------------|
| B[3:0] | Circuit Card Rev. Number |
| B[9:4] | Firmware Rev. Number |
| B[15:10] | Software Rev. Number |

Health Register

The Health Register is used by the Line Interface Processor to indicate operational and Built in Test (BIT) status. The System Controller will poll this register periodically to determine the current status of the Line Interface Processor.

Local Access Request Register (LARR)

A Global Device requiring access to the Line Interface Processor's local bus, must write the appropriate request byte into the LARR. Upon detecting a request, the Global Interface Logic will force the MC68360 to relinquish the local bus. After the requesting device has finished accessing the local bus, it must clear the LARR.

| LARR | Description |
|------|-------------|
| 52 hex | Local Access Request |

Local Access Grant Register (LAGR)

The Access Grant Register is read by a Global device requesting access to the Line Interface Processor's Local bus. The Global Bus Interface Logic will update this register in response to a Local Access Request and clear it following a Global device's completed access. A watchdog timer is used to clear the Local Access Grant Register if the requesting Global device does not claim the Local bus within TBD msec.

| LAGR | Description |
|------|-------------|
| 00 hex | Local Access Disable |
| 47 hex | Local Access Grant |

Local Access Page Register (LAPR)

This 14 bit read/write register is written to by a Global device requiring access to the Line Interface Processor's Local Bus. These bit provide the most significant local address bits and provide direct access to 512k byte pages.

"Notes" Dual Port Page Register

This 9 bit read/write register is initialized by the System Controller and is used as a base page address register. The contents of this Register in conjunction with the lower order 15 address bits from the MC68360, point to the active OTA Processor's "Notes" Dual Port. The maximum page size is 32k bytes.

"Notes" Dual Port Memory Map

The high speed 32k byte Dual Port Memory is used to buffer "Notes" messages between the OTA Processor and the Line Interface Processor.

Power Down Signal (PWRDNx-)

The Power Down signal is generated by the System Controller to remove a faulty circuit card from service. This active low signal will force the faulty circuit card off the Global Bus and prevent it from generating arbitration requests, clocks or interrupts.

Line Card

The Line Card(s) connect the base station either directly or indirectly to the network. Different Line Card type's provide the specific hardware/software capabilities required to connect the Omnipoint Base Station to various interfaces and protocols. Multiple Line Cards are supported by the Global Bus and can be used for task sharing, redundant or stand alone operation. A standard Line Card interface is used in the base station in an attempt to minimize the impact changing a Line Card type has on the rest of the system. Version 2.0 Line Cards are considered to be slaves, that is, they are not capable of accessing Global resources. Future integration could combine the Line Card and Line Interface Processor functionality, which could create a Line Card capable of Global Bus Mastership. Refer to the Line Card specific "Version 2.0 Users Interface Document" for more detained interface information.

Local Bus

Local Bus architecture can vary depending on Line Card type. Each Line Card will have reprogrammable logic and software FLASH memory to the extent possible. Global devices have access to the Line Card's Local Bus and must read the Global "Type" Register to determine the circuit card specific interface requirement.

Global Bus Access

Version 2.0 Line Cards are not able arbitrate access to the Global Bus and are therefore refereed to as "Slaves". Slave devices monitor the Global Address Bus and are prepared to respond to any external Global Bus Master access request. Slave devices are responsible for data bus sizing and cycle termination.

Configuration Registers

The Line Card's Global Interface Logic uses read/write configuration registers to provide direct control/status information to the Global Bus.

Global Configuration Register

The Global Configuration Register is configured by the System Controller and is used to control the operational mode of the Line Card. Following a system Reset, the Global Interface Logic on the Line Card defaults to the Idle mode. The System Controller will determine which Line Card(s) are to be configured as Active. Multiple Line Cards can be in the Active mode at any one time. While in the Idle mode, the Line Card's network/trunk servicing is suspended.

| MODE | PATTERN | DESCRIPTION |
|---|---|---|
| IDLE | 00 hex | Suspend Operation |
| MASTER | 4D hex | Run, Provide LREFCLK |
| SLAVE | 53 hex | Run |
| BIT | 95 hex | Self Test . |
| LOOPBACK | 24 hex | Bypass Vocoder, Loop HS |

Revision Register

This register can be read by a Global Bus Master to determine the current hardware, software, and firmware configuration. Bit definitions are as follows:

| Bit Position | Description |
|---|---|
| B[3:0] | Circuit Card Rev. Number |
| B[9:4] | Firmware Rev. Number |
| B[15: 10] | Software Rev. Number |

Health Register

The Health Register is used by the Line Card Processor to indicate operational and Built in Test (BIT) status. The System Controller will poll this register periodically to determine the current status of the Line Card.

Local Access Request Register (LARR)

A Global Device requiring access to the Line Card's local bus, must write the appropriate request byte into the LARR. Upon detecting a request, the Global Interface Logic will force the Line Card to relinquish the local bus. After the requesting device has finished accessing the local bus, it must clear the LARR.

| LARR | Description |
|---|---|
| 52 hex | Local Access Request |

Local Access Grant Register (LAGR)

The Access Grant Register is read by a Global device requesting access to the Line Card's Local bus. The Global Bus Interface Logic will update this register in response to a Local Access Request and clear it following a the Global device's completed access. A watchdog timer is used to clear the Local Access Grant Register if the requesting Global device does not claim-the Local bus within TBD msec.

| LAGR | Description |
|---|---|
| 00 hex | Local Access Disable |
| 47 hex | Local Access Grant |

Line Card Type Register (LCTR)

This 8 bit register is loaded by the Line Card upon circuit card initialization. These bits can be read by any Global Bus Master to determine the type of Line Card currently installed. The following table lists possible Line Card Types.

| LINE CARD TYPES | |
|---|---|
| Type (hex) | Description |
| 00 | Analog Loop Start |
| 10 | DS1 w/transcoder |
| 11 | DS1 no transcoder |
| 12 | DS1 compressed |
| 20 | HDSL w/transcoder |
| 21 | HDSL no transcoder |
| 22 | HDSL compressed |
| 30 | ISDN-BRI w/transcoder |
| 31 | ISDN-BRI no transcoder |

Line Card Dual Port Memory Map

The high speed 8k byte Dual Port Memory is used to buffer voice, data, and "Notes" messages between the connecting trunk and the base station. Voice and data frames are moved between the Line Card Dual Port and radio(s) by the System Controller using the Standard Line Interface.

Power Down Signal (PWRDNx-)

The Power Down signal is generated by the System Controller to remove a faulty circuit card from service. This active low signal will force the faulty circuit card off the Global Bus and prevent it from generating arbitration requests, clocks or interrupts.

Radio Interface

The Radio Interface Circuit Card is responsible for managing the interface between the Radio and the rest of the base station. The base station is capable of supporting from one to four radios, which provides antenna diversity and redundant/back up operation. The Radio Interface Circuit Card is considered to. be a "Slave" on the Global Bus and can not arbitrate for Global Bus Mastership. The System Controller will designate one radio to provide Master Link Timing by setting the it's Global Configuration Register to the Master Mode. The Master Link Timing Radio will provide the Link Clock and associated timing signals necessary to maintain a synchronized radio link. The System Controller can redesignate the Master Link Timing Radio upon demand. Refer to Version 2.0, Radio Interface Circuit Card User Interface Document for more information.

Local Bus

The Radio Interface Circuit Card has an internal 8 bit "Local" bus which connects the Radio Interface Logic to Dual Port and Flash memory. Global devices have access to the Radio Interface Circuit Card's Local Bus, which provides a means to reprogram the FLASH memory. Access to the Radio Interface Circuit Card's Local Bus is negotiated using semaphores.

Global Bus Access

Version 2.0 Radio Interface Circuit Cards are not able arbitrate access to the Global Bus and are therefore refereed to as "Slaves". Slave devices monitor the Global Address Bus and are prepared to respond to. any external Global Bus Master access request. Slave devices are responsible for data bus sizing and cycle termination.

Configuration Registers

The Radio Interface Circuit Card's Global Interface Logic uses read/write configuration registers to provide direct control/status information to the Global Bus.

Global Configuration Register

The Global Configuration Register is configured by the System Controller and is used to control the operational mode of the Radio Interface Circuit Card(s). Following a system Reset, the Global Interface Logic on the Radio Interface Circuit Card defaults to the Idle mode. While in the Idle mode, the Radio Interface Circuit Card will not transmit or enable the Master Link Timing signals onto the bus. When the System Controller has completed programming the required configuration registers it will signal the Radio Interface Circuit Card to enter the "RUN" mode by writing the, Run Enable pattern in to the Global Configuration Register. Once configured into the RUN mode, the Radio Interface Circuit can to begin operation.

| MODE | PATTERN | DESCRIPTION |
|---|---|---|
| IDLE | 00 hex | Suspend Operation |
| MASTER, Varactor Adjust | 4D hex | Run, Provide Master Link Timing Varactor tune oscillator |
| SLAVE, Varactor Adjust | 53 hex | Run, use external Link Timing Varactor tune oscillator |
| MASTER, No Varactor Adj | 4C hex | Run, Provide Master Link Timing No Varactor tuning |
| SLAVE, No Varactor | 52 hex | Run, use external Link |

(continued)

| MODE | PATTERN | DESCRIPTION |
|---|---|---|
| Adj |  | Timing No Varactor tuning |
| BIT | 42 hex | Self Test, Do Not Transmit |

Revision Register

This register can be read by a Global Bus Master to determine the current hardware and firmware configuration. Bit definitions are as follows:

| Bit Position | Description |
|---|---|
| B[3:0] | Circuit Card Rev. Number |
| B[9:4] | Firmware Rev. Number |

Health Register

The Health Register is used by the Line Card Processor to indicate operational and Built in Test (BIT) status. The System Controller will poll this register periodically to determine the current status of the Radio Interface Circuit Card.

Local Access Request Register (LARR)

A Global Device requiring access to the Line Card's local bus, must write the appropriate request byte into the LARR. Upon detecting a request, the Global Interface Logic will force the Radio Interface Circuit Card to relinquish the local bus. After the requesting device has finished accessing the local bus, it must clear the LARR.

| LARR | Description |
|---|---|
| 52 hex | Local Access Request |

Local Access Grant Register (LAGR)

The Access Grant Register is read by a Global device requesting access to the Radio Interface Circuit Card's Local bus. The Global Bus Interface Logic will update this register in response to a Local Access Request and clear it following a Global device's completed access. A watchdog timer is used to clear the Local Access Grant Register if the requesting Global device does not claim the Local bus within TBD msec.

| LAGR | Description |
|---|---|
| 00 hex | Local Access Disable |
| 47 hex | Local Access Grant |

Dual Port Memory Map

High speed 16k byte Dual Port Memory is located on the Radio Interface Board and is used to buffer incoming and outgoing data, commands, status, and radio setups. Data to be transmitted is loaded in to the dual port prior to the assertion of TXFENx-. As data is received from the mobile station it is loaded into the Dual Port receive buffer. At the end of the slot, the System Controller moves the data from the selected radio to the OTA Processor and/or the Line Cards. Link parameters such as correlator codes, and frequencies are also loaded into the Dual Port.

Power Down Signal (PWRDNx-)

The Power Down signal is generated by the System Controller to remove a faulty circuit card from service. This active low signal will force the faulty circuit card off the Global Bus and prevent it from generating arbitration requests, clocks or interrupts.

Master Link Timing

The designated Master Radio is responsible for providing the Master Link Timing Signals for each base station. These signals include, the 20 MHZ Link Clock LKCLK, LPSTRB- and CLKSYNC-. Using these signals, the System Controller and the Slave Radios can all stay in lock step with each other.

Link Clock, 20MM (LKCLK)

The Master Radio is responsible for providing the 20MHz reference clock to the System Controller and Slave Radios. Internal 5MHz and 10MHz reference clocks will be developed from the Master Link Clock. Every radio will varactor tune its 20MHz clock based on the 8kHz LNREFCLK.

Line Reference Clock (LNREFCLK)

The Line Reference Clock is an 8kHz signal generated by a designated Line Card and is used rate lock the radio oscillators to the digital network and to frequency lock each radio's clock. If the Line Card does not connect to a digital network, it will use the 5MHz clock from the System Controller to develop the 8kHz reference.

Loop Strobe (LPSTRB-)

This active low, 200ns signal is generated by the Master Radio and indicates the .end of slot 31. This signal is synchronized to the 5MHz, internally generated reference clock. The System Controller uses this signal to reset the slot counter.

Clock Sync (CLKSYNC-)

This active low, 50ns signal is generated by the Master Radio and is used to clear counters in the System Controller and slave radio which provide the 5MHz and 10MHz timing clocks. This insures that each peripheral's 5MHz and 10MHz clocks are synchronized.

Received Signal Quality Signaling

Each radio upon receiving the PCP signal from a Mobile Station will attempt to determine the relative signal quality of the transmission. This information is sent to the System Controller where the determination is made as to which antenna is to be used for the next base transmission.

Magnitude Clock Enable (MAGEN-)

This active low signal is generated by the Master Radio and is used to signal the System Controller that PCP Magnitude and RSSI data is to be clocked into the diversity controller.

PCP Magnitude Score (PCPMAGx)

These signals are generated by each radio if the correlated PCP score is equal to, or greater than the PCP Threshold. If the correlated output is less than the threshold, no score is sent. This 6 bit signal is padded to 8 bits and inverted prior to being sent to being shifted out. The System Controller uses these signals as a prime metric to determine which antenna to transmit back on. PCPMAGx is only valid while MAGEN- is asserted.

Received Signal Strength Difference (RSSIIDIFx)

These signals are generated by each. radio and indicate the difference between the largest and smallest RSSI measurement. This 8 bit signal is inverted prior to being shifted out. The System Controller uses these signals as a metric to determine which antenna to transmit back on. RSSIDIFx is only valid while MAGEN- is asserted.

Base Station Software Technical Requirements

This section presents a list of Base Station software functional parameters.

Operational Parameters

The software will control the following operations, performed by the OTA processor.

1) The OTA processor boot code shall perform a selftest, the duration of which shall not exceed 30 seconds and which does not require intervention from the Line Card.

2) The OTA processor shall support the download and activation of operational code via the dbug port or via the I Interface.

3) The OTA processor shall perform a soft reset on itself on receipt of a request from the Line Card.

4) For the first release, the OTA processor will only support a single 16 time slot radio path. There is a future requirement to support dual radio paths.

5) The OTA processor shall fully support the Omnipoint NOTES protocol.

6) The OTA processor shall fully support the Omnipoint OTA protocol.

7) The OTA processor shall transfer messages from the Line Card via Dual-Port RAM.

8) The OTA processor shall transfer messages to the Line Card via Dual Port RAM.

9) The OTA processor shall transfer messages from the Radio Line Card via Dual Port RAM.

10) The OTA processor shall transfer messages to the Radio Line Card via Dual Port RAM.

11) The OTA processor shall send OAM+P messages to the Line Card via Dual Port RAM.

12) The OTA processor shall receive OAM+P messages from the Line Card via Dual Port RAM.

13) The OTA processor shall send OAM+P messages to the Radio Line Card via Dual Port RAM.

14) The OTA processor shall receive OAM+P messages from the Radio Line Card via Dual Port RAM.

15) The OTA processor shall provide a mechanism that will initialize, operate, reconfigure and shut down managed objects.

16) The OTA processor shall detect fault conditions and report to the Line Card OAM&P.

17) The OTA processor shall support the gathering of statistical data to measure the performance of the system.

18) The OTA processor shall support the Administrative state change request from the Line Card OAM&P.

19) The OTA processor shall perform diagnostics tests and report the results to the Line Card OAM&P.

20) The OTA processor shall receive SMS point to point messages from the Line Card for transmission to the Radio Line Card.

21) The OTA processor shall provide a transport mechanism for all messages associated with Encryption, but will not actually support encryption of the bearer channel.

22) The OTA processor shall perform DTAP segmentation on DTAP messages that are too long to be sent in a single OTA packet. Assist will be provided by the Line Card to minimize the OTA processor impact (TBD).

23) The OTA processor shall perform segmentation of short messages for transmission over the air in the 8 bit D-Channel.

24) The OTA processor shall provide ARQ on all control messages transmitted to and received from the Radio Line Card. Three header bits have been reserved for this purpose.

25) The OTA processor shall provide Uplink Power Control.

26) The OTA processor shall always ensure that a time slot is allocated for 911 calls.

27) The OTA processor shall always ensure that two time slots are allocated for Fast Control Traffic or 911 calls.

28) The OTA processor shall maintain a time slot utilization table for use by the Time Slot Allocation Algorithm.

29) The OTA processor must use the Channel Utilization Header bits to report the utilization of the BS.

30) The OTA processor shall indicate all the time slots available for seizure by transmitting General Polls in those time slots.

31) The OTA processor shall support time slot acquisition for MSs requesting a time slot unless there are no time slots available.

32) The OTA processor shall use the 'Next Slot' bits in the header to inform the MS which time slot to respond on. The value of the 'Next Slot' pointer is controlled by the OTA processor.

33) The OTA processor shall support Time Slot Interchange, and all signaling required to support intra BSC and inter BSC Handover.

34) The OTA processor shall page MSs by sending Specific Polls. The scheduling of these pages is performed by the OTA processor.

35) The OTA processor must maintain a TDMA frame counter for future use by the A5 encryption algorithm.

36) The OTA processor must provide a mechanism with which to ensure that the TDMA frame counters in each communicating MS are synchronized to the BS.

37) The OTA processor must maintain a table of candidate BSs for transmission over the air.

I Interface Support

The OTA processor must fully support the I Interface to allow the following:

- The transfer of Radio Line Card originated/terminated messages to and from the Line Card
- The transfer of OTA processor originated/terminated messages to and from the Line Card
- The transfer of code from the Line Card for the BS OTA.

O Interface Support

The OTA processor must fully support the transfer of control information across the O Interface. Each downlink packet will provide the following information in the header:

- Origination of the packet
- Packet type
- Power control bit
- Time slot symmetry bits
- D-Channel Usage
- Virtual slot mode enable/disabled
- Channel Utilization Information
- Next slot pointer
- ARQ bits
- Check field

Each uplink packet will provide the following information in the header.

- Origination of the packet
- Packet type
- Power control bit
- Time slot symmetry bits
- D-Channel Usage
- ARQ bits
- Check field

Diagnostics Port Interface Support

The OTA processor shall support an interface to provide the following:

- The transfer of test point output data
- The transfer of test point input data
- Input of debug commands
- Output of debug messages
- Output task activity information

Fault Handling

1) The OTA processor shall monitor its hardware interrupt sources. On detection of a possible failure of an interrupt source, it shall report the error and attempt to perform a recovery procedure.

2) The OTA processor shall detect any message byte-count errors in any I interface messages.

3) The OTA processor shall detect any frame check word errors (FCW) errors in any O interface messages.

4) The OTA processor shall detect the following message content problems:

- Invalid message type
- Invalid message type for state
- Invalid message field

It shall discard the message and report the error.

Functional Software Components

Transceiver (TRX) Router

The TRX Router and the OAM+P Manager form the TRX Manager. The TRX Router is primarily responsible for routing control traffic to and from each TRX Unit, configuring the TRX Units and managing the administrative state of each TRX Unit.
For release OD1 only one TRX Unit will be supported, but the flexibility of the TRX Router will enable the support an additional TRX Unit in future releases.

Control Traffic Routing and CID Assignment

This is responsible for routing control traffic to and from the appropriate TRX Unit and assigning Correlative IDs to each MS. The TRX Unit selection is based on the PID. The TRX Router must maintain a record of active calls on each of the TRX Units in order to determine the target TRX Unit.
To acquire a timeslot a MS responds to a General Poll with a General Response, containing its PID. Once the TRX Unit receives the General Response it extracts the PID and enters it into a table. Each table location has an associated CID which will always be fixed to that particular entry. This ensures that each PID entry will have a unique CID assigned to it. Once a call is released the PID is removed from the table, freeing up the CID for a future MS. This table contains the PIDs and their corresponding CIDs for all active calls. This table will be known as the Table of Active Calls. It must be updated every time a timeslot is seized or released, so should be driven by the OTA state machine. So the table will only be updated by the TRX Units, and not by the TRX Router. At this point there is no interaction between the TRX Units and the TRX Router.

Until a timeslot is assigned to a particular MS, the TRX Router will communicate with both TRX Units. This will occur during a Mobile Terminated Call, where pages will be sent out on both Radio Paths. However for the OD1 release only a single TRX Unit will exist.

When an outbound control traffic request is received by the TRX Router it must first extract the PID and search the Table of Active Calls for a match. If there is no match the message will be routed to both TRX Units (In future releases where more than one TRX Unit is supported). A match will indicate the target TRX Unit to the TRX router and the message is routed accordingly.

In this example a PID entry is found in the TRX1 memory block, hence indicating on which TRX Unit the call is active on. The control traffic is routed to TRX Unit 1. This check occurs for each downlink control message.

Configuration Management

This section describes the operation of the configuration management function.

Measurement Reporting

The TRX Router is required to provide OTA performance measurements to OAM which are used to provide a picture of the network operation. OAM is responsible for specifying the measurement reporting period, and the measurement types to report.

Reporting Mechanism

A request for OAM will specify which measurement types to report, which triggers the TRX Router to initialize the corresponding measurement variables. The OAM will maintain a local counter and request the measurement report from the TRX Router at the end of the reporting period. Upon receipt of this request the TRX Router must then format the result, report this to OAM and then re-initialize the measurement variables.

The TRX Router is responsible for initializing and reporting performance measurements for both TRX Units. Once the request is received from OAM each of the performance variables must be initialized. In the case of a cumulative counter (CC) variable should be set to zero, for a snapshot indicator (SI) two values must be initialized, namely the running total and the number of samples. The Gauge variables will be set to a value upon initialization and will only be updated if the value is modified, these are used mainly for configuration information.

All Performance variables are continually updated by each of the TRX Units as each performance event occurs. But because they are continually updated the values are only valid if they are initialized at the beginning of each reporting period. This will only occur for the "enabled" performance measurements.

Measurement Types

This section describes the types of measurements reported by the TRX Router. They are displayed in the form of a table. Three collection methods are defined, namely Cumulative Counter (CC), Gauge, and an arithmetic mean value referred to as the Snapshot Indicator (SI).

| Measurement Type | Collection Method | Description |
|---|---|---|
| Successful Slot Acquisitions Per Cell | CC | The number of successful Time Slot acquisitions in a cell |
| Successful Slot Acquisitions Per Cause | CC | The number of successful Time Slot acquisitions per cell, on a per call basis (i.e. MO/MT call, registration, handover, SMS or SS Management |
| Successful Bearer Channel Assignments per Cell | CC | The number of successful bearer channel assignments in a cell |

(continued)

| Measurement Type | Collection Method | Description |
|---|---|---|
| Unsuccessful Bearer Channel Assignments per Cell per Cause | CC | The number of unsuccessful bearer channel assignments in a cell, per cause |
| Successful Time Slot Interchanges | CC | Number of Successful time slot interchanges in a cell |
| Unsuccessful Time Slot Interchanges | CC | Number of unsuccessful time slot interchanges in a cell |
| Available Time Slots per Cell | GAUGE | Number of operational time slots in a cell |
| Mean Number of busy Time Slots | SI | The arithmetic mean of the number of busy time slots in a cell |
| Maximum Number of Busy Time Slots per Cell | GAUGE | The highest value for the number of time slots used simultaneously |
| Length of time All Time Slots were Allocated per Cell | CC | The accumulative time when all time slots were busy |
| Mean Time Slot Busy Time per Cell | SI | The arithmetic mean of the busy time for time slots in a cell |
| Successful Link Recoveries per Cell | CC | The number of successful radio link recoveries per cell |
| Lost Radio Links per Cell | CC | The number of lost radio links that could not be recovered from per cell |
| Relative Time Uplink Power Control at Maximum per Cell | CC | The time that uplink power control is set to maximum level for busy timeslots in a cell |
| Mean Idle Time Slot Interference per TRX | SI | The mean level of background interference on idle time slots in a cell, per Transceiver |
| BS Performance Measurements | | |

Administrative State Management

The State Management function is responsible for managing the Administrative states of the TRX Units and the TRX Router itself.

The Administrative states of the TRX Router and the TRX Units are controlled by the BSC OAM and are never changed by the BS. The Administrative state is used to control the use of the units under control of the OAM, such as TRX Units and TRX Manager (i.e. OAM&P Manager and TRX Router). The Administrative state has no influence on the Operational state of the unit. All Administrative state requests from OAM to either TRX Units are processed by the Router.

| Administrative State | TRX Manager | TRX Unit | OTA Timeslot |
|---|---|---|---|
| LOCKED | Not Possible | Cannot be used for traffic. | Cannot be used for traffic. (Current) |
| UNLOCKED | Not Possible | Can be used for traffic. | Can be used for traffic. (Current) |
| Administrative States | | | |

The requests from OAM will specify the OTA Timeslot Number and/or TRX Unit(s) to be Locked/Unlocked. Each request is processed by the TRX Manager, which will in turn send a request to the appropriate TRX Unit. It is not possible to change the Administrative state of the TRX Router, but the state of both TRX Units can be changed with a single OAM request. The unit hierarchy is as follows: on Administrative request to the TRX Manager will change the Administrative state of both the TRX Units, whereas an Administrative request to a particular TRX Unit will be routed by the TRX Manager, and will only affect the specified TRX Unit).

Interfaces

The TRX Router interfaces to both TRX Units, the I Interface Manager and the OAM&P Manager. The TRX Router shares a common memory store with both TRX Units for Performance Measurement information.

The TRX Manager is responsible for the routing of control traffic and Administrative state requests to either TRX Unit. The TRX Manager must likewise receive control traffic from either TRX Unit and send this on to the I Interface manager. All Alarm reports received from the TRX Units are sent to the OAM&P Manager by the TRX Router.

The OAM&P Manager will request Performance measurements and Administrative state transitions from the TRX Router. In turn the TRx Router will transmit any Performance measurements and any Alarm reports to the OAM&P Manager. The TRX Router is responsible for the initialization and collection of all Performance Measurements requested by the OAM&P Manager. These measurements are stored in an area of memory shared with both TRX Units, shown in the diagram as Performance Variable Store.

The only information transferred between the I Interface Manager and the TRX Manager shall be control traffic requests, which are in turn routed to the appropriate TRX Unit depending on the PID.

System Memory

The TRX Router will reside in local RAM. The Performance Variable Store must reside in OTA local RAM there will be approximately 16 variables stored here.

Rates

Due to the interrupt timing constraints the TRX Router should route traffic as quickly as possible. For this reason the only processing that should be done on the control traffic, shall be the search of the "Table of Active Calls". For the OD1 release this search is not necessary because there will only be a single TRX Unit, but this search algorithm should be implemented for future releases.

All OAM&P requests are serviced as low priority background tasks.

Accuracy

The Performance Measurements must be calculated and reported with as much accuracy as possible to be of use by the OMC. This will not be an issue with the cumulative counter Performance measurements, but for the SI type measurements an accurate mean value must be calculated. This will be achieved by maintaining a running total and a sample counter. The division between the running total and the sample counter will yield the gauge result.

All Performance Variables will reside in 16 bit memory locations which will allow a maximum value of 131,072. If this value is exceeded then the variable will become invalid and should not be reported. This error can only be detected by the TRX Unit that is responsible for updating the Performance Variables.

TRX Unit

The TRX Unit will be resident on the BS OTA Processor. This set of modules is responsible for organizing and maintaining the signaling links between the BS OTA and the receiver/transmitter which communicates with each MS OTA. It must accept and respond appropriately to information arriving in the form of MS Control Traffic (i.e., O_NOTE), I Interface Manager signals, Radio Card Power Control data and OAM&P Manager directives. Both I Interface Manager and OAM&P requests will be sent through the TRX Router before arriving at the TRX Unit.

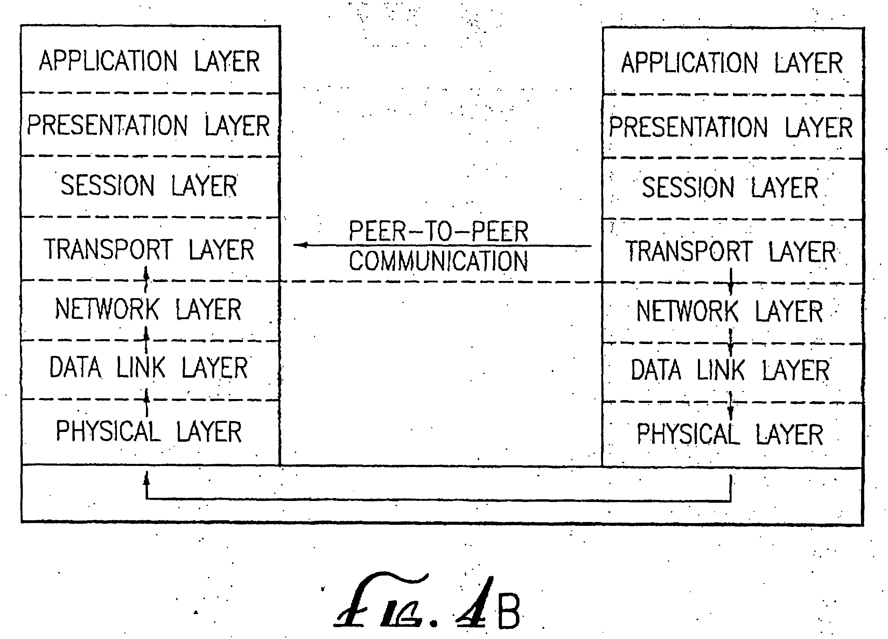

Version OD1 will use a 16 channel "Virtual Slot" OTA link. In a Virtual Slot link, the analysis and response preparation for an MS message arriving in the nth slot will occur between the completion of the receive interrupt processing for the nth slot and the transmit interrupt processing for the n+lst slot. Figure 7 illustrates the temporal relationship between the TRX Unit processing and several other events and processes which support the Virtual Slot OTA Link. When a 32 channel design is implemented, the amount of processing required to analyze and respond to MS O_NOTE messages will be doubled. This will force the system to process two sets of input data within the 990usec interrupt window.

The following sections describe the form and function of the processes to be implemented within the TRX Unit. Unless otherwise stated, the designs described below apply to the 16 channel design to be implemented in version OD1.

OTA Protocol State Machine

The TRX Unit will be designed using automata theory. The triggers for each transition will be messages originating from any one of four entities:

1. I Interface Manager (via the TRX Router)
2. OAM&P Manager (via the TRX Router)
3. MS OTA (via O_NOTEs placed in OTA local memory)
4. TRX Unit Timer Management Function.

The BS OTA will track the activities of up to 16 state machines simultaneously (one for each MS and/or network link to the BS). Each of these 16 State Machines could be executing any of the procedures named in shown in the BS performance measurement table of the I Interface Manager section.

In a generic state machine model for example, the program begins in State A. If O_NOTE "X" arrives, the machine remains in State A. O_NOTE "Y" triggers a transition to State B. A signal from the TRX manager makes State C become active. An OAM&P request invokes a transition to State D and finally the expiration of a Timer internal to the TRX controller triggers a transition to State E. The output for each state is variable.

Description of Processing Entities

Forward Error Correction

The TRX Unit will provide Forward Error Correction (FEC) for all O_Notes traffic. MS originated O_Notes placed in OTA local memory by the TDM will evaluated for bit level correctness and when errors are detected, the FEC algorithm will attempt to reconstruct the data in error. If a TBD number of errors occur in a single message, the ARQ module will be signaled to N'ack the O Note. If either no errors occur or a limited number occur and the data is reconstructible, the O_Note will be accepted.

Automatic Repeat Request (ARO)

The TRX Unit will provide a stop-and-wait ARQ algorithm. This mechanism will always be applied to O_Notes messages but may be dynamically activated and deactivated for other types of traffic (e.g., bearer traffic). When activated, it will provide means of communicating (within the OTA message header) which messages arrived in error and which arrived accurately.

The ARQ module will evaluate O_NOTEs in OTA local memory. The ARQ module will resend the previously sent message until a timer expires which indicates that the BS should wait no longer for an acceptable response from the MS. So, a rejected (i.e., N'acked) O_NOTE will cause the previous OTA message to be resent until either it is acknowledged or a timer expires which trigger recovery logic. Acknowledged O_NOTES will be sent on to the O_NOTE analysis module for further processing.

O_NOTES Analysis

The TRX Unit is serviced immediately after the TDM completes its Receive Interrupt processing. It begins by determining whether or not any MS OTA O_NOTE was deposited into BS OTA local memory for this slot. When new data is present, the TRX Unit evaluates the validity of the message. If the O_NOTE is valid for the current state, the information elements of the message are analyzed to determine the appropriate actions required in response to the message. These activities may include generation of an O_NOTE and/or signaling the I Interface manager to generate I_NOTE data. When an invalid message arrives, the state remains unchanged and the OAM&P Manager is notified of the anomaly.

O_NOTES Development

This process will formulate O_NOTE messages to be sent to the MS. It may be invoked by either the receipt of an MS O_NOTE which requires a response or a signal from the I Interface Manager (via the TRX Router). Outgoing O_NOTEs will be formatted in OTA local memory and be accessible to the TDM for transport to the Radio DPR.

OAM&P Support/TRX Alarm Manager

The TRX Unit will maintain several OAM&P performance measurement variables. This data will be accessible by the TRX Router to read and initialize.

Each member of the TRX Unit will also initiate OTA "alarms" to alert the OAM&P Manager when errors occur. Alarm data will include type, severity and cause information (see OAM&P Alarm Appendix). Each Alarm will invoke the TRX Alarm Manager which will format the alarm packet and route it to the OAM&P Manager.

Timeslot Manager

The Time Slot Manager is responsible for assigning and managing the O interface resource, by interworking with the O Interface Manager. This section presents a high level definition of the processes to be implemented in the Time Slot Manager.

For the first release we are assuming that there is sufficient backhaul bandwidth to support all 16 OTA channels. This may not be true for all BSs in future releases, as fractional T1s could be used more efficiently in rural areas where the full 16 channels are not required.

Description

For the OD1 release the BS will support a single 16 time slot radio path. Of these 16 time slots one must be reserved for 911 calls and one for fast control traffic. The reservation of these time slots is handled by the Reserved Time Slot Algorithm. The allocation of the remaining time slots is managed by the Time Slot Allocation Algorithm. Together these algorithms form the Time Slot Manager.

Time Slot Allocation Algorithm

The Time Slot Allocation Algorithm is responsible for assigning O Interface resource in the most efficient way, and for relaying the channel utilization information and "Next slot" pointer to the O Interface Manager for transmission in the BS packet header. This algorithm will work in conjunction with the Reserved Time Slot Algorithm to ensure efficient and appropriate allocation of resources.

The Timeslot Allocation Algorithm will consist of three procedures:

1. Initialization -- When the BS OTA is initialized, the Time Slot Map (Table 5) and Channel Utilization (CU) bits (in Table 4) must be unitized to the "Empty" state (reference [4]), and the lookup table setup as shown in Table 3.

2. Time Slot Allocation - The OTA State machine will request a timeslot and depending on the CU bits an empty time slot will be selected and reserved. The CU bits will then be updated.

3. Time Slot Release - Again the OTA State Machine will request a timeslot release from the Time Slot Allocation Algorithm. The corresponding bit in the utilization table is then cleared and the CU bits updated.

In order to track the status of each of the 16 timeslots there will initially be 45 x 16 bit locations reserved in memory. Of these locations, there are 16 reserved for the CU look-up table (Table 3), 25 for a cyclic channel utilization table (Table 5) and one each for the current CU value (CU Bits), "Next Slot" pointer, channel utilization counter and Sub-Rate Utilization Map (Table 4).

Table 3:

| CU Lookup Table | | | | | | | | | | | | | | | | |
|---|---|---|---|---|---|---|---|---|---|---|---|---|---|---|---|---|
| Base Address + 15 | - | - | - | - | - | - | - | - | - | - | - | - | - | 0 | 0 | 0 |
| Base Address + 14 | - | - | - | - | - | - | - | - | - | - | - | - | - | 0 | 0 | 1 |
| Base Address + 13 | - | - | - | - | - | - | - | - | - | - | - | - | - | 0 | 1 | 0 |

Table 3: (continued)

| CU Lookup Table | | | | | | | | | | | | | | | | |
|---|---|---|---|---|---|---|---|---|---|---|---|---|---|---|---|---|
| Base Address + 12 | - | - | - | - | - | - | - | - | - | - | - | - | - | 0 | 1 | 1 |
| Base Address + 11 | - | - | - | - | - | - | - | - | - | - | - | - | - | 1 | 0 | 0 |
| Base Address + 10 | - | - | - | - | - | - | - | - | - | - | - | - | - | 1 | 0 | 0 |
| Base Address + 9 | - | - | - | - | - | - | - | - | - | - | - | - | - | 1 | 0 | 1 |
| Base Address + 8 | - | - | - | - | - | - | - | - | - | - | - | - | - | 1 | 0 | 1 |
| Base Address + 7 | - | - | - | - | - | - | - | - | - | - | - | - | - | 1 | 0 | 1 |
| Base Address + 6 | - | - | - | - | - | - | - | - | - | - | - | - | - | 1 | 1 | 0 |
| Base Address + 5 | - | - | - | - | - | - | - | - | - | - | - | - | - | 1 | 1 | 0 |
| Base Address + 4 | - | - | - | - | - | - | - | - | - | - | - | - | - | 1 | 1 | 0 |
| Base Address + 3 | - | - | - | - | - | - | - | - | - | - | - | - | - | 1 | 1 | 0 |
| Base Address + 2 | - | - | - | - | - | - | - | - | - | - | - | - | - | 1 | 1 | 1 |
| Base Address + 1 | - | - | - | - | - | - | - | - | - | - | - | - | - | 1 | 1 | 1 |
| Base Address | - | - | - | - | - | - | - | - | - | - | - | - | - | 1 | 1 | 1 |

Table 4:

| Channel Utilization Parameters | | | | | | | | | | | | | | | | |
|---|---|---|---|---|---|---|---|---|---|---|---|---|---|---|---|---|
| Sub-Rate Utilization | 0 | 0 | 0 | 0 | 0 | 0 | 0 | 0 | 0 | 0 | 0 | 0 | 0 | 0 | 0 | 0 |
| CU Bits | - | - | - | - | - | - | - | - | - | - | - | - | - | 1 | 0 | 1 |
| CU Counter | - | - | - | - | - | - | - | - | - | - | - | - | 0 | 1 | 1 | 0 |

Table 4:   (continued)

| Channel Utilization Parameters | | | | | | | | | | | | | | | |
|---|---|---|---|---|---|---|---|---|---|---|---|---|---|---|---|
| Next Slot Pointer | - | - | - | - | - | - | - | - | - | - | - | - | 1 | 0 | 1 | 0 |

Table 5:

| Time Slot Map | | | | | | | | | | | | | | | |
|---|---|---|---|---|---|---|---|---|---|---|---|---|---|---|---|
| Present Frame + 24 | 0 | 0 | 0 | 0 | 0 | 0 | 0 | 0 | 0 | 0 | 0 | 0 | 0 | 0 | 0 | 0 |
| Present Frame + 23 | 0 | 0 | 0 | 0 | 0 | 0 | 0 | 0 | 0 | 0 | 0 | 0 | 0 | 0 | 0 | 0 |
| Present Frame + 22 | 0 | 0 | 0 | 0 | 0 | 0 | 0 | 0 | 0 | 0 | 0 | 0 | 0 | 0 | 0 | 0 |
| Present Frame + 21 | 0 | 0 | 0 | 0 | 0 | 0 | 0 | 0 | 0 | 0 | 0 | 0 | 0 | 0 | 0 | 0 |
| Present Frame + 20 | 0 | 0 | 0 | 0 | 0 | 0 | 0 | 0 | 0 | 0 | 0 | 0 | 0 | 0 | 0 | 0 |
| Present Frame + 19 | 0 | 0 | 0 | 0 | 0 | 0 | 0 | 0 | 0 | 0 | 0 | 0 | 0 | 0 | 0 | 0 |
| Present Frame + 18 | 0 | 0 | 0 | 0 | 0 | 0 | 0 | 0 | 0 | 0 | 0 | 0 | 0 | 0 | 0 | 0 |
| Present Frame + 19 | 0 | 0 | 0 | 0 | 0 | 0 | 0 | 0 | 0 | 0 | 0 | 0 | 0 | 0 | 0 | 0 |
| Present Frame + 16 | 0 | 0 | 0 | 0 | 0 | 0 | 0 | 0 | 0 | 0 | 0 | 0 | 0 | 0 | 0 | 0 |
| Present Frame + 15 | 0 | 0 | 0 | 0 | 0 | 0 | 0 | 0 | 0 | 0 | 0 | 0 | 0 | 0 | 0 | 0 |
| Present Frame + 14 | 0 | 0 | 0 | 0 | 0 | 0 | 0 | 0 | 0 | 0 | 0 | 0 | 0 | 0 | 0 | 0 |
| Present Frame + 13 | 0 | 0 | 0 | 0 | 0 | 0 | 0 | 0 | 0 | 0 | 0 | 0 | 0 | 0 | 0 | 0 |
| Present Frame + 12 | 0 | 0 | 0 | 0 | 0 | 0 | 0 | 0 | 0 | 0 | 0 | 0 | 0 | 0 | 0 | 0 |

Table 5: (continued)

| Time Slot Map | | | | | | | | | | | | | | | | |
|---|---|---|---|---|---|---|---|---|---|---|---|---|---|---|---|---|
| Present Frame + 11 | 0 | 0 | 0 | 0 | 0 | 0 | 0 | 0 | 0 | 0 | 0 | 0 | 0 | 0 | 0 | 0 |
| Present Frame + 10 | 0 | 0 | 0 | 0 0 | 0 | 0 | 0 | 0 | 0 | 0 | 0 | 0 | 0 | 0 | 0 | 0 |
| Present Frame + 9 | 0 | 0 | 0 | 0 | 0 | 0 | 0 | 0 | 0 | 0 | 0 | 0 | 0 | 0 | 0 | 0 |
| Present Frame + 8 | 0 | 0 | 0 | 0 | 0 | 0 | 0 | 0 | 0 | 0 | 0 | 0 | 0 | 0 | 0 | 0 |
| Present Frame + 7 | 0 | 0 | 0 | 0 | 0 | 0 | 0 | 0 | 0 | 0 | 0 | 0 | 0 | 0 | 0 | 0 |
| Present Frame + 6 | 0 | 0 | 0 | 0 | 0 | 0 | 0 | 0 | 0 | 0 | 0 | 0 | 0 | 0 | 0 | 0 |
| Present Frame + 5 | 0 | 0 | 0 | 0 | 0 | 0 | 0 | 0 | 0 | 0 | 0 | 0 | 0 | 0 | 0 | 0 |
| Present Frame + 4 | 0 | 0 | 0 | 0 | 0 | 0 | 0 | 0 | 0 | 0 | 0 | 0 | 0 | 0 | 0 | 0 |
| Present Frame + 3 | 0 | 0 | 0 | 0 | 0 | 0 | 0 | 0 | 0 | 0 | 0 | 0 | 0 | 0 | 0 | 0 |
| Present Frame + 2 | 0 | 0 | 0 | 0 | 0 | 0 | 0 | 0 | 0 | 0 | 0 | 0 | 0 | 0 | 0 | 0 |
| Present Frame + 1 | 1 | 1 | 1 | 1 | 1 | 1 | 1 | 0 | 0 | 0 | 0 | 0 | 0 | 0 | 0 | 0 |
| Present Frame | 1 | 1 | 1 | 1 | 1 | 1 | 0 | 0 | 0 | 0 | 1 | 0 | 0 | 0 | 0 | 0 |

The first byte of Table 4 contains the value of the Next Slot Pointer. This value is reevaluated during each receive ISR whose associated OTA link is using fast control traffic. The value represents the number of time slots which are to occur before the next OTA communication with the MS. In the example shown, the Next Slot Pointer value is set to 10. This value will be transferred to the OTA Control Traffic Header and signals the MS to transmit its next message in the slot occurring 12.5 usec (i.e., 1.25usec*10) after the beginning of the current slot. (Note: a value of "0" indicate that the next communication opportunity will occur in exactly one frame time). In addition, this parameter causes the corresponding bit in the "Present Frame"/"Present Frame + 1" field (in Table 5) to be set high. If the link is currently engaged in slot 0, a value of 10 in the Next Slot Pointer will cause the Present Frame bit 10 to be set.

The next two bytes in Table 4 are the channel utilization counter and the current Channel Utilization (CU) values. The CU counter indicates the number of timeslots reserved for the next TDMA frame.

The current Channel Utilization (CU) bits value is derived from the CU Lookup Table. Each time the OTA State Machine requests or clears a time slot, a CU counter is incremented/decremented. In order to derive the CU bits, the CU counter is added to the base address of the lookup table. The resulting address contains the value for

214

each of the CU bits.

The Sub-Rate Utilization File contains a map of which slots are currently assigned to calls using sub-frame maps. Sub-frame mapping will not be supported in OD1 and its completed design is TBD.

The actual timeslots in use and reserved are stored in Table 5 which contains "Present Frame" to "Present Frame + 24" fields. For the first release only the two lowest location will be used, but with the introduction of sub-rate slot allocation in a future release the ability to reserve a timeslot 25 TDMA frames into the future must be possible.

The CU Lookup Table example indicates that there are 6 time slots currently being used and 7 time slots reserved for the next TDMA frame, and that the corresponding CU bits are set to 1 1 0.

Initialization. Upon initialization, Table 5 is cleared. In Table 2, the three least significant bits of the "CU Bits" memory location are set to 1, to indicate "empty", and the CU counter is reset to 0. The 3 lsbs of each of the CU Lookup Table entry (Table 3) are initialized. This table will be configurable.

Time Slot Allocation. The MS will monitor the CU bits in the BS packet headers, and from their state make a decision as to whether or not to attempt a call. If the CU bits indicate that there are time slots available for the service required by the MS then the MS will initiate a time slot seizure by responding to BS signaling messages.

In the slot acquisition case, each time the BS OTA prepares a GP packet, it must search for a free time slot and communicate the slot's relative (temporal) position to the MS. This search will include all timeslots from the next timeslot to the corresponding timeslot of the next TDMA frame. Once a free time slot is found, it is then reserved by marking that bit location with a 1. The relative position of this time slot is calculated, placed in the Next Slot field of Table 4 and reported to the MS is the "Next Slot" field of the BS Tx Packet (reference [1]). The same search and report process occurs during all fast control traffic.

During paging and other non-fast control traffic situations, the slot map is established based on the service requested and remains static until the OTA link is terminated.

Wherever possible, the time slots should be allocated consecutively to ensure that bandwidth is optimized for future implementation of time slot aggregation.

Time Slot Release. Time slot release is controlled by the OTA state machine. Once released, the frame allocation maps must be updated by clearing the bit location corresponding with the time slot being released. The CU Counter is then decremented, and from this a new CU value is derived.

Reserved Time Slot Algorithm

When resources are scarce (CU Value < 4?), the BS OTA must ensure that one time slot is reserved exclusively for 911 calls and one time slot is reserved for fast control traffic in each TDMA frame. These time slots are dynamically assigned (i.e., the time slots reserved will be the last available free timeslots) so will not necessarily be the same for consecutive TDMA frames.

The MS can determine the time slots available by reading the CU bits in the BS transmit packet header. These CU bits can be evaluated by the MS before slot acquisition is attempted. Table 6 shows the definition of the three CU bits.

Table 6:

| Channel Utilization Bits | | |
|---|---|---|
| BS "CU" State | Channel Utilization | Number of Free Timeslots |
| 0 | 000 | All Channels Utilized |
| 1 | 001 | One Channel Available, class control in effect |
| 2 | 010 | Two Channels Available, class control in effect |
| 3 | 011 | Three Channels Available, class control in effect |
| 4 | 100 | Nearly Full, class access is unrestricted |
| 5 | 101 | Moderately Full, class access is unrestricted |
| 6 | 110 | Partially Full, class access is unrestricted |
| 7 | 111 | All Slots Available, class access is unrestricted |

Sub-Rate Time Slot Allocation

A future requirement is to support bearer transmission at low rates, by assigning time slots every 40ms or more up to a maximum of 500ms. This will require the BS OTA to reserve timeslots up to 500ms in advance, hence this requirement is reflected in the 25 entry CU table.

This feature will be required for low transmission rates for data or DTX on speech, but it not a requirement for the first release.

Timeslot Aggregation

Timeslot aggregation is where more than one timeslot per TDMA frame can be assigned to a single MS for bearer traffic. This is not a requirement for OD1 software but will be a future enhancement to the system, allowing bearer data rates beyond 9.6kbps. This should be bourn in mind whilst developing the software. Similarly a sub-rate data transmission can occur by allocating less than one timeslot per TDMA frame.

Power Control Algorithm

Link quality is optimized by ensuring that the MS is transmitting at its predefined optimal RF power level. The BS H/W must measure the BER and RSSI of the received traffic and report the values to the BS OTA processor so it may compare them with the threshold values. If either fall outside of the threshold range then the MS is told to adjust its RF transmit power level by means of a single header bit in steps of 3dB. The Power Control Algorithm has the effect of improving spectral efficiency and to a lesser extent conserving the battery life of the MS.

The Radio Card will signal (communication mechanism TBD) the TRX Unit when an MS Power change is indicated by the RF measurements. The TRX Unit will then set bits in the BS Header to request an increase or decrease in MS TX power.

Timer Management

All timers for the TRX Unit and I Interface Manager will be designed as decrementing counters and all will be decremented during TRX Unit processing. Each timer will be set to its maximum value and decremented each time the receive interrupt ISR is executed. Table 7 lists the Timers identified in reference [1] and indicates the TRX Unit's responsibilities to each.

Table 7:

| TRX Unit Timer Management | | | |
|---|---|---|---|
| Timer | Decrement | Monitor | Reset |
| BS01-BS O_NOTE Waiting for Message | X | X | X |
| BS02 - Slot Acquisition Waiting for MS O_NOTE Response | X | X | X |
| BS03 - Slot Recovery Waiting for Specific Poll | X | X | X |
| BS04 - Special Operation and Mobile Call termination Waiting for Specific Poll Timer | X | X | X |
| BS05 - Slot Recovery During Traffic Timer | X | X | X |
| BS06 - Handover Attempt Timer | X | - | - |
| BS07 - Periodic Registration Timer | NOT IMPLEMENTED | | |
| BS08 - Loss of Message from the BSC Timer | X | - | - |
| BS09 - Waiting for Authenticate Response Timer | X | X | X |
| BS10 - Page Pending PID Table Entry Timer | NOT IMPLEMENTED | | |

Interfaces

TRX Unit Internal Interfaces

The constituents within the TRX Unit will interface with each other by passing variables as inputs to subroutines. For the sake of clarity, the Timer Management module is portrayed as interfacing with the rest of the processes as though they were a single element. In actuality, Timer Management can interface with each module independently, depending on the timer event in progress. The thick unanchored arrows represent data being pass to/from external

entities

<u>TRX Unit External Interfaces</u>

The TRX Unit will interface with other processes in the BS through shared memory areas. Designing shared memory areas which contain flags and other pertinent data is preferable to a more formal message based interface because it reduces the timing overhead required to transfer information between the TRX Unit and other processing entities.

The TRX Unit and TRX Manager will share a memory area which will contain OAM&P parameters, NOTE requests, and Radio Power Level data. The TRX Unit will "get" and "put" data to this area as required. The TRX Router will be responsible for responding to requests from entities wishing to access this data.

The TRX Unit will have access to incoming and outgoing O_NOTE in BS OTA local memory. O_NOTE data is moved between OTA local memory and Radio DPR by the TDM.

<u>Memory Requirements</u>

The following table lists the RAM memory requirements for each of the processes within the TRX Unit. These estimates are based on the eventual requirement for a 32 slot system.

| Process | OTA Local RAM |
|---|---|
| O NOTES Processing | 14.5 |
| I Interface Signaler | 256 Bytes |
| OAM&P Support | 256 Bytes |
| ARQ | 128 Bytes |
| Power Control | Bytes256 |
| Time Slot Management | 144 Bytes |
| Timer Management | 80 Bytes |
| Total | approx 16K |
| TRX Unit Memory Requirements | |

In total, the TRX Unit will require approximately 16K of local memory for data storage.

The RAM estimate for the O NOTEs processing assumes that the TRX Unit must be prepared to buffer entire DTAP messages for segmented transmission to the MS OTA. These estimates were obtained using the following equations:

$$\text{Memory} = (\text{Maximum DTAP Size} + \text{Maximum SMS Size}) * 32 \text{ Slots} * 2 +$$

$$\text{Size of Incoming O\_NOTE} * 32 \text{ Slots} + 256 \text{ Bytes for management}$$

$$\text{overhead} = (260 \text{ Bytes} + 176) * 32 * 2 + (21 * 32) + 256 = \text{Bytes} =$$

$$\text{approx K}$$

<u>Rates</u>

The processing rate requirements will be driven by the OTA link response time requirements. In the 16 channel Virtual Slot configuration, the TRX Unit must analyze incoming O_NOTE, perform support tasks (e.g., OAM&P data updates) and prepare (including Time Slot Management, ARQ and Power Control tasks) an O_NOTE response message for transmission on the OTA link in less than 990 usec.

When a 32 slot/dual radio design is implemented, the receive ISR processing for each slot will be cut in half (i.e., 445 usec).

Operations, Administration and Maintenance (OA&M)

Operations, Administration and Maintenance (OA&M) provides an extensive set of functions for configuring and monitoring the system. The following list shows the functions provided by the OA&M:

• Software Download Management
• Configuration Management
• Fault Management
• Test Management
• Performance Management
• State Management

Description

This section describes requirements for the BS OTA OA&M. Software Download Management must be able to handle code download between the Line Card and the OTA, and maintain information on code object for the OTA. Configuration Management must be able to provide an OTA internal database, allow read/write access of the OTA internal database, initialize and configure the OTA, and allow recent configuration changes. Fault Management must be able to detect faults, report the faults, and in certain cases isolate and attempt recovery from detected faults. Test Management must be able to perform all the solicited tests and report the results. Performance Management must be able to support the gathering of statistical data to measure the performance of the system. State Management must be able to support the administrative state changes.

Software Download Management

Software Download Management will perform the following functions:

• initialization request
• configuration info request
• software loading
• software activation

Software download will be required off-line and the BS OTA must return to bootstrap in order to download new software. When a software upgrade is required, the Line Card sends the reset request to the OTA in order to force the OTA into boot ROM. After the OTA drops to boot ROM to prepare for receiving the new software object, the OTA starts its software initialization processing. At this time, the Load Management task will configure the Dual Port RAM in non-operational mode (non-prioritized queue). A download can only be done after an OTA has requested initialization to the Line Card.

Initialization Request

Upon a reset or a boot-up, the OTA will run in ROM mode. During boot up, the Power On Self Test (POST) task runs a self test and places the results in battery backup RAM. The results can be retrieved at any time. After the Power On Self Test has been completed, the OTA will periodically transmit an initialization request message to the Line Card until a response message is received. The result of the Power On Self Test (POST) will be contained in the initialization request message. When the OTA receives an initialization request response message, it will continue with initialization, which will include waiting for a configuration request and a download from the Line Card.

Configuration Request

For the software download, the OTA (while running from boot ROMs) receives the configuration request message from the Line Card via Dual Port Ram. It then returns the current OTA SW/FW/HW configuration information to the Line Card. The list of OTA SW/FW/HW configuration information is stored in flash memory. This list is read and updated by the Load Management process whenever there is a new object load. Object information includes the object version number, object file ID, equipment ID, equipment type, equipment version number, equipment location, etc. When the Line Card receives the configuration response (current OTA configuration list) from the OTA, the Line Card determines whether OTA code object must download to the OTA.

Software Loading

OTA software can be downloaded to the OTA thru Dual Port RAM or serial port. If the software is downloaded through Dual Port RAM (i.e., network), the message formats used for the download will be defined in the I-interface specification (IFS-00001).

After Line Card has determined this OTA software version is out-of-date, the Line Card forces the OTA to take a new load. A load must be segmented according to the dual port RAM size allocated. As each Load Data block comes from the Line Card, the OTA stores it into flash memory and acknowledges receipt of the "Load Data Block" message with a "Load Data Response" message. Upon receipt of the acknowledgment from the OTA, the Line Card sends the next segmented data block.

Software Activation

After the necessary OTA load object has been successfully received (or if a software version in the OTA flash memory was acceptable), the OTA waits for a "Activate SW" message to start executing RAM code. When the OTA receives the "Activate SW" message, the Dual Port RAM will be configured in an operational mode (prioritized queues) and control will be passed to RAM startup code.

Configuration Management

The OTA Configuration Management is a subsystem of the OTA OA&M. The primary goals of the Configuration Management are to distribute configuration information to the OTA software tasks. The CM is responsible for the following major operations:

- initialization
- internal database management
- reconfiguration

Initialization

This procedure takes the TRX Manager and TRX units from non-operational to operational status. When the set parameters request message is received, the CM will distribute the configuration information to the TRX Manager. The TRX initialization can only be performed following successful completion of the TRX Manager initialization. The successful initialization of a TRX provides 16 operational timeslots. The TRX initialization procedure is repeated for each TRX in the BS.

Internal Database Management

This procedure must store, retrieve and update configuration data for the OTA. The configuration data will be maintained in an internal database. The CM will provide functions to access parameters values in the database.

| UNIT | Attributes |
|------|-----------|
| TRXMU | BSC IDENTITY |
| | BS IDENTITY |
| | Location Area Code |
| | Mobile Country Code |
| | Mobile Network Code |
| | Facility |
| | System type |
| | Service provider |
| | BS TX Power maximum |
| | MS TX Power maximum |
| | RX Mode |
| | TX Mode |
| | BS type |
| | Surrounding BS information |
| | Surrounding BS HO information |
| TRXU | Radio channel ID |
| | PN Code |
| | Maximum bearer bandwidth |
| | Minimum bearer bandwidth |

Reconfiguration

OTA configuration parameters can be remotely modified at any time and are applicable to the TRX Manager and the TRX units. Some parameter modification require that the unit is first administratively 'locked' (as the parameter modification can affect on-going calls).

Fault Detection

The OTA will monitor, filter and route alarm report and alarm clear conditions when detected. Fault detection is accomplished by either the application software detecting the faults or as a result of a requested diagnostic test. In both cases, the detection of a fault is reported to the Line Card, which will route it to the BSC.
All faults are categorized in groups defined in the following types:

- Communication Failure Alarms
- Quality of Service Failure Alarms
- Processing Failure Alarms
- Equipment Failure Alarms
- Environment Failure Alarms

Alarm conditions are assigned different severity levels. The OTA supports six severity levels as shown in ascending order:

- Failure ceased
- Critical failure
- Major failure
- Minor failure
- Warning failure

- Indeterminate failure

All detected faults indicate the condition that causes the alarm. The OTA supports the following failure causes:

- DPRAM:Dual Port RAM interface failure (e.g., buffer overflow)
- GPS Lost:Loss of GPS signal reception
- Restart:OTA card processor has suffered a SW restart
- Reset:OTA card processor has suffered a SW reset
- Battery Not Charging:DC back-up battery is not charging correctly
- Battery Power Lost
- DC Power
- GPS Receiver:GPS equipment has failed
- Master Clock Lost:20Mhz master clock has failed
- Antenna VSWR:VSWR at the antenna has reached critical value
- HW Failure:OTA card has suffered a HW failure
- High Temp:BS has reached an unacceptably high temperature
- Radio Interface Lost:Communication failure on radio interface
- Critical BER:Air interface BER has reached critical level
- Unused Radio:Failure suspected as radio equipment is not being used
- LO Lock
- Critical TX Power:Radio equipment HW failure
- TX Power:TX power has dropped below critical level

Fault Recovery

The OTA supports a fault recovery mechanism which enables it to recover from faults during its normal operation. These faults may downgrade the performance of the OTA if no recovery action is in place. The recovery actions the OTA takes will relieve critical or major failure within the OTA. The exact fault recovery actions are TBD.

Test Management

The Test Management is one of the OA&M tasks. The Line Card initiates one of the predefined tests by sending a test request message. All tests are either directly performed by the Test Manager or are performed by dedicated tests tasks within the OTA (i.e. POST). The following types of test will be supported by the Test Manager task:

- Diagnostic Tests
- TS Loopback Test

All of these tests can only be performed after the administrative state of the unit has been locked. Since the OTA will not support self-locking for these tests, the Line Card must send the administrative state (Unlock to Lock) change request to the OTA for the requested unit.

The BS OTA diagnostic tests can be performed by boot-code during the system initialization (POST) or anytime it is requested. The results of the self test will be stored in battery backup RAM so that they can be retrieved at any time. If the self test fails, a resulting failure message is generated. The test results can be read by the Test Manager task upon request from the Line Card.

A subset of POST hardware test can be performed after system startup. The diagnostic test report is sent from OTA to Line Card on completion of a diagnostic test, indicating whether the test was successfully carried out, and also the results of the test. An alarm will be sent when a test fails and a previous test passed, or when a test passes and a previous test failed.

The TS loopback test can be triggered by a message request from the Line Card at any time. The TS loopback test verifies the integrity of the bearer channel path between the Line Card to OTA in both directions. A radio loop test via the transceiver is used to test most of the equipment needed to provide service of one traffic channel. A channel must be locked before performing a 1-ooptest. The only functionality of the BS OTA for the TS loopback test is open/close loop support.

The close loop request message is sent from Line Card to OTA to request that a loop-back connection is made for a timeslot. The BS OTA OA&M will forward this request to the TRX unit, which will route the message to a specific TS or all TS according to the unit id in the message. The close loop response message is sent from OTA card to the Line Card in response to a 'close loop request' message, indicating whether the loop has been successfully closed. The open loop request message is sent from the Line Card to the OTA card to request that a previously closed loop is opened for a timeslot. The open loop response message is sent from OTA card to Line Card in response to a 'Open loop request' message, and indicates whether the loop has been successfully opened.

Performance Management

Performance Management functions include maintaining measurements and collection of statistics for hardware and software entities. The purpose for maintaining statistics is to collect data on the performance of the BS OTA subsystem.

Some measurements can be initiated from the Line Card and others are constantly collected on an ongoing basis. Each measurement will be recorded and stored for further analysis. The Line Card will be able to manipulate the time between collections of all or individual statistics. Multiple measurement types can be initiated by the Line Card.

When the OA&M receives the "Start Measurement Request" message with the measurement type and reporting period (5, 15, 30, or 60 minutes) from the Line Card, it will forward this request to the TRX Router. There are three different collection methods; Cumulative Counter (CC), Gauge, and an arithmetic mean value referred to as the Snapshot Indicator (SI).

Performance statistics are kept in tables by the TRX units. The TRX Router collects measurements from each table, formats them based on the measurement type and reports them to the OA&M at the end of each reporting period. All TRX router reports must be reported to the Line Card before the next interval. The OTA OA&M will continue collecting measurements from the TRX Router and reporting them to the Line Card until a stop measurement request is received.

State Management

The BS OTA will support Lock, Unlock, Shut-Down administrative state change requests from the Line Card. The OTA will change its state when a new administrative state is requested by the Line Card. The OTA will start with the Administrative state = 'Locked'. After initialization completion of the TRX Manager and TRX units, the OTA must be unlocked by the Line Card.

When the TRX unit is unlocked, 16 channels are automatically unlocked. When the TRX unit is locked, 16 channels are automatically locked. A channel must be locked before performing a loopback test.

Upon receipt of the administrative state request from the Line Card, the OA&M will route this message to the TRX Manager, which will send it to the appropriate TRX unit(s).

If the OTA receives an Unlock command, the OTA is in service. If the OTA receives a Shut-Down state change command, the OTA will wait for all on-going calls to be completed.

While the unit is in the Locked administrative state, the Line Card can initiate the following activities (of the OTA): (1) perform any pre-defined test, (2) reconfiguration, or (3) software upgrade.

Interfaces

The OTA OA&M interfaces to both TRX Router, the I Interface Manager, Post and the Debug Port Manager.

The OA&M Manager is responsible for the following functions:

(1) configuration of the TRX Manager and TRX units
(2) collecting the alarms from the TRX Router, Debug Port Manager, I Interface manager, and the Post tasks and filtering them before reporting them to the Line Card.
(3) administrative state request to the TRX Router. The TRX Router will route it to the appropriate TRX unit(s) for state changes.
(4) performance measurement request to the TRX Router.
(5) diagnostic test request to POST and loopback test request to TRX Router.
(6) serial code download from dualport manager.

Debug Port Manager

The Debug Port Manager provides an interface to the debug port The debug port is not described in detail here, it will however support the following functions.

Description

The Debug Port Manager is comprised of two main functions: logging useful debug data information and accepting command requests. The Debug Port Manager will be capable of logging state machine information, event/error information, O Interface messages, and I Interface Messages. Loggers will copy information to a common information buffer that will be output to the debug port, as time permits, by the Debug Port Manager. The O Interface Manager will log the state machine information and the O Interface messages. The I Interface Manager will log the I Interface Messages. The events and errors will be logged by either the O Interface or I Interface Manager. The Debug Command Handler is the part of the Debug Port Manager that will handle requests for information via input from the debug port. This information will be sent out the debug port.

Interfaces

The O Interface Manager will write the state machine information, the event/error information and the Traffic buffer information for the current slot into the common buffer area that can be grabbed by the Debug Port Manager. The I Interface Manager will write the NOTES buffer for a slot into the common buffer area that can be grabbed by the Debug Port Manager. The Debug Command Handler interfaces with the debug port to obtain input requests and provide output results. It also interfaces with the Loggers to logging on and off for the various logging functionality. It must also interface with the OAM&P Manager by initiating a request for a download via the debug port.

State Machine Logger

The State Machine Logger provides access to the OTA state machines. The current state of each time slot can be reported via the debug port.

Description

The purpose of the State Machine Logger is to allow the developer/integrator access to the state information for each time slot while the OTA processor is running. The information as to what state a particular time slot is in could then be displayed on a PC connected to the debug port. This state information will be very helpful in debugging and determining the operational status of the OTA Processor and the Handsets connected to this Base Station.
The State Machine Logger will be used by the O Interface Manager and will store the state information in real time, as to what the state of the current time slot is, in the common information buffer, if State Machine Logging is enabled. This information will then be output over the debug port by the Debug Port Manager from the common information buffer.

Interfaces

The State Machine Logger when called by the O Interface Manager will write the state machine information for the current slot. into the common information buffer that can be accessed by the Debug Port Manager. The data that will be stored by the State Machine Logger will include time slot number, unit base station number, and current state. This state information should be logged upon entry into the 0 Interface Manager interrupt.

Event/Error Logger

Any error conditions or user defined events can be detected and reported via the debug port.
The purpose of the Event/Error Logger is to allow the developer/integrator access to the events and errors for each time slot while the OTA processor is running. The information as to what event or error a particular time slot has experienced could then be displayed on a PC connected to the debug port. This. event/error information will be very helpful in debugging and determining the operational status of the OTA Processor and the Handsets connected to this Base Station.
The Event/Error Logger will be used by either the O or I Interface Manager and will store the event or error information in real time as to what event just occurred for the current time slot in the common information buffer, if Event/Error Logging is enabled. This information will then be output over the debug port by the Debug Port Manager from the common information buffer.

Interfaces

The Event/Error Logger when called by the O or I Interface Manager will write the event/error information for the current slot into the common information buffer that can be accessed by the Debug Port Manager. The data that will be stored by the Event/Error Logger will include time slot number, unit base station number, and event/error indication. The event/error indicator should be only two bytes of information in order to keep the transfers through the debug port to a minimum. This allows 65536 different indicators for errors and 65536 different indicators for events.

Interface Logger

The 0 Interface Logger provides visibility to the OTA Dual-Port RAM. This will support data capture for all TDMA time slots.

Description

The purpose of the O Interface Logger is to allow the developer/integrator visibility to the O Interface Traffic buffer information for each time slot while the OTA processor is running. The Traffic buffer of information received from the Handset as well as the Traffic buffer of information to be sent to the Handset could be displayed on a PC connected to the debug port. This state information will be very helpful in debugging and determining the operational status of the OTA Processor and the Handsets connected to this Base Station.
The O Interface Logger will be used by the O Interface Manager and will store the Receive and Sent Traffic Buffers in real time for the current time slot in the common information buffer, if O Interface Logging is enabled. This information will then be output over the debug port by the Debug Port Manager from the common information buffer.

Interfaces

The O Interface Logger when called by the O Interface Manager will write the Traffic buffers for the current slot into a data area that can be accessed by the Debug Port Manager. The data that will be stored by the O Interface Logger will include time slot number, unit base station number, Receive Traffic buffer, and Transmit traffic Buffer. The Receive buffer information and the Transmit buffer information should be logged just before exit from the O Interface Manager interrupt.

Interface Logger

The I Interface Logger provides access to the NOTES Dual Port RAM. This will support data capture for the NOTES associated with all TDMA time slots.

Description

The purpose of the I Interface Logger is to allow the developer/integrator visibility to the I Interface NOTES buffer information for each time slot while the OTA processor is running. The NOTES buffers received from the Line Card Processor as well as the NOTES buffers sent to the Line Card Processor could be displayed on a PC connected to the debug port. This state information will be very helpful in debugging and determining the operational status of the OTA Processor and the Line Card Processor in this Base Station.
The I Interface Logger will be used by the I Interface Manager to write the Received and Sent NOTES Buffers in real time for a time slot into the common information buffer that can be accessed by the Debug Port Manager, if I Interface Logging is enabled. This information will then be output over the debug port by the Debug Port Manager from the common information buffer.

Interfaces

The I Interface Logger when called by the I Interface Manager will write the NOTES buffer for a slot into the common information buffer that can be accessed by the Debug Port Manager. The data that will be stored by the I Interface Logger will include time slot number, unit base station number, Receive or Transmit NOTES Buffer. The Receive NOTES buffer should be logged upon receipt of an interrupt that a NOTE has been received. The Transmit NOTES buffer should be logged just before setting the interrupt request for the Line Card Processor to know that there is a NOTE request for it to receive.

Debug Command Handler

Access to the inner workings of the Base Station will be via the debug port. This handler will be part of the Debug Port Manager and is responsible for decoding and initiating the commands sent by the user. The list of commands supported from a functional standpoint are as follows:

- Enable/Disable the State Machine Logger.
- Enable/Disable the Event/Error Logger.
- Enable/Disable the 0 Interface Logger.
- Enable/Disable the I Interface Logger.
- Enable/Disable all Loggers.
- Filter Logger output by time slot number.
- Request status information of OAM&P.
- Initiating download for OAM&P processing.
- Access RTOS command line interface to obtain information like Displaying memory locations, Changing memory locations, See what tasks are running, Queue status, etc.

Description

The Debug Command Handler handles all commands that come in from the debug port. These commands provide the. functionality of enabling and disabling the various logging functions, as well as supporting OAM&P requests for download, etc. and supporting the RTOS functions of displaying and modifying memory locations and more.

The commands for enabling and disabling the logging functions will merely enable or disable that form of logging. There will be one command that turns on and off all logging functions as well. The logging status will be returned to the debug port after processing the command request.

The command that initiates the downloading, via the debug port will actually initiate an OAM&P function to take control of the debug port in order to perform the download. Once the download is completed, then control of the debug port will return to this Debug Command Handler. Other OAM&P status information can be requested as well and the requests will be sent on to the OAM&P Manager and the status results returned and displayed by the Debug Port Manager.

The requests to display and modify memory locations in the OTA Processor will include the ability to access DPR locations as well. Other RTOS information will be requested and displayed based on the functionality of the Command Line Interface of the chosen RTOS.

This debug port is only designed to be used for system debugging, and therefore is limited in scope. The loggers are intended to provide the main visibility into system operation on the Base Station for debugging purposes. They may also be used in troubleshooting. The majority of the operational analysis will be done using the OAM&P functionality.

Interfaces

The Debug Command Handler interfaces with the debug port to obtain input requests and process those requests. It also interfaces with the Loggers to enable and disable logging for the various logging functionality. It must also interface with the OAM&P Manager by accepting requests. It also interfaces with the RTOS to provide the visibility available by the Command Line Interface.

Traffic Data Manager (TDAI)

In previous BS versions the IDM was called the Controller and resided on a separate processor card, but it is now incorporated into the OTA processor card. The TDM is responsible for managing the radio fink, data movement, global bus arbitration and supervision.

Description

The main function of the TDM is to move Control Traffic between the radio dual port and OTA buffers and move the Voice and Data Traffic between the radio and line card dual port using DMA transfers. In the process of copying these data buffers, the TDM must control access to the global bus. During the DMA process, no interrupts can occur in the OTA until the DMA transfer is completed. If the radio link is not up then it must zero out the buffers. The TDM will also transfer the power control information from the Radio Dual Port to OTA RAM for use by the TRX Unit

There are two different ways that the hardware can be configured to handle the time slots. One is called intra-slot and one is called virtual slot. There is a bit in the Traffic Header bytes that indicates whether the Base Station is in Intra-slot or Virtual slot mode. This bit is under software control. Intra-slot pertains to a Handset transmitting its traffic message immediately followed by the Base Station message which is in response to that Handset message. Virtual slot pertains to a Handset transmitting its traffic message for slot N and the Base Station transmitting its response to slot N-1 Handset message. The rest of this description pertains to handling the virtual slot case. The intra-slot case will not be handled by this design, but this design will not preclude future enhancements toward the intra-slot case.

The Control Traffic data is copied from the radio buffers to the OTA buffers and from the OTA buffers to the radio. The Voice/Data Traffic is copied from the radio buffers to the line card dual port and from the line card dual port to the radio buffers. In both cases, the header information of the OTA buffers is always passed from/to the radio buffers to/from the OTA buffers.

The copying of a radio buffer to and from its respective area will be done in two separate interrupts. One interrupt will be the receive interrupt and one interrupt will be the transmit interrupt. The receive interrupt handler will copy the receive data to the OTA RAM and the transmit interrupt handler will copy the data from the OTA RAM.

The receive interrupt routine will perform the following:

- The receive interrupt will check which radio was indicated by the hardware to have the best received data (based on antenna diversity) and copy the data from that radio buffer into the appropriate OTA buffer and/or line card dual port buffer for a particular slot.
- It will then call the 0 Interface Manager to process the received data and set up the data to transmit in response. The 0 Interface Manager will have a maximum of 990us available to get the data ready for the transmit interrupt. This is the time available in the receive interrupt after transferring the receive data into the OTA .

The transmit interrupt routine will perform the following:

- The copying of an OTA buffer and/or a line card dual port buffer to the radio buffer for a particular OTA slot will be done during a transmit interrupt.

In an intra-slot system the data has to be stored for transmitting at the end of processing your receive interrupt data because you would have to process the last data and get ready to send the next data for this same slot within the time between the end of the receive time and the beginning of the transmit time. This time is only around 100us.

The TDM Transmit interrupt occurs 550us after the start of the slot. The TDM Receive interrupt occurs 660us after the start of the slot. The EOS Interrupt occurs 810us after the start of the slot and is not used in this design. The O Interface Manager cannot have access to the OTA Buffer Ram until the TDM has completed the transfer of the received data. This time is 150us after the occurrence of the receive interrupt. These times are based on the current hardware design used for the PIOLOT system.

It takes 110us to transfer the transmit data and 150us to transfer the receive data. This leaves only 990us per time slot to do the rest of the necessary processing for that time slot.

Interfaces

The TDM assumes that by the time it gets in to process the transmit interrupt, that the O Interface Manager has already stored the response Traffic Message (including header bits) in the transmit buffer for the particular slot in the OTA Ram. The O Interface Manager also assumes that before it gets its interrupt to process the OTA Traffic data that the TDM has finished transferring the data from the Radio to the OTA RAM.

Performance

Memory

The TDM should use about 3K bytes of program memory. This should not be a significant use of data memory space since the majority of its functionality is to copy buffers from Dual Port or local RAM.

Rates

The processing time needed for the IDM should be about 260us. The estimated time to transfer the transmit buffer should take about 110us per slot. The estimated time to transfer the receive buffer should take about 150us per slot. These times reflect the fact that these transfers are done using DMA.

Timing

The TDM needs to ensure that it operates as quickly as possible with the buffer transfers so that the majority of the slot interrupt time can be used for other purposes. This is a critical feature of the software.

Accuracy

The data transfers will be completely accurate assuming no memory failures.

Availability/Reliability

The IDM should always be available to transfer either the transmit or receive data. The TDM should be interrupt driven by the hardware. There can be one interrupt for transferring the transmit buffer and one interrupt for transferring the receive buffer.

Error Procedures

The following errors could occur and must be handled by the IDM:

Error:          Unable to Access DPR
Description:    The TDM cannot access either Radio, Line Card or OTA RAM.
Example:        DMA transfer fails because TDM cannot write to DPRAM.
Action:         Control will be passed to the RTOS.

Error:          Buffer Overrun
Description:    Previous data has not been processed before the new data arrives.
Example:        Control message from the Line Card DPR arrives before previous data has been cleared.
Action:         This could be accomplished by having the two interrupts check to see if the last interrupt was processed by checking an interrupt status flag. If this error occurs it will be reported to the OAM&P Manager.

Error:          Faulty Card
Description:    The TDM detects a faulty Radio, Line Card or OTA processor.
Example:        Cannot access one of the Radio cards.
Action:         Bus arbitration will be disabled for the faulty board so that the global bus can not become hung up by the faulty card and not allow other users to access the global bus.

Design Issues

The O Interface Manager will be called from the receive interrupt. This decision was made based on how the implementation of the PELOT has proceeded and will be further evaluated as to whether this is the most optimum solution. It may be decided at a later time that the O Interface Manager should use its own interrupt, the EOS interrupt.

During the DMA transfer from or to any DPR the OTA Processor cannot receive any interrupts. This has been confirmed by Rusty Meeks. The DMA transfer must be completed before an interrupt can occur. This is not a problem with the transfers done in the TDM, but for the transfers made from the Line Card DPR for NOTES, this is a very serious issue. Per Dave Hetherington's memo dated 5/31/95 on PCS2000 DPR Issues, it is stated that the transfers for the radio traffic take about 30 us. Since the Line Card DPR NOTES transfers are with larger blocks of data, then it is reasonable to assume that those transfers will take more than 30us. It then follows that interrupts could be delayed at least as much as 30us (the Line Card DPR transfer time). The only way to avoid this delay would be to have the TDM module transfer the Line Card DPR data as well as the radio and line card traffic data. This would ensure that interrupts would not be disabled for any unknown period by the DMA transfer of NOTES.

Don't know how faulty card will be detected.

Real Time Operating System (RTOS)

The OTA processor will use a commercially available RTOS. The RTOS will primarily be used for task scheduling and task messaging.

Description

The RTOS will be the scheduler for the Base Station tasks. The highest priority is servicing the SCU and O Interface Manager. The lowest priority is servicing the OAM&P Manager, Diagnostics Manager, and the OAM&P Manager. The RTOS will be managing tasks that will be primarily message driven. They will receive a message and process the request. Some tasks will send a message on to another task or send a message to an external interface like dual port ram or the serial port.

The features of an RTOS that could be used by the OTA Base Station Processor are task management, semaphore handling, event management, time management, message management, memory management, and peripheral resource management.

Task Management

Task Management could provide for the scheduling of all tasks or just the background tasks. The scheduler could be priority based, time sliced, and/or preemptive.

Semaphore Handling

The Semaphore handling could aid in backplane/global bus accessing for handling dual port access. Ibis handling could be used for any conditions that could provide contention on memory resources.

Timer Management

Timer Management could help tasks set timers and be notified of their expirations asynchronously. Tuners could be added or deleted for a particular event, as well as set, reset, and halted.

Message Management

Messages could be created and filled in with information to be sent to a task. Messages could be sent to a task and received from a task. The task could be in a suspended state until it receives a message. It could leave that suspended state either in response to receiving a message or after a Certain time interval.

Memory Management

Several areas of memory could be allocated as buffer areas. Each area could contain a number of buffers which could be allocated to a task and then released back to the buffer pool when no longer needed. Buffer pools could be created for various functions and for various tasks.

Peripheral Resource Management

The serial port used for the debug port could be a resource that could be managed by the RTOS. This would allow for tasks to avoid conflict in their access to this resource. Refer to the Diagnostic Manager section for use of the debug serial port.

Availability/Reliability

Most commercial products will be reliable. They should be reliable to perform as promised, but there is always the unknown, untried areas that could prove very interesting. The only way to ensure reliability is to have previous experience with the product or to talk with someone who has extensive experience with the areas that you wish to utilize. The RTOS must be able to recover if the task scheduler is overloaded. We cannot tolerate thrashing.

Power On Self Test (POST)

The POST will perform the following functions:

- Cold Boot.
- Warm Boot.
- Device and Peripheral Tests.
- RAM Initialization.
- Watchdog Reset.

Description

The POST functions provided on the Base Station OTA Processor consist of Cold Boot, Warm Boot, Device and Peripheral Tests, RAM initialization, and Watchdog Reset. All of these functions will be performed before initiating or after halting the normal operation of the OTA Processor. These functions can also be initiated by the OAM&P Manager after system start up via function calls.

The POST will also copy the current version number of the software in the ROM to the revision register in the hardware. This revision register contains hardware, firmware, and software version numbers. See hardware document for format.

Cold Boot

The Cold Boot will take place on the processor upon system reset, after Watchdog Tuner expiration, and upon request from the OAM&P Manager. The entire OTA Processor system will be started with no history knowledge of the past. Upon completion of the Cold Boot, the system will start up the RTOS and all the associated tasks and interrupt handlers. It will then return the status of the tests to the OAM&P Manager who will then be the one to decide if this Base Station should be unlocked (available to the network) based on the returned status. The following steps will occur as part of the Cold Boot:

- Set up all chip selects to allow access to all data areas described in the hardware map of this processor.
- Initialize all RAM data areas used by the operation of the OTA Processor. • Perform all device and peripheral tests to determine hardware viability.
- Set up all peripheral device registers.
- Initialize all trap vector tables.
- Initialize the interrupt handlers so that they will be ready to begin receiving and processing interrupts.
- Start up the RTOS and the tasks that are to be controlled by it.
- Return status of self tests to OAM&P upon completion of startup along with the revision register contents.

Device and Peripheral Tests

There will be several device and peripheral tests that will be performed as part of the Cold Boot. These will be the type that are traditionally done in a POST (Power on Self Test) to verify the functionality of the base hardware. They will include the following:

- Watchdog timer test        Set timer to a particular timeout and check to see that the timer expires
- RAM Device test        Test reading and writing to various RAM locations with a known pattern to test data as well as address lines.
- ROM Device test        Compare checksum in ROM with newly computed checksum.
- DMA test        Test reading and writing to various areas in each DPR (Radio, OTA, Line Card).
- Timer test        Test setting a timer and having the timer expire.
- Debug port serial test        Test writing and reading from the debug serial port with it set up in echo mode.

Warm Boot

The Warm Boot will take place on a soft reset. Reasons for this soft reset, include but are not limited to, task aborted, etc. This Warm Boot will insure that the OTA Receive and Transmit interrupts continue to be handled regardless of the operation of the other tasks in the system. Upon Warm Boot the following steps will occur:

- Any task not currently running will be restarted. This means that only tasks which have aborted will lose their queued data. Since most operations have timers associated with them and they try a certain number of times before giving up, this should only affect the response time but not the response.
- Tasks currently running will not be changed.
- No data areas will be reinitialized, therefore, the state of each time slot will be maintained along with all the necessary information for all current calls. Current calls will be maintained.

RAM Initialization

The RAM initialization will be performed during a Cold Boot only. The areas to be initialized are as follows

- All Slot state information
- All transmit/receive buffers for all slots
- All I Interface data structures pertaining to NOTE transfers. All line interface/slot information structures.

- Configuration data.
- Stack and heap setup.
- General data areas initialized to zero and/or initialized from ROM initialization values.

Watchdog Reset

The Watchdog timer will be used to insure the integrity of the system. Upon expiration of this timer, the system will be issued a reset which will cause a Cold Boot and the OAM&P Manager will be notified. The system will normally ensure that this timer does not expire under normal operations. However, if the system is not operating as it should, then this timer will not be cleared and hence will cause a Watchdog system reset. The Watchdog timer will support the following:

- The Watchdog timer will perform a reset (Cold Boot) upon expiration.
- The Watchdog timer will, upon expiration, save registers and history data so that it can be looked at after the restart.
- The Watchdog timer will be reset periodically, to show that the system is functioning normally, so that it will not cause a system reset.

Interfaces

The POST initializes the OTA Processor Dual Port RAM during initialization. The POST uses the debug port on the 341 board to send out error indicators during Cold Boot.

Performance

Capacities

The POST will reside in a single FLASH ROM and never be

Rates

The Cold Boot will be completed and status returned to the OAM&P Manager in no more than 2 seconds after initiation.

Accuracy/Precision

The POST will be accurate in its determination as to whether or not the OTA Processor is operational.

Availability/Reliability

The POST uses the Watchdog Tuner to help insure that the system is functioning. Since it performs tests before enabling the RTOS, tasks, and interrupt handlers, it insures that the functioning of the OTA Processor is as reliable as it can determine. The results are returned to the OAM&P Manager and then it decides whether this Base Station should be fully operational.

PHYSICAL LAYER INTERFACE

This section addresses the I interface in the scope of network layer 426 protocols (i.e. NOTES). Memory require-ments are addressed with the assumption of shared memory (e.g. Dual Port Ram) serving as the physical interface. However, from a functional point of view we should not assume that the physical interface will always consist of some form of shared memory. For all practical purposes we can assume that there is a layer 2 protocol even if none exists. This will facilitate porting the software to different hardware architectures in the future.

The I interface provides a framework which supports a standardized method of physical device interfacing. It allows a Layer 2 (OSI-Data Link Layer), message-based interface to the different physical devices supported by the O-BTS hardware. All I interface messages support connection establishment and termination, data transmission and reception, and call control and OAM&P management functions. The Dual Port Ram will be used as the Data Link medium between the O-BTS LC and the OTA processor.

I_Interface Prioritized Queing

The system requirements specify that Handoff events have a distinct priority over most other events in the system. Similarly Call Control events have priority over OAM&P events. This suggests from the point of view of the application peer entities that messages sent through the interface should be tagged with priorities. An interface manager (i.e. layer 2) would be required to manage multiple prioritized queues I across the physical interface. In this document it is assumed that a prioritized queue consists of both a sending and a receiving queue. Th following are the priority levels: Priority 1 - Handoffs and Emergency Events,

Priority 2 - Communication Management(DTAP Notes),
Priority 3 - OAM & P.

Multiple Prioritized Queues

The management of multiple prioritized queues with fixdd length message buffers is probably the easiest to implement and the most efficient from an execution standpoint.
At least three separate prioritized queues will be implemented. An exception to this is during a Base Station software download from the Base Station Controller. If the Base Station is in the Out-Of-Service state it may be more efficient for the BS Line Card OMU (OAM&P -Management Unit) to commandeer most if not all of the shared memory for software load transfer across the I interface.

Queuing Algorithm Impacts

The same queuing algorithms must be implemented on both sides(Line Card Processor and OTA Processor) of the I Interface. This means the OTA Processor and the Line Card Processor will execute a common set of functions to implement the queuing mechanism.

I_Interface Message Buffering

A small message buffering algorithm per BS OTA slot to facilitate the delivery of BS to MS$^2$ messages will be implemented. In particular this could be useful during handoff where the terminating Base Station does not yet have contact with the Mobile Station but has more than one message to deliver to the MS.
When the BS OTA is sending a segmented NOTES Transport message to the MS and another message from the network arrives for the MS, the following queuing algorithms will be implemented:

•   One large FIFO(for each priority level) for all the OTA slots on the physical interface and then individual FIFO's per OTA slot in the OTA processor.

This would simplify the interface from the Line Card perspective and would provide a more flexible method of access to the physical interface. It also removes many sizing constraints from the interface into the OTA processor.

I Interface Memory Requirements

The memory requirements for bearer traffic can be calculated as follows:

32 Slots/BS * 2 (Xmit/Rcv Buffers) * 36 Bearer-Bytes/ Buffer

= 2304 Bearer-Bytes/BS

The memory requirements for the message queues are TBD. It has been suggested from sources in Digital Hardware Development that they could support Dual Port RAM sizes on the order of 32 Kbytes. If so this is probably more than sufficient memory for a 32 slot Base Station.

APPLICATION PROGRAMMING INTERFACE (API)

This section defines the services provided to the application SW by the physical layer Interface manager. Messages between the I-interface Manager and the Application Tasks are supported through use of the API functions.

All API functions are available to the application tasks through the API. The following services are supported by the API for OTA.

1. dpr_config(map)
2. drp_send(data_ptr, length, priority)
3. dpr_receive(data,_ptr, length)

These functions can be implemented by using the real-time kernel function calls. The Interface manager is responsible for copying data from Dual port memory into local memory.

dpr_config

Upon power-up or reset, the OTA will run boot-code, where the full Dual Port RAM may be used for SW download. The OTA will configure the Dual Port RAM in Non-operational mode by calling the dpr-config function with a map which contains the address of non-prioritized queue and the buffer size. After downloading the code, the OTA will start executing the RAM code. When the set parameters request is received, the OTA will switch into Operational mode, where the Dual Port RAM is partitioned into prioritized queues. To configure the Dual Port RAM in an operational mode (prioritized queues), the OTA should call the dpr_config function with a map which contains multiple prioritized queue addresses. This function returns a 0 if the Dual Port RAM is configured successfully. The format is int dpr_config (map), where the map is the map of the queue addresses.

dpr_send

In order to send a message to the I-interface manager, the following steps should be followed:

- Place the message data into a buffer. The data buffer can be allocated either statically or dynamically.
- Call dpr_send with a pointer to the data buffer, data buffer length, and message priority.
- If any buffers were allocated dynamically and are no longer needed, release them.

The format is int dpr_send(data-ptr,length,priority) where data_ptr is the pointer to data buffer, length is the size of the data buffer, and priority is the message priority. The priority can have the following values:

0: Nonoperational procedures i.e., OTA initiali-sation),
1: Handoffs and Emergency msg,
2: DTAP NOTES, and
3: OAM&P.

dpr_receive

In order to receive a message from the 1-interface manager, the following steps should be followed:

1) Allocate a message data buffer. The data buffer can be allocated either statically or dynamically.
2) Call dpr_receive with the address of the data buffer address and the data buffer length.
3) Check the return code of the dpr_receive call.
If any buffers were allocated dynamically and are no longer needed, release them.

The format is int dpr_receive(data_ptr, length) where data_ptr is the pointer to data buffer for the received message and length is size of the data buffer

APPLICATION LAYER INTERFACE

OAM&P application messages described in this section will be used for communication with the 1-interface manager.

Messageformats

To help ease implementation and avoid porting restric-tions, message formats, and elements are defined at even byte lengths. Multi-byte message elements should start on even byte boundaries. This is a reasonable approach because the messages only traverse the BS backplane and not a bandwidth sensitive serial link.

Messages are not always fixed format and an Information Element coding approach is used.

General message header

A general message header is used in all OAM&P messages on the I-interface, that allows identification of a specific functionality (using a Message ID) and a specific base station UNIT (using a UNIT ID). The general message header has a 2 byte message identifier, a 1 byte TRX number, a 1 byte time slot number and a 2 byte length message.

The TRX number distinguishes between TRX UNITs within a BS. The Timeslot number distinguishes the timeslot with a particular TRX.When addressing a TRX, the timeslot number is null. When addressing a timeslot a TRX number must be specified. The TRX Manager is addressed by both TRX nunber and Timeslot number being null.

Message Identifier Coding

Table 11-1 shows the addressable units and coding for messages that are defined for the I-interface.

Table 11-1:

| I-interface messages | | |
|---|---|---|
| | Unit | Coding |
| Initialisation Request | TMU/THXU | 01 |
| Initialisation Response | TMU/TRXU | 02 |
| Configuration Information Request | TMU | 03 |
| Configuration Information Response | TMU | 04 |
| Load Initiate Request | TMU | 05 |
| Load Initial Response | TMU | 06 |
| Load Data Block | TMU | 05 |
| Load Data Block Response | TMU | 06 |
| Load End Request | TMU | 05 |
| Load End Response | TMU | 06 |
| Set Parameters Request | TMU/TRXU | 07 |
| Set Parameters Response | TMU/TRXU | 08 |
| Alarm Report | TMU/TRXU | 09 |
| Alarm Response | TMU/TRXU | 0A |
| Diagnostic Test Request | TMU | 0B |
| Diagnostic Test Response | TMU | 0C |
| Diagnostic Test Request | TMU | 0D |
| Diagnostic Test Response | TMU | 0E |
| Close Loop Request | TSU | 0F |
| Close Loop Response | TSU | 10 |
| Open Loop Request | TSU | 11 |
| Open Loop Response | TSU | 12 |
| Start Measurement Request | TMU/TRXU | 13 |
| Start Measurement Response | TMU/TRXU | 14 |
| Measurement Report | TMU/TRXU | 15 |
| Measurement Report Response | TMU/TRXU | 16 |
| Stop Measurement Request | TMU/TRXU | 17 |
| Stop Measurement Response | TMU/TRXU | 18 |
| Administrative State Change Request | TMU/- TRXU/TSU | 19 |

Table 11-1: (continued)

| I-interface messages | | |
| --- | --- | --- |
| | Unit | Coding |
| Administrative State Change Response | TMU/-TRXU/TSU | 1A |
| Administrative State Change Report | TMU/- TRXU/TSU | 1B |
| Administrative State Change Response | TMU/-TRXU/TSU | 1C |
| Reset Request | TMU | 1D |
| Reset Response | TMU | 1E |

Initialization Request

This message is sent from the OTA card (from boot-code for TMU) to the Line card as an indication that a unit is ready for initialisation. Ile message is sent repeatedly approximately every 5 seconds, until 'Initialisation response' is received from the Line card (note that DP RAM initialisation is the final task of the Line card initialisation, and that the Line card will see the next 'Initialization request' message following this).

For TRX Manager initialisation, the self test results which include a mandatory 6 byte header are included within the 'Initialization request' message. The Line card will not initialize the TRX Manager in case of selftest failure.

1) Selftest results are present for the TRX Manager initialisation, and are not present for the TRX initialisation.

Initialization Response

This message including the 6 byte general header is sent from the Line card to the OTA card (to boot-code for TMU), to inform the OTA that the 'Initialization request' has been received.

Configuration Information Request

This message including the 6 byte general header is sent from the Line card to the OTA card (to boot-code for TMU), requesting that the TRX Manager return the current base station HW configuration and SW/FW version information.

Configuration Information Response

This message including the 6 byte general header is sent from the OTA card (from boot-code for TMU) to the Line card, and is used by the TRX Manager to provide the current base station HW configuration and SW/FW version information.

Load Initiate Request

This message including the general header is sent from the Line card to the OTA card (boot code), and informs the OTA of the identity of the OTA SW file to be downloaded, and the Dual Port RAM MAP to be used.

Load Initiate Response

This message with the general header is sent from the OTA card (boot code) to the Line card, in response to a Load Initiate Request message, and indicates whether the OTA card is able to receive the SW load (2 bytes).

Load Data Block

This message having the general header is sent from the Line card to the OTA card (to boot-code), and contains a single block of an OTA SW file greater then 3 bytes.

1) This element contains a block (of between I byte and 30 K bytes) of the OTA SW file.

Load Data Block Response

This message including the general header is sent from the OTA card (from boot-code) to the Line card, in response to a Load Data Block message, and indicates whether the block of SW has been successfully written to FLASH RAM (2 bytes).

Load End Request

This message including the general header is sent from the Line card to the OTA card (boot code), to inform the OTA card that the SW load is complete.

Load End Response

This message is sent from the OTA card (boot code) to the Line card, in response to a Load End Request message, and indicates whether an OTA SW file has been successfully received.

Activate SW Request

This message which includes the general header is sent from the Line card to the OTA card (boot code), to request that the OTA starts running its RAM software. The Dual Port RAM NW informs the OTA of the prioritized queues to be used by the operational OTA software.

Activate SW Response

This message which includes the general header is sent from the OTA card to the Line card in response to an Activate SW Request message, and indicates whether the OTA software has been successfully started (2 bytes).

Set Parameters Request

This message which includes the general header is sent from Line card to OTA card, requesting that configuration parameters are set for either TRX Manager or TRX unit.

    1)present for TRX Manager unit
    2)present for TRX unit

Set Parameters Response

This message which includes the general header is sent from OTA card to Line card in response to Set Parameters request message, and indicates the success or failure of configuration parameter setting for TRX Manager or TRX units (2 bytes).

Alarm Report

This message is sent from OTA card to Line card, indicating that either a UNIT failure has been detected, or that some notable event has occurred. The message includes the general header (6 bytes), failure type (2 bytes), failure severity (2 bytes), failure cause (2 bytes), hardware description (optional), software description (optional), and 40 bytes of additional information.

    1) present in the case that additional information regarding a failure is given.
    2) present in the case that a hardware failure is reported
    3) present in the case that a software failure is reported

Alarm Response

This message which includes the general header is sent from Line card to OTA card in response to an Alarm Report message.

Diagnostic Test Request

This message which includes the general header is sent from Line card to OTA card requesting that a diagnostic test is performed for the OTA card. This test is a non-destructive subset of the Power-On Self Test (POST).

Diagnostic Test Response

This message which includes the general header is sent from OTA card to Line card in response to a Diagnostic test request, indicating whether the test has been accepted. (2 bytes).

1) A successful 'Outcome' is only an indication that the test has been accepted.

Diagnostic Test Report

This message which includes the general header is sent from OTA card to Line card on completion of a diagnostic test, indicating whether the test was successfully carried out (2 bytes), and also the results of the test.

1) indicates only whether the test was completed (not if the test was passed.successfully).
2) the results of the test are present if the test was completed.

Diagnostic Test Report Response

This message which includes the general header is sent from Line card to OTA card in response to a Diagnostic report message.

Close Loop Request

This message which includes the general header is sent from Line card to OTA card to request that a loopback connection is made for a timeslot (2 bytes).

Close Loop Response

This message which includes the general header is sent from OTA card to the Line card in response to a 'Close loop request' message, indicating whether the loop has been successfully closed (2 bytes).

1) A successful 'Outcome' indicates that the a closed loop has been made for the requested timeslot.

Open Loop Request

This message which includes the general header is sent from the Line card to the OTA card to request that a previously closed loop is opened for a timeslot (2 bytes).

Open Loop Response

This message which includes the general header is sent from OTA card to Line card in response to a 'Open Loop Request' message, and indicates whether the loop has been successfully opened (2 bytes).

1) A successful 'Outcome' indicates that the loop has been reopened for the timeslot.

Start Measurement Request

This message is sent from Line card to OTA card to request that a number of measurement types be started. The message includes a general header (6 bytes), reporting schedule (2 bytes), and measurement type (2 bytes).

1) can be repeated to start multiple measurement types.

Start Measurement Response

This message which includes the general header is sent from the OTA card to the Line card in response to a 'Start measurement request' message, and indicates whether the requested measurements have been successfully started (2 bytes).

　　1) indicates whether the requested measurements have been successfully started.

Measurement Report

This message is sent from OTA card to Line card, transferring measurement results. The message includes the general header, measurement type (6 bytes), and measurement result (4 bytes).

　　1) can be repeated to report multiple measurement types.

Measurement Report response

This message which includes the general header is sent from Line card to OTA card in response to a 'Measurement result report' message.

Stop Measurement Request

This message which includes the general header is sent from Line card to OTA card to request that a number of measurement types are stopped (2 bytes).

　　1) can be repeated to stop multiple measurement types:

Stop Measurement Response

This message which includes the general header is sent from OTA card to Line card in response to a 'Stop measurement request' (2 bytes).

　　1) indicates whether measurements have been successfully stopped.

Administrative State Change Request

This message is sent from Line card to OTA card to change the administrative state of a unit. The message can be used to 'Lock', 'Shut-down' or 'Unlock' a unit.

- In the case of lock request, any calls handled by the unit are immediately released.
- In the case of a shut-down request, the OTA will not allocate new calls and will wait 3 minutes before forcing the administrative state to locked (releasing any remaining calls).
- In the case of an unlock request the unit is immediately allowed to handle new calls.

If a unit is administratively 'Locked' then all subordinate units are unable to handle calls (e.g., if TMU is 'Locked' then all TRXUs and all TSUs cannot handle calls).
The message includes a general header and the information of the administrative state (2 bytes).

　　1) the requested administrative state can be 'Locked', 'Shuting-down' or 'Unlocked'.

Administrative State Change Response

This message which includes the general header is sent from OTA card to Line card in response to a 'Administrative state change request' message (2 bytes). It does not signify that the state change has occurred, only that the request is, allowed.

　　1) indicates that the requested administrative state change cannot be performed.

Administrative State Change Report

This message which includes the general header is sent from OTA card to Line card to report that the administrative state of a unit has changed (2 bytes). The reported administrative state can be 'locked' or 'Unlocked'.

1) the reported administrative state can be 'Locked' or 'Unlocked'.

Administrative State Change Report response

This message which includes the general header is sent from Line card to OTA card in response to a 'Administrative state report' message.

Reset Request

This message which includes the general header is sent from Line card to OTA card to re-initialisation of the HW supporting the 'TRX Manager', 'TRX' and 'TS' units. The OTA processor performs a cold reset, returning to bootcode and performing power-on self tests. Only OTA SW stored in flash memory remains after the cold reset.

Reset Response

This message which includes the general header is sent from OTA card to Line card in response to a 'reset' message, and is sent immediately before the reset is performed.

Element Coding

The following is the list of message elements and related identifier information.

Additional information

The additional information element includes a 1 byte element identifier and a 39 byte message regarding the failure or alarm.

Administrative state

The administrative state information element includes a 1 byte element identifier and 1 byte element defining the administrative state. The states are encoded as 01 for locked, 02 for unlocked, and 03 for shutting down.

Diagnostic test results

The diagnostic test results information element includes a 1 byte identifier and the diagnostic test results.

Dual Port RAM MAP

The dual port RAM map information element includes a 1 byte identifier, a 2 byte element indicating the number of queues, and for each queue a 2 byte start write pointer, a 2 byte start read pointer, a 2 byte pointer to the beginning of the queue on the line card and a 4 byte queue length.

Failure cause

The failure cause information element includes a 1 byte element identifier and a 1 byte failure cause. The failure cause is generally one of the following: TI SYNC LOST, DPRAM, GPS LOST, WARM RESET, COLD RESET, AC POWER LOST, BATTERY NOT CHARGING, BATTERY POWER LOST, MASTER CLOCK LOST, ANTENNA VSVVR, HW FAILURE, ASSAULT, HIGH TEMP, RADIO INTERFACE LOST, CRITICAL BER, UNUSED RADIO, LO LOCK, CRITICAL TX POWER, and SW FAILURE.

Failure severity

The failure severity information element includes a 1 byte element identifier and a 1 byte failure severity message. The failure severity message is defined as follows: Failure ceased 00, Critical failure 01, Major failure 02, Minor failure 03, Warning failure 04, and Indeterminate failure 05.

Failure type

The failure type information element includes a 1 byte element identifier and a 1 byte failure type. The failure types are defined as follows: Communications failure 00, Quality of service failure 01, Processing failure 02, Equipment failure 03, and Environment failure 04.

File Block

The file block information element includes a 1 byte element identifier, a 2 byte block length indicating the number of OTA software file in the block, and the block of the software file.

HW configuration

The hardware configuration information element includes a 1 byte element identifier, a 2 byte length of the hardware information, and the requHardwareware information for the OTA and each radio to which the element relates.

HW Description

The hardware description information element includes a 1 byte element identifier, the ID of the equipment to which the message relates, the type of equipment, the version of the equipment and the equipment location.

Measurement results

The meaurement results information element includes a 1 byte element identifier and a 3 byte element giving the information results.

Measurement type

The measurement type information element includes a 1 byte element identifier and a 1 byte element of the measurement type. The measurement types include: Successful initial slot acquisitions 1, Successful slot acquisitions per cause 2, Successful B channel assignments 3, Unsuccessful B channel assignments per cause 4, Successful timeslot inter-changes per cause 5, Unsuccessful timeslot inter-changes 6, Available slots7 7, Mean number of busy slots 8, Maximum number of busy slots 9, Time all slots allocated 10, Mean slot busy time 11, Successful radio link recoveries 12, Lost radio links 13, Relative time UL power control at maximum 14, and Mean idle slot interference 15.

Outcome

The outcome information element includes a 1 byte element identifier and a 1 byte outcome of the requested action. The outcomes are as follows: Success 0, 1 unknown unit, 2 unknown message, 3 incorrect message length, 4 illegal message, 10 file already exits, 11 insufficient memory, 12 incorrect block size, 13 illegal parameter value, 14 unable to perform operation, 15 too many measurements. Messages 1-4 and 10-15 all denote a failure of the requested action.

Reporting schedule

The reporting schedule information element includes a 1 byte element identifier and a 1 byte element representing the reporting schedule. The following are the reporting schedules: each 5 minutes 1, each 15 minutes 2, each 30 minutes 3, and each 40 minutes 4.

Selftest results

The self test result information element includes a 1 byte element identifier and a 1 byte element of the self test result.

SW configuration

The software configuration information element ioncludes a 1 byte element identifier, a 2 byte length element, and a description of the OTA software and firmware.

SW Description

The software description information element includes a 1 byte element identifier, information identifier the software file, and the software version.

TMU parameters

The following table describes the TMU parameters.

| | |
|---|---|
| Element Identifier | 1 byte |
| **BSC IDENTITY.** Identifies a BSC uniquely. | 2 bytes |
| **BS IDENTITY** Identifies a BS uniquely within a Location Area. | 4 bytes |
| **LOCATION AREA CODE**. Grouping of BS/Cells that is used for the location updating procedure. | 2 bytes |
| **MOBILE COUNTRY CODE.** Uniquely identifies the country in which a PLAIN is located. | 2 bytes |
| **MOBILE NETWORK CODE.** Uniquely identifies a PLAIN within a country. | 1 byte |
| **FACILITY.** Identifies the BS service and access restrictions. | 4 bytes |
| **SYSTEM TYPE.** Identifies the code set of the supporting infrastructure as DCS 1900. | 1 byte |
| **BS LOCATION.** Location information for configuration of the GPS receiver. | tbd |
| **BS TX POWER MAXIMUM.** Identifies the maximum power at which the BS can transmit. (Coding) | tbd |
| **MS TX POWER MAXIMUM.** Identifies the maximum tbd power at which the MS can transmit to the BS (i.e., in the cell). (coding) | tbd |
| **RX MODE.** Indicates the mode in which the BS receivers should operate.<br>Interference limited     0<br>Noise limited     1 | 1 byte |
| **TX MODE.** Indicates the mode in which the BS transmitters should operate.<br>Linear     0<br>Non linear     1 | 1 byte |
| **BS TYPE.** Indicates the BS type, and is used as an input to the MS HO algorithm, and to indicate the capability of the BS transmitters. | 1 byte |
| **SURROUNDINGS BS INFORMATION.** Information on up to 11 surrounding Bss (zero filled if less than 11 surrounding Bss)<br>Base Frequency     (coded as Radio Channel ID, section 5.3.19).<br>Base PN code     (coded as PN code, section 5.3.19)<br>Base type     (coded as BS type, section 5.3.18).<br>Base Placement     Not concentric     0<br>     Concentric     1 | (11*4)=44 bytes<br><br>1 byte<br>1 byte<br>1 byte<br>1 byte |
| **SURROUNDING BS HO INFORMATION.** The precise use of this element is not yet known, but it will provide something like:<br>Priority information for Hos to each surrounding BS (for weighting of Hos)<br>HO margin information for HO to each surrounding BS (to prevent repetitive HOs). | tbd |

TRXU parameters

The following table defines the TRXU parameters.

| Element Identifier | 1 byte |
|---|---|
| **RADIO CHANNEL IDENTIFIER.** Identifies the 0.625 MHz radio channel within the PCS spectrum to be used by the TRX.<br><br>1850.000 MHz          00 hex<br>1850.625          01<br>1989.375          DF<br>1990.000          EO | 1 byte |
| **PN CODE.** Identifies the Pseudo-random Noise code to be used for the direct sequence spread spectrum modulation. (coding is to be defined) | 1 byte |
| **MAXIMUM BEARER BANDWIDTH.** The maximum number of TDMA timeslots that can be assigned to a bearer channel. Note: must be "1" at this time. | 1 byte |
| **MINIMUM BEARER BANDWIDTH.** The maximum number of TDMA timeslots that can be assigned to a bearer channel. Note: must be "1" at this time. | 1 byte |
| SPARE To give element even number of bytes | 1 byte |

FUNCTIONAL SCENARIOS

This section describes the context in which the OAM&P messages are used.

Administrative state procedures are shown in a number of scenarios (e.g., to 'Lock' a unit before performing a test), and are used to reduce the impact of OAM&P operations on-going services. It is the responsibility of either the operator or the BSC to control Administrative states, and the Base Station will not check these before performing service impacting operations.

Initialization

This procedure takes a UNIT from non operational to operational status, and is applicable to 'TRX Manager' and 'TRX' UNITs.

TRX Manager Initialization

This procedure takes the TMU from non-operational to operational status. The TMU initialisation must be performed before any other I-interface procedure is possible. Figure 6:TRX Manager unit initialisation procedure illustrates this procedure.

TRX Initialization

This procedure takes the TRXU from non-operational to operational status. The TRXU initialisation can only be performed following successful completion of the TMU initialisation. The successful initialisation of a TRXU provides 16 operational timeslots. The TRX unit initial-isation procedure is repeated for each TRX unit in the BS.

Reconfiguration

This procedure modifies the configuration of units which are already operational, and is applicable to 'TRX Manager' and 'TRX' units. Some parameter modifications require that the unit is first administratively 'locked' (as the parameter modification can affect on-going calls).

TRX Manager reconfiguration

The reconfiguration procedure can be performed at any time following the initialisation of the TRX Manager unit.

TRX reconfiguration

The reconfiguration procedure can be performed at any time following the initialisation of the TRX unit.

SW upgrade

This procedure is used for upgrade of the OTA SW and is the same as the OTA reset procedure.

Alarm reporting

This procedure is used to report UNIT failures or events. The Alarm Manager Task is a component of OTA OAM&P management. The individual alarms are not specific to the Alarm Manager Task, but are delivered to the Alarm Manager by other tasks within the OTA. After processing, alarms are passed to the Line Card OAM&P. Alarms are not processed until the initialization is completed.

Testing

This procedure is used for management of BS testing (either 'BS diagnostic test' or 'TS looptest'). The diagnostic test must be addressed to the TMU when it is operational, and will result in a non-destructive test of the OTA card. The TS looptest can be adressed either to a specific timeslot or to all timeslots; of a specific TRX, but can only be performed when the TRX is operational. The TS looptest verifies the integrity of the bearer channel path between Line Card to OTA in both directions.

Operadonal Measurements

This procedure is used for management of BS Performance measurements. The Line Card requests measurements with the measurement type and reporting period to the'OTA. During this test, the OTA is responsible for reporting measurements to the Line Card within the allowed reporting interval T time period. The OTA will continue collecting mesurements until a stop measurement request is received from the Line Card.

Administration

This procedure is used for control of the UNIT Administrative state. The OTA processes Lock, Unlock, and Shut-Down Administrative State change request messages from the Line Card. All state change messages contain a Unit Identifier.

Reset

The reset procedure triggers the re-initialisation of theHW supporting the 'TRX Manager' and "TRX' units. The OTA processor performs a cold reset, returning to boot-code and performing power-on self tests. Only OTA SW stored in flash memory remains after the cold reset. Re-initialisation of 'TRX Manager' and 'TRX' units will be performed by the Line-card following the OTA reset.

Alternative Embodiments

While preferred embodiments are disclosed herein, many variations are possible which remain within the spirit and scope of the invention. Such variations would become clear to one of ordinary skill in the art after inspection of the specification, drawings and claims herein. The invention therefore is not to be restricted except by the scope of the appended claims.

**Claims**

1. A method of communicating between stations in a time division multiple access communication system having a series of time frames (301, 601) each time frame having a plurality of time slots (302, 602) the method comprising transmitting a message (401, 402, 403), the message having a next slot pointer (810) indicating a location of a subsequent time slot available for communication.

2. The method of claim 1, wherein the message comprises a control traffic message (404, 405, 406), the method further comprising receiving a message in the indicated subsequent time slot to complete a control traffic transaction.

**3.** The method of claim 2, wherein the control traffic transaction is to establish a communication channel, the method further comprising transmitting and receiving traffic messages over the established communication channel.

**4.** The method of claim 2, wherein the control traffic transaction is a handover.

**5.** The method of claim 3, wherein receiving traffic messages comprises receiving traffic messages only in time slots indicated by transmitted next slot pointers,

**6.** The method of any one or more of the above claims further comprising receiving a control message before transmitting the message having the next slot pointer.

**7.** The method of any one or more of the above claims further comprising receiving a first plurality of control traffic messages (404), in a first plurality of time slots, at least two of the first plurality of time slots being within a single time frame; and

wherein transmitting a message having a next slot pointer comprises transmitting a second plurality of control traffic messages (405), in a second plurality of time slots, at least one of the second plurality of control traffic messages having a next slot pointer indicating an available time slot for receiving one of the first plurality of control traffic messages, at least two of the second plurality of time slots being within the single time frame.

**8.** The method of claim 7 wherein the first plurality of control traffic messages and the second plurality of control traffic messages are carried over the same frequency band.

**9.** The method of claim 1 wherein the message having a next slot pointer comprises a general poll message.

**10.** The method of claim 1 wherein the time slots are virtual time slots.

**11.** A message structure for use in a time division multiple access communication system, having a series of time frames, each divided into a plurality of time slots, the message structure comprising:

a data segment (559); and
a header segment (553, 702, 721) adjoining the data segment, the header segment having a next slot pointer (810) indicating a single available time slot for subsequent communication by a message recipient, the single available time slot being designated without regard to whether or not the time slot is in the same time frame.

**12.** The message structure of claim 11 wherein the time slots are duplex time slots each time slot having a user terminal transmission interval and a base station transmission interval.

**13.** The message structure of claim 11, wherein the next slot pointer comprises a numerical value indicating a relative number of time slots until the single time slot available for subsequent communication.

**14.** The message structure of claim 11, wherein the next slot pointer comprises a numerical value indicating an absolute position of the single time slot available for subsequent communication relative to a starting point of a time frame.

**15.** A method of communicating between stations in a time division multiple access communication system having a series of time frames (301, 601) each time frame having a plurality of time slots (302, 602) the method comprising:

receiving a message (401, 402, 403), the message having a next slot pointer (810) indicating a location of a subsequent time slot available for communication; and
transmitting a message in the indicated subsequent time slot.

**16.** The method of claim 15, wherein the received message is a control traffic message to establish a communication channel, the method further comprising transmitting and receiving traffic messages over the established communication channel,

**17.** The method of claim 16, wherein transmitting traffic messages comprises transmitting traffic messages only in time slots indicated by received next slot pointers.

**18.** The method of any one or more of claims 15, 16, 17 further comprising transmitting a control message before receiving the message having the next slot pointer.

FIG. 1A

SYSTEM CONSOLE

COAX CABLE

BS

104

102

102

BS

BS

118

CATV HEAD END / FIBER NODE

118

BS

109

BS

BS

BS

104

BS

109

BS

LADA LINES
FRACTIONAL T1
ISDN BRIs
CATV
FIBER
PRIVATE FACILITIES
DIGITAL RADIO

BSC

105

PRI OR TI LINES
BUNDLED BRIs
CATV
FIBER
MICROWAVE

105

BSC

108

115

108

114

x.25

126

TO PCSC
OR PSTN

108

IBS

107

Fig. 1B

Fig. 1c

EP 1 395 078 A2

Fig. 2

EP 1 395 078 A2

302 → 301

302

301

TS1 | TS2 | TS3 ... TSN | TS1 | TS2 ...

MS-BS | BS-MS ← 302

305    306

Fig. 3

EP 1 395 078 A2

| APPLICATION LAYER |
| PRESENTATION LAYER |
| SESSION LAYER |
| TRANSPORT LAYER |
| NETWORK LAYER |
| DATA LINK LAYER |
| PHYSICAL LAYER |

405

415

420

401

410

422 →

424 →

426 →

| APPLICATION LAYER |
| PRESENTATION LAYER |
| SESSION LAYER |
| TRANSPORT LAYER |
| NETWORK LAYER |
| DATA LINK LAYER |
| PHYSICAL LAYER |

PHYSICAL MEDIUM

*FIG. 4A*

APPLICATION LAYER

PRESENTATION LAYER

SESSION LAYER

TRANSPORT LAYER

NETWORK LAYER

DATA LINK LAYER

PHYSICAL LAYER

PEER-TO-PEER COMMUNICATION

APPLICATION LAYER

PRESENTATION LAYER

SESSION LAYER

TRANSPORT LAYER

NETWORK LAYER

DATA LINK LAYER

PHYSICAL LAYER

Fig. 4B

251

SLOT STRUCTURE

505 — PREVIOUS SLOT

| BASE TX | URG | PA | PSG | MS TX DATA FRAME | TAG | MS TX FRAME TDO QT | PA | PSG | BASE, TX DATA FRAME | TAG | MS TX |

515 — MS TX FRAME · 525 · 535 · 545 — BSE TX FRAME · 555

516 519 521 547 549 551

PREVIOUS SLOT ◄— ONE SLOT (1250 USEC) 510 —► NEXT SLOT

*Fig.5A*

BASE TRANSMIT DATA FRAME STRUCTURE

FUNCTION →

| HEADER | D-CHANNEL | BEARER DATA | CRC |

553 557 559 561

*Fig.5B*

MS TRANSMIT DATA FRAME STRUCTURE

FUNCTION →

| HEADER | D-CHANNEL | BEARER DATA | CRC |

523 527 529 531

*Fig.5C*

EP 1 395 078 A2

EP 1 395 078 A2

OMNIPOINT PCS2000 SIGNALLING INTERFACE CONTEXT DIAGRAM

FIG. 6

FIG. 7

| 102 MS | | | | |
|---|---|---|---|---|
| CM | MM | RR | LAP | LAYER 1 |

CT–OTA CM
CT–OTA MM

| 104 BS | | | | |
|---|---|---|---|---|
| CM | MM | RR | BSM | LAPD · LAYER 1 |
| CM | MM | RR | | LAP · LAYER 1 |

Q 931
NOTES
NOTES

| 105 BSC | | | | |
|---|---|---|---|---|
| CM | MM | BSSMAP | | SCCP MTP |
| CM | MM | RR | BSM | LAPD · LAYER 1 |

DTAP CM
DTAP MM

A 1/F — 625

| 126 MSC | | | |
|---|---|---|---|
| CM | MM | BSSMAP | SCCP |
| | | | MTP |

Fig. 8

Fig. 9

| INFORMATION ELEMENT | LENGTH IN BITS | |
|---|---|---|
| HEADER | 24 | ←—1015 |
| D CHANNEL | 8 | ←—1010 |
| O NOTE | 192 | |
| FCW | 16 | ←—1020 |

1005

*Fig.10*

| | |
|---|---|
| OPENING FLAG | ←—1115 |
| ADDRESS | ←7 1125 |
| ADDRESS | |
| CONTROL | ←—1130 |
| 1110 —→ N—NOTE | ←—1135 |
| FCS | |
| FCS | >1140 |
| CLOSING FLAG | ←—1120 |

1105

*Fig.11*

| | 1210 | | 1215 | |
|---|---|---|---|---|
| | SAPI | | C/R | EA Ø |
| | TEI | | | EA 1 |

1125    1220    1225

*Fig.12*

```
          ┌─────────────────────────┐
   1310 → │ BSC SWITCHES CONNECTION │
          │  FROM OLD BS TO NEW BS  │
          └─────────────────────────┘
                      │
          ┌─────────────────────────┐
   1320 → │ BSC SENDS "CIRCUIT SWITCH│
          │ COMPLETE" NOTE TO OLD BS │
          └─────────────────────────┘
                      │
          ┌─────────────────────────┐
   1330 → │  OLD BS SENDS "CT-CSS"   │
          │   NOTE TO USER STATION   │
          └─────────────────────────┘
                      │
          ┌─────────────────────────┐
   1340 → │ USER STATION SENDS "CIRCUIT│
          │ SWITCH COMPLETE" NOTE TO │
          │  APPLICATION END USER    │
          └─────────────────────────┘
```

*Fig.13*

*Fig. 14*

| | |
|---|---|
| ELEMENT IDENTIFIER | 1 BYTE |
| NUMBER OF QUEUES. INDICATES THE NUMBER OF PRIORITIZED QUEUES IN THE LINE CARD DP RAM. | 1 BYTE |
| QUEUE 1 PUT PTR. THE ADDRESS OF THE POINTER USED FOR WRITING TO QUEUE 1 OF THE LINE CARD DP RAM. | 2 BYTES |
| QUEUE 1 GET PTR. THE ADDRESS OF THE POINTER USED FOR READING FROM QUEUE 1 OF THE LINE CARD DP RAM. | 2 BYTES |
| QUEUE 1 START ADDRESS. THE ADDRESS OF THE START OF QUEUE 1 OF THE LINE CARD DP RAM. | 2 BYTES |
| QUEUE 1 LENGTH. THE NUMBER OF BYTES IN QUEUE 1 OF DP RAM. | 4 BYTES |
| | |
| QUEUE N PUT PTR. THE ADDRESS OF THE POINTER USED FOR WRITING TO QUEUE 1 OF THE LINE CARD DP RAM. | 2 BYTES |
| QUEUE N GET PTR. THE ADDRESS OF THE POINTER USED FOR READING FROM QUEUE 1 OF THE LINE CARD DP RAM. | 2 BYTES |
| QUEUE N START ADDRESS. THE ADDRESS OF THE START OF QUEUE 1 OF THE LINE CARD DP RAM. | 2 BYTES |
| QUEUE N LENGTH. THE NUMBER OF BYTES IN QUEUE 1 OF DP RAM. | 4 BYTES |

$$Fig.15$$

EP 1 395 078 A2

Fig. 16A

1601

BASE STATION GLOBAL BUS CONTROLLER — 1605

LINE CARD CONTROLLER — 1610

LINE CARD INTERFACE — 1611

TO BSC 105

OTA CONTROLLER — 1606

OTA INTERFACE — 1607

TO BASE STATIONS 102

DUAL-PORT RAM

QUEUE-1 — 1615
QUEUE-2 — 1616
QUEUE-3 — 1617
M→B BUFFERS — 1620
B→M BUFFERS — 1621

1609

CONTROLLER / GLOBAL MEMORY

CONTROL

1605

GLOBAL MEMORY

ARBITRATION LOGIC

MODEM

CONTROLLER

INTERRUPT CONTROLLER

DMA

LCA / PROGRAM FLASH

(MASTER)

RADIO

RADIO MODULE

DUAL PORT

LCA CONTROLLER

1607

(SLAVE)

GPS MODULE

INTERNAL OR EXTERNAL

FIG. 16B-1

FIG. 16B-2

FIG. 16B-3

*Fig. 16B*

*Fig. 16B-1*

EP 1 395 078 A2

Fig. 16 B-2

MICROPROCESSOR MODULE

LOCAL MEM

PROG FLASH

DUAL PORT RAM

LINE CARD CONTROLLER

CPU

ARBITRATION LOGIC

CPUMODRT

CONTROL CHANNEL

(MASTER)

1630

1610

1611

1650

LINE CARD

LINECARD

LINE INTERFACE MODULE

* ISDN BRI
* ISDN PRI
* HDSL
* POTS
* ?

OPTIONAL VOCODER

BACKHALL LINES

(SLAVE)

262

EP 1 395 078 A2

MICROPROCESSOR MODULE

PROG FLASH

LOCAL MEM

DUAL PORT RAM

(MASTER)

CPU

ARBITRATION LOGIC

CPUMODLF

1606

OTA CONTROLLER

OPTIONAL, DEVELOPMENT INTERFACE DATA MONITOR / PORT SIMULATOR

PROG FLASH

DUAL PORT RAM

PC INTERFACE

TO/FROM PC DEVELOPMENT PLATFORM

(MASTER)

CPU

ARBITRATION LOGIC

MONITOR

*FIG. 16* B-3

263

*Fig. 17*A

STANDARD LINE INTERFACE
DUAL PORT MEMORY TAP

| | |
|---|---|
| 604000 HEX | MS -> BASE CMD/MESSAGE BUFFER 31 |
| 603F80 HEX | BASE -> MS CMD/MESSAGE BUFFER 31 |
| 603F00 HEX | : |
| | MS -> BASE CMD/MESSAGE BUFFER 0 |
| 602080 HEX | BASE -> MS CMD/MESSAGE BUFFER 0 |
| 602000 HEX | SPARE |
| | MS -> BASE DATA BUFFER 31 |
| 6013C0 HEX | BASE -> MS DATA BUFFER 31 |
| | : |
| | MS -> BASE DATA BUFFER 0 |
| 600440 HEX | BASE -> MS DATA BUFFER 0 |
| 600400 HEX | SPARE |
| 60005F HEX | [E] LINE • |
| | : |
| 600040 HEX | [E] LINE • |
| | SPARE |
| 600020 HEX | SQI SLOT • |
| | GLOBAL REGISTERS |
| 6XX0000 HEX | |

MS -> BASE BYTE 0
ON/OFF HOOK

BASE -> MS, BYTE 0
RING INDICATOR

COMMAND/MESSAGE BUFFER
LINE RELATIVE

BEARER DATA BUFFER
(SLOT INDEXED)

LINE (VOCODER) NUMBER
(SLOT INDEXED)

GLOBAL CONFIGURATION REGISTERS
(INDEXED BY CARD ID (256K BYTE OFFSET))

MS -> BASE
DATA BUFFER

| | |
|---|---|
| 1F HEX | CMD BYTE 11 |
| | |
| 14 HEX | CMD BYTE 0 |
| 13 HEX | DATA BYTE 19 |
| | : |
| 0 HEX | DATA BYTE 0 |

BASE -> MS
DATA BUFFER

| | |
|---|---|
| 1F HEX | STATUS BYTE 11 |
| | |
| 14 HEX | STATUS BYTE 0 |
| 13 HEX | DATA BYTE 19 |
| | : |
| 0 HEX | DATA BYTE 0 |

Fig. 17B

STANDARD LINE INTERFACE
DUAL PORT MEMORY MAP
(ANALOG LINE IMPLEMENTATION)

| Address | Buffer |
|---|---|
| | OAM&P BUFFER (DETAILS, TBD) |
| 604000 HEX | MS -> BASE CMD/MESSAGE BUFFER 31 |
| 603F80 HEX | BASE -> MS CMD/MESSAGE BUFFER 31 |
| 603F00 HEX | ⋮ |
| | MS -> BASE CMD/MESSAGE BUFFER 0 |
| 602080 HEX | BASE -> MS CMD/MESSAGE BUFFER 0 |
| 602000 HEX | SPARE |
| | MS -> BASE DATA BUFFER 31 |
| 6013C0 HEX | BASE -> MS DATA BUFFER 31 |
| | ⋮ |
| | MS -> BASE DATA BUFFER 0 |
| 600440 HEX | BASE -> MS DATA BUFFER 0 |
| 600400 HEX | SPARE |
| 60005F HEX | [E] LINE • |
| | ⋮ |
| 600040 HEX | [E] LINE • |
| | SPARE |
| 600020 HEX | [SQ] SLOT • |
| 600000 + (40000* LINECARD •) HEX | GLOBAL REGISTERS |

MS -> BASE BYTE 0
ON/OFF HOOK

BASE -> MS, BYTE 0
RING INDICATOR

COMMAND/MESSAGE BUFFER
LINE RELATIVE

NOTE: THESE BUFFERS MAY BE
REDEFINED FOR THE DIGITAL LINE
CARD/ISDN IMPLEMENTATION

NOTE: CAN BE USED TO SUPPORT
ADDITIONAL (SUB-RATE) SLOTS

BEARER DATA BUFFER
(SLOT INDEXED)

NOTE: CAN BE USED TO SUPPORT
ADDITIONAL (SUB-RATE) SLOTS

(SLOT INDEXED)
LINE (VOCODER) NUMBER (0-31)
E => ACTIVE HIGH LINE ENABLE BIT

GLOBAL CONFIGURATION REGISTERS
(INDEXED BY CARD ID (256K BYTE OFFSET))

MS -> BASE
DATA BUFFER

| Address | Data |
|---|---|
| 1F HEX | CMD BYTE 11 |
| | |
| 14 HEX | CMD BYTE 0 |
| 13 HEX | DATA BYTE 19 |
| | ⋮ |
| 0 HEX | DATA BYTE 0 |

BASE -> MS
DATA BUFFER

| Address | Data |
|---|---|
| 1F HEX | STATUS BYTE 11 |
| | |
| 14 HEX | STATUS BYTE 0 |
| 13 HEX | DATA BYTE 19 |
| | ⋮ |
| 0 HEX | DATA BYTE 0 |